(19)

Europäisches Patentamt

European Patent Office

Office européen des brevets

(11) **EP 4 588 975 A1**

(12) **EUROPEAN PATENT APPLICATION**
published in accordance with Art. 153(4) EPC

(43) Date of publication:
23.07.2025 Bulletin 2025/30

(21) Application number: 23864191.4

(22) Date of filing: 14.09.2023

(51) International Patent Classification (IPC):
*C08L 63/00* (2006.01)   *C09C 1/36* (2006.01)
*C09C 3/06* (2006.01)   *C08J 5/18* (2006.01)
*C08K 3/22* (2006.01)   *C01G 23/04* (2006.01)
*C08L 101/12* (2006.01)   *B32B 7/04* (2019.01)

(52) Cooperative Patent Classification (CPC):
B32B 7/04; C01G 23/04; C08J 5/18; C08K 3/22;
C08L 63/00; C08L 101/12; C09C 1/36; C09C 3/06

(86) International application number:
PCT/BR2023/050307

(87) International publication number:
WO 2024/055091 (21.03.2024 Gazette 2024/12)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 14.09.2022  BR 102022018405

(71) Applicant: Instituto Hercílio Randon
95181899 Farroupilha (BR)

(72) Inventors:
• BOARETTO, Joel
95032-180 Caxias do Sul (BR)
• CRUZ, Robinson Carlos Dudley
95020-472 Caxias do Sul (BR)

(74) Representative: Currado, Luisa et al
De Simone & Partners S.r.l.
Via Giulio Caccini, 1
00198 Roma (IT)

(54) **NANOPARTICLE PREPARATION, PREMIX COMPRISING SUCH NANOPARTICLE PREPARATION AND MONOMER, METHOD FOR MODULATING THE CHEMICAL AND/OR MECHANICAL PROPERTIES OF A POLYMER, PROCESS FOR OBTAINING A MODIFIED POLYMER AND MODIFIED POLYMER**

(57) The present invention is in the field of polymers and nanotechnology. More specifically, the invention discloses a nanoparticle preparation, a premix comprising monomers and nanoparticles, their uses in the preparation of polymers with special properties, and modified polymers. The invention provides notable modifications in the properties of polymers, breaking, in practice, with previous concepts in the area of polymers. Examples include, for the same polymer: changes in stress resistance parameters, changes in glass transition temperature, among other notable modifications. The invention is useful in a variety of applications and solves several technical problems, including modifying various properties and uses of polymers in general.

Fig. 22

**Description**

**Field of the Invention**

The present invention is in the field of Polymers and Nanotechnology. More specifically, the invention discloses nanoparticle preparation, a premix comprising monomers and nanoparticles, their uses in the preparation of polymers with special properties, and modified polymers. The invention provides notable modifications in the properties of polymers, breaking, in practice, with previous concepts in the area of polymers. Examples include, for the same polymer: change in resistance parameters to stresses, changes in the glass transition temperature, among other notable modifications. The invention is useful in a variety of applications and solves several technical problems, including modifying various properties and uses of polymers in general.

**Background of the Invention**

Nanotechnology is a rapidly expanding science and has generated many expectations due to the unusual properties of nanoparticles of various materials. Although its use on a large scale still faces multiple limitations, starting with the lack of availability of nanoparticle preparations with high concentration, purity, and precise granulometric profile.
Particularly in the field of polymers, the use of nanoparticles is not typically the subject of studies or technologies, partly because of the limitations indicated above and partly because of the molecular structure completely different from that of metals.
These and other reasons contribute to the fact that no polymer doped with nanoparticles with a particle size distribution of choice and entirely in the nanometer range is yet available on an industrial scale. The present invention solves these problems.
In the search for the state of the art in scientific and patent literature, the following documents related to the topic were found:
Patent application WO2022036427, with inventors in common with the present invention, discloses a preparation of niobium nanoparticles obtained by a top down approach. Said preparation concomitantly includes the following technical characteristics: particles entirely in the nanometer granulometric range; high purity; on an industrial scale, with an adequate cost for economic viability. Said nanometric powder preparation has very high purity, since the process does not add impurities or lead to the formation of reaction products, as is the case with bottom-up (or synthesis) processes of the state of the art. On the other hand, WO2022036427 does not mention modulations in the properties of polymers resulting from a particular nanoparticle preparation as disclosed in the present patent application.
Patent document US20070116976A1 relates to how to provide a composition that combines improved impact resistance with effective corona resistance. As a solution, US20070116976A1 discloses a nanocomposite comprising a polymeric composition and nanoparticles with a mean largest dimension less than or equal to about 500 nanometers. Despite this, US20070116976A1 does not mention modulations in the properties of polymers resulting from a particular nanoparticle preparation as disclosed in the present patent application.
Patent document CN110229412 refers to solving the compatibility problems of nanomaterials with the polymer so that mechanical properties such as hardness are not affected. Thus, CN110229412 discloses a nanocomposite with increased strength and hardness obtained by melt blending a premix. The premix comprises: a) a nanomaterial which may be metal oxides, transition metals and rare earths, b) a liquid medium which may be water and other solvents, c) polypropylene and, preferably, to increase the amount of liquid medium to which the nanomaterial is bound, an auxiliary agent may also be added. Despite this, CN110229412 does not mention modulations in the properties of polymers resulting from a particular nanoparticle preparation as disclosed in the present patent application.
The article by Hajduk et al. (2021) (Thermal and optical properties of PMMA films reinforced with $Nb_2O_5$ nanoparticles) discloses the effect of niobium pentoxide nanoparticles on altering the thermal and physical properties of polymethyl methacrylate
(PMMA). On the other hand, Hajduk et al. (2021) does not mention modulations in polymer properties resulting from a particular nanoparticle preparation as disclosed in the present patent application.
Patent document US2009226711A1 discloses a biaxially oriented nanocomposite film formed by a process comprising mixing a nanofiller and a polymer composition to form a nanocomposite; extruding the nanocomposite as a melt to form a molten tube; expanding the tube biaxially by means of mechanical force and air pressure to form a bubble; and collapsing the bubble to form at least one sheet of a biaxially oriented nanocomposite film, wherein the biaxially oriented nanocomposite film has a breaking strength (dielectric strength) of at least 300 V/micrometer. On the other hand, US2009226711A1 does not mention modulations in the properties of polymers resulting from a particular nanoparticle preparation as disclosed in the present patent application.
Patent document JP2003073558 proposes a method for producing a composition of ultrafine particles of metal oxide and a polymer containing electron donating groups, in which the surface of the particles is modified with acidic and basic groups. More specifically, the method comprises: 1) hydrolysis of a compound to obtain ultrafine metal oxide particles and surface modification with an aliphatic carboxylic acid and an aliphatic amine; 2) dispersing/dissolving the particles in a desired solvent and combining with a polymer solution, forming a mixed solution; 3) optionally, heating and stirring to promote the formation of the composite of the ultrafine metal oxide particles and the polymer. On the other hand, JP2003073558 does not mention modulations in polymer properties resulting from a particular nanoparticle preparation as disclosed in the present patent application.

From what can be inferred from the literature researched, no documents were found anticipating or suggesting the teachings of the present invention.

## Summary of the Invention

The present invention solves several problems of the state of the art and provides: a nanoparticle preparation comprising a nanoparticle filler, in which said filler has a degree of crystallinity below 81%. In one embodiment, said filler has a degree of amorphization of at least 19%. As well as its uses in the preparation of modified polymers; the modified polymers and a process for obtaining them.

It is also one of the objects of the invention to provide a premix of monomers with nanoparticles of defined granulometry and chemically defined composition.

It is also one of the objects of the invention to provide a premix of monomers with nanoparticles of metals, transition metals, rare earths, oxides thereof or combinations thereof, said premix comprising one or more monomers and nanoparticles entirely in the nanometer particle size range.

In one embodiment, the premix of the invention comprises an epoxy resin or phenolic resin monomer and nanoparticles with d10 to d99 in the nanometer particle size range. In one embodiment, the nanoparticles are selected from graphene oxide, niobium pentoxide, titanium dioxide, or combinations thereof.

Another object of the invention is to provide a modified polymer comprising nanoparticles in its structure. Said polymer is selected from Polyesters and the like, Epoxy, phenolic resins and the like, Polyamides and the like, and has improved properties and characteristics, including modified resistance to mechanical stresses, modified glass transition temperature, among others. Polymer samples comprising particles in the micrometer range showed catastrophic failures, such as cracks, deformations, and geometry irregularities.

In one embodiment, the polymer of the invention is an epoxy resin or phenolic resin containing nanoparticles with d10 to d99 in the particle size range of nanometers. In one embodiment of the polymer, the nanoparticles are selected from graphene oxide, niobium pentoxide, titanium dioxide, or combinations thereof. In one embodiment, the concentration of said nanoparticles relative to the polymer is low, e.g., in the range between tens and hundreds of ppm, such as (non-limiting): 10, 25, 50, 75, 100, 200, 250, 300, 400, 500, 600, 700, 800, 900 or 999 ppm.

Another object of the invention is to provide the use of the nanoparticle preparation of the invention in the preparation of modified polymers. The characteristics of the preparation allow better dispersion of the nanoparticles in the monomer or polymer in liquid or solid phase to be formed during the process of obtaining the polymer and provides other technical advantages, such as not handling nanoparticles in powder state, which can disperse in the environment and cause problems in the manufacturing process.

Another object of the invention is to provide an industrial process for producing polymers, comprising a step of adding the preparation of nanoparticles of metals, transition metals, rare earths, oxides thereof or combinations thereof or the premix containing said nanoparticles, to monomers; dispersing/homogenizing said nanoparticles or premix; and polymerizing the product until the desired polymer is obtained.

These and other objects of the invention will be immediately valued by those skilled in the art and will be described in detail below.

## Brief Description of Figures

The following figures are presented:

Fig. 1 shows the FTIR spectra of the samples. In A) the spectra of epoxy resin - Sample 1, epoxy resin - Sample 2 and epoxy resin - Sample 3 are shown, respectively. In B) the superposition of these spectra is shown (transmittance in % in the Y-axis and wavenumber in cm-1 in the X-axis).

Fig. 2 shows the FTIR spectra of the samples. In A) the spectra of epoxy resin - Sample 4, epoxy resin - Sample 5 and epoxy resin - Sample 6 are shown, respectively. In B) the superposition of these spectra is shown (transmittance in % in the Y-axis and wavenumber in cm-1 in the X-axis).

Fig. 3 shows the FTIR spectra of the samples. In A) the spectra of epoxy resin - Sample 7, epoxy resin - Sample 8 and epoxy resin - Sample 9 are shown, respectively. In B) the superposition of these spectra is shown (transmittance in % in the Y-axis and wavenumber in cm-1 in the X-axis).

Fig. 4 shows the FTIR spectra of the samples. In A) the spectra of epoxy resin - Sample 10, epoxy resin - Sample 11 and epoxy resin - Sample 12 are shown, respectively. In B) the superposition of these spectra is shown (transmittance in % in the Y-axis and wavenumber in cm-1 in the X-axis).

Fig. 5 shows the FTIR spectrum of the Lacktherm 1314 resin sample (transmittance in % in the Y-axis and wavenumber in cm-1 in the X-axis).

Fig. 6 depicts a thermogravimetric analysis: the mass loss profile as a function of temperature and first derivative of the resin sample Sample 1 (in the Y-axis, on the left, the & of the TG; in the Y-axis on the right, the DTF (%/min); and temperature in degrees Celsius in the X-axis).

Fig. 7 depicts a thermogravimetric analysis: the mass loss profile as a function of temperature and first derivative of the resin sample Sample 2 (in the Y-axis, on the left, the & of the TG; in the Y-axis on the right, the DTF (%/min); and temperature in degrees Celsius in the X-axis).

Fig. 8 depicts a thermogravimetric analysis: the mass loss profile as a function of temperature and first derivative of the resin sample Sample 3 (in the Y-axis, on the left, the & of the TG; in the Y-axis on the right, the DTF (%/min); and temperature in degrees Celsius in the X-axis).

Fig. 9 depicts a thermogravimetric analysis: the mass loss profile as a function of temperature and first derivative of the resin sample Sample 4 (in the Y-axis, on the left, the & of the TG; in the Y-axis on the right, the DTF (%/min); and temperature in degrees Celsius in the X-axis).

Fig. 10 depicts a thermogravimetric analysis: the mass loss profile as a function of temperature and first derivative of the resin sample Sample 5 (in the Y-axis, on the left, the & of the TG; in the Y-axis on the right, the DTF (%/min); and temperature in degrees Celsius in the X-axis).

Fig. 11 depicts a thermogravimetric analysis: the mass loss profile as a function of temperature and first derivative of the resin sample Sample 6 (in the Y-axis, on the left, the & of the TG; in the Y-axis on the right, the DTF (%/min); and temperature in degrees Celsius in the X-axis).

Fig. 12 depicts a thermogravimetric analysis: the mass loss profile as a function of temperature and first derivative of the resin sample Sample 7 (in the Y-axis, on the left, the & of the TG; in the Y-axis on the right, the DTF (%/min); and temperature in degrees Celsius in the X-axis).

Fig. 13 depicts a thermogravimetric analysis: the mass loss profile as a function of temperature and first derivative of the resin sample Sample 8 (in the Y-axis, on the left, the & of the TG; in the Y-axis on the right, the DTF (%/min); and temperature in degrees Celsius in the X-axis).

Fig. 14 depicts a thermogravimetric analysis: the mass loss profile as a function of temperature and first derivative of the resin sample Sample 9 (in the Y-axis, on the left, the & of the TG; in the Y-axis on the right, the DTF (%/min); and temperature in degrees Celsius in the X-axis).

Fig. 15 depicts a thermogravimetric analysis: the mass loss profile as a function of temperature and first derivative of the resin sample Sample 10 (in the Y-axis, on the left, the & of the TG; in the Y-axis on the right, the DTF (%/min); and temperature in degrees Celsius in the X-axis).

Fig. 16 depicts a thermogravimetric analysis: the mass loss profile as a function of temperature and first derivative of the resin sample Sample 11 (in the Y-axis, on the left, the & of the TG; in the Y-axis on the right, the DTF (%/min); and temperature in degrees Celsius in the X-axis).

Fig. 17 depicts a thermogravimetric analysis: the mass loss profile as a function of temperature and first derivative of the resin sample Sample 11 (in the Y-axis, on the left, the & of the TG; in the Y-axis on the right, the DTF (%/min); and temperature in degrees Celsius in the X-axis).

Fig. 18 depicts a thermogravimetric analysis: the mass loss profile as a function of temperature and first derivative of the resin sample Sample 12 (in the Y-axis, on the left, the & of the TG; in the Y-axis on the right, the DTF (%/min); and temperature in degrees Celsius in the X-axis).

Fig. 19 depicts a thermogravimetric analysis: the mass loss profile as a function of temperature and first derivative of the Lacktherm 1314-1 resin sample (in the Y-axis, on the left, the & of the TG; in the Y-axis on the right, the DTF (%/min); and temperature in degrees Celsius in the X-axis).

Fig. 20 depicts SEM images and EDS results for resin sample 1. In A) and B) scanning electron microscopy images are shown; in C) the EDS analysis image is shown.

Fig. 21 depicts SEM images and EDS results for resin sample 2. In A) a scanning electron microscopy image is shown; in B) the EDS analysis image is shown.

Fig. 22 depicts SEM images and EDS results for resin sample 3. In A) and B) scanning electron microscopy images are shown; in C) the EDS analysis image is shown.

Fig. 23 depicts SEM images and EDS results for resin sample 4. In A) and B) scanning electron microscopy images are shown; in C) the EDS analysis image is shown.

Fig. 24 depicts SEM images and EDS results for resin sample 5. In A) and B) scanning electron microscopy images are shown; in C) the EDS analysis image is shown.

Fig. 25 depicts SEM images and EDS results for resin sample 6. In A) and B) scanning electron microscopy images are shown; in C) the EDS analysis image is shown.

Fig. 26 depicts SEM images and EDS results for resin sample 7. In A) and B) scanning electron microscopy images are shown; in C) the EDS analysis image is shown.

Fig. 27 depicts SEM images and EDS results for resin sample 8. In A) and B) scanning electron microscopy images are shown; in C) the EDS analysis image is shown.

Fig. 28 depicts SEM images and EDS results for resin sample 9. In A) and B) scanning electron microscopy images are shown; in C) the EDS analysis image is shown.

Fig. 29 depicts SEM images and EDS results for resin sample 10. In A) and B) scanning electron microscopy images are shown; in C) the EDS analysis image is shown.

Fig. 30 depicts SEM images and EDS results for resin sample 11. In A) and B) scanning electron microscopy images are shown; in C) the EDS analysis image is shown.

Fig. 31 depicts SEM images and EDS results for resin sample 12. In A) and B) scanning electron microscopy images are shown; in C) the EDS analysis image is shown.

Fig. 32 depicts a graph of the modification of the storage modulus (damping effect) of the 1020/1 resin with increasing temperature. In A) the storage modulus is shown in E'(1,000 Hz)/Mpa in the Y-axis and the temperature in degrees Celsius in the X-axis. In B) a graph with the Tangent Delta is shown for the same material, with the Tangent Delta values shown in the Y-axis and the temperature in degrees Celsius in the X-axis.

Fig. 33 depicts a graph of the modification of the storage modulus (damping effect) of the 1010/1 resin with increasing temperature. In A) the storage modulus in E' (1,000 Hz)/Mpa is shown in the Y-axis and the temperature in degrees Celsius in the X-axis. In B) a graph with the Tangent Delta is shown for the same material, with the Tangent Delta values shown in the Y-axis and the temperature in degrees Celsius in the X-axis.

Fig. 34 depicts a graph of the modification of the storage modulus (damping effect) of the 1000/0 resin with increasing temperature. In A) the storage modulus in E' (1,000 Hz)/Mpa is shown in the Y-axis and the temperature in degrees Celsius in the X-axis. In B) a graph with the Tangent Delta is shown for the same material, with the Tangent Delta values shown on the y-axis and the temperature in degrees Celsius on the X-axis. Fig. 35 shows a comparative graph of the storage modules of resins 1020/1, 1010/1 and 1000/0, as shown in the graphs in Figs. 32A, 33A and 34A.

Fig. 36 shows a comparative graph of the Tangent Delta data of resins 1020/1, 1010/1 and 1000/0, with graphs in Figs. 32B, 33B and 34B.

Fig. 37 illustrates comparative curves of the storage modulus (E') by temperature for each sample described in the example 8.

Fig. 38 illustrates comparative curves of tangent delta (tan d) by temperature for each sample described in the example 8.

Fig. 39 shows a bar graph for mean activation energy (AE) for each sample described in the example 8.

Fig. 40 shows a bar graph for mean storage modulus (E') for each sample described in the example 8.

Fig. 41 shows a bar graph for mean tangent delta (tan d) for each sample described in the example 8.

Fig. 42 shows a line graph comparing the variation of storage modulus (E') by concentration and nanoparticle type.

Fig. 43 shows a line graph comparing the variation of tangent delta (tan d) by concentration and nanoparticle type.

Fig. 44 depicts the FTIR spectra of the sample 1000/0 described in the example 8 (transmittance in % in the Y-axis and wavenumber in cm-1 in the X-axis).

Fig. 45 depicts the FTIR spectra of the sample 1010/1 described in the example 8 (transmittance in % in the Y-axis and wavenumber in cm-1 in the X-axis).

Fig. 46 depicts the FTIR spectra of the sample 1010/2 described in the example 8 (transmittance in % in the Y-axis and wavenumber in cm-1 in the X-axis).

Fig. 47 depicts the FTIR spectra of the sample 1010/3 described in the example 8 (transmittance in % in the Y-axis and wavenumber in cm-1 in the X-axis).

Fig. 48 depicts the FTIR spectra of the sample 1010/4 described in the example 8 (transmittance in % in the Y-axis and wavenumber in cm-1 in the X-axis).

Fig. 49 depicts the FTIR spectra of the sample 1020/1 described in the example 8 (transmittance in % in the Y-axis and wavenumber in cm-1 in the X-axis).

Fig. 50 depicts the FTIR spectra of the sample 1020/2 described in the example 8 (transmittance in % in the Y-axis and wavenumber in cm-1 in the X-axis).

Fig. 51 depicts the FTIR spectra of the sample 1020/3 described in the example 8 (transmittance in % in the Y-axis and wavenumber in cm-1 in the X-axis).

Fig. 52 depicts the FTIR spectra of the sample 1020/4 described in the example 8 (transmittance in % in the Y-axis and wavenumber in cm-1 in the X-axis).

Fig. 53 depicts the FTIR spectra of the sample 1030/4 described in the example 8 (transmittance in % in the Y-axis and wavenumber in cm-1 in the X-axis).

Fig. 54 depicts the FTIR spectra of the sample 1040/4 described in the example 8 (transmittance in % in the Y-axis and wavenumber in cm-1 in the X-axis).

Fig. 55 depicts a comparison of the FTIR spectra of the samples described in the example 8 (transmittance in % in the Y-axis and wavenumber in cm-1 in the X-axis).

Fig. 56 depicts the storage modulus (E') curve of the sample 1010/1 as a function of temperature.

Fig. 57 depicts the tangent delta (tan d) curve of the sample 1010/1 as a function of temperature.

Fig. 58 depicts the loss modulus (E") curve of the sample 1010/1 as a function of temperature.

Fig. 59 depicts the storage modulus (E') curve of the sample 1010/2 as a function of temperature.

Fig. 60 depicts the tangent delta (tan d) curve of the sample 1010/2 as a function of temperature.

Fig. 61 depicts the loss modulus (E") curve of the sample 1010/2 as a function of temperature.

Fig. 62 depicts storage modulus (E') curve of the sample 1010/3 as a function of temperature.

Fig. 63 depicts tangent delta (tan d) curve of the sample 1010/3 as a function of temperature.

Fig. 64 depicts loss modulus (E") curve of the sample 1010/3 as a function of temperature.

Fig. 65 shows a bar graph of the mean storage modulus (E') for each sample described in the example 15.

Fig. 66 shows a bar graph of the mean loss modulus (E") for each sample described in the example 15.

Fig. 67 shows a bar graph of the mean glass transition temperature ($T_g$) for each sample described in the example 15.

Fig. 68 illustrates the size histogram obtained from transmission microscopy analysis of the sample of as-received particles of Niobium pentoxide (termed A.R.).

Fig. 69 illustrates the size histogram obtained from the transmission microscopy analysis of the sample of particles of Niobium pentoxide subjected to milling for 1h.

Fig. 70 illustrates the size histogram obtained from the transmission microscopy analysis of the sample of particles of Niobium pentoxide subjected to milling for 3h.

Fig. 71 illustrates the size histogram obtained from the transmission microscopy analysis of the sample of particles of Niobium pentoxide subjected to milling for 6h.

Fig. 72 illustrates the size histogram obtained from the transmission microscopy analysis of the sample of particles of Niobium pentoxide subjected to milling for 12h.

Fig. 73 illustrates a comparison of X-ray diffractograms that demonstrate significant changes in the crystalline phase for samples of particles of Niobium pentoxide subjected to different milling times (i.e., 1h, 3h, 6h, and 12h).

Fig. 74 shows a graph of crystallinity (%) and crystallite size (nm) and milling time (h).

Fig. 75 shows particles of Niobium pentoxide highlighted in an ultra-thin section of the sample with 50 ppm.

Fig. 76 shows particles of Niobium pentoxide highlighted in an ultra-thin section of the sample with 100 ppm.

Fig. 77 shows particles of Niobium pentoxide highlighted in an ultra-thin section of the sample with 250 ppm.

Fig. 78 shows particles of Niobium pentoxide highlighted in an ultra-thin section of the sample with 500 ppm.

Fig. 79 shows a graph of the surface temperature of the brake pad at the end of each braking cycle for each of the samples tested.

Fig. 80 shows photos of samples V1, V6 and V8 after 3 cycles of the accelerated corrosion test.

Fig. 81 shows a graph of the Gogan C hardness and cold compressibility test (5 MPa, whole pad) for the friction materials containing nanoparticles of Niobium pentoxide in phenolic resin.

## Detailed Description of the Invention

In the context of the present invention, the term "polymer" should be understood in its broadest sense as a macromolecule formed by the combination of at least two monomers, where said monomers may comprise the same or different chemical composition. The term "polymer" in the context of the present invention encompasses synthetic polymers (such as, but not limited to, epoxy resin, phenolic resin, polymethyl methacrylate (acrylic), polystyrene, polyvinyl chloride (PVC), polyethylene and polypropylene) or natural polymers (such as, but not limited to, rubber, silk, wool, cellulose, peptides, proteins and nucleic acid chains).

In a first aspect, the present invention discloses a nanoparticle preparation comprising a nanoparticle filler, wherein said filler shows a degree of crystallinity below 81%.

In an embodiment of the nanoparticle preparation, said nanoparticle filler comprises a degree of amorphization of at least 19%.

In an embodiment of the nanoparticle preparation, said nanoparticle filler preferably comprises a degree of crystallinity below 80%, more preferably below 75%, more preferably below 70%, more preferably below 65%, more preferably below 61%, more preferably below 60%, more preferably below 55%, more preferably below 50%, more preferably a degree of crystallinity below 45%, more preferably below 40%, more preferably below 35% and even more preferably a degree of crystallinity below 30%. In one embodiment, the degree of crystallinity is below 29%, more preferably below 28%, more preferably below 27%. In a non-limiting embodiment, the degree of crystallinity is 26%.

In an embodiment of the nanoparticle preparation, said nanoparticle filler preferably comprises a degree of crystallinity below 61%, preferably a degree of crystallinity below 45% and even more preferably a degree of crystallinity below 30%.

In an embodiment of the nanoparticle preparation, said nanoparticle filler preferably comprises a degree of amorphization of at least 20%, more preferably at least 25%, more preferably at least 30%, more preferably at least 35%, more preferably at least 39%, more preferably at least 40%, more preferably at least 45%, more preferably at least 50%, more preferably a degree of amorphization of at least 55%, more preferably at least 60%, more preferably at least 65% and even more preferably a degree of crystallinity of at least 70%. In one embodiment, the degree of amorphization is at least 71%, more preferably at least 72%, more preferably at least 73%. In a non-limiting embodiment, the degree of amorphization is 74%.

In an embodiment of the nanoparticle preparation, said nanoparticle filler preferably comprises a degree of amorphization of at least 39%, preferably a degree of amorphization of at least 55% and even more preferably a degree of amorphization of at least 70%.

In an embodiment of the nanoparticle preparation, said nanoparticles are composed of metals, transition metals, rare earths, oxides thereof or combinations thereof.

In an embodiment of the nanoparticle preparation, said nanoparticles are composed of graphene oxide, niobium pentoxide, titanium dioxide, or combinations thereof.

In an embodiment of the nanoparticle preparation, said nanoparticles are composed of niobium pentoxide, titanium dioxide, or combinations thereof.

In an embodiment of the nanoparticle preparation, said nanoparticles are composed of niobium pentoxide.

In an embodiment of the nanoparticle preparation, said nanoparticles are composed of titanium dioxide.

In an embodiment of the nanoparticle preparation, said nanoparticles of niobium pentoxide comprise a particle size distribution profile that is: d10: between 14 and 110 nm; d50: between 29 and 243 nm; and d90: between 89 and 747 nm.

In an embodiment of the nanoparticle preparation, said nanoparticles of titanium dioxide comprise a particle size distribution profile of: d10 from 148 to 189nm; d50 from 239 to 485m; d90 from 402 to 970nm.

In a second aspect, the present invention discloses a premix comprising a nanoparticle preparation as defined above and at least one monomer.

In one embodiment of the premix, said nanoparticle preparation comprises a degree of crystallinity below 81%. In one embodiment of the premix, said nanoparticle preparation preferably comprises a degree of crystallinity below 80%, more preferably below 75%, more preferably below 70%, more preferably below 65%, more preferably below 61%, more preferably below 60%, more preferably below 55%, more preferably below 50%, more preferably a degree of crystallinity below 45%, more preferably below 40%, more preferably below 35% and even more preferably a degree of crystallinity below 30%. In one embodiment, the degree of crystallinity is below 29%, more preferably below 28%, more preferably below 27%. In a non-limiting embodiment, the degree of crystallinity is 26%.

In one embodiment of the premix, said nanoparticle preparation comprises a degree of amorphization of at least 19%. In one embodiment of the premix, said nanoparticle preparation preferably comprises a degree of amorphization of at least 20%, more preferably at least 25%, more preferably at least 30%, more preferably at least 35%, more preferably at least 39%, more preferably at least 40%, more preferably at least 45%, more preferably at least 50%, more preferably a degree of amorphization of at least 55%, more preferably at least 60%, more preferably at least 65% and even more preferably a degree of crystallinity of at least 70%. In one embodiment, the degree of amorphization is at least 71%, more preferably at least 72%, more preferably at least 73%. In a non-limiting embodiment, the degree of amorphization is 74%.

In one embodiment of the premix, the monomer is a synthetic polymer selected from the group consisting of epoxy resin, phenolic resin, polymethyl methacrylate (acrylic), polystyrene, polyvinyl chloride (PVC), polyethylene, polypropylene, or combinations thereof, or a natural polymer selected from the group consisting of rubber, silk, wool, cellulose, peptides, proteins, nucleic acid chains, or combinations thereof.

In one embodiment of the premix, the monomer is epoxy resin polymer or phenolic resin.

In a third aspect, the present invention discloses a method for modulating the chemical and/or mechanical properties of a polymer comprising at least one step of incorporating the nanoparticle preparation as defined above into the composition of said polymer.

In one embodiment of the method, the step of incorporating the nanoparticle preparation results in a nanoparticle concentration in the range of tens to hundreds of ppm relative to the polymer.

In one embodiment of the method, the chemical property is the crystal structure of said polymer.

In one embodiment of the method, the mechanical property is the storage modulus (E'), loss modulus (E") or loss factor (tan $\delta$) or glass transition temperature ($T_g$) of the polymer.

In a fourth aspect, the present invention discloses a process for obtaining a modified polymer comprising at least one step of incorporating the nanoparticle preparation as defined above during at least one step of polymerization of said polymer.

In one embodiment of the process, the step of incorporating the nanoparticle preparation results in a nanoparticle concentration in the range of tens to hundreds of ppm relative to the polymer.

In a fifth aspect, the present invention features a modified polymer comprising the nanoparticle preparation as above.

In one embodiment of the polymer, it is obtained by the process as defined above.

In one embodiment, the polymer comprises a concentration of the nanoparticle preparation in the range of tens to hundreds of ppm relative to the polymer.

In one embodiment of the polymer, said matrix is composed of epoxy resin, phenolic resin, polymethyl methacrylate (acrylic), polystyrene, polyvinyl chloride (PVC), polyethylene, polypropylene or combinations thereof or of natural polymers selected from the group consisting of rubber, silk, wool, cellulose, peptides, proteins, nucleic acid chains or combinations thereof.

In one embodiment, the polymer is composed of epoxy resin or phenolic resin.

In one embodiment, the polymer is composed of epoxy resin. In one embodiment, the polymer is composed of phenolic resin.

In one embodiment of the premix and polymer, the nanoparticles are entirely in the nanometer particle size range. Polymer samples comprising particles in the micrometer range showed catastrophic failures, such as cracks, deformations, and irregularities in the polymer geometry.

In one embodiment, the concentration of said nanoparticles in relation to the polymer is low, e.g., in the range between tens and hundreds of ppm, such as (non-limiting): 10, 25, 50, 75, 100, 200, 250, 300, 400, 500, 600, 700, 800, 900 or 999 ppm. Such a low concentration of nanoparticles generated a surprising technical effect in modulating the properties of the polymers to which they were applied.

In one embodiment, the concentration of said nanoparticles relative to the polymer is 50 to 500 ppm.

In one embodiment, the concentration of said nanoparticles relative to the polymer is 50, 100, 250 or 500 ppm.

The inventors of the present invention not only found that nanoparticles, when incorporated into polymer matrices, are capable of surprisingly improving chemical and mechanical properties (such as storage modulus (E'), loss modulus (E"), glass transition temperature ($T_g$) and tan delta), but also surprisingly that a higher degree of amorphization of the nanoparticles promotes an even more significant change in the properties of the polymer matrix.

The examples below show non-limiting examples of embodiments for more than one type of polymer and for a series of particle types, varying composition, milling times, mass, particle size distribution, etc. Therefore, the scope of the claims herein is duly supported by the present specification.

## Examples

The examples shown here are intended only to exemplify some of the various ways of carrying out the invention, however without limiting its scope.

Dynamic Mechanical Thermal Analysis (DMTA) has been widely used in the characterization of polymers by detecting their relaxation processes, both at the macroscopic and molecular levels. In other words, it provides information about the viscoelastic behavior of a system, dividing the modulus into two components, an elastic contribution and a viscous contribution.

The modulus of the E* system is represented mathematically as a complex number composed of two components:

$$E^* = E' + i.E''$$

Where E' is the storage modulus (measurement of the material's elasticity - the material's ability to store energy) and E" is the loss modulus (the material's ability to dissipate energy - energy lost in the form of heat).

DMTA analysis also allows obtaining the loss or damping tangent (tan delta), which is the ratio between the dissipated energy and the maximum potential energy stored during the cycle:

$$\text{Tan delta} = E''/E'$$

Materials with high tan delta dissipate much of the energy used to deform them, while materials with low tan delta are more elastic and have a greater capacity to store energy.

## Example 1 - Epoxy resin containing nanoparticles of graphene oxide

The epoxy resin used in the experiments is commercially available liquid epoxy resin D.E.R 331TM from Dow Chemical Company which is a liquid reaction product of epichlorohydrin and bisphenol A.

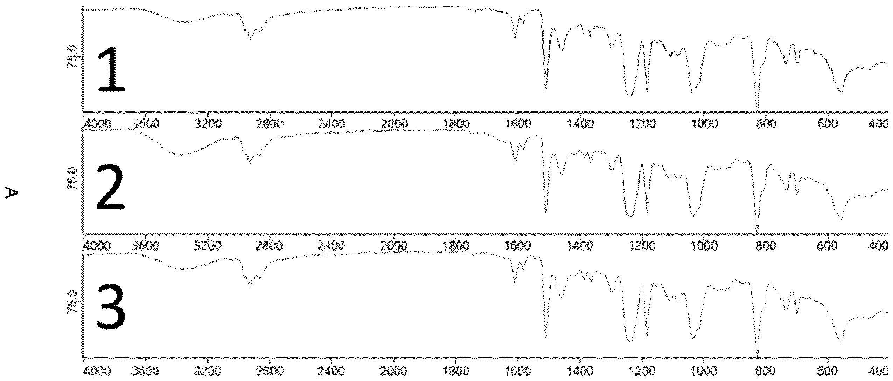

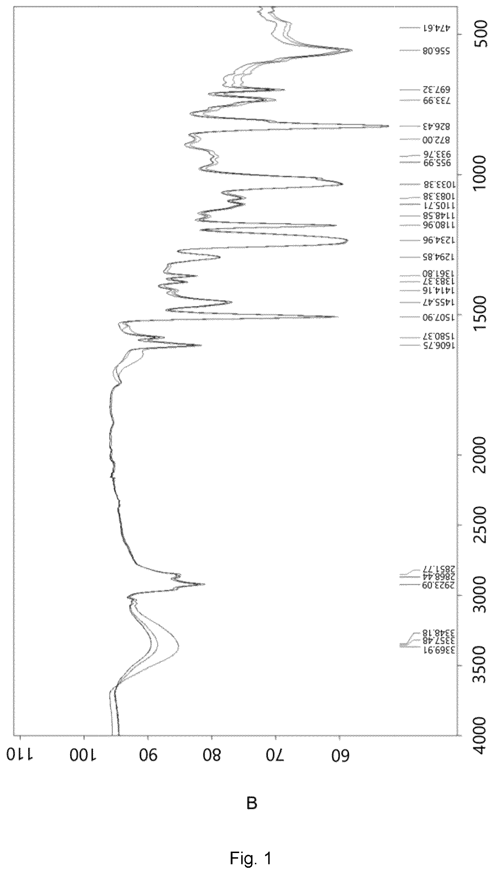

The concentrations of nanoparticles of graphene oxide that are incorporated into the resin are described in the table below for the samples named in the tests discussed below and illustrated in Figs. 1-31:

**Table 1** - description of samples 1-4

| | Identification | Nanoparticle quantity (ppm) |
|---|---|---|
| **Graphene oxide** | Sample 1 | 500 |
| | Sample 2 | 250 |
| | Sample 3 | 100 |
| | Sample 4 | 50 |

## Example 2 - Epoxy resin containing nanoparticles of $Nb_2O_5$

The epoxy resin used in the experiments is commercially available liquid epoxy resin D.E.R 331TM from Dow Chemical Company which is a liquid reaction product of epichlorohydrin and bisphenol A.

The concentrations of nanoparticles of niobium pentoxide that are incorporated into the resin are described in the table below for the samples named in the tests discussed below and illustrated in Figs. 1-31:

**Table 2** - description of samples 5-8

| | Identification | Nanoparticle quantity (ppm) |
|---|---|---|
| **Niobium pentoxide** | Sample 5 | 500 |
| | Sample 6 | 250 |
| | Sample 7 | 100 |
| | Sample 8 | 50 |

The granulometric profile of the niobium nanoparticles used is described in detail in patent application WO2022036427 of the same holder for a sample subjected to 12h of milling.

## Example 3 - Epoxy resin containing nanoparticles of $TiO_2$

The epoxy resin used in the experiments is commercially available liquid epoxy resin D.E.R 331TM from Dow Chemical Company which is a liquid reaction product of epichlorohydrin and bisphenol A.

The concentrations of nanoparticles of titanium dioxide that are incorporated into the resin are described in the table below for the samples named in the tests discussed below and illustrated in Figs. 1-31:

**Table 3** - description of samples 9-12

| Titanium dioxide | Identification | Nanoparticle quantity(ppm) |
|---|---|---|
| | Sample 9 | 500 |
| | Sample 10 | 250 |
| | Sample 11 | 100 |
| | Sample 12 | 50 |

The granulometric profile of the titanium nanoparticles used is described in detail in patent application BR102022010931 (still confidential) by the same holder for a sample subjected to 12 hours of milling.

**Example 4** - **Fourier Transform Infrared Spectroscopy (FTIR) Analysis.**

The resins prepared according to examples 1, 2 and 3 were subjected to various types of tests. In a first series of tests, the resins obtained were subjected to infrared spectroscopy. This technique is certainly one of the most important analytical techniques currently available. One of the great advantages of this technique is that most samples, in practically any physical state, can be studied. Liquids, solutions, pastes, powders, films, fibers, gases, and surfaces can be analyzed with careful selection of sampling techniques and preparation. The introduction of Fourier transform infrared (FTIR) spectrometers has dramatically improved the quality of infrared spectra and minimized the time required to obtain data. The constant improvement of computers has allowed the development of a variety of techniques for testing/examining previously intractable samples. Infrared (IR) radiation corresponds approximately to the part of the electromagnetic spectrum located between the visible and microwave regions. The portion of greatest utility in the analysis and identification of materials is located between 4000 cm-1 and 400 cm-1 (2.5 $\mu$m and 25 $\mu$m), the so-called mid-infrared. Infrared spectroscopy is based on the vibrations of atoms in a molecule. An infrared spectrum is commonly obtained by passing infrared radiation through a sample and determining the fraction of the incident radiation that is absorbed at each frequency (energy) or wavelength. By absorbing infrared radiation, molecules are excited to higher energy states. This process is quantized, that is, only certain frequencies (energies) are absorbed and this absorption corresponds to energy changes in the order of 8 to 40 kJ/mol. Although the absorption process in the infrared is quantized, the spectrum usually appears as a series of bands rather than lines, because each change in vibrational energy level corresponds to a series of changes in rotational levels. The lines overlap, giving rise to the observed bands, vibrational-rotation bands. The absorption frequency or wavelength of a radiation depends on the relative masses of the atoms, the bond strength constants, and the geometry of the atoms in the structure of the compound. Each absorption frequency found in an infrared spectrum corresponds to a vibration frequency of a part of a molecule of the sample. The positions of the bands in the infrared spectra can be showed in wavelength ($\mu$m) or wavenumber (cm-1), and the intensities of the bands in percentage of transmittance (%T) or absorbance (A). Transmittance is the ratio of the radiant energy transmitted by a sample to the radiant energy incident on it. Absorbance is the decimal logarithm of the inverse of transmittance, that is, $A = \log_{10}(1/T)$.

In this example, the Bruker OPTIK GmbH HTS-XT, model Vertex 70, operating in ATR (Attenuated Total Reflectance) mode with a diamond crystal was used. The liquid samples were deposited in the sample holder of the equipment and the measurements were performed in an observation range of 4,000 cm-1 to 400 cm-1 with a resolution of 4 cm-1 and making 32 scans.

The results are shown in Figs. 1-5.

Fig. 1 depicts the FTIR spectra of the samples. In A) the spectra of epoxy resin - Sample 1, epoxy resin - Sample 2 and epoxy resin - Sample 3 are shown, respectively. In B) the superposition of said spectra is shown (transmittance in % in the Y-axis and wavenumber in cm-1 in the X-axis).

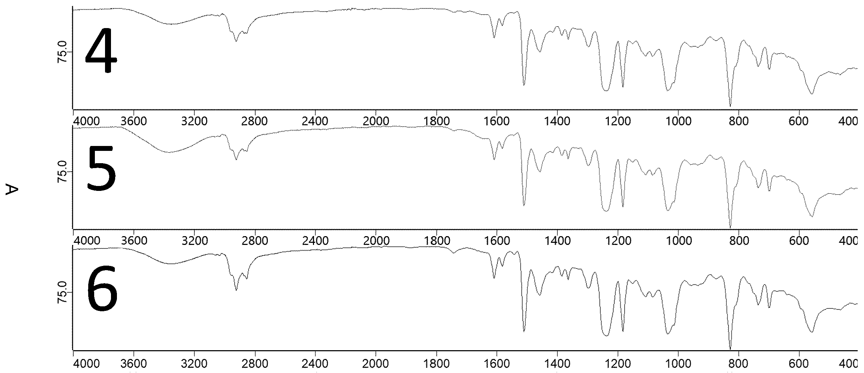

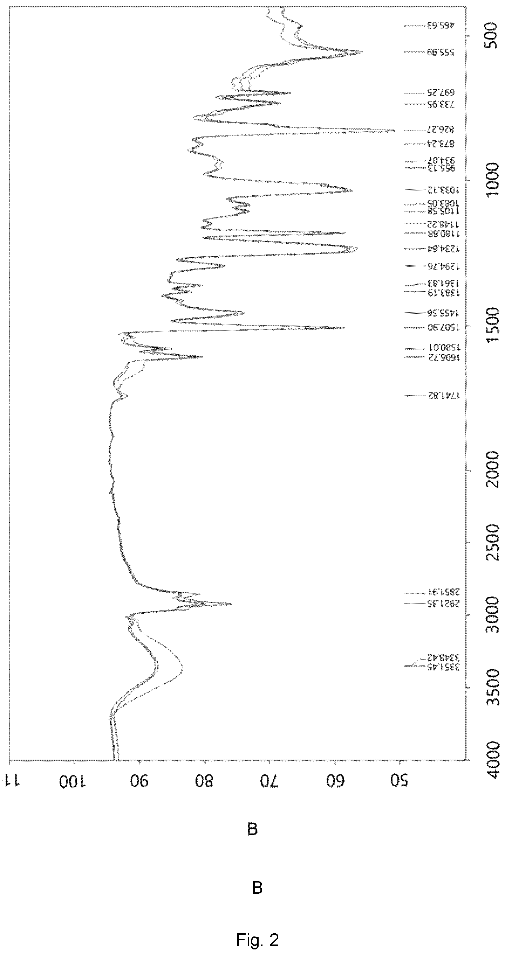

Fig. 2 depicts the FTIR spectra of the samples. In A) the spectra of epoxy resin - Sample 4, epoxy resin - Sample 5 and epoxy resin - Sample 6 are shown, respectively. In B) the superposition of said spectra is shown (transmittance in % in the Y-axis and wavenumber in cm-1 in the X-axis).

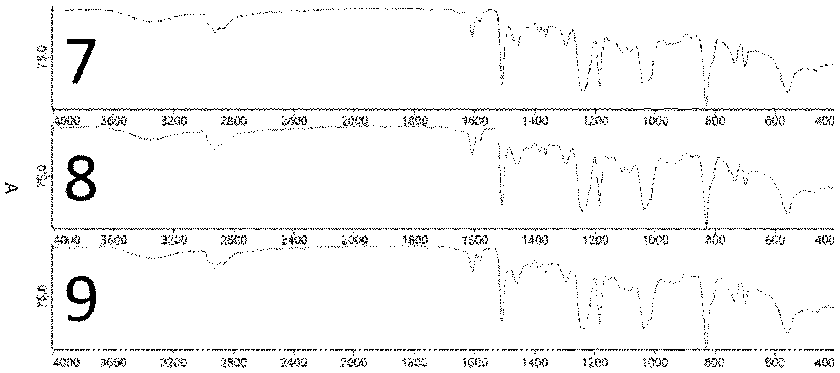

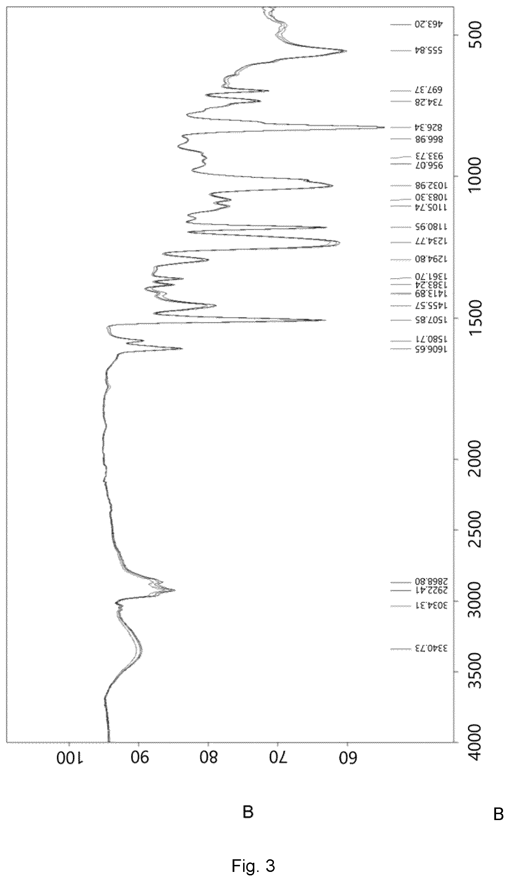

Fig. 3 depicts the FTIR spectra of the samples. In A) the spectra of epoxy resin - Sample 7, epoxy resin - Sample 8 and epoxy resin - Sample 9 are shown, respectively. In B) the superposition of said spectra is shown (transmittance in % in the Y-axis and wavenumber in cm-1 in the X-axis).

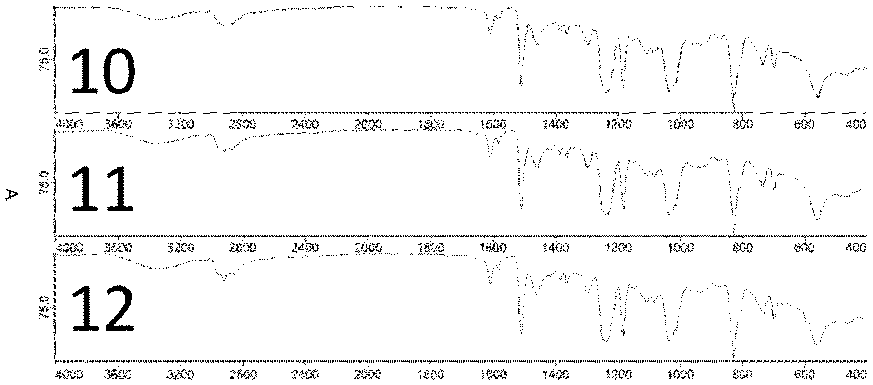

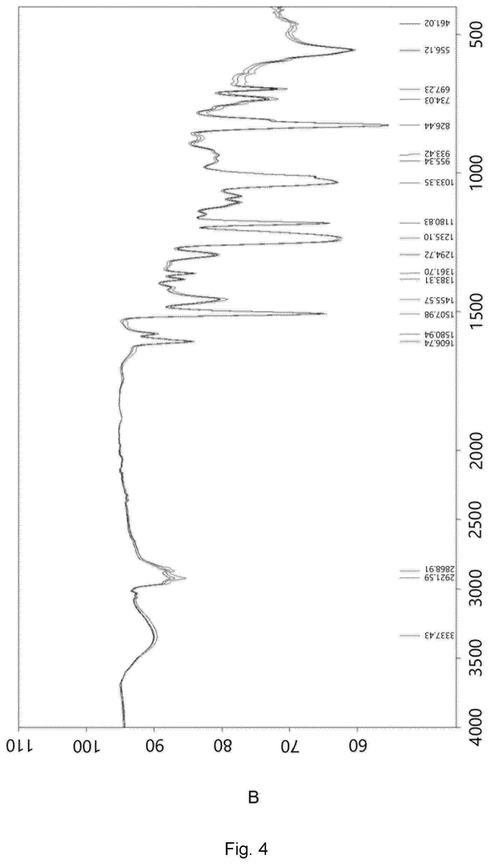

Fig. 4 depicts the FTIR spectra of the samples. In A) the spectra of epoxy resin - Sample 10, epoxy resin - Sample 11 and epoxy resin - Sample 12 are shown, respectively. In B) the superposition of said spectra is shown (transmittance in % in the Y-axis and wavenumber in cm-1 in the X-axis).

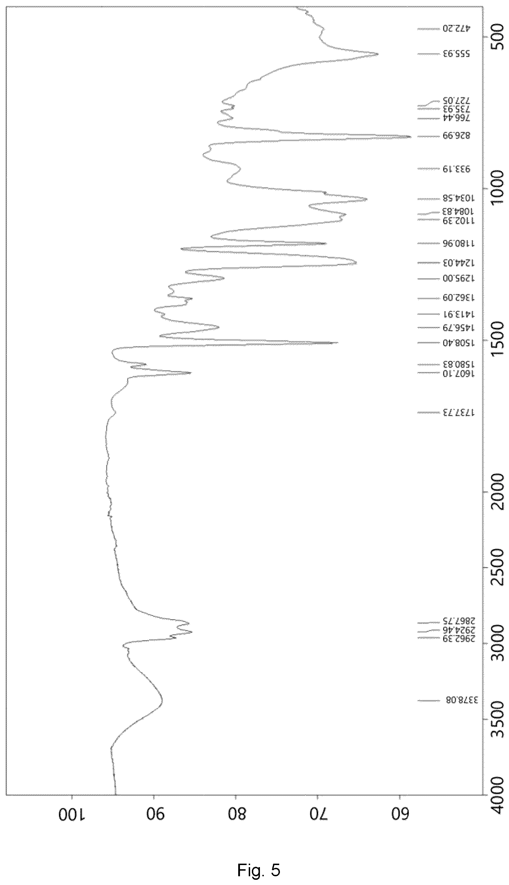

Fig. 5 depicts the FTIR spectrum of the Lacktherm 1314 resin sample (transmittance in % in the Y-axis and wavenumber in cm-1 in the X-axis).

**Example 5** - **Thermogravimetric analysis**

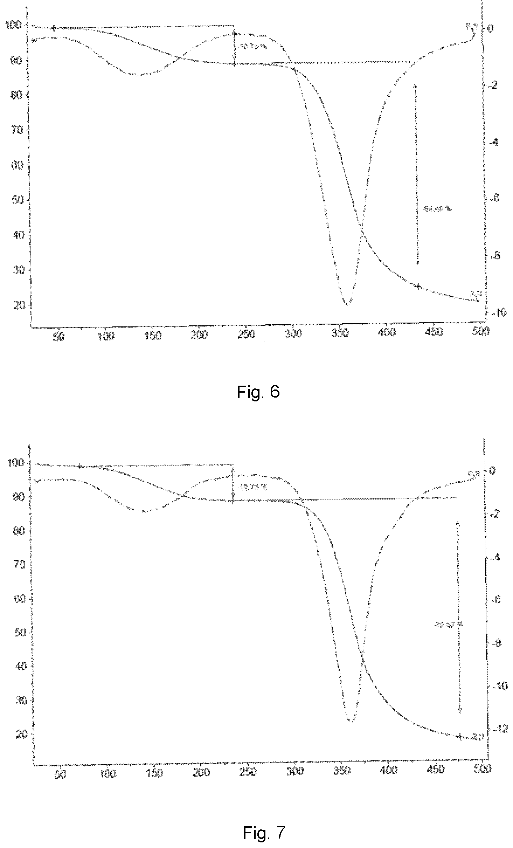

The resins prepared according to examples 1, 2 and 3 were analyzed by thermogravimetry. The results are shown in Figs. 6-19.

Fig. 6 depicts a thermogravimetric analysis: the mass loss profile as a function of temperature and first derivative of the resin sample Sample 1 (in the Y-axis, on the left, the & of the TG; in the Y-axis on the right, the DTF (%/min); and temperature in degrees Celsius in the X-axis).

Fig. 7 depicts a thermogravimetric analysis: the mass loss profile as a function of temperature and first derivative of the resin sample Sample 2 (in the Y-axis, on the left, the & of the TG; in the Y-axis on the right, the DTF (%/min); and temperature in degrees Celsius in the X-axis).

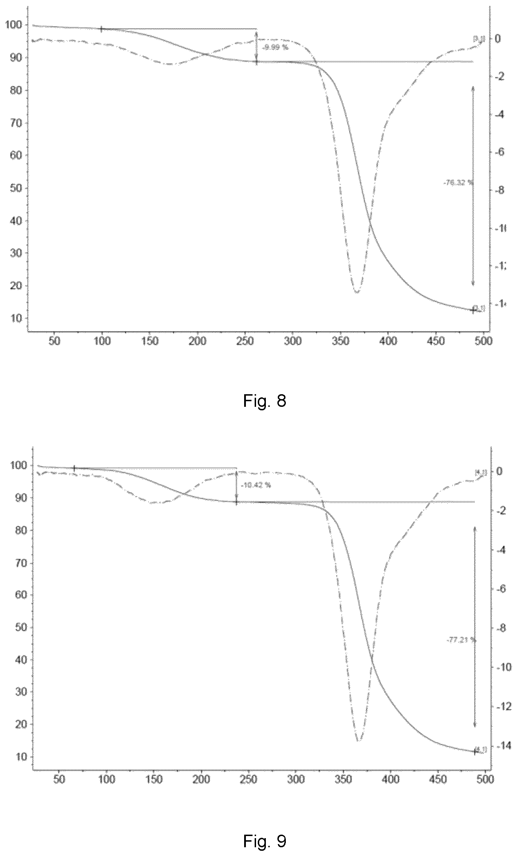

Fig. 8 depicts a thermogravimetric analysis: the mass loss profile as a function of temperature and first derivative of the resin sample Sample 3 (in the Y-axis, on the left, the & of the TG; in the Y-axis on the right, the DTF (%/min); and temperature in degrees Celsius in the X-axis).

Fig. 9 depicts a thermogravimetric analysis: the mass loss profile as a function of temperature and first derivative of the resin sample Sample 4 (in the Y-axis, on the left, the & of the TG; in the Y-axis on the right, the DTF (%/min); and temperature in degrees Celsius in the X-axis).

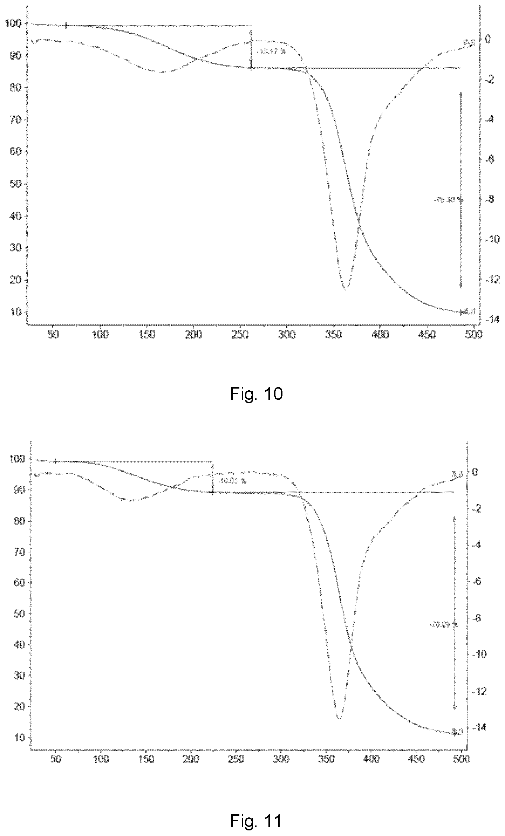

Fig. 10 depicts a thermogravimetric analysis: the mass loss profile as a function of temperature and first derivative of the resin sample Sample 5 (in the Y-axis, on the left, the & of the TG; in the Y-axis on the right, the DTF (%/min); and temperature in degrees Celsius in the X-axis).

Fig. 11 depicts a thermogravimetric analysis: the mass loss profile as a function of temperature and first derivative of the resin sample Sample 6 (in the Y-axis, on the left, the & of the TG; in the Y-axis on the right, the DTF (%/min); and temperature in degrees Celsius in the X-axis).

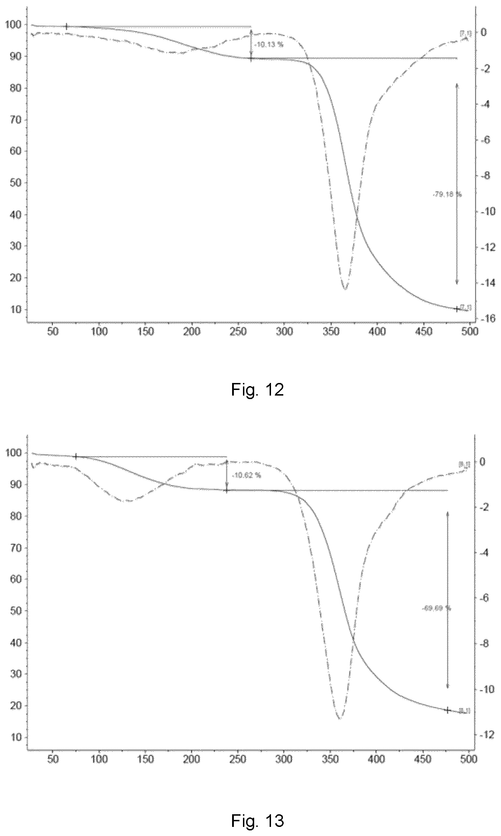

Fig. 12 depicts a thermogravimetric analysis: the mass loss profile as a function of temperature and first derivative of the resin sample Sample 7 (in the Y-axis, on the left, the & of the TG; in the Y-axis on the right, the DTF (%/min); and temperature in degrees Celsius in the X-axis).

Fig. 13 depicts a thermogravimetric analysis: the mass loss profile as a function of temperature and first derivative of the resin sample Sample 8 (in the Y-axis, on the left, the & of the TG; in the Y-axis on the right, the DTF (%/min); and temperature in degrees Celsius in the X-axis).

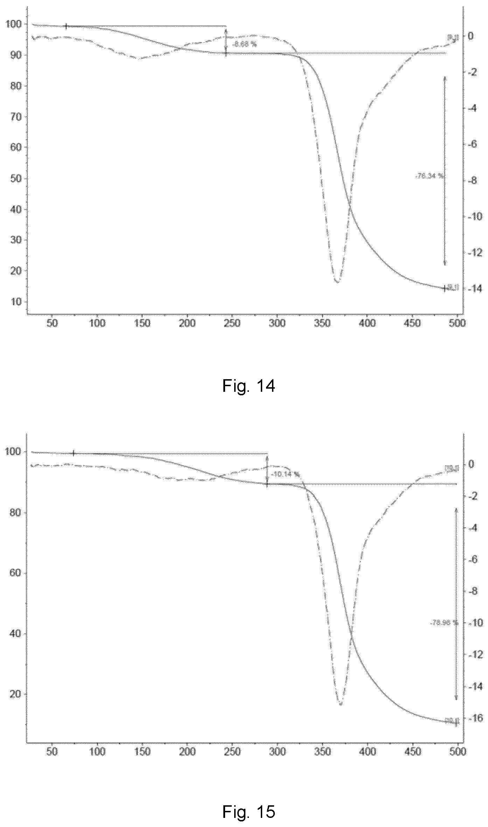

Fig. 14 depicts a thermogravimetric analysis: the mass loss profile as a function of temperature and first derivative of the resin sample Sample 9 (in the Y-axis, on the left, the & of the TG; in the Y-axis on the right, the DTF (%/min); and temperature in degrees Celsius in the X-axis).

Fig. 15 depicts a thermogravimetric analysis: the mass loss profile as a function of temperature and first derivative of the resin sample Sample 10 (in the Y-axis, on the left, the & of the TG; in the Y-axis on the right, the DTF (%/min); and temperature in degrees Celsius in the X-axis).

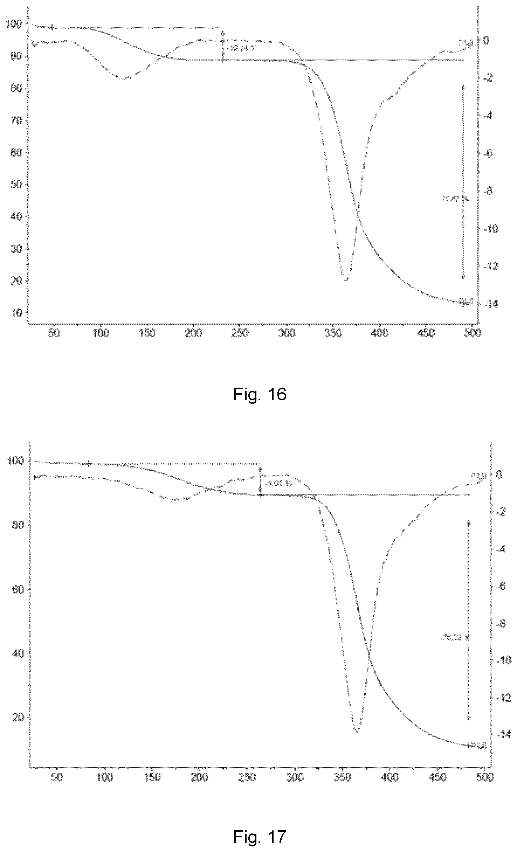

Fig. 16 depicts a thermogravimetric analysis: the mass loss profile as a function of temperature and first derivative of the resin sample Sample 11 (in the Y-axis, on the left, the & of the TG; in the Y-axis on the right, the DTF (%/min); and temperature in degrees Celsius in the X-axis).

Fig. 17 depicts a thermogravimetric analysis: the mass loss profile as a function of temperature and first derivative of the resin sample Sample 11 (in the Y-axis, on the left, the & of the TG; in the Y-axis on the right, the DTF (%/min); and temperature in degrees Celsius in the X-axis).

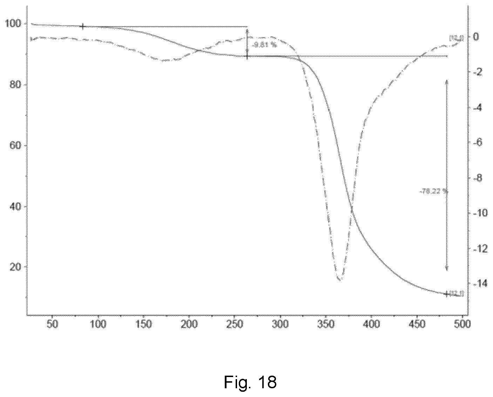

Fig. 18 depicts a thermogravimetric analysis: the mass loss profile as a function of temperature and first derivative of the resin sample Sample 12 (in the Y-axis, on the left, the & of the TG; in the Y-axis on the right, the DTF (%/min); and temperature in degrees Celsius in the X-axis).

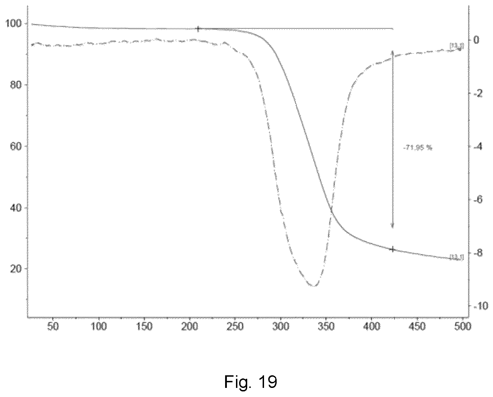

Fig. 19 depicts a thermogravimetric analysis: the mass loss profile as a function of temperature and first derivative of the Lacktherm 1314-1 resin sample (in the Y-axis, on the left, the & of the TG; in the Y-axis on the right, the DTF (%/min); and temperature in degrees Celsius in the X-axis).

**Example 6** - **Scanning Electron Microscopy Analysis**

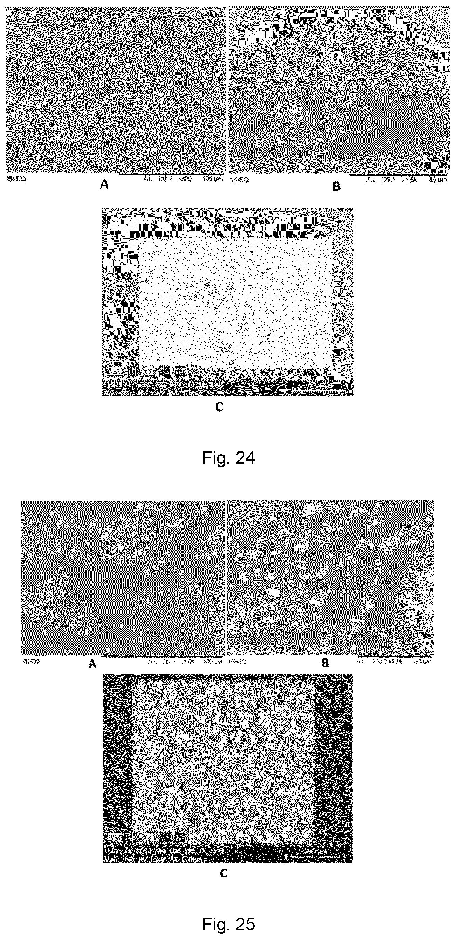

The analysis of the resins prepared according to examples 1, 2 and 3 was done by scanning electron microscopy (SEM) and EDS (indicate significance). The results are shown in Figs. 24-35.

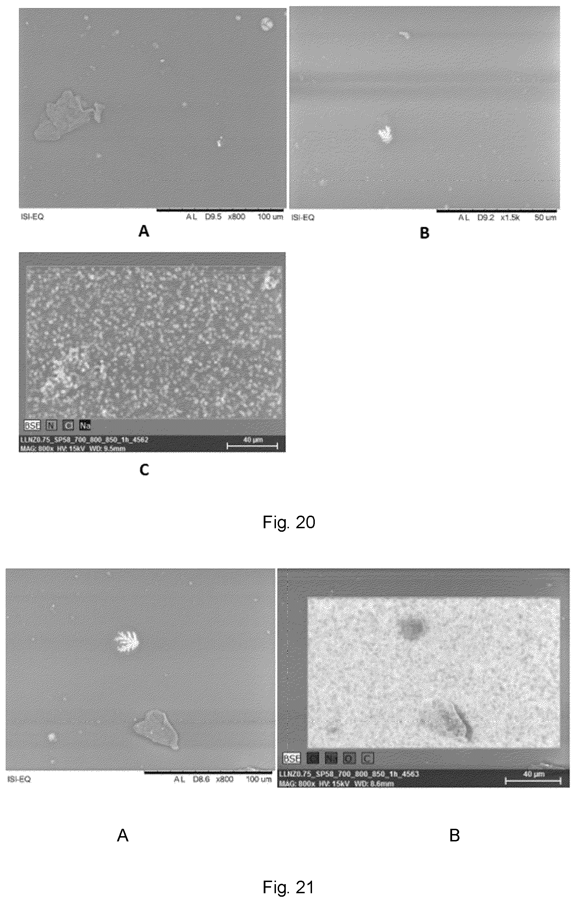

Fig. 20 depicts SEM images and EDS results for resin sample 1. In A) and B) scanning electron microscopy images are shown; in C) the EDS analysis image is shown.

Fig. 21 depicts SEM images and EDS results for resin sample 2. In A) a scanning electron microscopy image is shown; in B) the EDS analysis image is shown.

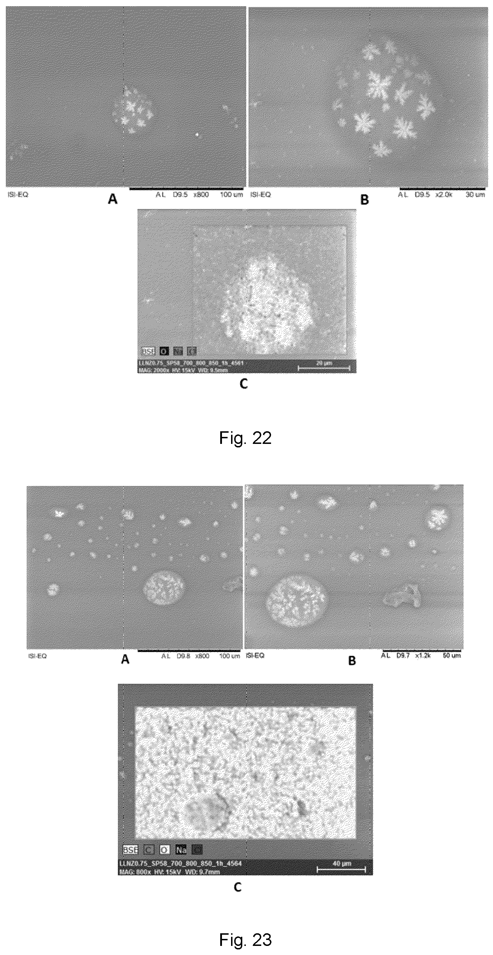

Fig. 22 depicts SEM images and EDS results for resin sample 3. In A) and B) scanning electron microscopy images are shown; in C) the EDS analysis image is shown.

Fig. 23 depicts SEM images and EDS results for resin sample 4. In A) and B) scanning electron microscopy images are shown; in C) the EDS analysis image is shown.

Fig. 24 depicts SEM images and EDS results for resin sample 5. In A) and B) scanning electron microscopy images are shown; in C) the EDS analysis image is shown.

Fig. 25 depicts SEM images and EDS results for resin sample 6. In A) and B) scanning electron microscopy images are shown; in C) the EDS analysis image is shown.

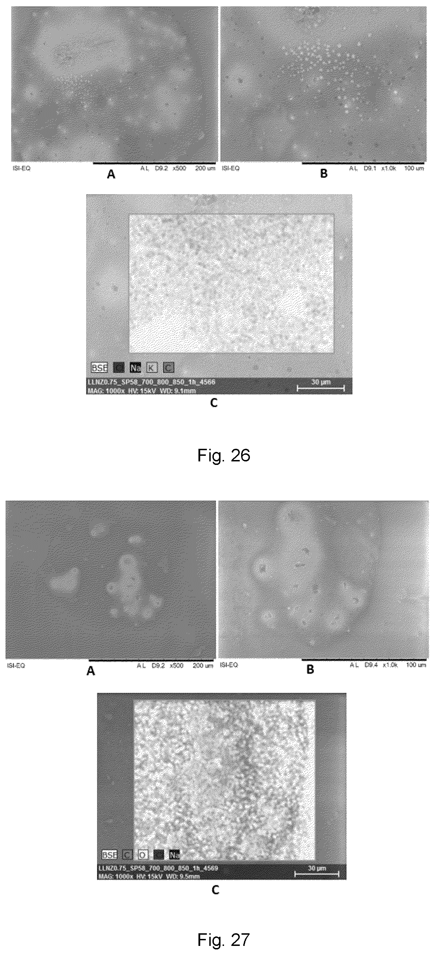

Fig. 26 depicts SEM images and EDS results for resin sample 7. In A) and B) scanning electron microscopy images are shown; in C) the EDS analysis image is shown.

Fig. 27 depicts SEM images and EDS results for resin sample 8. In A) and B) scanning electron microscopy images are shown; in C) the EDS analysis image is shown.

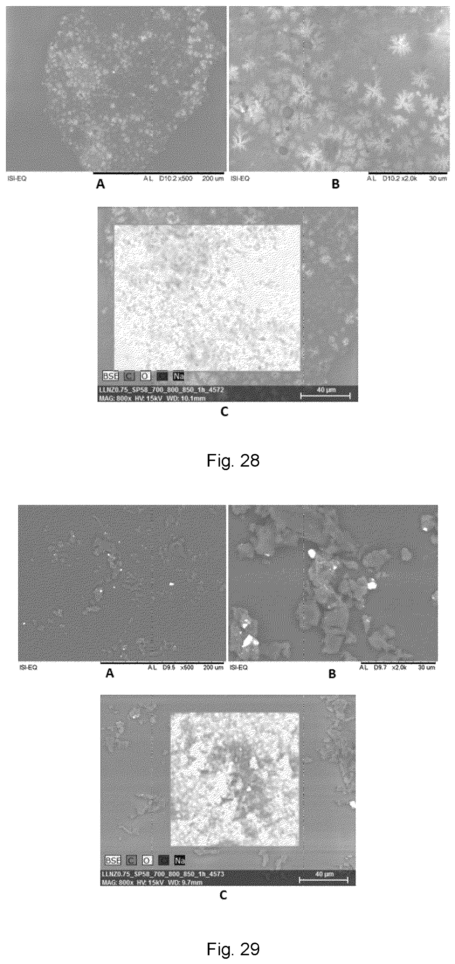

Fig. 28 depicts SEM images and EDS results for resin sample 9. In A) and B) scanning electron microscopy images are shown; in C) the EDS analysis image is shown.

Fig. 29 depicts SEM images and EDS results for resin sample 10. In A) and B) scanning electron microscopy images are shown; in C) the EDS analysis image is shown.

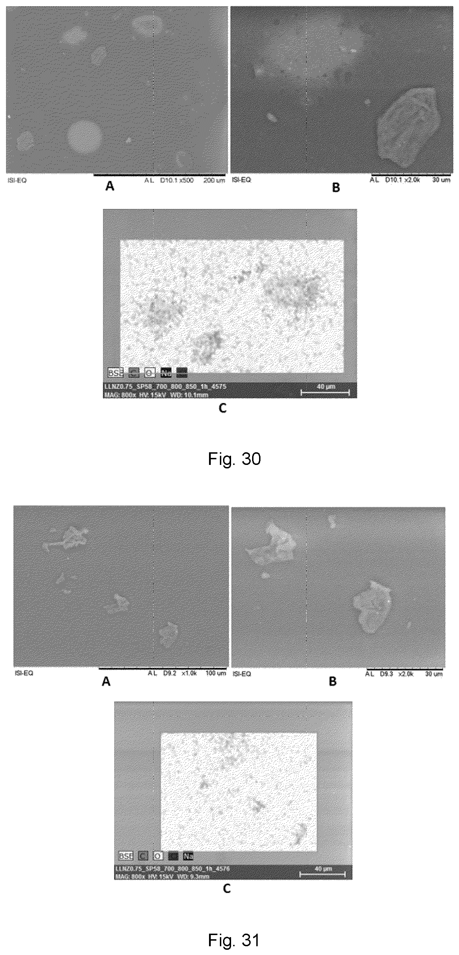

Fig. 30 depicts SEM images and EDS results for resin sample 11. In A) and B) scanning electron microscopy images are shown; in C) the EDS analysis image is shown.

Fig. 31 depicts SEM images and EDS results for resin sample 12. In A) and B) scanning electron microscopy images are shown; in C) the EDS analysis image is shown.

**Example 7 - Epoxy resin containing nanoparticles of $Nb_2O_5$ - analysis of tangent delta storage modulus with temperature change.**

For the assays, triplicates of samples 1000/0; 1010/1; 1020/1 were considered, since the other samples are only surplus test specimens and did not show considerable variability for the tests.

Polymer samples comprising titanium dioxide and niobium pentoxide microparticles were not tested as they show catastrophic failures, such as cracks, deformations and geometry irregularities.

**Table 4** shows the codes of tested samples:

| SAMPLES CODES | | | |
|---|---|---|---|
| | SAMPLE | NUMBER OF PARTICLES | TEST |
| baseline | IHRR1000/0 | 0 | PDEL 20023/3-1 |
| Nb nano | IHRR1010/1 | 50 | 8 |
| | IHRR1010/2 | 100 | 7 |
| | IHRR1010/3 | 250 | 6 |
| | IHRR1010/4 | 500 | 5 |
| Ti nano | IHRR1020/1 | 50 | 12 |
| | IHRR1020/2 | 100 | 11 |
| | IHRR1020/3 | 250 | 10 |
| | IHRR1020/4 | 500 | 9 |
| Nb micro | IHRR1030/4 | 500 | PDEL 20023/1-1 |
| Ti micro | IHRR1040/4 | 500 | PDEL 20023/2-1 |

Table 5 shows the results of activation energy (mean value) for said resins.

| RESULTS | |
|---|---|
| Sample | EA kJ/mol |
| 1000/0 | 323.454 |
| 1010/1 | 360.227 |

(continued)

| RESULTS | |
| --- | --- |
| Sample | EA kJ/mol |
| 1020/1 | 376.132 |

**Table 6** shows the results of storage modulus (mean value) for said resins.

| RESULTS | |
| --- | --- |
| Sample | E' MPa |
| 1000/0 | 492.16 |
| 1010/1 | 543.71 |
| 1020/1 | 638.84 |

**Table 7** shows the results of tangent delta (mean value) for said resins.

| RESULTS | |
| --- | --- |
| Sample | Tan.D |
| 1000/0 | 1.47 |
| 1010/1 | 0.59 |
| 1020/1 | 0.61 |

**Table 8** shows the results of glass transition temperature TG (mean value) for said resins.

| RESULTS | |
| --- | --- |
| Sample | Tan.D |
| 1000/0 | 73.4 |
| 1010/1 | 95.6 |
| 1020/1 | 93.9 |

Table 9 shows the raw data for the storage modulus of resin 1020/1 according to the temperature, indicating the damping effect.

**Table 9** - Storage modulus data.

| ##Temp. °C | E' (1kHz)/MPa | E' (1kHz)/MPa | E' (1kHz)/MPa | DE' (1kHz)/MPa | Mean Deviation |
| --- | --- | --- | --- | --- | --- |
| 35 | 521.24084 | 587.02326 | 808.26576 | 638.8432867 | 112.9483156 |
| 36 | 519.59285 | 585.25724 | 805.7915 | 636.88053 | 112.6073133 |
| 37 | 517.94764 | 583.36901 | 803.18434 | 634.8336633 | 112.2337844 |
| 38 | 516.21911 | 581.49083 | 800.51115 | 632.7403633 | 111.8471911 |
| 39 | 514.32236 | 579.63043 | 797.68265 | 630.5451467 | 111.4250022 |
| 40 | 512.17207 | 577.7202 | 794.55728 | 628.14985 | 110.9382867 |
| 41 | 509.93587 | 575.70403 | 791.18714 | 625.6090133 | 110.3854178 |
| 42 | 507.87889 | 573.52914 | 787.67052 | 623.0261833 | 109.7628911 |
| 43 | 505.9128 | 571.21286 | 784.04279 | 620.3894833 | 109.1022044 |
| 44 | 503.83362 | 568.83381 | 780.31633 | 617.6612533 | 108.4367178 |
| 45 | 501.65703 | 566.4658 | 776.59583 | 614.90622 | 107.7930733 |
| 46 | 499.47967 | 564.18704 | 773.01907 | 612.2285933 | 107.1936511 |

(continued)

| ##Temp. °C | E' (1kHz)/MPa | E' (1kHz)/MPa | E' (1kHz)/MPa | DE' (1kHz)/MPa | Mean Deviation |
|---|---|---|---|---|---|
| 47 | 497.31454 | 561.92632 | 769.47976 | 609.57354 | 106.6041467 |
| 48 | 495.13199 | 559.42766 | 765.74096 | 606.76687 | 105.9827267 |
| 49 | 492.8708 | 556.62495 | 761.74906 | 603.74827 | 105.33386 |
| 50 | 490.45399 | 553.7575 | 757.51021 | 600.5739 | 104.6242067 |
| 51 | 487.94848 | 550.9582 | 753.01422 | 597.3069667 | 103.8048356 |
| 52 | 485.49763 | 548.18753 | 748.24605 | 593.97707 | 102.8459867 |
| 53 | 483.08505 | 545.36609 | 743.39824 | 590.61646 | 101.85452 |
| 54 | 480.56022 | 542.3467 | 738.78868 | 587.2318667 | 101.0378756 |
| 55 | 477.87232 | 539.05243 | 734.26328 | 583.7293433 | 100.3559578 |
| 56 | 475.05273 | 535.5816 | 729.35513 | 579.9964867 | 99.57242889 |
| 57 | 472.10871 | 532.00424 | 724.12755 | 576.0801667 | 98.69825556 |
| 58 | 469.02922 | 528.3278 | 718.98806 | 572.1150267 | 97.91535556 |
| 59 | 465.82793 | 524.48683 | 713.7733 | 568.0293533 | 97.16263111 |
| 60 | 462.51981 | 520.27207 | 708.00444 | 563.5987733 | 96.27044444 |
| 61 | 459.06468 | 515.56293 | 701.70412 | 558.7772433 | 95.28458444 |
| 62 | 455.38681 | 510.55465 | 695.10783 | 553.6830967 | 94.28315556 |
| 63 | 451.37512 | 505.36024 | 688.26613 | 548.33383 | 93.2882 |
| 64 | 446.79964 | 499.89627 | 681.1215 | 542.6058033 | 92.34379778 |
| 65 | 441.58778 | 493.9736 | 673.53351 | 536.3649633 | 91.44569778 |
| 66 | 435.95283 | 487.21497 | 665.26465 | 529.4774833 | 90.52477778 |
| 67 | 429.97954 | 479.5341 | 656.36159 | 521.95841 | 89.60212 |
| 68 | 423.56183 | 471.56001 | 646.98538 | 514.03574 | 88.63309333 |
| 69 | 416.46198 | 463.21585 | 637.18605 | 505.6212933 | 87.70983778 |
| 70 | 408.31993 | 453.64222 | 626.93221 | 496.29812 | 87.08939333 |
| 71 | 399.01029 | 442.77438 | 616.23771 | 486.00746 | 86.82016667 |
| 72 | 388.5876 | 431.36759 | 605.13015 | 475.0284467 | 86.73446889 |
| 73 | 377.01687 | 419.5047 | 593.82807 | 463.44988 | 86.91879333 |
| 74 | 364.1372 | 406.69332 | 582.12854 | 450.9863533 | 87.42812444 |
| 75 | 349.58757 | 392.59848 | 568.44067 | 436.8755733 | 87.71006444 |
| 76 | 333.12037 | 376.79665 | 550.82711 | 420.2480433 | 87.05271111 |
| 77 | 314.49818 | 358.42099 | 527.49651 | 400.13856 | 84.9053 |
| 78 | 293.49587 | 336.28798 | 496.78053 | 375.52146 | 80.83938 |
| 79 | 270.18425 | 311.05044 | 459.21478 | 346.81649 | 74.93219333 |
| 80 | 245.14834 | 284.1788 | 416.20554 | 315.17756 | 67.35198667 |
| 81 | 219.42614 | 257.00514 | 371.13842 | 282.5232333 | 59.07679111 |
| 82 | 194.04103 | 230.71841 | 326.82022 | 250.5265533 | 50.86244444 |
| 83 | 170.10024 | 205.03487 | 285.12181 | 220.08564 | 43.35744667 |
| 84 | 147.8736 | 179.40105 | 246.98719 | 191.4206133 | 37.04438444 |
| 85 | 127.39577 | 155.10434 | 211.56364 | 164.6879167 | 31.25048222 |

(continued)

| ##Temp. °C | E' (1kHz)/MPa | E' (1kHz)/MPa | E' (1kHz)/MPa | DE' (1kHz)/MPa | Mean Deviation |
|---|---|---|---|---|---|
| 86 | 108.4893 | 133.53969 | 178.64823 | 140.22574 | 25.61499333 |
| 87 | 91.14093 | 114.00126 | 149.26849 | 118.1368933 | 20.75439778 |
| 88 | 75.87212 | 95.91387 | 124.26088 | 98.68229 | 17.05239333 |
| 89 | 63.23679 | 79.8221 | 103.22316 | 82.09401667 | 14.08609556 |
| 90 | 52.92434 | 66.58727 | 86.00449 | 68.50536667 | 11.66608222 |
| 91 | 44.58909 | 55.77916 | 72.07713 | 57.48179333 | 9.730224444 |
| 92 | 37.62861 | 46.79013 | 61.03464 | 48.48446 | 8.366786667 |
| 93 | 31.76544 | 39.37557 | 52.09481 | 41.07860667 | 7.344135556 |
| 94 | 26.98661 | 33.43942 | 44.73216 | 35.05273 | 6.452953333 |
| 95 | 23.19936 | 28.69449 | 38.7173 | 30.20371667 | 5.675722222 |
| 96 | 20.09615 | 24.79245 | 33.89214 | 26.26024667 | 5.087928889 |
| 97 | 17.48194 | 21.53405 | 29.93244 | 22.98281 | 4.633086667 |
| 98 | 15.26031 | 18.82288 | 26.59092 | 20.22470333 | 4.244144444 |
| 99 | 13.41755 | 16.5793 | 23.72932 | 17.90872333 | 3.880397778 |
| 100 | 11.96278 | 14.70281 | 21.28828 | 15.98462333 | 3.535771111 |
| 101 | 10.76814 | 13.11667 | 19.18899 | 14.35793333 | 3.220704444 |
| 102 | 9.66971 | 11.7518 | 17.341 | 12.92083667 | 2.946775556 |
| 103 | 8.66232 | 10.58146 | 15.71644 | 11.65340667 | 2.708688889 |
| 104 | 7.82817 | 9.59424 | 14.32 | 10.58080333 | 2.492797778 |
| 105 | 7.15485 | 8.76579 | 13.13135 | 9.683996667 | 2.298235556 |
| 106 | 6.59712 | 8.0706 | 12.12796 | 8.931893333 | 2.130711111 |
| 107 | 6.09042 | 7.49123 | 11.28246 | 8.288036667 | 1.996282222 |
| 108 | 5.59187 | 6.97931 | 10.54235 | 7.70451 | 1.891893333 |
| 109 | 5.15546 | 6.49965 | 9.88257 | 7.179226667 | 1.802228889 |
| 110 | 4.828 | 6.04224 | 9.3031 | 6.724446667 | 1.719102222 |
| 111 | 4.53195 | 5.61487 | 8.80767 | 6.318163333 | 1.659671111 |
| 112 | 4.21949 | 5.26252 | 8.39863 | 5.960213333 | 1.625611111 |
| 113 | 3.93344 | 5.00681 | 8.0695 | 5.669916667 | 1.599722222 |
| 114 | 3.70068 | 4.78304 | 7.78974 | 5.424486667 | 1.576835556 |
| 115 | 3.50697 | 4.53569 | 7.53699 | 5.193216667 | 1.562515556 |
| 116 | 3.34122 | 4.28937 | 7.29346 | 4.974683333 | 1.545851111 |
| 117 | 3.19749 | 4.08255 | 7.05246 | 4.7775 | 1.51664 |

Table 10 shows the raw data for the storage modulus of resin 1010/1 according to the temperature, indicating the damping effect.

**Table 10** - Storage modulus data.

| ##Temp. °C | E' (1kHz)/MPa | E' (1kHz)/MPa | E' (1kHz)/MPa | DE' (1kHz)/MPa | Mean Deviation |
|---|---|---|---|---|---|
| 35 | 583.83602 | 676.89969 | 370.40178 | 543.7124967 | 115.5404778 |
| 36 | 581.53055 | 673.77482 | 369.11344 | 541.4729367 | 114.9063311 |

(continued)

| ##Temp. °C | E' (1kHz)/MPa | E' (1kHz)/MPa | E' (1kHz)/MPa | DE' (1kHz)/MPa | Mean Deviation |
|---|---|---|---|---|---|
| 37 | 579.05048 | 670.69211 | 367.76416 | 539.1689167 | 114.2698378 |
| 38 | 576.64599 | 667.57055 | 366.39489 | 536.8704767 | 113.6503911 |
| 39 | 574.50493 | 664.35349 | 365.02311 | 534.6271767 | 113.0693778 |
| 40 | 572.44998 | 661.07865 | 363.61399 | 532.3808733 | 112.5112556 |
| 41 | 570.2918 | 657.70992 | 362.15697 | 530.0528967 | 111.9306178 |
| 42 | 567.89636 | 654.107 | 360.72108 | 527.5748133 | 111.2358222 |
| 43 | 565.21234 | 650.3047 | 359.33649 | 524.9511767 | 110.4097911 |
| 44 | 562.44147 | 646.55164 | 357.91908 | 522.3040633 | 109.5899889 |
| 45 | 559.74612 | 642.90757 | 356.41267 | 519.6887867 | 108.8507444 |
| 46 | 557.14424 | 639.20367 | 354.86344 | 517.07045 | 108.1380067 |
| 47 | 554.58318 | 635.38817 | 353.31338 | 514.4282433 | 107.4099089 |
| 48 | 551.81601 | 631.54381 | 351.77918 | 511.713 | 106.6225467 |
| 49 | 548.75691 | 627.63053 | 350.25257 | 508.8800033 | 105.7516222 |
| 50 | 545.76785 | 623.46546 | 348.66919 | 505.9675 | 104.86554 |
| 51 | 543.05972 | 619.02179 | 346.97047 | 503.0173267 | 104.0312378 |
| 52 | 540.34132 | 614.48741 | 345.09103 | 499.9732533 | 103.2548156 |
| 53 | 537.40622 | 609.9521 | 343.04423 | 496.80085 | 102.5044133 |
| 54 | 534.44712 | 605.37539 | 341.12071 | 493.64774 | 101.6846867 |
| 55 | 531.59206 | 600.72515 | 339.35572 | 490.5576433 | 100.8012822 |
| 56 | 528.68946 | 595.99089 | 337.38207 | 487.35414 | 99.98138 |
| 57 | 525.60271 | 591.16727 | 335.0765 | 483.9488267 | 99.24821778 |
| 58 | 522.32373 | 586.25274 | 332.73314 | 480.4365367 | 98.46893111 |
| 59 | 518.90437 | 581.18877 | 330.391 | 476.8280467 | 97.62469778 |
| 60 | 515.58548 | 575.85334 | 327.74245 | 473.0604233 | 96.87864889 |
| 61 | 512.4592 | 570.18763 | 324.65998 | 469.10227 | 96.29486 |
| 62 | 509.01796 | 564.18061 | 321.37223 | 464.8569333 | 95.65646889 |
| 63 | 504.92489 | 557.92169 | 317.93568 | 460.2607533 | 94.88338222 |
| 64 | 500.49214 | 551.58682 | 314.10328 | 455.39408 | 94.19386667 |
| 65 | 495.91881 | 545.09458 | 309.69105 | 450.2348133 | 93.69584222 |
| 66 | 491.08273 | 538.1168 | 304.81363 | 444.6710533 | 93.23828222 |
| 67 | 485.79111 | 530.60353 | 299.48671 | 438.6271167 | 92.76027111 |
| 68 | 479.75388 | 522.70449 | 293.48403 | 431.9808 | 92.33118 |
| 69 | 472.80362 | 514.39446 | 286.74036 | 424.6461467 | 91.93719111 |
| 70 | 465.42331 | 505.48844 | 279.46521 | 416.79232 | 91.55140667 |
| 71 | 457.72558 | 495.98519 | 271.56295 | 408.4245733 | 91.24108222 |
| 72 | 448.90293 | 485.99395 | 262.53014 | 399.14234 | 91.0748 |
| 73 | 438.19308 | 475.28949 | 252.58553 | 388.6893667 | 90.73589111 |
| 74 | 425.87656 | 463.26465 | 242.73081 | 377.2906733 | 89.70657556 |
| 75 | 412.08263 | 448.75342 | 232.0771 | 364.3043833 | 88.15152222 |

(continued)

| ##Temp. °C | E' (1kHz)/MPa | E' (1kHz)/MPa | E' (1kHz)/MPa | DE' (1kHz)/MPa | Mean Deviation |
|---|---|---|---|---|---|
| 76 | 396.20506 | 430.06736 | 218.37027 | 348.21423 | 86.56264 |
| 77 | 377.52187 | 406.0139 | 201.20642 | 328.2473967 | 84.69398444 |
| 78 | 355.30685 | 375.70435 | 181.76132 | 304.2575067 | 81.66412444 |
| 79 | 329.32816 | 342.13139 | 161.71353 | 277.72436 | 77.34055333 |
| 80 | 300.93104 | 308.3178 | 143.15128 | 250.80004 | 71.76584 |
| 81 | 271.44189 | 274.7058 | 126.39486 | 224.18085 | 65.19066 |
| 82 | 242.40455 | 241.60391 | 110.52119 | 198.17655 | 58.43690667 |
| 83 | 214.90929 | 210.38393 | 95.54983 | 173.61435 | 52.04301333 |
| 84 | 189.24383 | 182.08801 | 82.55493 | 151.29559 | 45.82710667 |
| 85 | 165.3929 | 156.13384 | 71.54308 | 131.0232733 | 39.65346222 |
| 86 | 142.80169 | 132.44944 | 61.56859 | 112.27324 | 33.8031 |
| 87 | 121.41768 | 111.82645 | 52.32847 | 95.19086667 | 28.57493111 |
| 88 | 101.98795 | 94.43958 | 44.29458 | 80.24070333 | 23.96408222 |
| 89 | 85.06523 | 79.5103 | 37.68259 | 67.41937333 | 19.82452222 |
| 90 | 70.64358 | 66.95548 | 32.02128 | 56.54011333 | 16.34588889 |
| 91 | 58.62088 | 56.94849 | 27.08166 | 47.55034333 | 13.64578889 |
| 92 | 48.6999 | 48.90547 | 22.98671 | 40.19736 | 11.47376667 |
| 93 | 40.80923 | 41.97429 | 19.75854 | 34.18068667 | 9.614764444 |
| 94 | 34.80113 | 36.01179 | 17.05955 | 29.29082333 | 8.154182222 |
| 95 | 30.04043 | 31.25458 | 14.67988 | 25.32496333 | 7.096722222 |
| 96 | 25.93128 | 27.43604 | 12.66675 | 22.01135667 | 6.229737778 |
| 97 | 22.40307 | 24.14104 | 11.05814 | 19.20075 | 5.428406667 |
| 98 | 19.57349 | 21.23955 | 9.70202 | 16.83835333 | 4.757555556 |
| 99 | 17.2893 | 18.74131 | 8.49373 | 14.84144667 | 4.231811111 |
| 100 | 15.40501 | 16.59962 | 7.43308 | 13.14590333 | 3.808548889 |
| 101 | 13.84219 | 14.75778 | 6.55085 | 11.71694 | 3.44406 |
| 102 | 12.52316 | 13.15362 | 5.81527 | 10.49735 | 3.121386667 |
| 103 | 11.3458 | 11.74743 | 5.187 | 9.426743333 | 2.826495556 |
| 104 | 10.26392 | 10.53783 | 4.65035 | 8.484033333 | 2.555788889 |
| 105 | 9.28485 | 9.53087 | 4.2017 | 7.672473333 | 2.313848889 |
| 106 | 8.4294 | 8.66722 | 3.82396 | 6.973526667 | 2.099711111 |
| 107 | 7.74654 | 7.90109 | 3.49071 | 6.379446667 | 1.925824444 |
| 108 | 7.23992 | 7.23688 | 3.1938 | 5.8902 | 1.7976 |
| 109 | 6.75582 | 6.68671 | 2.94164 | 5.46139 | 1.679833333 |
| 110 | 6.23465 | 6.20026 | 2.73138 | 5.05543 | 1.549366667 |
| 111 | 5.76548 | 5.74217 | 2.53794 | 4.681863333 | 1.429282222 |
| 112 | 5.4001 | 5.32451 | 2.35854 | 4.36105 | 1.335006667 |
| 113 | 5.11529 | 4.9631 | 2.23096 | 4.103116667 | 1.248104444 |
| 114 | 4.88497 | 4.67007 | 2.16787 | 3.907636667 | 1.159844444 |

(continued)

| ##Temp. °C | E' (1kHz)/MPa | E' (1kHz)/MPa | E' (1kHz)/MPa | DE' (1kHz)/MPa | Mean Deviation |
|---|---|---|---|---|---|
| 115 | 4.68402 | 4.44063 | 2.14398 | 3.75621 | 1.07482 |
| 116 | 4.49761 | 4.2365 | 2.143 | 3.625703333 | 0.988468889 |
| 117 | 4.35685 | 4.03416 | 2.15233 | 3.514446667 | 0.908077778 |

Table 11 shows the raw data for the storage modulus of resin 1000/0 according to the temperature, indicating the damping effect.

**Table 11** - Storage modulus data.

| ##Temp. °C | E' (1kHz)/MPa | E' (1kHz)/MPa | E' (1kHz)/MPa | DE' (1kHz)/MPa | Mean Deviation |
|---|---|---|---|---|---|
| 35 | 495.3179 | 612.7456 | 368.41062 | 492.15804 | 82.49828 |
| 36 | 489.55309 | 605.72011 | 365.61268 | 486.96196 | 80.89952 |
| 37 | 483.38573 | 597.96191 | 362.27518 | 481.2076067 | 79.28828444 |
| 38 | 476.79718 | 589.71837 | 358.49016 | 475.0019033 | 77.67449556 |
| 39 | 469.79988 | 581.16589 | 354.27274 | 468.4128367 | 76.09339778 |
| 40 | 462.38706 | 571.95781 | 349.54877 | 461.29788 | 74.49940667 |
| 41 | 454.48599 | 561.73232 | 344.27707 | 453.49846 | 72.81426 |
| 42 | 445.94948 | 550.46945 | 338.43896 | 444.95263 | 71.00911333 |
| 43 | 436.66987 | 538.08877 | 332.00442 | 435.5876867 | 69.05551111 |
| 44 | 426.6383 | 524.71237 | 324.92535 | 425.42534 | 66.99999333 |
| 45 | 415.81137 | 510.4636 | 317.11697 | 414.46398 | 64.89800667 |
| 46 | 404.08929 | 495.42168 | 308.61595 | 402.7089733 | 62.72868222 |
| 47 | 391.33414 | 479.50897 | 299.41865 | 390.0872533 | 60.44573556 |
| 48 | 377.52535 | 462.40202 | 289.48081 | 376.4693933 | 57.99238889 |
| 49 | 362.59824 | 443.63494 | 278.68099 | 361.6380567 | 55.30471111 |
| 50 | 346.49599 | 423.44559 | 266.94372 | 345.6284333 | 52.45647556 |
| 51 | 329.04928 | 402.21013 | 254.36834 | 328.5425833 | 49.44949556 |
| 52 | 310.26272 | 379.92095 | 240.97594 | 310.3865367 | 46.35627556 |
| 53 | 290.05662 | 356.2928 | 226.73484 | 291.0280867 | 43.50980889 |
| 54 | 268.27979 | 330.96334 | 211.51013 | 270.2510867 | 40.47483556 |
| 55 | 244.59552 | 303.32198 | 195.12696 | 247.6814867 | 37.09366222 |
| 56 | 219.1843 | 273.03298 | 177.33804 | 223.1851067 | 33.23191556 |
| 57 | 192.50664 | 240.30588 | 157.90535 | 196.9059567 | 28.93328222 |
| 58 | 165.03898 | 205.87509 | 137.54288 | 169.48565 | 24.25962667 |
| 59 | 137.26688 | 171.35833 | 117.20467 | 141.9432933 | 19.61002444 |
| 60 | 110.18491 | 138.29886 | 97.4537 | 115.31249 | 15.32424667 |
| 61 | 85.48843 | 108.43167 | 78.70334 | 90.87448 | 11.70479333 |
| 62 | 64.41225 | 83.25889 | 61.6043 | 69.75848 | 9.000273333 |
| 63 | 47.71178 | 63.07344 | 47.0269 | 52.60404 | 6.9796 |
| 64 | 35.17075 | 47.77685 | 35.70258 | 39.55006 | 5.484526667 |
| 65 | 25.79539 | 35.98016 | 27.06452 | 29.61335667 | 4.244535556 |

(continued)

| ##Temp. °C | E' (1kHz)/MPa | E' (1kHz)/MPa | E' (1kHz)/MPa | DE' (1kHz)/MPa | Mean Deviation |
|---|---|---|---|---|---|
| 66 | 18.92911 | 26.86917 | 20.50314 | 22.10047333 | 3.179131111 |
| 67 | 13.94751 | 20.06141 | 15.59859 | 16.53583667 | 2.350382222 |
| 68 | 10.38752 | 15.21116 | 11.86514 | 12.48794 | 1.81548 |
| 69 | 7.79714 | 11.71227 | 9.00223 | 9.50388 | 1.47226 |
| 70 | 5.90836 | 9.12757 | 6.90589 | 7.31394 | 1.209086667 |
| 71 | 4.57123 | 7.19463 | 5.45651 | 5.74079 | 0.969226667 |
| 72 | 3.65211 | 5.77314 | 4.4044 | 4.609883333 | 0.775504444 |
| 73 | 2.97269 | 4.73162 | 3.57571 | 3.760006667 | 0.647742222 |
| 74 | 2.42034 | 3.94209 | 2.91718 | 3.093203333 | 0.565924444 |
| 75 | 1.97866 | 3.32317 | 2.42184 | 2.574556667 | 0.499075556 |
| 76 | 1.64756 | 2.84171 | 2.05291 | 2.180726667 | 0.440655556 |
| 77 | 1.39593 | 2.48146 | 1.76169 | 1.879693333 | 0.401177778 |
| 78 | 1.20025 | 2.20939 | 1.52345 | 1.644363333 | 0.376684444 |
| 79 | 1.05052 | 1.98318 | 1.33312 | 1.455606667 | 0.351715556 |
| 80 | 0.94303 | 1.77247 | 1.19147 | 1.302323333 | 0.313431111 |
| 81 | 0.85718 | 1.58137 | 1.08376 | 1.174103333 | 0.271511111 |
| 82 | 0.76074 | 1.44901 | 0.99254 | 1.06743 | 0.254386667 |
| 83 | 0.66224 | 1.35769 | 0.9133 | 0.977743333 | 0.253297778 |
| 84 | 0.59723 | 1.27919 | 0.84921 | 0.908543333 | 0.247097778 |
| 85 | 0.5628 | 1.20547 | 0.79676 | 0.85501 | 0.23364 |
| 86 | 0.53295 | 1.14456 | 0.74157 | 0.80636 | 0.225466667 |
| 87 | 0.4953 | 1.10056 | 0.686 | 0.76062 | 0.226626667 |
| 88 | 0.44737 | 1.07258 | 0.65167 | 0.723873333 | 0.232471111 |
| 89 | 0.40084 | 1.05987 | 0.63961 | 0.700106667 | 0.239842222 |
| 90 | 0.38205 | 1.04164 | 0.62077 | 0.681486667 | 0.240102222 |
| 91 | 0.38859 | 1.00283 | 0.58015 | 0.65719 | 0.230426667 |
| 92 | 0.37656 | 0.96384 | 0.54201 | 0.62747 | 0.224246667 |
| 93 | 0.33366 | 0.94277 | 0.53004 | 0.602156667 | 0.227075556 |
| 94 | 0.29952 | 0.93752 | 0.52974 | 0.588926667 | 0.232395556 |
| 95 | 0.29411 | 0.94347 | 0.51989 | 0.585823333 | 0.238431111 |
| 96 | 0.3082 | 0.95321 | 0.50492 | 0.588776667 | 0.242955556 |
| 97 | 0.3306 | 0.95768 | 0.49676 | 0.595013333 | 0.241777778 |
| 98 | 0.33353 | 0.9447 | 0.49407 | 0.590766667 | 0.235955556 |
| 99 | 0.30549 | 0.90552 | 0.48876 | 0.56659 | 0.225953333 |
| 100 | 0.2804 | 0.86373 | 0.48545 | 0.543193333 | 0.213691111 |
| 101 | 0.28963 | 0.85044 | 0.50243 | 0.5475 | 0.20196 |
| 102 | 0.32197 | 0.85245 | 0.53619 | 0.570203333 | 0.188164444 |
| 103 | 0.35304 | 0.841 | 0.5485 | 0.580846667 | 0.173435556 |
| 104 | 0.36373 | 0.81855 | 0.52535 | 0.56921 | 0.166226667 |

(continued)

| ##Temp. °C | E' (1kHz)/MPa | E' (1kHz)/MPa | E' (1kHz)/MPa | DE' (1kHz)/MPa | Mean Deviation |
|---|---|---|---|---|---|
| 105 | 0.34045 | 0.79504 | 0.4978 | 0.54443 | 0.167073333 |
| 106 | 0.31039 | 0.77608 | 0.48744 | 0.524636667 | 0.167628889 |
| 107 | 0.31119 | 0.7655 | 0.49318 | 0.52329 | 0.161473333 |
| 108 | 0.3308 | 0.75982 | 0.5085 | 0.53304 | 0.151186667 |
| 109 | 0.33817 | 0.75038 | 0.50628 | 0.53161 | 0.145846667 |
| 110 | 0.33582 | 0.73613 | 0.46922 | 0.513723333 | 0.148271111 |
| 111 | 0.33937 | 0.72116 | 0.43671 | 0.49908 | 0.148053333 |
| 112 | 0.34146 | 0.70799 | 0.44872 | 0.49939 | 0.139066667 |
| 113 | 0.32042 | 0.69774 | 0.47658 | 0.498246667 | 0.132995556 |
| 114 | 0.28793 | 0.69236 | 0.47094 | 0.483743333 | 0.139077778 |
| 115 | 0.28768 | 0.69642 | 0.44226 | 0.475453333 | 0.147311111 |
| 116 | 0.31755 | 0.71145 | 0.42941 | 0.486136667 | 0.150208889 |
| 117 | 0.3269 | 0.72732 | 0.43464 | 0.496286667 | 0.154022222 |

Table 12 shows the means data for the storage modulus of resins 1020/1, 1010/1 and 1000/0 according to the temperature.

Table 12 - Means of the storage modulus measurements.

| ##Temp. °C | DE' 1020/1/Mpa | DE' 1010/1/Mpa | DE' 1000/0/Mpa |
|---|---|---|---|
| 35 | 638.8432867 | 543.7124967 | 492.15804 |
| 36 | 636.88053 | 541.4729367 | 486.96196 |
| 37 | 634.8336633 | 539.1689167 | 481.2076067 |
| 38 | 632.7403633 | 536.8704767 | 475.0019033 |
| 39 | 630.5451467 | 534.6271767 | 468.4128367 |
| 40 | 628.14985 | 532.3808733 | 461.29788 |
| 41 | 625.6090133 | 530.0528967 | 453.49846 |
| 42 | 623.0261833 | 527.5748133 | 444.95263 |
| 43 | 620.3894833 | 524.9511767 | 435.5876867 |
| 44 | 617.6612533 | 522.3040633 | 425.42534 |
| 45 | 614.90622 | 519.6887867 | 414.46398 |
| 46 | 612.2285933 | 517.07045 | 402.7089733 |
| 47 | 609.57354 | 514.4282433 | 390.0872533 |
| 48 | 606.76687 | 511.713 | 376.4693933 |
| 49 | 603.74827 | 508.8800033 | 361.6380567 |
| 50 | 600.5739 | 505.9675 | 345.6284333 |
| 51 | 597.3069667 | 503.0173267 | 328.5425833 |
| 52 | 593.97707 | 499.9732533 | 310.3865367 |
| 53 | 590.61646 | 496.80085 | 291.0280867 |
| 54 | 587.2318667 | 493.64774 | 270.2510867 |
| 55 | 583.7293433 | 490.5576433 | 247.6814867 |

(continued)

| ##Temp. °C | DE' 1020/1/Mpa | DE' 1010/1/Mpa | DE' 1000/0/Mpa |
|---|---|---|---|
| 56 | 579.9964867 | 487.35414 | 223.1851067 |
| 57 | 576.0801667 | 483.9488267 | 196.9059567 |
| 58 | 572.1150267 | 480.4365367 | 169.48565 |
| 59 | 568.0293533 | 476.8280467 | 141.9432933 |
| 60 | 563.5987733 | 473.0604233 | 115.31249 |
| 61 | 558.7772433 | 469.10227 | 90.87448 |
| 62 | 553.6830967 | 464.8569333 | 69.75848 |
| 63 | 548.33383 | 460.2607533 | 52.60404 |
| 64 | 542.6058033 | 455.39408 | 39.55006 |
| 65 | 536.3649633 | 450.2348133 | 29.61335667 |
| 66 | 529.4774833 | 444.6710533 | 22.10047333 |
| 67 | 521.95841 | 438.6271167 | 16.53583667 |
| 68 | 514.03574 | 431.9808 | 12.48794 |
| 69 | 505.6212933 | 424.6461467 | 9.50388 |
| 70 | 496.29812 | 416.79232 | 7.31394 |
| 71 | 486.00746 | 408.4245733 | 5.74079 |
| 72 | 475.0284467 | 399.14234 | 4.609883333 |
| 73 | 463.44988 | 388.6893667 | 3.760006667 |
| 74 | 450.9863533 | 377.2906733 | 3.093203333 |
| 75 | 436.8755733 | 364.3043833 | 2.574556667 |
| 76 | 420.2480433 | 348.21423 | 2.180726667 |
| 77 | 400.13856 | 328.2473967 | 1.879693333 |
| 78 | 375.52146 | 304.2575067 | 1.644363333 |
| 79 | 346.81649 | 277.72436 | 1.455606667 |
| 80 | 315.17756 | 250.80004 | 1.302323333 |
| 81 | 282.5232333 | 224.18085 | 1.174103333 |
| 82 | 250.5265533 | 198.17655 | 1.06743 |
| 83 | 220.08564 | 173.61435 | 0.977743333 |
| 84 | 191.4206133 | 151.29559 | 0.908543333 |
| 85 | 164.6879167 | 131.0232733 | 0.85501 |
| 86 | 140.22574 | 112.27324 | 0.80636 |
| 87 | 118.1368933 | 95.19086667 | 0.76062 |
| 88 | 98.68229 | 80.24070333 | 0.723873333 |
| 89 | 82.09401667 | 67.41937333 | 0.700106667 |
| 90 | 68.50536667 | 56.54011333 | 0.681486667 |
| 91 | 57.48179333 | 47.55034333 | 0.65719 |
| 92 | 48.48446 | 40.19736 | 0.62747 |
| 93 | 41.07860667 | 34.18068667 | 0.602156667 |
| 94 | 35.05273 | 29.29082333 | 0.588926667 |

(continued)

| ##Temp. °C | DE' 1020/1/Mpa | DE' 1010/1/Mpa | DE' 1000/0/Mpa |
|---|---|---|---|
| 95 | 30.20371667 | 25.32496333 | 0.585823333 |
| 96 | 26.26024667 | 22.01135667 | 0.588776667 |
| 97 | 22.98281 | 19.20075 | 0.595013333 |
| 98 | 20.22470333 | 16.83835333 | 0.590766667 |
| 99 | 17.90872333 | 14.84144667 | 0.56659 |
| 100 | 15.98462333 | 13.14590333 | 0.543193333 |
| 101 | 14.35793333 | 11.71694 | 0.5475 |
| 102 | 12.92083667 | 10.49735 | 0.570203333 |
| 103 | 11.65340667 | 9.426743333 | 0.580846667 |
| 104 | 10.58080333 | 8.484033333 | 0.56921 |
| 105 | 9.683996667 | 7.672473333 | 0.54443 |
| 106 | 8.931893333 | 6.973526667 | 0.524636667 |
| 107 | 8.288036667 | 6.379446667 | 0.52329 |
| 108 | 7.70451 | 5.8902 | 0.53304 |
| 109 | 7.179226667 | 5.46139 | 0.53161 |
| 110 | 6.724446667 | 5.05543 | 0.513723333 |
| 111 | 6.318163333 | 4.681863333 | 0.49908 |
| 112 | 5.960213333 | 4.36105 | 0.49939 |
| 113 | 5.669916667 | 4.103116667 | 0.498246667 |
| 114 | 5.424486667 | 3.907636667 | 0.483743333 |
| 115 | 5.193216667 | 3.75621 | 0.475453333 |
| 116 | 4.974683333 | 3.625703333 | 0.486136667 |
| 117 | 4.7775 | 3.514446667 | 0.496286667 |

Table 13 shows the tangent delta data of resin 1020/1 according to the temperature.

**Table 13** - Tangent delta data of resin 1020/1.

| ##Temp. °C | tan d (1kHz) | tan d (1kHz) | tan d (1kHz) | DE' (1kHz)/MPa | Mean Deviation |
|---|---|---|---|---|---|
| 35 | 3.47E-02 | 3.29E-02 | 3.80E-02 | | 0.001875207 |
| 36 | 3.47E-02 | 3.29E-02 | 3.79E-02 | 0.03516686 | 0.00185278 |
| 37 | 3.46E-02 | 3.29E-02 | 3.79E-02 | 0.03513004 | 0.001833707 |
| 38 | 3.46E-02 | 3.29E-02 | 3.78E-02 | 0.035102807 | 0.001818562 |
| 39 | 3.45E-02 | 3.29E-02 | 3.78E-02 | 0.03508427 | 0.001807947 |
| 40 | 3.45E-02 | 3.29E-02 | 3.78E-02 | 0.035074657 | 0.001802529 |
| 41 | 3.45E-02 | 3.30E-02 | 3.78E-02 | 0.035074937 | 0.001801429 |
| 42 | 3.45E-02 | 3.30E-02 | 3.78E-02 | 0.0350873 | 0.001803607 |
| 43 | 3.45E-02 | 3.30E-02 | 3.78E-02 | 0.03511356 | 0.001807447 |
| 44 | 3.45E-02 | 3.31E-02 | 3.79E-02 | 0.035156763 | 0.001810911 |
| 45 | 3.46E-02 | 3.32E-02 | 3.79E-02 | 0.03521879 | 0.00181352 |
| 46 | 3.46E-02 | 3.33E-02 | 3.80E-02 | 0.035302123 | 0.001816178 |

(continued)

| ##Temp. °C | tan d (1kHz) | tan d (1kHz) | tan d (1kHz) | DE' (1kHz)/MPa | Mean Deviation |
|---|---|---|---|---|---|
| 47 | 3.47E-02 | 3.34E-02 | 3.81E-02 | 0.035407773 | 0.001818944 |
| 48 | 3.48E-02 | 3.35E-02 | 3.83E-02 | 0.035536933 | 0.001820858 |
| 49 | 3.49E-02 | 3.37E-02 | 3.84E-02 | 0.03569178 | 0.001820587 |
| 50 | 3.51E-02 | 3.39E-02 | 3.86E-02 | 0.035874497 | 0.001818709 |
| 51 | 3.53E-02 | 3.42E-02 | 3.88E-02 | 0.03608455 | 0.001815207 |
| 52 | 3.55E-02 | 3.45E-02 | 3.90E-02 | 0.036320833 | 0.001809591 |
| 53 | 3.57E-02 | 3.47E-02 | 3.93E-02 | 0.03658352 | 0.001800827 |
| 54 | 3.60E-02 | 3.50E-02 | 3.96E-02 | 0.03687522 | 0.00178734 |
| 55 | 3.64E-02 | 3.54E-02 | 3.99E-02 | 0.037199413 | 0.001767858 |
| 56 | 3.68E-02 | 3.57E-02 | 4.02E-02 | 0.037560657 | 0.001742022 |
| 57 | 3.72E-02 | 3.62E-02 | 4.05E-02 | 0.037962897 | 0.001709469 |
| 58 | 3.77E-02 | 3.66E-02 | 4.09E-02 | 0.038408117 | 0.001671909 |
| 59 | 3.82E-02 | 3.72E-02 | 4.13E-02 | 0.03890459 | 0.001627747 |
| 60 | 3.88E-02 | 3.78E-02 | 4.18E-02 | 0.03947115 | 0.001571633 |
| 61 | 3.95E-02 | 3.85E-02 | 4.24E-02 | 0.04012843 | 0.001505367 |
| 62 | 4.02E-02 | 3.94E-02 | 4.31E-02 | 0.040894123 | 0.001445991 |
| 63 | 4.11E-02 | 4.04E-02 | 4.39E-02 | 0.04179799 | 0.00139726 |
| 64 | 4.21E-02 | 4.16E-02 | 4.49E-02 | 0.042896567 | 0.001342909 |
| 65 | 4.35E-02 | 4.31E-02 | 4.62E-02 | 0.044259943 | 0.001277524 |
| 66 | 4.51E-02 | 4.50E-02 | 4.78E-02 | 0.045971297 | 0.001228536 |
| 67 | 4.70E-02 | 4.75E-02 | 4.99E-02 | 0.048125073 | 0.001206838 |
| 68 | 4.94E-02 | 5.04E-02 | 5.27E-02 | 0.050818007 | 0.001234289 |
| 69 | 5.25E-02 | 5.38E-02 | 5.62E-02 | 0.054177717 | 0.001328702 |
| 70 | 5.65E-02 | 5.81E-02 | 6.07E-02 | 0.058436197 | 0.001503402 |
| 71 | 6.16E-02 | 6.34E-02 | 6.65E-02 | 0.06383193 | 0.001759467 |
| 72 | 6.81E-02 | 7.00E-02 | 7.38E-02 | 0.070659203 | 0.002120224 |
| 73 | 7.63E-02 | 7.83E-02 | 8.29E-02 | 0.079163697 | 0.002517376 |
| 74 | 8.64E-02 | 8.83E-02 | 9.40E-02 | 0.08955242 | 0.002952953 |
| 75 | 9.86E-02 | 0.10023 | 0.10736 | 0.102073157 | 0.003524562 |
| 76 | 0.11325 | 0.11456 | 0.12371 | 0.117173333 | 0.004357778 |
| 77 | 0.13081 | 0.1315 | 0.1434 | 0.135236667 | 0.005442222 |
| 78 | 0.1517 | 0.15128 | 0.1668 | 0.156593333 | 0.006804444 |
| 79 | 0.17574 | 0.17412 | 0.19353 | 0.18113 | 0.008266667 |
| 80 | 0.20296 | 0.20051 | 0.22339 | 0.208953333 | 0.009624444 |
| 81 | 0.23394 | 0.23005 | 0.25689 | 0.240293333 | 0.011064444 |
| 82 | 0.26841 | 0.26194 | 0.29461 | 0.274986667 | 0.013082222 |
| 83 | 0.30508 | 0.29641 | 0.33517 | 0.31222 | 0.0153 |
| 84 | 0.343 | 0.33431 | 0.37722 | 0.35151 | 0.01714 |
| 85 | 0.38147 | 0.37331 | 0.42011 | 0.39163 | 0.018986667 |

(continued)

| ##Temp. °C | tan d (1kHz) | tan d (1kHz) | tan d (1kHz) | DE' (1kHz)/MPa | Mean Deviation |
|---|---|---|---|---|---|
| 86 | 0.42002 | 0.41046 | 0.46301 | 0.431163333 | 0.021231111 |
| 87 | 0.45799 | 0.44626 | 0.50385 | 0.469366667 | 0.022988889 |
| 88 | 0.49333 | 0.48155 | 0.54076 | 0.505213333 | 0.023697778 |
| 89 | 0.52374 | 0.51462 | 0.57289 | 0.537083333 | 0.023871111 |
| 90 | 0.54863 | 0.5426 | 0.59913 | 0.563453333 | 0.023784444 |
| 91 | 0.56764 | 0.56512 | 0.61888 | 0.58388 | 0.023333333 |
| 92 | 0.58133 | 0.5821 | 0.63144 | 0.59829 | 0.0221 |
| 93 | 0.58941 | 0.59332 | 0.63731 | 0.60668 | 0.02042 |
| 94 | 0.59189 | 0.5986 | 0.63635 | 0.608946667 | 0.018268889 |
| 95 | 0.58914 | 0.59842 | 0.62925 | 0.605603333 | 0.015764444 |
| 96 | 0.58218 | 0.59338 | 0.617 | 0.59752 | 0.012986667 |
| 97 | 0.57175 | 0.58407 | 0.60094 | 0.585586667 | 0.010235556 |
| 98 | 0.55847 | 0.57113 | 0.58196 | 0.57052 | 0.008033333 |
| 99 | 0.54308 | 0.55507 | 0.56076 | 0.55297 | 0.006593333 |
| 100 | 0.52662 | 0.53656 | 0.53784 | 0.533673333 | 0.004702222 |
| 101 | 0.50935 | 0.51603 | 0.51355 | 0.512976667 | 0.002417778 |
| 102 | 0.49093 | 0.49375 | 0.48816 | 0.490946667 | 0.001868889 |
| 103 | 0.47159 | 0.47028 | 0.46231 | 0.46806 | 0.003833333 |
| 104 | 0.45203 | 0.44687 | 0.43704 | 0.445313333 | 0.005515556 |
| 105 | 0.43258 | 0.42405 | 0.41268 | 0.423103333 | 0.006948889 |
| 106 | 0.41338 | 0.40149 | 0.38903 | 0.4013 | 0.00818 |
| 107 | 0.39462 | 0.379 | 0.366 | 0.379873333 | 0.009831111 |
| 108 | 0.37642 | 0.35658 | 0.34352 | 0.35884 | 0.01172 |
| 109 | 0.3583 | 0.33439 | 0.32173 | 0.33814 | 0.01344 |
| 110 | 0.34004 | 0.31288 | 0.30095 | 0.317956667 | 0.014722222 |
| 111 | 0.32256 | 0.2925 | 0.28143 | 0.29883 | 0.01582 |
| 112 | 0.30632 | 0.27351 | 0.2633 | 0.281043333 | 0.016851111 |
| 113 | 0.29083 | 0.25604 | 0.24656 | 0.264476667 | 0.017568889 |
| 114 | 0.27589 | 0.23975 | 0.23093 | 0.248856667 | 0.018022222 |
| 115 | 0.2617 | 0.22453 | 0.21626 | 0.234163333 | 0.018357778 |
| 116 | 0.24846 | 0.2106 | 0.20229 | 0.22045 | 0.018673333 |
| 117 | 0.23638 | 0.1982 | 0.18906 | 0.20788 | 0.019 |

Table 14 shows the tangent delta data of resin 1010/1 according to the temperature.

Table 14 - Tangent delta data of resin 1010/1

| ##Temp. °C | tan d (1kHz) | tan d (1kHz) | tan d (1kHz) | DE' (1kHz)/MPa | Mean Deviation |
|---|---|---|---|---|---|
| 35 | 3.02E-02 | 3.35E-02 | 3.58E-02 | 0.033146893 | 0.001965782 |
| 36 | 3.02E-02 | 3.35E-02 | 3.58E-02 | 0.03315214 | 0.001960887 |
| 37 | 3.02E-02 | 3.35E-02 | 3.58E-02 | 0.033167227 | 0.001958318 |

(continued)

| ##Temp. °C | tan d (1kHz) | tan d (1kHz) | tan d (1kHz) | DE' (1kHz)/MPa | Mean Deviation |
|---|---|---|---|---|---|
| 38 | 3.03E-02 | 3.35E-02 | 3.58E-02 | 0.033188343 | 0.001957749 |
| 39 | 3.03E-02 | 3.35E-02 | 3.58E-02 | 0.03321377 | 0.00195924 |
| 40 | 3.03E-02 | 3.36E-02 | 3.59E-02 | 0.03324508 | 0.00196242 |
| 41 | 3.03E-02 | 3.36E-02 | 3.59E-02 | 0.03328419 | 0.00196698 |
| 42 | 3.04E-02 | 3.37E-02 | 3.60E-02 | 0.033332107 | 0.001973284 |
| 43 | 3.04E-02 | 3.37E-02 | 3.60E-02 | 0.033389967 | 0.001981631 |
| 44 | 3.05E-02 | 3.38E-02 | 3.61E-02 | 0.033458443 | 0.001992189 |
| 45 | 3.05E-02 | 3.39E-02 | 3.62E-02 | 0.033539103 | 0.002005096 |
| 46 | 3.06E-02 | 3.40E-02 | 3.63E-02 | 0.03363508 | 0.002020433 |
| 47 | 3.07E-02 | 3.42E-02 | 3.64E-02 | 0.033749817 | 0.002037691 |
| 48 | 3.08E-02 | 3.43E-02 | 3.65E-02 | 0.033885617 | 0.002057004 |
| 49 | 3.09E-02 | 3.45E-02 | 3.67E-02 | 0.034045107 | 0.002078591 |
| 50 | 3.11E-02 | 3.47E-02 | 3.69E-02 | 0.034228043 | 0.002100549 |
| 51 | 3.13E-02 | 3.49E-02 | 3.72E-02 | 0.034436353 | 0.002120822 |
| 52 | 3.15E-02 | 3.51E-02 | 3.74E-02 | 0.034676237 | 0.002140178 |
| 53 | 3.17E-02 | 3.54E-02 | 3.78E-02 | 0.034955393 | 0.002159922 |
| 54 | 3.20E-02 | 3.57E-02 | 3.82E-02 | 0.035272057 | 0.002178358 |
| 55 | 3.23E-02 | 3.60E-02 | 3.85E-02 | 0.03562812 | 0.00219462 |
| 56 | 3.27E-02 | 3.64E-02 | 3.90E-02 | 0.036033047 | 0.002213538 |
| 57 | 3.31E-02 | 3.69E-02 | 3.95E-02 | 0.036494503 | 0.002237536 |
| 58 | 3.36E-02 | 3.74E-02 | 4.00E-02 | 0.037011967 | 0.002266398 |
| 59 | 3.41E-02 | 3.80E-02 | 4.07E-02 | 0.037590627 | 0.002300398 |
| 60 | 3.47E-02 | 3.86E-02 | 4.14E-02 | 0.038245097 | 0.002345871 |
| 61 | 3.54E-02 | 3.93E-02 | 4.23E-02 | 0.038991097 | 0.002405484 |
| 62 | 3.61E-02 | 4.01E-02 | 4.33E-02 | 0.03983274 | 0.00246988 |
| 63 | 3.70E-02 | 4.10E-02 | 4.44E-02 | 0.040791737 | 0.002535784 |
| 64 | 3.80E-02 | 4.20E-02 | 4.58E-02 | 0.041928403 | 0.002617989 |
| 65 | 3.92E-02 | 4.33E-02 | 4.74E-02 | 0.043309597 | 0.002725344 |
| 66 | 4.07E-02 | 4.49E-02 | 4.93E-02 | 0.044969213 | 0.002885091 |
| 67 | 4.25E-02 | 4.69E-02 | 5.15E-02 | 0.046959797 | 0.003008169 |
| 68 | 4.47E-02 | 4.95E-02 | 5.40E-02 | 0.04939397 | 0.00313044 |
| 69 | 4.75E-02 | 5.28E-02 | 5.70E-02 | 0.052406867 | 0.003263291 |
| 70 | 5.10E-02 | 5.70E-02 | 6.04E-02 | 0.056124843 | 0.003430462 |
| 71 | 5.52E-02 | 6.24E-02 | 6.45E-02 | 0.06070763 | 0.003658433 |
| 72 | 6.06E-02 | 6.93E-02 | 6.95E-02 | 0.066469503 | 0.003884249 |
| 73 | 6.78E-02 | 7.80E-02 | 7.54E-02 | 0.073739277 | 0.003951164 |
| 74 | 7.68E-02 | 8.88E-02 | 8.23E-02 | 0.08266724 | 0.004108747 |
| 75 | 8.77E-02 | 0.10225 | 9.03E-02 | 0.093428647 | 0.005880902 |
| 76 | 0.10089 | 0.11867 | 9.99E-02 | 0.106478153 | 0.008127898 |

(continued)

| ##Temp. °C | tan d (1kHz) | tan d (1kHz) | tan d (1kHz) | DE' (1kHz)/MPa | Mean Deviation |
|---|---|---|---|---|---|
| 77 | 0.11673 | 0.1384 | 0.11152 | 0.122216667 | 0.010788889 |
| 78 | 0.13564 | 0.16183 | 0.12554 | 0.141003333 | 0.013884444 |
| 79 | 0.15809 | 0.1881 | 0.14195 | 0.162713333 | 0.016924444 |
| 80 | 0.18427 | 0.2165 | 0.16049 | 0.187086667 | 0.019608889 |
| 81 | 0.21443 | 0.24799 | 0.18132 | 0.21458 | 0.022273333 |
| 82 | 0.24846 | 0.28403 | 0.20544 | 0.245976667 | 0.027024444 |
| 83 | 0.28611 | 0.32299 | 0.23315 | 0.28075 | 0.031733333 |
| 84 | 0.32641 | 0.36282 | 0.2625 | 0.317243333 | 0.036495556 |
| 85 | 0.36854 | 0.40312 | 0.29251 | 0.354723333 | 0.041475556 |
| 86 | 0.41171 | 0.44324 | 0.32387 | 0.39294 | 0.046046667 |
| 87 | 0.45497 | 0.48093 | 0.35668 | 0.43086 | 0.049453333 |
| 88 | 0.49649 | 0.51481 | 0.38898 | 0.46676 | 0.051853333 |
| 89 | 0.53454 | 0.54488 | 0.41933 | 0.499583333 | 0.053502222 |
| 90 | 0.56756 | 0.56997 | 0.44782 | 0.52845 | 0.053753333 |
| 91 | 0.59432 | 0.58841 | 0.47393 | 0.55222 | 0.052193333 |
| 92 | 0.614 | 0.60069 | 0.49613 | 0.570273333 | 0.049428889 |
| 93 | 0.62585 | 0.60776 | 0.5136 | 0.582403333 | 0.045868889 |
| 94 | 0.63013 | 0.6095 | 0.5277 | 0.58911 | 0.04094 |
| 95 | 0.62829 | 0.60642 | 0.53896 | 0.591223333 | 0.034842222 |
| 96 | 0.62082 | 0.59972 | 0.54694 | 0.58916 | 0.028146667 |
| 97 | 0.60817 | 0.59023 | 0.55166 | 0.583353333 | 0.021128889 |
| 98 | 0.59179 | 0.57861 | 0.55413 | 0.574843333 | 0.013808889 |
| 99 | 0.57279 | 0.56552 | 0.55474 | 0.56435 | 0.006406667 |
| 100 | 0.55174 | 0.55147 | 0.55356 | 0.552256667 | 0.000868889 |
| 101 | 0.52999 | 0.53681 | 0.55082 | 0.539206667 | 0.007742222 |
| 102 | 0.50857 | 0.52171 | 0.54677 | 0.525683333 | 0.014057778 |
| 103 | 0.48695 | 0.50618 | 0.54145 | 0.511526667 | 0.019948889 |
| 104 | 0.4648 | 0.49035 | 0.53485 | 0.496666667 | 0.025455556 |
| 105 | 0.44295 | 0.4744 | 0.52691 | 0.48142 | 0.030326667 |
| 106 | 0.4219 | 0.45856 | 0.51771 | 0.466056667 | 0.034435556 |
| 107 | 0.40117 | 0.44287 | 0.50739 | 0.450476667 | 0.037942222 |
| 108 | 0.38061 | 0.42677 | 0.49579 | 0.43439 | 0.040933333 |
| 109 | 0.36065 | 0.40981 | 0.48232 | 0.417593333 | 0.043151111 |
| 110 | 0.34149 | 0.39235 | 0.46655 | 0.40013 | 0.04428 |
| 111 | 0.32286 | 0.37474 | 0.44833 | 0.381976667 | 0.044235556 |
| 112 | 0.30473 | 0.35719 | 0.42766 | 0.363193333 | 0.042977778 |
| 113 | 0.28737 | 0.33979 | 0.40533 | 0.344163333 | 0.040777778 |
| 114 | 0.2707 | 0.32245 | 0.38172 | 0.324956667 | 0.037842222 |
| 115 | 0.25401 | 0.30509 | 0.35636 | 0.305153333 | 0.034137778 |

(continued)

| ##Temp. °C | tan d (1kHz) | tan d (1kHz) | tan d (1kHz) | DE' (1kHz)/MPa | Mean Deviation |
|---|---|---|---|---|---|
| 116 | 0.2368 | 0.28755 | 0.32875 | 0.284366667 | 0.031711111 |
| 117 | 0.22316 | 0.26977 | 0.30198 | 0.26497 | 0.027873333 |

Table 15 shows the tangent delta data of resin 1000/0 according to the temperature.

**Table 15** - Tangent delta data of resin 1000/0.

| ##Temp. °C | tan d (1kHz) | tan d (1kHz) | tan d (1kHz) | DE' (1kHz)/MPa | Mean Deviation |
|---|---|---|---|---|---|
| 35 | 7.23E-02 | 7.25E-02 | 9.99E-02 | 0.08158324 | 0.01223078 |
| 36 | 7.45E-02 | 7.47E-02 | 0.1012 | 0.083457087 | 0.011828609 |
| 37 | 7.68E-02 | 7.72E-02 | 0.10269 | 0.085560643 | 0.011419571 |
| 38 | 7.94E-02 | 7.99E-02 | 0.10437 | 0.087888897 | 0.010987402 |
| 39 | 8.21E-02 | 8.30E-02 | 0.10627 | 0.090470587 | 0.010532942 |
| 40 | 8.52E-02 | 8.64E-02 | 0.10843 | 0.093335747 | 0.010062836 |
| 41 | 8.86E-02 | 9.01E-02 | 0.11088 | 0.096515837 | 0.009576109 |
| 42 | 9.23E-02 | 9.42E-02 | 0.1136 | 0.10003975 | 0.009040167 |
| 43 | 9.65E-02 | 9.88E-02 | 0.11659 | 0.10394947 | 0.00842702 |
| 44 | 0.101 | 0.10381 | 0.1199 | 0.108236667 | 0.007775556 |
| 45 | 0.10595 | 0.10918 | 0.12358 | 0.112903333 | 0.007117778 |
| 46 | 0.11146 | 0.11493 | 0.1277 | 0.11803 | 0.006446667 |
| 47 | 0.11766 | 0.12115 | 0.13236 | 0.123723333 | 0.005757778 |
| 48 | 0.12466 | 0.12805 | 0.13768 | 0.13013 | 0.005033333 |
| 49 | 0.13264 | 0.13594 | 0.14388 | 0.137486667 | 0.004262222 |
| 50 | 0.14191 | 0.14504 | 0.15123 | 0.14606 | 0.003446667 |
| 51 | 0.15297 | 0.15558 | 0.16005 | 0.1562 | 0.002566667 |
| 52 | 0.16633 | 0.16799 | 0.1708 | 0.168373333 | 0.001617778 |
| 53 | 0.18277 | 0.18301 | 0.18396 | 0.183246667 | 0.000475556 |
| 54 | 0.20319 | 0.20152 | 0.20026 | 0.201656667 | 0.001022222 |
| 55 | 0.22913 | 0.2249 | 0.22054 | 0.224856667 | 0.002877778 |
| 56 | 0.26168 | 0.25451 | 0.24587 | 0.25402 | 0.005433333 |
| 57 | 0.30188 | 0.29148 | 0.27781 | 0.29039 | 0.008386667 |
| 58 | 0.35053 | 0.33674 | 0.31675 | 0.334673333 | 0.011948889 |
| 59 | 0.40908 | 0.39101 | 0.36303 | 0.387706667 | 0.016451111 |
| 60 | 0.47853 | 0.45507 | 0.417 | 0.4502 | 0.022133333 |
| 61 | 0.56004 | 0.5293 | 0.48017 | 0.52317 | 0.028666667 |
| 62 | 0.65324 | 0.61392 | 0.55397 | 0.607043333 | 0.035382222 |
| 63 | 0.75534 | 0.70609 | 0.63569 | 0.69904 | 0.042233333 |
| 64 | 0.86374 | 0.80361 | 0.72226 | 0.796536667 | 0.049517778 |
| 65 | 0.97604 | 0.906 | 0.81204 | 0.898026667 | 0.057324444 |
| 66 | 1.08926 | 1.01289 | 0.90433 | 1.00216 | 0.06522 |
| 67 | 1.19863 | 1.11831 | 0.9977 | 1.10488 | 0.071453333 |

(continued)

| ##Temp. °C | tan d (1kHz) | tan d (1kHz) | tan d (1kHz) | DE' (1kHz)/MPa | Mean Deviation |
|---|---|---|---|---|---|
| 68 | 1.3001 | 1.21524 | 1.0891 | 1.20148 | 0.07492 |
| 69 | 1.39076 | 1.30039 | 1.17414 | 1.28843 | 0.076193333 |
| 70 | 1.46635 | 1.37044 | 1.24643 | 1.361073333 | 0.076428889 |
| 71 | 1.52274 | 1.42394 | 1.30153 | 1.41607 | 0.07636 |
| 72 | 1.55762 | 1.45783 | 1.34137 | 1.452273333 | 0.073935556 |
| 73 | 1.5736 | 1.47096 | 1.36509 | 1.469883333 | 0.069862222 |
| 74 | 1.56953 | 1.46278 | 1.37042 | 1.467576667 | 0.067968889 |
| 75 | 1.54593 | 1.4351 | 1.35694 | 1.44599 | 0.066626667 |
| 76 | 1.5054 | 1.38821 | 1.32695 | 1.406853333 | 0.065697778 |
| 77 | 1.4514 | 1.32656 | 1.28261 | 1.353523333 | 0.065251111 |
| 78 | 1.38512 | 1.25993 | 1.22394 | 1.289663333 | 0.063637778 |
| 79 | 1.30902 | 1.18912 | 1.15286 | 1.217 | 0.061346667 |
| 80 | 1.22602 | 1.10569 | 1.07143 | 1.13438 | 0.061093333 |
| 81 | 1.13923 | 1.00683 | 0.98698 | 1.044346667 | 0.063255556 |
| 82 | 1.05214 | 0.91628 | 0.90617 | 0.958196667 | 0.062628889 |
| 83 | 0.96628 | 0.83715 | 0.82727 | 0.8769 | 0.059586667 |
| 84 | 0.88198 | 0.76086 | 0.74667 | 0.796503333 | 0.056984444 |
| 85 | 0.79995 | 0.68548 | 0.66481 | 0.716746667 | 0.055468889 |
| 86 | 0.72151 | 0.61595 | 0.58658 | 0.641346667 | 0.053442222 |
| 87 | 0.64857 | 0.55385 | 0.51477 | 0.572396667 | 0.050782222 |
| 88 | 0.58352 | 0.49513 | 0.44997 | 0.50954 | 0.04932 |
| 89 | 0.5263 | 0.43769 | 0.39213 | 0.45204 | 0.049506667 |
| 90 | 0.47508 | 0.38519 | 0.34017 | 0.400146667 | 0.049955556 |
| 91 | 0.42869 | 0.34078 | 0.29349 | 0.35432 | 0.04958 |
| 92 | 0.38585 | 0.30283 | 0.25101 | 0.31323 | 0.048413333 |
| 93 | 0.34609 | 0.27002 | 0.21244 | 0.276183333 | 0.046604444 |
| 94 | 0.30956 | 0.24057 | 0.17892 | 0.243016667 | 0.044362222 |
| 95 | 0.27549 | 0.2133 | 0.15191 | 0.213566667 | 0.041282222 |
| 96 | 0.24161 | 0.18828 | 0.13106 | 0.186983333 | 0.037282222 |
| 97 | 0.20747 | 0.16595 | 0.11598 | 0.163133333 | 0.031435556 |
| 98 | 0.17865 | 0.14617 | 0.10561 | 0.143476667 | 0.025244444 |
| 99 | 0.15858 | 0.12862 | 9.87E-02 | 0.128631603 | 0.019965598 |
| 100 | 0.14413 | 0.1121 | 9.43E-02 | 0.116837373 | 0.018195084 |
| 101 | 0.13323 | 9.54E-02 | 9.13E-02 | 0.106660497 | 0.017713002 |
| 102 | 0.12481 | 7.89E-02 | 8.92E-02 | 0.097628357 | 0.018121096 |
| 103 | 0.11803 | 6.34E-02 | 8.73E-02 | 0.08957721 | 0.018968527 |
| 104 | 0.11253 | 4.87E-02 | 8.53E-02 | 0.08220359 | 0.022309853 |
| 105 | 0.10804 | 3.44E-02 | 8.34E-02 | 0.075285947 | 0.027241204 |
| 106 | 0.10252 | 2.08E-02 | 8.13E-02 | 0.06821389 | 0.03158184 |

(continued)

| ##Temp. °C | tan d (1kHz) | tan d (1kHz) | tan d (1kHz) | DE' (1kHz)/MPa | Mean Deviation |
|---|---|---|---|---|---|
| 107 | 9.32E-02 | 8.78E-03 | 7.85E-02 | 0.060170327 | 0.03426107 |
| 108 | 7.93E-02 | -1.71E-03 | 7.44E-02 | 0.050681178 | 0.034924543 |
| 109 | 6.07E-02 | -1.10E-02 | 6.86E-02 | 0.039433603 | 0.033632162 |
| 110 | 3.95E-02 | -1.96E-02 | 6.05E-02 | 0.02679033 | 0.03090424 |
| 111 | 1.81E-02 | -2.78E-02 | 5.00E-02 | 0.013413443 | 0.027459302 |
| 112 | -2.66E-03 | -3.54E-02 | 3.67E-02 | | 0.024775472 |
| 113 | -2.28E-02 | -4.15E-02 | 2.16E-02 | | 0.023909362 |
| 114 | -4.27E-02 | -4.67E-02 | 5.70E-03 | | 0.022391416 |
| 115 | -6.29E-02 | -5.18E-02 | -1.06E-02 | | 0.020802038 |
| 116 | -8.35E-02 | -5.73E-02 | -2.70E-02 | | 0.019302127 |
| 117 | -0.10374 | -6.24E-02 | -4.35E-02 | | 0.022576662 |

Table 16 shows the tangent delta comparative data of resins 1020/1, 1010/1 and 1000/0, according to the temperature.

**Table 16** - Comparison among tangent delta means

| ##Temp. °C | DE' 1020/1/Mpa | DE' 1010/1/Mpa | DE' 1000/0/Mpa |
|---|---|---|---|
| 35 | 3.52E-02 | 3.31E-02 | 0.08158324 |
| 36 | 0.03516686 | 0.03315214 | 0.083457087 |
| 37 | 0.03513004 | 0.033167227 | 0.085560643 |
| 38 | 0.035102807 | 0.033188343 | 0.087888897 |
| 39 | 0.03508427 | 0.03321377 | 0.090470587 |
| 40 | 0.035074657 | 0.03324508 | 0.093335747 |
| 41 | 0.035074937 | 0.03328419 | 0.096515837 |
| 42 | 0.0350873 | 0.033332107 | 0.10003975 |
| 43 | 0.03511356 | 0.033389967 | 0.10394947 |
| 44 | 0.035156763 | 0.033458443 | 0.108236667 |
| 45 | 0.03521879 | 0.033539103 | 0.112903333 |
| 46 | 0.035302123 | 0.03363508 | 0.11803 |
| 47 | 0.035407773 | 0.033749817 | 0.123723333 |
| 48 | 0.035536933 | 0.033885617 | 0.13013 |
| 49 | 0.03569178 | 0.034045107 | 0.137486667 |
| 50 | 0.035874497 | 0.034228043 | 0.14606 |
| 51 | 0.03608455 | 0.034436353 | 0.1562 |
| 52 | 0.036320833 | 0.034676237 | 0.168373333 |
| 53 | 0.03658352 | 0.034955393 | 0.183246667 |
| 54 | 0.03687522 | 0.035272057 | 0.201656667 |
| 55 | 0.037199413 | 0.03562812 | 0.224856667 |
| 56 | 0.037560657 | 0.036033047 | 0.25402 |
| 57 | 0.037962897 | 0.036494503 | 0.29039 |

(continued)

| ##Temp. °C | DE' 1020/1/Mpa | DE' 1010/1/Mpa | DE' 1000/0/Mpa |
|---|---|---|---|
| 58 | 0.038408117 | 0.037011967 | 0.334673333 |
| 59 | 0.03890459 | 0.037590627 | 0.387706667 |
| 60 | 0.03947115 | 0.038245097 | 0.4502 |
| 61 | 0.04012843 | 0.038991097 | 0.52317 |
| 62 | 0.040894123 | 0.03983274 | 0.607043333 |
| 63 | 0.04179799 | 0.040791737 | 0.69904 |
| 64 | 0.042896567 | 0.041928403 | 0.796536667 |
| 65 | 0.044259943 | 0.043309597 | 0.898026667 |
| 66 | 0.045971297 | 0.044969213 | 1.00216 |
| 67 | 0.048125073 | 0.046959797 | 1.10488 |
| 68 | 0.050818007 | 0.04939397 | 1.20148 |
| 69 | 0.054177717 | 0.052406867 | 1.28843 |
| 70 | 0.058436197 | 0.056124843 | 1.361073333 |
| 71 | 0.06383193 | 0.06070763 | 1.41607 |
| 72 | 0.070659203 | 0.066469503 | 1.452273333 |
| 73 | 0.079163697 | 0.073739277 | 1.469883333 |
| 74 | 0.08955242 | 0.08266724 | 1.467576667 |
| 75 | 0.102073157 | 0.093428647 | 1.44599 |
| 76 | 0.117173333 | 0.106478153 | 1.406853333 |
| 77 | 0.135236667 | 0.122216667 | 1.353523333 |
| 78 | 0.156593333 | 0.141003333 | 1.289663333 |
| 79 | 0.18113 | 0.162713333 | 1.217 |
| 80 | 0.208953333 | 0.187086667 | 1.13438 |
| 81 | 0.240293333 | 0.21458 | 1.044346667 |
| 82 | 0.274986667 | 0.245976667 | 0.958196667 |
| 83 | 0.31222 | 0.28075 | 0.8769 |
| 84 | 0.35151 | 0.317243333 | 0.796503333 |
| 85 | 0.39163 | 0.354723333 | 0.716746667 |
| 86 | 0.431163333 | 0.39294 | 0.641346667 |
| 87 | 0.469366667 | 0.43086 | 0.572396667 |
| 88 | 0.505213333 | 0.46676 | 0.50954 |
| 89 | 0.537083333 | 0.499583333 | 0.45204 |
| 90 | 0.563453333 | 0.52845 | 0.400146667 |
| 91 | 0.58388 | 0.55222 | 0.35432 |
| 92 | 0.59829 | 0.570273333 | 0.31323 |
| 93 | 0.60668 | 0.582403333 | 0.276183333 |
| 94 | 0.608946667 | 0.58911 | 0.243016667 |
| 95 | 0.605603333 | 0.591223333 | 0.213566667 |
| 96 | 0.59752 | 0.58916 | 0.186983333 |

(continued)

| ##Temp. °C | DE' 1020/1/Mpa | DE' 1010/1/Mpa | DE' 1000/0/Mpa |
|---|---|---|---|
| 97 | 0.585586667 | 0.583353333 | 0.163133333 |
| 98 | 0.57052 | 0.574843333 | 0.143476667 |
| 99 | 0.55297 | 0.56435 | 0.128631603 |
| 100 | 0.533673333 | 0.552256667 | 0.116837373 |
| 101 | 0.512976667 | 0.539206667 | 0.106660497 |
| 102 | 0.490946667 | 0.525683333 | 0.097628357 |
| 103 | 0.46806 | 0.511526667 | 0.08957721 |
| 104 | 0.445313333 | 0.496666667 | 0.08220359 |
| 105 | 0.423103333 | 0.48142 | 0.075285947 |
| 106 | 0.4013 | 0.466056667 | 0.06821389 |
| 107 | 0.379873333 | 0.450476667 | 0.060170327 |
| 108 | 0.35884 | 0.43439 | 0.050681178 |
| 109 | 0.33814 | 0.417593333 | 0.039433603 |
| 110 | 0.317956667 | 0.40013 | 0.02679033 |
| 111 | 0.29883 | 0.381976667 | 0.013413443 |
| 112 | 0.281043333 | 0.363193333 | |
| 113 | 0.264476667 | 0.344163333 | |
| 114 | 0.248856667 | 0.324956667 | |
| 115 | 0.234163333 | 0.305153333 | |
| 116 | 0.22045 | 0.284366667 | |
| 117 | 0.20788 | 0.26497 | |

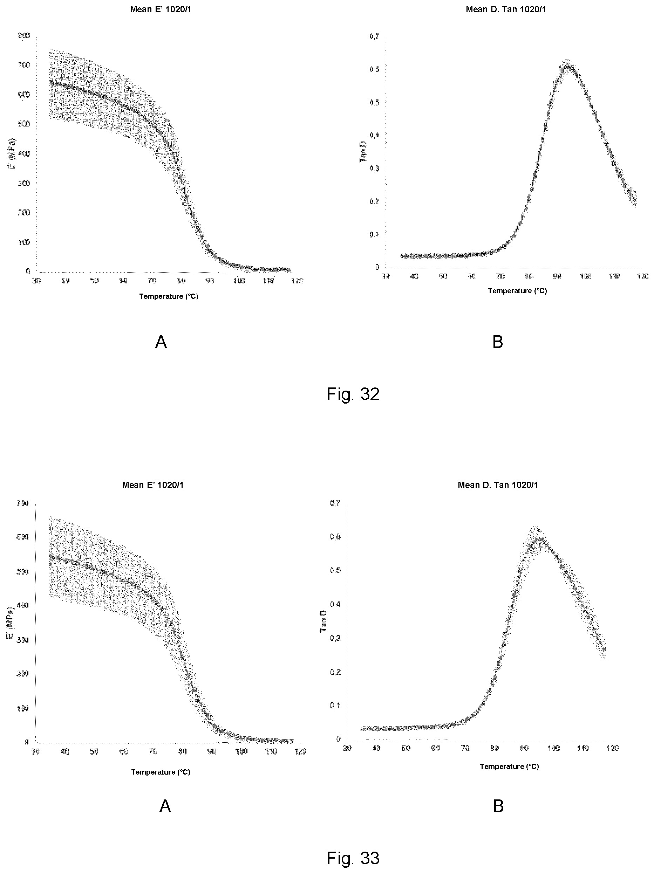

Data in Tables 8-16 can be viewed in graphical form, as illustrated in Figs. 32-36.

Fig. 32 depicts a graph of the modification of the storage modulus (damping effect) of the resin 1020/1 with increasing temperature. In A) the storage modulus is shown in E' (1,000 Hz)/Mpa in the Y-axis and the temperature in degrees Celsius in the X-axis. In B) a graph with the Tangent Delta is shown for the same material, with the Tangent Delta values shown in the Y-axis and the temperature in degrees Celsius in the X-axis. The graphs show the means and deviations, in accordance with the data in Tables 9 and 13.

Fig. 33 depicts a graph of the modification of the storage modulus (damping effect) of the resin 1010/1 with increasing temperature. In A) the storage modulus is shown in E' (1,000 Hz)/Mpa in the Y-axis and the temperature in degrees Celsius in the X-axis. In B) a graph with the Tangent Delta is shown for the same material, with the Tangent Delta values shown in the Y-axis and the temperature in degrees Celsius in the X-axis. The graphs show the means and deviations, in accordance with the data in Tables 10 and 14.

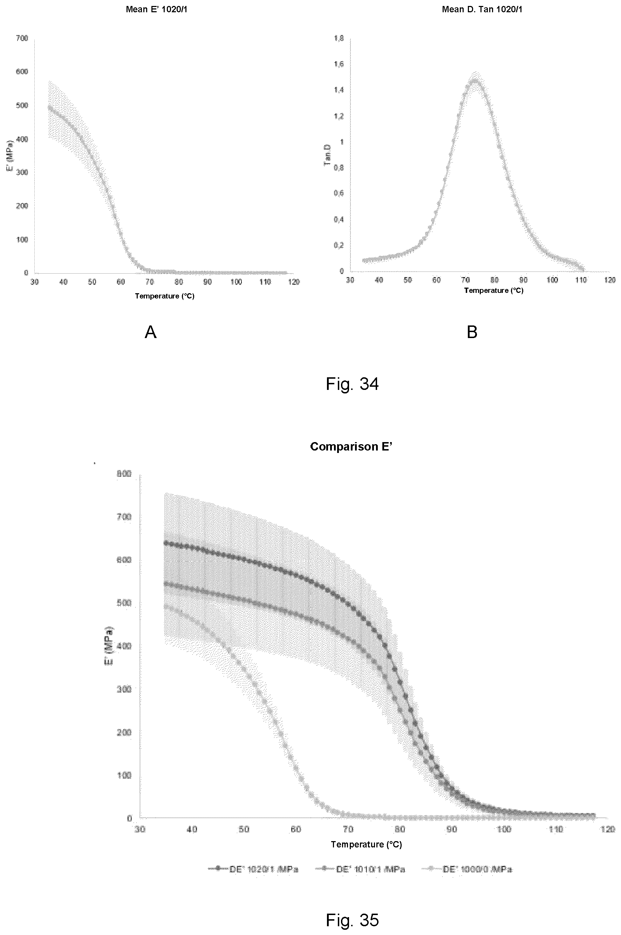

Fig. 34 depicts a graph of the modification of the storage modulus (damping effect) of the resin 1000/0 with increasing temperature. In A) the storage modulus is shown in E' (1,000 Hz)/Mpa in the Y-axis and the temperature in degrees Celsius in the X-axis. In B) a graph with the Tangent Delta for the same material is shown, with the Tangent Delta values being shown in the Y-axis and the temperature in degrees Celsius in the X-axis. The graphs show the means and deviations, in accordance with the data in Tables 11 and 15.

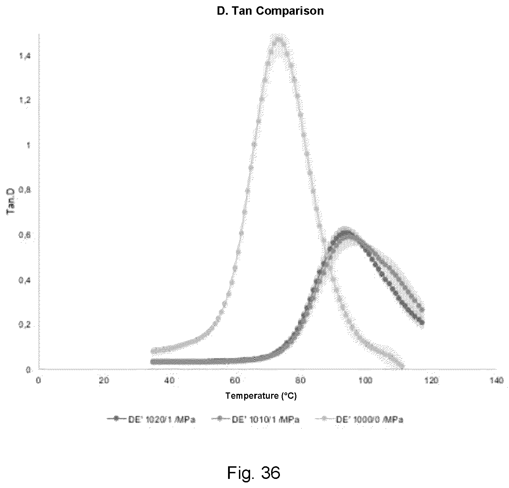

Fig. 35 shows a comparative graph of the storage moduli of resins 1020/1, 1010/1 and 1000/0, as shown in the graphs in Figs. 36A, 37A and 38A.

Fig. 36 shows a comparative graph of the Tangent Delta data for resins 1020/1, 1010/1 and 1000/0, as shown in the graphs in Figs. 36B, 37B and 38B.

Taken together, the results shown in Tables 8-16 and Figs. 32-36 indicate that incorporation of nanoparticles at a low concentration (ppm range) was able to substantially modify the mechanical properties of the polymer, as can be seen from the tangent delta results. Tan delta can be understood as the energy dissipation potential of a material. The higher the tan delta, the more dissipative the material is. On the other hand, the lower the tan delta, the more elastic the material acts when a load is applied, thus having more potential to store load. Thus, modifying the tan delta (either increasing or decreasing) can modulate a material to become more suitable for different applications, e.g., for structural applications a lower tan delta may be preferred.

Example 8 - Samples description

Table 17 provides a description of the tested samples in the following examples:

| IDENTIFICATION | | | | |
|---|---|---|---|---|
| | | CODE | ISI CODE | NUMBER OF PARTICLES (ppm) |
| PDEL 20023/3-1 | baseline | IHRR1000/0 | Baseline | 0 |
| 8 | Nb nano | IHRR1010/1 | B2-X | 50 |
| 7 | | IHRR1010/2 | B2-Y | 100 |
| 6 | | IHRR1010/3 | B2-Z | 250 |
| 5 | | IHRR1010/4 | B2-W | 500 |
| 12 | Ti nano | IHRR1020/1 | A2 -X | 50 |
| 11 | | IHRR1020/2 | A2 – Y | 100 |
| 10 | | IHRR1020/3 | A2- Z | 250 |
| 9 | | IHRR1020/4 | A2 – W | 500 |
| PDEL 20023/1-1 | Nb micro | IHRR1030/4 | B1 -W | 500 |
| PDEL 20023/2-1 | Ti micro | IHRR1040/4 | A1 -W | 500 |

Polymer samples comprising titanium dioxide and niobium pentoxide microparticles were not tested as they showed catastrophic failures, such as cracks, deformations, and geometry irregularities.

## Example 9 - **Analysis of the storage modulus (E')**

Samples described in example 8 were analyzed in DMTA (Dynamic Mechanical Thermal Analysis) in triplicate and the results of the storage modulus (E') are shown below in Tables 18-26:

**Table 18** - Results of the storage modulus (E') for sample 1020/1 in triplicate

| ##Temp./>C | E' (1.000 Hz)/MPa | E' (1.000 Hz)/MPa | E' (1.000 Hz)/MPa | DE' (1.000 Hz)/MPa | Mean Deviation |
|---|---|---|---|---|---|
| 35 | 521.24084 | 587.02326 | 808.26576 | 638.8432867 | 112.9483156 |
| 36 | 519.59285 | 585.25724 | 805.7915 | 636.88053 | 112.6073133 |
| 37 | 517.94764 | 583.36901 | 803.18434 | 634.8336633 | 112.2337844 |
| 38 | 516.21911 | 581.49083 | 800.51115 | 632.7403633 | 111.8471911 |
| 39 | 514.32236 | 579.63043 | 797.68265 | 630.5451467 | 111.4250022 |
| 40 | 512.17207 | 577.7202 | 794.55728 | 628.14985 | 110.9382867 |
| 41 | 509.93587 | 575.70403 | 791.18714 | 625.6090133 | 110.3854178 |
| 42 | 507.87889 | 573.52914 | 787.67052 | 623.0261833 | 109.7628911 |
| 43 | 505.9128 | 571.21286 | 784.04279 | 620.3894833 | 109.1022044 |
| 44 | 503.83362 | 568.83381 | 780.31633 | 617.6612533 | 108.4367178 |
| 45 | 501.65703 | 566.4658 | 776.59583 | 614.90622 | 107.7930733 |
| 46 | 499.47967 | 564.18704 | 773.01907 | 612.2285933 | 107.1936511 |
| 47 | 497.31454 | 561.92632 | 769.47976 | 609.57354 | 106.6041467 |
| 48 | 495.13199 | 559.42766 | 765.74096 | 606.76687 | 105.9827267 |
| 49 | 492.8708 | 556.62495 | 761.74906 | 603.74827 | 105.33386 |
| 50 | 490.45399 | 553.7575 | 757.51021 | 600.5739 | 104.6242067 |
| 51 | 487.94848 | 550.9582 | 753.01422 | 597.3069667 | 103.8048356 |
| 52 | 485.49763 | 548.18753 | 748.24605 | 593.97707 | 102.8459867 |
| 53 | 483.08505 | 545.36609 | 743.39824 | 590.61646 | 101.85452 |
| 54 | 480.56022 | 542.3467 | 738.78868 | 587.2318667 | 101.0378756 |
| 55 | 477.87232 | 539.05243 | 734.26328 | 583.7293433 | 100.3559578 |
| 56 | 475.05273 | 535.5816 | 729.35513 | 579.9964867 | 99.57242889 |
| 57 | 472.10871 | 532.00424 | 724.12755 | 576.0801667 | 98.69825556 |
| 58 | 469.02922 | 528.3278 | 718.98806 | 572.1150267 | 97.91535556 |
| 59 | 465.82793 | 524.48683 | 713.7733 | 568.0293533 | 97.16263111 |
| 60 | 462.51981 | 520.27207 | 708.00444 | 563.5987733 | 96.27044444 |
| 61 | 459.06468 | 515.56293 | 701.70412 | 558.7772433 | 95.28458444 |
| 62 | 455.38681 | 510.55465 | 695.10783 | 553.6830967 | 94.28315556 |
| 63 | 451.37512 | 505.36024 | 688.26613 | 548.33383 | 93.2882 |
| 64 | 446.79964 | 499.89627 | 681.1215 | 542.6058033 | 92.34379778 |
| 65 | 441.58778 | 493.9736 | 673.53351 | 536.3649633 | 91.44569778 |
| 66 | 435.95283 | 487.21497 | 665.26465 | 529.4774833 | 90.52477778 |
| 67 | 429.97954 | 479.5341 | 656.36159 | 521.95841 | 89.60212 |
| 68 | 423.56183 | 471.56001 | 646.98538 | 514.03574 | 88.63309333 |
| 69 | 416.46198 | 463.21585 | 637.18605 | 505.6212933 | 87.70983778 |

(continued)

| ##Temp./>C | E' (1.000 Hz)/MPa | E' (1.000 Hz)/MPa | E' (1.000 Hz)/MPa | DE' (1.000 Hz)/MPa | Mean Deviation |
|---|---|---|---|---|---|
| 70 | 408.31993 | 453.64222 | 626.93221 | 496.29812 | 87.08939333 |
| 71 | 399.01029 | 442.77438 | 616.23771 | 486.00746 | 86.82016667 |
| 72 | 388.5876 | 431.36759 | 605.13015 | 475.0284467 | 86.73446889 |
| 73 | 377.01687 | 419.5047 | 593.82807 | 463.44988 | 86.91879333 |
| 74 | 364.1372 | 406.69332 | 582.12854 | 450.9863533 | 87.42812444 |
| 75 | 349.58757 | 392.59848 | 568.44067 | 436.8755733 | 87.71006444 |
| 76 | 333.12037 | 376.79665 | 550.82711 | 420.2480433 | 87.05271111 |
| 77 | 314.49818 | 358.42099 | 527.49651 | 400.13856 | 84.9053 |
| 78 | 293.49587 | 336.28798 | 496.78053 | 375.52146 | 80.83938 |
| 79 | 270.18425 | 311.05044 | 459.21478 | 346.81649 | 74.93219333 |
| 80 | 245.14834 | 284.1788 | 416.20554 | 315.17756 | 67.35198667 |
| 81 | 219.42614 | 257.00514 | 371.13842 | 282.5232333 | 59.07679111 |
| 82 | 194.04103 | 230.71841 | 326.82022 | 250.5265533 | 50.86244444 |
| 83 | 170.10024 | 205.03487 | 285.12181 | 220.08564 | 43.35744667 |
| 84 | 147.8736 | 179.40105 | 246.98719 | 191.4206133 | 37.04438444 |
| 85 | 127.39577 | 155.10434 | 211.56364 | 164.6879167 | 31.25048222 |
| 86 | 108.4893 | 133.53969 | 178.64823 | 140.22574 | 25.61499333 |
| 87 | 91.14093 | 114.00126 | 149.26849 | 118.1368933 | 20.75439778 |
| 88 | 75.87212 | 95.91387 | 124.26088 | 98.68229 | 17.05239333 |
| 89 | 63.23679 | 79.8221 | 103.22316 | 82.09401667 | 14.08609556 |
| 90 | 52.92434 | 66.58727 | 86.00449 | 68.50536667 | 11.66608222 |
| 91 | 44.58909 | 55.77916 | 72.07713 | 57.48179333 | 9.730224444 |
| 92 | 37.62861 | 46.79013 | 61.03464 | 48.48446 | 8.366786667 |
| 93 | 31.76544 | 39.37557 | 52.09481 | 41.07860667 | 7.344135556 |
| 94 | 26.98661 | 33.43942 | 44.73216 | 35.05273 | 6.452953333 |
| 95 | 23.19936 | 28.69449 | 38.7173 | 30.20371667 | 5.675722222 |
| 96 | 20.09615 | 24.79245 | 33.89214 | 26.26024667 | 5.087928889 |
| 97 | 17.48194 | 21.53405 | 29.93244 | 22.98281 | 4.633086667 |
| 98 | 15.26031 | 18.82288 | 26.59092 | 20.22470333 | 4.244144444 |
| 99 | 13.41755 | 16.5793 | 23.72932 | 17.90872333 | 3.880397778 |
| 100 | 11.96278 | 14.70281 | 21.28828 | 15.98462333 | 3.535771111 |
| 101 | 10.76814 | 13.11667 | 19.18899 | 14.35793333 | 3.220704444 |
| 102 | 9.66971 | 11.7518 | 17.341 | 12.92083667 | 2.946775556 |
| 103 | 8.66232 | 10.58146 | 15.71644 | 11.65340667 | 2.708688889 |
| 104 | 7.82817 | 9.59424 | 14.32 | 10.58080333 | 2.492797778 |
| 105 | 7.15485 | 8.76579 | 13.13135 | 9.683996667 | 2.298235556 |
| 106 | 6.59712 | 8.0706 | 12.12796 | 8.931893333 | 2.130711111 |
| 107 | 6.09042 | 7.49123 | 11.28246 | 8.288036667 | 1.996282222 |
| 108 | 5.59187 | 6.97931 | 10.54235 | 7.70451 | 1.891893333 |

(continued)

| ##Temp./>C | E' (1.000 Hz)/MPa | E' (1.000 Hz)/MPa | E' (1.000 Hz)/MPa | DE' (1.000 Hz)/MPa | Mean Deviation |
|---|---|---|---|---|---|
| 109 | 5.15546 | 6.49965 | 9.88257 | 7.179226667 | 1.802228889 |
| 110 | 4.828 | 6.04224 | 9.3031 | 6.724446667 | 1.719102222 |
| 111 | 4.53195 | 5.61487 | 8.80767 | 6.318163333 | 1.659671111 |
| 112 | 4.21949 | 5.26252 | 8.39863 | 5.960213333 | 1.625611111 |
| 113 | 3.93344 | 5.00681 | 8.0695 | 5.669916667 | 1.599722222 |
| 114 | 3.70068 | 4.78304 | 7.78974 | 5.424486667 | 1.576835556 |
| 115 | 3.50697 | 4.53569 | 7.53699 | 5.193216667 | 1.562515556 |
| 116 | 3.34122 | 4.28937 | 7.29346 | 4.974683333 | 1.545851111 |
| 117 | 3.19749 | 4.08255 | 7.05246 | 4.7775 | 1.51664 |

**Table 19** - Results of the storage modulus (E') for sample 1010/1 in quintuplicate

| ##Temp./>C | E' (1.000 Hz)/MPa | E' (1.000 Hz)/MPa | E' (1.000 Hz)/MPa | E' (1.000 Hz)/MPa | E' (1.000 Hz)/MPa | DE' (1.000 Hz)/MPa | Mean Deviation |
|---|---|---|---|---|---|---|---|
| 35 | 583.83602 | 676.89969 | 370.40178 | 504.27455 | 525.76617 | 532.235642 | 78.5057704 |
| 36 | 581.53055 | 673.77482 | 369.11344 | 502.68782 | 523.98176 | 530.217678 | 77.9480056 |
| 37 | 579.05048 | 670.69211 | 367.76416 | 501.13552 | 522.22005 | 528.172464 | 77.3590648 |
| 38 | 576.64599 | 667.57055 | 366.39489 | 499.57909 | 520.45861 | 526.129826 | 76.7827552 |
| 39 | 574.50493 | 664.35349 | 365.02311 | 498.00698 | 518.68224 | 524.11415 | 76.252048 |
| 40 | 572.44998 | 661.07865 | 363.61399 | 496.39851 | 516.88015 | 522.084256 | 75.7440472 |
| 41 | 570.2918 | 657.70992 | 362.15697 | 494.68311 | 515.00689 | 519.969738 | 75.2248976 |
| 42 | 567.89636 | 654.107 | 360.72108 | 492.78506 | 512.97442 | 517.696784 | 74.6439168 |
| 43 | 565.21234 | 650.3047 | 359.33649 | 490.693 | 510.74161 | 515.257628 | 74.0007136 |
| 44 | 562.44147 | 646.55164 | 357.91908 | 488.39866 | 508.32687 | 512.727544 | 73.4152088 |
| 45 | 559.74612 | 642.90757 | 356.41267 | 485.94505 | 505.75238 | 510.152758 | 72.9392696 |
| 46 | 557.14424 | 639.20367 | 354.86344 | 483.37328 | 503.05428 | 507.527782 | 72.5169384 |
| 47 | 554.58318 | 635.38817 | 353.31338 | 480.68758 | 500.24798 | 504.844058 | 72.1132936 |
| 48 | 551.81601 | 631.54381 | 351.77918 | 477.87062 | 497.32481 | 502.066886 | 71.6904192 |
| 49 | 548.75691 | 627.63053 | 350.25257 | 474.93152 | 494.27569 | 499.169444 | 71.2194208 |
| 50 | 545.76785 | 623.46546 | 348.66919 | 471.88135 | 491.11624 | 496.180018 | 70.7493096 |
| 51 | 543.05972 | 619.02179 | 346.97047 | 468.73881 | 487.85472 | 493.129102 | 70.3293224 |
| 52 | 540.34132 | 614.48741 | 345.09103 | 465.51819 | 484.49743 | 489.987076 | 69.9418312 |
| 53 | 537.40622 | 609.9521 | 343.04423 | 462.19626 | 481.03554 | 486.72687 | 69.561832 |
| 54 | 534.44712 | 605.37539 | 341.12071 | 458.72055 | 477.44227 | 483.421208 | 69.1920376 |
| 55 | 531.59206 | 600.72515 | 339.35572 | 455.09556 | 473.70111 | 480.09392 | 68.851748 |
| 56 | 528.68946 | 595.99089 | 337.38207 | 451.35214 | 469.85537 | 476.653986 | 68.5489512 |
| 57 | 525.60271 | 591.16727 | 335.0765 | 447.48506 | 465.9297 | 473.052248 | 68.2661936 |
| 58 | 522.32373 | 586.25274 | 332.73314 | 443.46028 | 461.91025 | 469.336028 | 67.9617656 |
| 59 | 518.90437 | 581.18877 | 330.391 | 439.25409 | 457.7744 | 465.502526 | 67.6352352 |
| 60 | 515.58548 | 575.85334 | 327.74245 | 434.83353 | 453.49825 | 461.50261 | 67.37344 |

(continued)

| ##Temp./>C | E' (1.000 Hz)/MPa | E' (1.000 Hz)/MPa | E' (1.000 Hz)/MPa | E' (1.000 Hz)/MPa | E' (1.000 Hz)/MPa | DE' (1.000 Hz)/MPa | Mean Deviation |
|---|---|---|---|---|---|---|---|
| 61 | 512.4592 | 570.18763 | 324.65998 | 430.19972 | 449.05987 | 457.31328 | 67.208108 |
| 62 | 509.01796 | 564.18061 | 321.37223 | 425.34818 | 444.44918 | 452.873632 | 66.9805224 |
| 63 | 504.92489 | 557.92169 | 317.93568 | 420.25653 | 439.65917 | 448.139592 | 66.6269584 |
| 64 | 500.49214 | 551.58682 | 314.10328 | 414.87606 | 434.69514 | 443.150688 | 66.3110336 |
| 65 | 495.91881 | 545.09458 | 309.69105 | 409.18182 | 429.54281 | 437.885814 | 66.0967048 |
| 66 | 491.08273 | 538.1168 | 304.81363 | 403.137 | 424.15718 | 432.261468 | 65.8706376 |
| 67 | 485.79111 | 530.60353 | 299.48671 | 396.82517 | 418.53954 | 426.249212 | 65.5584864 |
| 68 | 479.75388 | 522.70449 | 293.48403 | 390.33107 | 412.78261 | 419.811216 | 65.1343752 |
| 69 | 472.80362 | 514.39446 | 286.74036 | 383.6571 | 406.95765 | 412.910638 | 64.5507216 |
| 70 | 465.42331 | 505.48844 | 279.46521 | 376.77633 | 401.11614 | 405.653886 | 63.8415912 |
| 71 | 457.72558 | 495.98519 | 271.56295 | 369.70844 | 395.29841 | 398.056114 | 63.0394168 |
| 72 | 448.90293 | 485.99395 | 262.53014 | 362.42337 | 389.53483 | 389.877044 | 62.0571168 |
| 73 | 438.19308 | 475.28949 | 252.58553 | 354.74558 | 383.71895 | 380.906526 | 61.7927768 |
| 74 | 425.87656 | 463.26465 | 242.73081 | 346.44087 | 377.61866 | 371.18631 | 61.280376 |
| 75 | 412.08263 | 448.75342 | 232.0771 | 337.29156 | 370.93756 | 360.228454 | 60.4352992 |
| 76 | 396.20506 | 430.06736 | 218.37027 | 326.94225 | 363.2937 | 346.975728 | 59.4555744 |
| 77 | 377.52187 | 406.0139 | 201.20642 | 314.6492 | 354.15269 | 330.708816 | 58.2248048 |
| 78 | 355.30685 | 375.70435 | 181.76132 | 299.78417 | 342.68614 | 311.048566 | 56.2206568 |
| 79 | 329.32816 | 342.13139 | 161.71353 | 282.40315 | 328.94754 | 288.904754 | 53.4771312 |
| 80 | 300.93104 | 308.3178 | 143.15128 | 262.81952 | 313.44102 | 265.732132 | 50.1973856 |
| 81 | 271.44189 | 274.7058 | 126.39486 | 241.57417 | 296.47434 | 242.118212 | 46.5069576 |
| 82 | 242.40455 | 241.60391 | 110.52119 | 219.20397 | 278.14062 | 218.374848 | 43.1414632 |
| 83 | 214.90929 | 210.38393 | 95.54983 | 196.37915 | 259.34245 | 195.31293 | 39.90524 |
| 84 | 189.24383 | 182.08801 | 82.55493 | 173.74972 | 240.94784 | 173.716866 | 36.4647744 |
| 85 | 165.3929 | 156.13384 | 71.54308 | 152.04913 | 223.02729 | 153.629248 | 33.4665144 |
| 86 | 142.80169 | 132.44944 | 61.56859 | 131.61871 | 205.60316 | 134.808318 | 31.5152856 |
| 87 | 121.41768 | 111.82645 | 52.32847 | 112.63127 | 188.76439 | 117.393652 | 30.1579064 |
| 88 | 101.98795 | 94.43958 | 44.29458 | 95.35261 | 172.61726 | 101.738396 | 28.4513672 |
| 89 | 85.06523 | 79.5103 | 37.68259 | 80.1333 | 157.11217 | 87.900718 | 27.6845808 |
| 90 | 70.64358 | 66.95548 | 32.02128 | 66.98575 | 142.25218 | 75.771654 | 26.5922104 |
| 91 | 58.62088 | 56.94849 | 27.08166 | 55.76876 | 128.08244 | 65.300446 | 25.1127976 |
| 92 | 48.6999 | 48.90547 | 22.98671 | 46.42502 | 114.68576 | 56.340572 | 23.3380752 |
| 93 | 40.80923 | 41.97429 | 19.75854 | 38.8669 | 102.02725 | 48.687242 | 21.3360032 |
| 94 | 34.80113 | 36.01179 | 17.05955 | 32.85258 | 90.14235 | 42.17348 | 19.187548 |
| 95 | 30.04043 | 31.25458 | 14.67988 | 28.01207 | 79.12297 | 36.621986 | 17.0003936 |
| 96 | 25.93128 | 27.43604 | 12.66675 | 24.12563 | 69.12651 | 31.857242 | 14.9077072 |
| 97 | 22.40307 | 24.14104 | 11.05814 | 20.98351 | 60.10297 | 27.737746 | 12.9460896 |
| 98 | 19.57349 | 21.23955 | 9.70202 | 18.43213 | 52.01755 | 24.192948 | 11.1298408 |
| 99 | 17.2893 | 18.74131 | 8.49373 | 16.31003 | 44.91355 | 21.149584 | 9.5055864 |

(continued)

| ##Temp./>C | E' (1.000 Hz)/MPa | E' (1.000 Hz)/MPa | E' (1.000 Hz)/MPa | E' (1.000 Hz)/MPa | E' (1.000 Hz)/MPa | DE' (1.000 Hz)/MPa | Mean Deviation |
|---|---|---|---|---|---|---|---|
| 100 | 15.40501 | 16.59962 | 7.43308 | 14.52223 | 38.86663 | 18.565314 | 8.1205264 |
| 101 | 13.84219 | 14.75778 | 6.55085 | 13.0044 | 33.73553 | 16.37815 | 6.942952 |
| 102 | 12.52316 | 13.15362 | 5.81527 | 11.71516 | 29.31989 | 14.50542 | 5.925788 |
| 103 | 11.3458 | 11.74743 | 5.187 | 10.60207 | 25.54061 | 12.884582 | 5.0624112 |
| 104 | 10.26392 | 10.53783 | 4.65035 | 9.63784 | 22.35806 | 11.4896 | 4.347384 |
| 105 | 9.28485 | 9.53087 | 4.2017 | 8.80885 | 19.71756 | 10.308766 | 3.7635176 |
| 106 | 8.4294 | 8.66722 | 3.82396 | 8.10766 | 17.5364 | 9.312928 | 3.2893888 |
| 107 | 7.74654 | 7.90109 | 3.49071 | 7.50883 | 15.73307 | 8.476048 | 2.9028088 |
| 108 | 7.23992 | 7.23688 | 3.1938 | 6.99603 | 14.21649 | 7.776624 | 2.5759464 |
| 109 | 6.75582 | 6.68671 | 2.94164 | 6.55582 | 12.93267 | 7.174532 | 2.3032552 |
| 110 | 6.23465 | 6.20026 | 2.73138 | 6.18201 | 11.83688 | 6.637036 | 2.0799376 |
| 111 | 5.76548 | 5.74217 | 2.53794 | 5.86435 | 10.90398 | 6.162784 | 1.8964784 |
| 112 | 5.4001 | 5.32451 | 2.35854 | 5.59552 | 10.11131 | 5.757996 | 1.7413256 |
| 113 | 5.11529 | 4.9631 | 2.23096 | 5.36694 | 9.43958 | 5.423174 | 1.6065624 |
| 114 | 4.88497 | 4.67007 | 2.16787 | 5.17163 | 8.85934 | 5.150776 | 1.4917672 |
| 115 | 4.68402 | 4.44063 | 2.14398 | 5.00311 | 8.35479 | 4.925306 | 1.4029152 |
| 116 | 4.49761 | 4.2365 | 2.143 | 4.85738 | 7.91342 | 4.729582 | 1.3246544 |
| 117 | 4.35685 | 4.03416 | 2.15233 | 4.73171 | 7.52935 | 4.56088 | 1.25572 |

Table 20 - Results of the storage modulus (E') for sample 1000/0 in quadruplicate

| ##Temp./>C | E' (1.000 Hz)/MPa | E' (1.000 Hz)/MPa | E' (1.000 Hz)/MPa | E' (1.000 Hz)/MPa | DE' (1.000 Hz)/MPa | Mean Deviation |
|---|---|---|---|---|---|---|
| 35 | 495.3179 | 612.7456 | 368.41062 | 413.31395 | 472.4470175 | 81.5847325 |
| 36 | 489.55309 | 605.72011 | 365.61268 | 410.00268 | 467.72214 | 79.91446 |
| 37 | 483.38573 | 597.96191 | 362.27518 | 406.50321 | 462.5315075 | 78.1423125 |
| 38 | 476.79718 | 589.71837 | 358.49016 | 402.83554 | 456.9603125 | 76.2974625 |
| 39 | 469.79988 | 581.16589 | 354.27274 | 398.9768 | 451.0538275 | 74.4290575 |
| 40 | 462.38706 | 571.95781 | 349.54877 | 394.88846 | 444.695525 | 72.47691 |
| 41 | 454.48599 | 561.73232 | 344.27707 | 390.53596 | 437.757835 | 70.35132 |
| 42 | 445.94948 | 550.46945 | 338.43896 | 386.03091 | 430.2222 | 67.987265 |
| 43 | 436.66987 | 538.08877 | 332.00442 | 381.43465 | 422.0494275 | 65.3298925 |
| 44 | 426.6383 | 524.71237 | 324.92535 | 376.5784 | 413.213605 | 62.46173 |
| 45 | 415.81137 | 510.4636 | 317.11697 | 371.24603 | 403.6594925 | 59.4779925 |
| 46 | 404.08929 | 495.42168 | 308.61595 | 365.32036 | 393.36182 | 56.393665 |
| 47 | 391.33414 | 479.50897 | 299.41865 | 358.75747 | 382.2548075 | 53.1667475 |
| 48 | 377.52535 | 462.40202 | 289.48081 | 351.83253 | 370.3101775 | 49.6535075 |
| 49 | 362.59824 | 443.63494 | 278.68099 | 344.65346 | 357.3919075 | 45.7246825 |
| 50 | 346.49599 | 423.44559 | 266.94372 | 336.68975 | 343.3937625 | 41.5770275 |
| 51 | 329.04928 | 402.21013 | 254.36834 | 327.45236 | 328.2700275 | 37.3596775 |

(continued)

| ##Temp./>C | E' (1.000 Hz)/MPa | E' (1.000 Hz)/MPa | E' (1.000 Hz)/MPa | E' (1.000 Hz)/MPa | DE' (1.000 Hz)/MPa | Mean Deviation |
|---|---|---|---|---|---|---|
| 52 | 310.26272 | 379.92095 | 240.97594 | 317.20095 | 312.09014 | 36.47081 |
| 53 | 290.05662 | 356.2928 | 226.73484 | 306.07882 | 294.79077 | 36.39504 |
| 54 | 268.27979 | 330.96334 | 211.51013 | 293.6407 | 276.09849 | 36.20353 |
| 55 | 244.59552 | 303.32198 | 195.12696 | 279.20471 | 255.5622925 | 35.7010525 |
| 56 | 219.1843 | 273.03298 | 177.33804 | 262.47589 | 233.0078025 | 34.7466325 |
| 57 | 192.50664 | 240.30588 | 157.90535 | 243.11358 | 208.4578625 | 33.2518675 |
| 58 | 165.03898 | 205.87509 | 137.54288 | 221.50757 | 182.49113 | 31.2002 |
| 59 | 137.26688 | 171.35833 | 117.20467 | 198.2712 | 156.02527 | 28.789495 |
| 60 | 110.18491 | 138.29886 | 97.4537 | 173.35422 | 129.8229225 | 26.0036175 |
| 61 | 85.48843 | 108.43167 | 78.70334 | 146.20208 | 104.70638 | 22.610495 |
| 62 | 64.41225 | 83.25889 | 61.6043 | 117.79009 | 81.7663825 | 18.7581075 |
| 63 | 47.71178 | 63.07344 | 47.0269 | 90.61152 | 62.10591 | 14.73657 |
| 64 | 35.17075 | 47.77685 | 35.70258 | 66.73944 | 46.347405 | 10.91074 |
| 65 | 25.79539 | 35.98016 | 27.06452 | 47.96923 | 34.202325 | 7.77237 |
| 66 | 18.92911 | 26.86917 | 20.50314 | 34.56687 | 25.2170725 | 5.5009475 |
| 67 | 13.94751 | 20.06141 | 15.59859 | 25.04639 | 18.663475 | 3.890425 |
| 68 | 10.38752 | 15.21116 | 11.86514 | 18.39957 | 13.9658475 | 2.8395175 |
| 69 | 7.79714 | 11.71227 | 9.00223 | 13.67234 | 10.545995 | 2.14631 |
| 70 | 5.90836 | 9.12757 | 6.90589 | 10.22296 | 8.041195 | 1.63407 |
| 71 | 4.57123 | 7.19463 | 5.45651 | 7.69097 | 6.228335 | 1.214465 |
| 72 | 3.65211 | 5.77314 | 4.4044 | 5.86768 | 4.9243325 | 0.8960775 |
| 73 | 2.97269 | 4.73162 | 3.57571 | 4.5634 | 3.960855 | 0.686655 |
| 74 | 2.42034 | 3.94209 | 2.91718 | 3.63342 | 3.2282575 | 0.5594975 |
| 75 | 1.97866 | 3.32317 | 2.42184 | 2.95204 | 2.6689275 | 0.4686775 |
| 76 | 1.64756 | 2.84171 | 2.05291 | 2.45094 | 2.24828 | 0.398045 |
| 77 | 1.39593 | 2.48146 | 1.76169 | 2.08739 | 1.9316175 | 0.3528075 |
| 78 | 1.20025 | 2.20939 | 1.52345 | 1.81599 | 1.68727 | 0.32542 |
| 79 | 1.05052 | 1.98318 | 1.33312 | 1.58663 | 1.4883625 | 0.2965425 |
| 80 | 0.94303 | 1.77247 | 1.19147 | 1.37662 | 1.3208975 | 0.2536475 |
| 81 | 0.85718 | 1.58137 | 1.08376 | 1.21496 | 1.1843175 | 0.2138475 |
| 82 | 0.76074 | 1.44901 | 0.99254 | 1.1233 | 1.0813975 | 0.2047575 |
| 83 | 0.66224 | 1.35769 | 0.9133 | 1.04868 | 0.9954775 | 0.2077075 |
| 84 | 0.59723 | 1.27919 | 0.84921 | 0.95643 | 0.920515 | 0.197295 |
| 85 | 0.5628 | 1.20547 | 0.79676 | 0.88359 | 0.862155 | 0.182375 |
| 86 | 0.53295 | 1.14456 | 0.74157 | 0.84248 | 0.81539 | 0.17813 |
| 87 | 0.4953 | 1.10056 | 0.686 | 0.79513 | 0.7692475 | 0.1785975 |
| 88 | 0.44737 | 1.07258 | 0.65167 | 0.73312 | 0.726185 | 0.176665 |
| 89 | 0.40084 | 1.05987 | 0.63961 | 0.69055 | 0.6977175 | 0.18107625 |
| 90 | 0.38205 | 1.04164 | 0.62077 | 0.66312 | 0.676895 | 0.1823725 |

(continued)

| ##Temp./>C | E' (1.000 Hz)/MPa | E' (1.000 Hz)/MPa | E' (1.000 Hz)/MPa | E' (1.000 Hz)/MPa | DE' (1.000 Hz)/MPa | Mean Deviation |
|---|---|---|---|---|---|---|
| 91 | 0.38859 | 1.00283 | 0.58015 | 0.6148 | 0.6465925 | 0.17811875 |
| 92 | 0.37656 | 0.96384 | 0.54201 | 0.55253 | 0.608735 | 0.1775525 |
| 93 | 0.33366 | 0.94277 | 0.53004 | 0.50833 | 0.5787 | 0.182035 |
| 94 | 0.29952 | 0.93752 | 0.52974 | 0.48691 | 0.5634225 | 0.18704875 |
| 95 | 0.29411 | 0.94347 | 0.51989 | 0.48083 | 0.559575 | 0.1919475 |
| 96 | 0.3082 | 0.95321 | 0.50492 | 0.47815 | 0.56112 | 0.196045 |
| 97 | 0.3306 | 0.95768 | 0.49676 | 0.46717 | 0.5630525 | 0.19731375 |
| 98 | 0.33353 | 0.9447 | 0.49407 | 0.44858 | 0.55522 | 0.19474 |
| 99 | 0.30549 | 0.90552 | 0.48876 | 0.42874 | 0.5321275 | 0.18669625 |
| 100 | 0.2804 | 0.86373 | 0.48545 | 0.4226 | 0.513045 | 0.1753425 |
| 101 | 0.28963 | 0.85044 | 0.50243 | 0.43959 | 0.5205225 | 0.16495875 |
| 102 | 0.32197 | 0.85245 | 0.53619 | 0.45297 | 0.540895 | 0.1557775 |
| 103 | 0.35304 | 0.841 | 0.5485 | 0.43278 | 0.54383 | 0.15092 |
| 104 | 0.36373 | 0.81855 | 0.52535 | 0.39862 | 0.5265625 | 0.14599375 |
| 105 | 0.34045 | 0.79504 | 0.4978 | 0.38317 | 0.504115 | 0.1454625 |
| 106 | 0.31039 | 0.77608 | 0.48744 | 0.391 | 0.4912275 | 0.14242625 |
| 107 | 0.31119 | 0.7655 | 0.49318 | 0.41682 | 0.4966725 | 0.13441375 |
| 108 | 0.3308 | 0.75982 | 0.5085 | 0.42626 | 0.506345 | 0.127815 |
| 109 | 0.33817 | 0.75038 | 0.50628 | 0.38294 | 0.4944425 | 0.1338875 |
| 110 | 0.33582 | 0.73613 | 0.46922 | 0.341 | 0.4705425 | 0.13279375 |
| 111 | 0.33937 | 0.72116 | 0.43671 | 0.37306 | 0.467575 | 0.1267925 |
| 112 | 0.34146 | 0.70799 | 0.44872 | 0.4395 | 0.4844175 | 0.11178625 |
| 113 | 0.32042 | 0.69774 | 0.47658 | 0.46383 | 0.4896425 | 0.10404875 |
| 114 | 0.28793 | 0.69236 | 0.47094 | 0.4537 | 0.4762325 | 0.10806375 |
| 115 | 0.28768 | 0.69642 | 0.44226 | 0.45098 | 0.469335 | 0.1135425 |
| 116 | 0.31755 | 0.71145 | 0.42941 | 0.45401 | 0.478105 | 0.1166725 |
| 117 | 0.3269 | 0.72732 | 0.43464 | 0.43855 | 0.4818525 | 0.12273375 |

Table 21 - Results of the storage modulus (E') for sample 1020/4 in triplicate

| ##Temp./>C | E' (1.000 Hz)/MPa | E' (1.000 Hz)/MPa | E' (1.000 Hz)/MPa | DE' (1.000 Hz)/MPa | Mean Deviation |
|---|---|---|---|---|---|
| 35 | 810.28926 | 483.75458 | 973.50735 | 755.8503967 | 181.3972111 |
| 36 | 808.03307 | 481.69053 | 969.99695 | 753.2401833 | 181.0331022 |
| 37 | 805.71856 | 479.82266 | 966.70214 | 750.7477867 | 180.6167511 |
| 38 | 803.55162 | 478.01937 | 962.49378 | 748.02159 | 180.00148 |
| 39 | 801.18467 | 476.04756 | 958.73931 | 745.3238467 | 179.5175244 |
| 40 | 798.42309 | 473.92983 | 955.57178 | 742.6415667 | 179.1411578 |
| 41 | 795.52932 | 471.95631 | 951.92547 | 739.8037 | 178.5649267 |
| 42 | 792.65321 | 470.02027 | 947.87461 | 736.8493633 | 177.8860622 |

(continued)

| ##Temp./>C | E' (1.000 Hz)/MPa | E' (1.000 Hz)/MPa | E' (1.000 Hz)/MPa | DE' (1.000 Hz)/MPa | Mean Deviation |
|---|---|---|---|---|---|
| 43 | 789.607 | 467.75591 | 943.59376 | 733.6522233 | 177.2642089 |
| 44 | 786.21703 | 465.33099 | 939.14955 | 730.2325233 | 176.6010222 |
| 45 | 782.45387 | 463.04359 | 934.66777 | 726.7217433 | 175.7854356 |
| 46 | 778.36679 | 460.77907 | 930.18211 | 723.1093233 | 174.8868356 |
| 47 | 774.2785 | 458.36065 | 925.64898 | 719.4293767 | 174.0458178 |
| 48 | 770.37382 | 455.66291 | 921.03952 | 715.6920833 | 173.3527822 |
| 49 | 766.3944 | 452.6847 | 916.46377 | 711.8476233 | 172.7752822 |
| 50 | 762.12955 | 449.82847 | 911.70445 | 707.88749 | 172.0393467 |
| 51 | 757.63425 | 447.18406 | 905.64596 | 703.48809 | 170.8693533 |
| 52 | 752.97279 | 444.4619 | 899.88075 | 699.1051467 | 169.7621644 |
| 53 | 748.21095 | 441.54777 | 895.61084 | 695.1231867 | 169.0502778 |
| 54 | 743.37935 | 438.42954 | 890.37021 | 690.7263667 | 168.1978844 |
| 55 | 738.43058 | 435.18656 | 884.62985 | 686.08233 | 167.2638467 |
| 56 | 733.26674 | 431.9046 | 879.24195 | 681.4710967 | 166.3776644 |
| 57 | 727.71119 | 428.5176 | 873.56384 | 676.5975433 | 165.3866289 |
| 58 | 721.68957 | 424.93607 | 867.62353 | 671.41639 | 164.3202133 |
| 59 | 715.54891 | 421.15395 | 861.36979 | 666.0242167 | 163.2468444 |
| 60 | 709.54196 | 417.11648 | 854.69646 | 660.4516333 | 162.2234356 |
| 61 | 703.44842 | 412.62362 | 848.17149 | 654.7478433 | 161.4161489 |
| 62 | 696.99892 | 407.46321 | 841.41887 | 648.627 | 160.77586 |
| 63 | 690.06339 | 401.52126 | 833.79146 | 641.7920367 | 160.1805178 |
| 64 | 682.566 | 394.77051 | 825.88066 | 634.4057233 | 159.7568089 |
| 65 | 674.6566 | 387.31101 | 817.70787 | 626.5584933 | 159.4983222 |
| 66 | 666.36159 | 379.17534 | 809.07092 | 618.2026167 | 159.3515178 |
| 67 | 657.38188 | 370.3632 | 799.92418 | 609.2230867 | 159.2399244 |
| 68 | 647.44726 | 360.91407 | 789.73577 | 599.3657 | 158.9677533 |
| 69 | 636.56821 | 350.94368 | 778.12956 | 588.54715 | 158.4023133 |
| 70 | 624.54856 | 340.36352 | 764.98073 | 576.6309367 | 157.5116111 |
| 71 | 610.78339 | 328.84111 | 750.35859 | 563.3276967 | 156.3243911 |
| 72 | 594.7863 | 315.89559 | 733.57979 | 548.0872267 | 154.7944244 |
| 73 | 576.65225 | 300.64869 | 713.29653 | 530.1991567 | 153.0336444 |
| 74 | 556.66879 | 282.63292 | 689.49554 | 509.5990833 | 151.3107756 |
| 75 | 535.36056 | 262.45868 | 663.01376 | 486.9443333 | 149.6571022 |
| 76 | 512.31206 | 240.87284 | 633.74945 | 462.31145 | 147.62574 |
| 77 | 485.9819 | 219.08532 | 599.48726 | 434.8514933 | 143.8441156 |
| 78 | 455.1516 | 197.76496 | 559.06324 | 403.9932667 | 137.4855378 |
| 79 | 418.84107 | 176.94805 | 511.30188 | 369.0303333 | 128.0548556 |
| 80 | 378.44207 | 156.74373 | 453.91744 | 329.70108 | 115.3049 |
| 81 | 336.99765 | 137.4831 | 393.07224 | 289.18433 | 101.1341533 |

(continued)

| ##Temp./>C | E' (1.000 Hz)/MPa | E' (1.000 Hz)/MPa | E' (1.000 Hz)/MPa | DE' (1.000 Hz)/MPa | Mean Deviation |
|---|---|---|---|---|---|
| 82 | 296.48921 | 119.7464 | 338.40499 | 251.5468667 | 87.86697778 |
| 83 | 258.51708 | 103.9232 | 291.8927 | 218.1109933 | 76.12519556 |
| 84 | 223.52119 | 90.01639 | 252.06942 | 188.5356667 | 65.67951778 |
| 85 | 191.47221 | 77.42542 | 216.05162 | 161.64975 | 56.14955333 |
| 86 | 162.31 | 65.9059 | 182.37253 | 136.86281 | 47.30460667 |
| 87 | 136.37948 | 55.87662 | 151.84316 | 114.6997533 | 39.21542222 |
| 88 | 114.01222 | 47.82395 | 126.46854 | 96.10157 | 32.18508 |
| 89 | 95.46667 | 41.35817 | 105.18864 | 80.67116 | 26.20866 |
| 90 | 80.05523 | 36.01815 | 87.52487 | 67.86608333 | 21.23195556 |
| 91 | 67.37123 | 31.54653 | 73.46245 | 57.46007 | 17.27569333 |
| 92 | 57.06975 | 27.72303 | 62.05587 | 48.94955 | 14.15101333 |
| 93 | 48.82148 | 24.41378 | 52.73322 | 41.98949333 | 11.71714222 |
| 94 | 42.15297 | 21.55627 | 45.31733 | 36.34219 | 9.85728 |
| 95 | 36.77357 | 19.09141 | 39.38858 | 31.75118667 | 8.439851111 |
| 96 | 32.35782 | 16.82457 | 34.49973 | 27.89404 | 7.379646667 |
| 97 | 28.66017 | 14.63515 | 30.34462 | 24.54664667 | 6.607664444 |
| 98 | 25.51156 | 12.66192 | 26.85143 | 21.67497 | 6.0087 |
| 99 | 22.8046 | 11.00079 | 24.0262 | 19.27719667 | 5.517604444 |
| 100 | 20.45845 | 9.63532 | 21.56888 | 17.22088333 | 5.057042222 |
| 101 | 18.41943 | 8.55118 | 19.37334 | 15.44798333 | 4.597868889 |
| 102 | 16.64953 | 7.64632 | 17.53712 | 13.94432333 | 4.198668889 |
| 103 | 15.11523 | 6.8517 | 16.02103 | 12.66265333 | 3.873968889 |
| 104 | 13.79103 | 6.16256 | 14.72696 | 11.56018333 | 3.598415556 |
| 105 | 12.64883 | 5.58281 | 13.51154 | 10.58106 | 3.332166667 |
| 106 | 11.66579 | 5.088 | 12.47103 | 9.741606667 | 3.102404444 |
| 107 | 10.81935 | 4.66166 | 11.66172 | 9.047576667 | 2.923944444 |
| 108 | 10.08147 | 4.29266 | 10.94829 | 8.440806667 | 2.765431111 |
| 109 | 9.43469 | 3.975 | 10.28972 | 7.899803333 | 2.616535556 |
| 110 | 8.86497 | 3.7007 | 9.69623 | 7.420633333 | 2.479955556 |
| 111 | 8.36862 | 3.46442 | 9.18907 | 7.00737 | 2.361966667 |
| 112 | 7.9511 | 3.25793 | 8.76338 | 6.65747 | 2.26636 |
| 113 | 7.61027 | 3.07208 | 8.39006 | 6.35747 | 2.19026 |
| 114 | 7.32356 | 2.90363 | 8.07722 | 6.10147 | 2.131893333 |
| 115 | 7.07767 | 2.75473 | 7.82017 | 5.88419 | 2.086306667 |
| 116 | 6.8663 | 2.6289 | 7.5848 | 5.693333333 | 2.042955556 |
| 117 | 6.681 | 2.53002 | 7.35924 | 5.52342 | 1.9956 |

**Table 22** - Results of the storage modulus (E') for sample 1010/3 in triplicate

| ##Temp./>C | E' (1.000 Hz)/MPa | E' (1.000 Hz)/MPa | E' (1.000 Hz)/MPa | DE' (1.000 Hz)/MPa | Mean Deviation |
|---|---|---|---|---|---|
| 35 | 492.2412 | 579.87325 | 453.6139 | 508.5761167 | 47.53142222 |
| 36 | 491.03198 | 578.49792 | 451.87842 | 507.1361067 | 47.57454222 |
| 37 | 489.6792 | 576.98364 | 450.07325 | 505.5786967 | 47.60329556 |
| 38 | 488.19302 | 575.33233 | 448.20441 | 503.90992 | 47.61494 |
| 39 | 486.57296 | 573.53188 | 446.27859 | 502.12781 | 47.60271333 |
| 40 | 484.81589 | 571.59825 | 444.29936 | 500.2378333 | 47.57361111 |
| 41 | 482.90692 | 569.54134 | 442.27817 | 498.2421433 | 47.53279778 |
| 42 | 480.85837 | 567.36649 | 440.22962 | 496.1514933 | 47.47666444 |
| 43 | 478.67915 | 565.0681 | 438.14697 | 493.96474 | 47.40224 |
| 44 | 476.38823 | 562.65522 | 436.00741 | 491.68362 | 47.3144 |
| 45 | 473.99826 | 560.13894 | 433.81695 | 489.31805 | 47.21392667 |
| 46 | 471.52918 | 557.53442 | 431.6046 | 486.8894 | 47.09668 |
| 47 | 468.99872 | 554.86124 | 429.37242 | 484.4107933 | 46.96696444 |
| 48 | 466.41501 | 552.13633 | 427.09819 | 481.8831767 | 46.83543556 |
| 49 | 463.77787 | 549.37987 | 424.77959 | 479.3124433 | 46.71161778 |
| 50 | 461.08771 | 546.60849 | 422.44121 | 476.71247 | 46.59734667 |
| 51 | 458.34881 | 543.83976 | 420.08606 | 474.0915433 | 46.49881111 |
| 52 | 455.56027 | 541.09123 | 417.68898 | 471.4468267 | 46.42960222 |
| 53 | 452.71563 | 538.38041 | 415.24611 | 468.7807167 | 46.39979556 |
| 54 | 449.80409 | 535.72635 | 412.78303 | 466.10449 | 46.41457333 |
| 55 | 446.82961 | 533.12487 | 410.29719 | 463.4172233 | 46.47176444 |
| 56 | 443.79303 | 530.56678 | 407.74797 | 460.7025933 | 46.57612444 |
| 57 | 440.68399 | 528.05433 | 405.11682 | 457.9517133 | 46.73507778 |
| 58 | 437.47912 | 525.59842 | 402.41367 | 455.1637367 | 46.95645556 |
| 59 | 434.17262 | 523.17211 | 399.63165 | 452.32546 | 47.2311 |
| 60 | 430.77161 | 520.70062 | 396.74174 | 449.4046567 | 47.53064222 |
| 61 | 427.24935 | 518.1163 | 393.73221 | 446.3659533 | 47.83356444 |
| 62 | 423.53378 | 515.37002 | 390.60862 | 443.1708067 | 48.13280889 |
| 63 | 419.5765 | 512.40222 | 387.34399 | 439.7742367 | 48.41865556 |
| 64 | 415.37898 | 509.14932 | 383.87172 | 436.13334 | 48.67732 |
| 65 | 410.92262 | 505.50642 | 380.14665 | 432.1918967 | 48.87634889 |
| 66 | 406.15452 | 501.33567 | 376.14022 | 427.8768033 | 48.97257778 |
| 67 | 401.01449 | 496.43353 | 371.83061 | 423.0928767 | 48.89376889 |
| 68 | 395.45947 | 490.55538 | 367.19724 | 417.7373633 | 48.54534444 |
| 69 | 389.43676 | 483.31076 | 362.17851 | 411.64201 | 47.77916667 |
| 70 | 382.93002 | 474.32825 | 356.6431 | 404.63379 | 46.46297333 |
| 71 | 375.84144 | 463.09488 | 350.48643 | 396.47425 | 44.41375333 |
| 72 | 367.92025 | 449.30017 | 343.59892 | 386.93978 | 41.57359333 |
| 73 | 358.86375 | 432.67394 | 335.8505 | 375.7960633 | 37.91858444 |

(continued)

| ##Temp./>C | E' (1.000 Hz)/MPa | E' (1.000 Hz)/MPa | E' (1.000 Hz)/MPa | DE' (1.000 Hz)/MPa | Mean Deviation |
|---|---|---|---|---|---|
| 74 | 348.47394 | 412.99358 | 327.03234 | 362.8332867 | 33.44019556 |
| 75 | 336.44886 | 389.69681 | 316.91444 | 347.6867033 | 28.00673778 |
| 76 | 322.18431 | 362.79511 | 305.15203 | 330.0438167 | 21.83419556 |
| 77 | 304.98965 | 332.63726 | 291.39436 | 309.6737567 | 15.30900222 |
| 78 | 284.88524 | 300.34803 | 275.09571 | 286.7763267 | 9.047802222 |
| 79 | 261.94972 | 267.83761 | 256.24826 | 262.0118633 | 3.883831111 |
| 80 | 237.09595 | 236.1493 | 235.00619 | 236.0838133 | 0.718415556 |
| 81 | 211.26199 | 205.74533 | 212.20643 | 209.7379167 | 2.661724444 |
| 82 | 185.28495 | 177.26 | 188.90409 | 183.8163467 | 4.370897778 |
| 83 | 160.02264 | 151.50965 | 166.00688 | 159.1797233 | 5.113382222 |
| 84 | 136.31425 | 128.88032 | 144.31045 | 136.5016733 | 5.205851111 |
| 85 | 115.06669 | 109.22788 | 123.98248 | 116.09235 | 5.260086667 |
| 86 | 96.46615 | 92.40924 | 105.25011 | 98.04183333 | 4.805517778 |
| 87 | 80.44265 | 78.06508 | 88.57077 | 82.3595 | 4.140846667 |
| 88 | 66.87022 | 66.04375 | 74.32886 | 69.08094333 | 3.498611111 |
| 89 | 55.57819 | 56.08427 | 62.24396 | 57.96880667 | 2.850102222 |
| 90 | 46.37544 | 47.982 | 52.16139 | 48.83961 | 2.21452 |
| 91 | 39.03799 | 41.35088 | 43.83597 | 41.40828 | 1.61846 |
| 92 | 33.17892 | 35.94714 | 37.10719 | 35.41108333 | 1.488108889 |
| 93 | 28.45565 | 31.51945 | 31.72747 | 30.56752333 | 1.407915556 |
| 94 | 24.64434 | 27.86921 | 27.46334 | 26.65896333 | 1.343082222 |
| 95 | 21.57243 | 24.77953 | 24.04872 | 23.46689333 | 1.262975556 |
| 96 | 19.04139 | 22.12648 | 21.27862 | 20.81549667 | 1.182737778 |
| 97 | 16.91016 | 19.83279 | 18.96263 | 18.56852667 | 1.105577778 |
| 98 | 15.08506 | 17.85155 | 17.00121 | 16.64594 | 1.040586667 |
| 99 | 13.51053 | 16.14373 | 15.33482 | 14.99636 | 0.990553333 |
| 100 | 12.13744 | 14.66052 | 13.91301 | 13.57032333 | 0.955255556 |
| 101 | 10.93911 | 13.34923 | 12.67983 | 12.32272333 | 0.922408889 |
| 102 | 9.89021 | 12.19239 | 11.60084 | 11.22781333 | 0.891735556 |
| 103 | 8.97715 | 11.18801 | 10.64541 | 10.27019 | 0.862026667 |
| 104 | 8.17613 | 10.306 | 9.80092 | 9.427683333 | 0.834368889 |
| 105 | 7.47668 | 9.51388 | 9.06351 | 8.68469 | 0.80534 |
| 106 | 6.87227 | 8.81055 | 8.42681 | 8.036543333 | 0.776182222 |
| 107 | 6.35091 | 8.20566 | 7.86488 | 7.473816667 | 0.748604444 |
| 108 | 5.88822 | 7.6839 | 7.36519 | 6.979103333 | 0.727255556 |
| 109 | 5.47479 | 7.232 | 6.92447 | 6.543753333 | 0.712642222 |
| 110 | 5.11096 | 6.83737 | 6.54189 | 6.163406667 | 0.701631111 |
| 111 | 4.79554 | 6.49267 | 6.20629 | 5.8315 | 0.69064 |
| 112 | 4.52509 | 6.19117 | 5.91025 | 5.54217 | 0.678053333 |

(continued)

| ##Temp./>C | E' (1.000 Hz)/MPa | E' (1.000 Hz)/MPa | E' (1.000 Hz)/MPa | DE' (1.000 Hz)/MPa | Mean Deviation |
|---|---|---|---|---|---|
| 113 | 4.29276 | 5.92773 | 5.64627 | 5.28892 | 0.664106667 |
| 114 | 4.08984 | 5.69528 | 5.40951 | 5.064876667 | 0.650024444 |
| 115 | 3.91085 | 5.4897 | 5.1972 | 4.865916667 | 0.636711111 |
| 116 | 3.75191 | 5.30533 | 5.00954 | 4.688926667 | 0.624677778 |
| 117 | 3.60972 | 5.13999 | 4.84356 | 4.53109 | 0.614246667 |

**Table 23** - Results of the storage modulus (E') for sample 1010/4 in triplicate

| ##Temp./>C | E' (1.000 Hz)/MPa | E' (1.000 Hz)/MPa | E' (1.000 Hz)/MPa | DE' (1.000 Hz)/MPa | Mean Deviation |
|---|---|---|---|---|---|
| 35 | 432.36235 | 472.85563 | 442.206 | 449.1413267 | 15.80953556 |
| 36 | 430.3663 | 471.03692 | 440.42834 | 447.2771867 | 15.83982222 |
| 37 | 428.28615 | 469.15549 | 438.55888 | 445.3335067 | 15.88132222 |
| 38 | 426.13668 | 467.22969 | 436.60155 | 443.32264 | 15.93803333 |
| 39 | 423.93359 | 465.26713 | 434.55608 | 441.2522667 | 16.00990889 |
| 40 | 421.69162 | 463.26685 | 432.41428 | 439.12425 | 16.09506667 |
| 41 | 419.40785 | 461.2236 | 430.18027 | 436.93724 | 16.19090667 |
| 42 | 417.06392 | 459.12513 | 427.85613 | 434.6817267 | 16.29560222 |
| 43 | 414.65554 | 456.9743 | 425.44524 | 432.35836 | 16.41062667 |
| 44 | 412.18986 | 454.80186 | 422.9442 | 429.97864 | 16.54881333 |
| 45 | 409.6809 | 452.61705 | 420.37103 | 427.5563267 | 16.70714889 |
| 46 | 407.15017 | 450.39676 | 417.74816 | 425.0983633 | 16.86559778 |
| 47 | 404.58807 | 448.12083 | 415.07999 | 422.5962967 | 17.01635556 |
| 48 | 401.95079 | 445.78041 | 412.3601 | 420.0304333 | 17.16665111 |
| 49 | 399.21025 | 443.36783 | 409.59729 | 417.39179 | 17.31736 |
| 50 | 396.3584 | 440.88541 | 406.80168 | 414.68183 | 17.46905333 |
| 51 | 393.42612 | 438.32778 | 403.93543 | 411.8964433 | 17.62089111 |
| 52 | 390.48753 | 435.6815 | 400.92729 | 409.0321067 | 17.76626222 |
| 53 | 387.50334 | 432.93701 | 397.77576 | 406.0720367 | 17.90998222 |
| 54 | 384.32326 | 430.12454 | 394.519 | 402.9889333 | 18.09040444 |
| 55 | 380.93248 | 427.24912 | 391.14826 | 399.77662 | 18.315 |
| 56 | 377.50771 | 424.2338 | 387.62549 | 396.4556667 | 18.51875556 |
| 57 | 374.08068 | 420.99592 | 383.97991 | 393.0188367 | 18.65138889 |
| 58 | 370.55547 | 417.54261 | 380.25463 | 389.4509033 | 18.72780444 |
| 59 | 366.86972 | 413.87364 | 376.39185 | 385.7117367 | 18.77460222 |
| 60 | 362.97209 | 409.94676 | 372.27274 | 381.73053 | 18.81082 |
| 61 | 358.83287 | 405.68969 | 367.93497 | 377.4858433 | 18.80256444 |
| 62 | 354.43536 | 401.03719 | 363.48506 | 372.98587 | 18.70088 |
| 63 | 349.70799 | 395.87339 | 358.82659 | 368.13599 | 18.4916 |
| 64 | 344.50105 | 390.04327 | 353.77499 | 362.7731033 | 18.18011111 |

(continued)

| ##Temp./>C | E' (1.000 Hz)/MPa | E' (1.000 Hz)/MPa | E' (1.000 Hz)/MPa | DE' (1.000 Hz)/MPa | Mean Deviation |
|---|---|---|---|---|---|
| 65 | 338.63434 | 383.31103 | 348.37317 | 356.7728467 | 17.69212222 |
| 66 | 331.84894 | 375.38473 | 342.67398 | 349.9692167 | 16.94367556 |
| 67 | 323.70126 | 365.85408 | 336.43837 | 341.9979033 | 15.90411778 |
| 68 | 313.40361 | 354.20404 | 329.26395 | 332.2905333 | 14.60900444 |
| 69 | 300.59883 | 339.7628 | 320.72539 | 320.36234 | 13.17567333 |
| 70 | 285.39661 | 322.18495 | 310.27622 | 305.9525933 | 13.70398889 |
| 71 | 267.73293 | 301.21583 | 296.92182 | 288.6235267 | 13.92706444 |
| 72 | 246.77947 | 277.34523 | 279.4442 | 267.8563 | 14.05122 |
| 73 | 222.79657 | 251.09606 | 258.18989 | 244.0275067 | 14.15395778 |
| 74 | 198.20797 | 223.84982 | 233.88068 | 218.6461567 | 13.62545778 |
| 75 | 174.29981 | 196.91444 | 207.6427 | 192.9523167 | 12.43500444 |
| 76 | 151.13435 | 171.06708 | 180.49071 | 167.5640467 | 10.95313111 |
| 77 | 129.22677 | 147.08038 | 154.18279 | 143.4966467 | 9.513251111 |
| 78 | 109.68244 | 125.47595 | 130.46612 | 121.8748367 | 8.128264444 |
| 79 | 92.82533 | 106.70814 | 109.49146 | 103.00831 | 6.788653333 |
| 80 | 78.12721 | 90.58319 | 91.35288 | 86.68776 | 5.707033333 |
| 81 | 65.54277 | 76.94866 | 76.02589 | 72.83910667 | 4.864224444 |
| 82 | 55.2197 | 65.32154 | 63.50447 | 61.34857 | 4.085913333 |
| 83 | 46.97256 | 55.44755 | 53.50337 | 51.97449333 | 3.334622222 |
| 84 | 40.20048 | 47.16142 | 45.65921 | 44.34037 | 2.759926667 |
| 85 | 34.63221 | 40.37812 | 39.40394 | 38.13809 | 2.337253333 |
| 86 | 30.12296 | 34.86834 | 34.30373 | 33.09834333 | 1.983588889 |
| 87 | 26.4499 | 30.42862 | 30.07459 | 28.98437 | 1.689646667 |
| 88 | 23.34064 | 26.7826 | 26.53054 | 25.55126 | 1.473746667 |
| 89 | 20.69616 | 23.71935 | 23.5527 | 22.65607 | 1.306606667 |
| 90 | 18.48659 | 21.11557 | 21.05206 | 20.21807333 | 1.154322222 |
| 91 | 16.59315 | 18.88294 | 18.88818 | 18.12142333 | 1.018848889 |
| 92 | 14.89778 | 16.91589 | 16.96532 | 16.25966333 | 0.907922222 |
| 93 | 13.35685 | 15.11776 | 15.2318 | 14.56880333 | 0.807968889 |
| 94 | 11.96956 | 13.49291 | 13.66809 | 13.04352 | 0.715973333 |
| 95 | 10.77677 | 12.09966 | 12.27344 | 11.71662333 | 0.626568889 |
| 96 | 9.77487 | 10.89334 | 11.04125 | 10.56982 | 0.529966667 |
| 97 | 8.84059 | 9.79795 | 9.93894 | 9.525826667 | 0.456824444 |
| 98 | 7.89243 | 8.78954 | 8.95267 | 8.54488 | 0.434966667 |
| 99 | 7.05827 | 7.87674 | 8.07794 | 7.670983333 | 0.408475556 |
| 100 | 6.38744 | 7.07141 | 7.30815 | 6.922333333 | 0.356595556 |
| 101 | 5.78829 | 6.38023 | 6.62773 | 6.265416667 | 0.318084444 |
| 102 | 5.2362 | 5.78768 | 6.02622 | 5.683366667 | 0.298111111 |
| 103 | 4.76077 | 5.2543 | 5.49645 | 5.170506667 | 0.273157778 |

(continued)

| ##Temp./>C | E' (1.000 Hz)/MPa | E' (1.000 Hz)/MPa | E' (1.000 Hz)/MPa | DE' (1.000 Hz)/MPa | Mean Deviation |
|---|---|---|---|---|---|
| 104 | 4.3521 | 4.7656 | 5.0274 | 4.715033333 | 0.241955556 |
| 105 | 3.97646 | 4.336 | 4.60834 | 4.306933333 | 0.220315556 |
| 106 | 3.63184 | 3.97582 | 4.23452 | 3.947393333 | 0.210368889 |
| 107 | 3.33453 | 3.67762 | 3.90583 | 3.639326667 | 0.203197778 |
| 108 | 3.06987 | 3.43414 | 3.61737 | 3.373793333 | 0.202615556 |
| 109 | 2.81522 | 3.22672 | 3.36544 | 3.135793333 | 0.213715556 |
| 110 | 2.59057 | 3.04509 | 3.14704 | 2.927566667 | 0.224664444 |
| 111 | 2.41669 | 2.89314 | 2.96206 | 2.757296667 | 0.227071111 |
| 112 | 2.26745 | 2.77439 | 2.80561 | 2.615816667 | 0.232244444 |
| 113 | 2.12505 | 2.68077 | 2.67224 | 2.492686667 | 0.245091111 |
| 114 | 1.99057 | 2.60772 | 2.55232 | 2.383536667 | 0.261977778 |
| 115 | 1.87047 | 2.55289 | 2.43941 | 2.28759 | 0.27808 |
| 116 | 1.76423 | 2.51351 | 2.3304 | 2.202713333 | 0.292322222 |
| 117 | 1.67009 | 2.48405 | 2.22326 | 2.1258 | 0.303806667 |

Table 24 - Results of the storage modulus (E') for sample 1010/2 in quintuplicate

| ##Temp./>C | E' (1.000 Hz)/MPa | E' (1.000 Hz)/MPa | E' (1.000 Hz)/MPa | E' (1.000 Hz)/MPa | E' (1.000 Hz)/MPa | DE' (1.000 Hz)/MPa | Mean Deviation |
|---|---|---|---|---|---|---|---|
| 35 | 501.54592 | 487.14031 | 509.24566 | 485.07094 | 492.88396 | 495.177358 | 8.1747456 |
| 36 | 500.44752 | 485.16056 | 507.17224 | 483.13478 | 491.43784 | 493.470588 | 8.2714336 |
| 37 | 499.3686 | 483.01941 | 504.86522 | 481.23753 | 489.91754 | 491.68166 | 8.3482 |
| 38 | 497.98852 | 480.74 | 502.45585 | 479.36444 | 488.31998 | 489.773758 | 8.3587416 |
| 39 | 496.30512 | 478.35196 | 500.06951 | 477.47433 | 486.64453 | 487.76909 | 8.33458 |
| 40 | 494.46401 | 475.90718 | 497.64035 | 475.53586 | 484.90145 | 485.68977 | 8.289928 |
| 41 | 492.49638 | 473.46248 | 495.11023 | 473.55264 | 483.09656 | 483.543658 | 8.2077176 |
| 42 | 490.37306 | 471.09032 | 492.564 | 471.53361 | 481.23187 | 481.358572 | 8.0879664 |
| 43 | 488.07956 | 468.74195 | 490.05255 | 469.47782 | 479.30836 | 479.132048 | 8.0177304 |
| 44 | 485.60843 | 466.23605 | 487.49796 | 467.37218 | 477.32188 | 476.8073 | 8.002548 |
| 45 | 483.03942 | 463.57115 | 484.82975 | 465.20006 | 475.2677 | 474.381616 | 7.9968088 |
| 46 | 480.44976 | 460.88126 | 482.03564 | 462.96792 | 473.15624 | 471.898164 | 7.9788592 |
| 47 | 477.71802 | 458.20274 | 479.14555 | 460.69505 | 470.99843 | 469.351958 | 7.9224504 |
| 48 | 474.70254 | 455.50029 | 476.27341 | 458.39692 | 468.80073 | 466.734778 | 7.8289384 |
| 49 | 471.64398 | 452.7355 | 473.43778 | 456.08946 | 466.5653 | 464.094404 | 7.7455392 |
| 50 | 468.80407 | 449.86499 | 470.49099 | 453.78876 | 464.29147 | 461.448056 | 7.6969448 |
| 51 | 465.92735 | 446.88466 | 467.39827 | 451.50009 | 461.97655 | 458.737384 | 7.6360072 |
| 52 | 462.68512 | 443.80122 | 464.29961 | 449.19833 | 459.61964 | 455.920784 | 7.5368072 |
| 53 | 459.19921 | 440.6352 | 461.23165 | 446.85172 | 457.21792 | 453.02714 | 7.426944 |
| 54 | 455.66238 | 437.40694 | 458.08256 | 444.43688 | 454.76472 | 450.070696 | 7.3190288 |
| 55 | 452.08467 | 434.08752 | 454.76703 | 441.96638 | 452.25692 | 447.032504 | 7.2044432 |

(continued)

| ##Temp./>C | E' (1.000 Hz)/MPa | E' (1.000 Hz)/MPa | E' (1.000 Hz)/MPa | E' (1.000 Hz)/MPa | E' (1.000 Hz)/MPa | DE' (1.000 Hz)/MPa | Mean Deviation |
|---|---|---|---|---|---|---|---|
| 56 | 448.41719 | 430.62896 | 451.22993 | 439.45756 | 449.69139 | 443.885006 | 7.0733968 |
| 57 | 444.58608 | 427.01162 | 447.53546 | 436.91902 | 447.06115 | 440.622666 | 6.9258768 |
| 58 | 440.51293 | 423.23149 | 443.89947 | 434.34069 | 444.36378 | 437.269672 | 6.7868656 |
| 59 | 436.21005 | 419.40335 | 440.28668 | 431.70531 | 441.59691 | 433.84046 | 6.628904 |
| 60 | 431.69876 | 415.6051 | 436.40186 | 428.99709 | 438.75287 | 430.291136 | 6.3920328 |
| 61 | 427.03505 | 411.6224 | 432.10438 | 426.21657 | 435.82932 | 426.561544 | 6.1136472 |
| 62 | 422.22334 | 407.22387 | 427.38371 | 423.36271 | 432.8254 | 422.603806 | 6.3041608 |
| 63 | 417.10193 | 402.5159 | 422.3262 | 420.43039 | 429.73363 | 418.42161 | 6.890156 |
| 64 | 411.49844 | 397.61017 | 417.05065 | 417.416 | 426.54496 | 414.024044 | 7.5757912 |
| 65 | 405.41909 | 392.44246 | 411.45574 | 414.3103 | 423.24781 | 409.37508 | 8.355444 |
| 66 | 398.84735 | 386.88487 | 405.29233 | 411.10151 | 419.82168 | 404.389548 | 9.2187504 |
| 67 | 391.74263 | 380.80446 | 398.5168 | 407.78519 | 416.24943 | 399.019702 | 10.3980864 |
| 68 | 384.00224 | 374.08941 | 391.12123 | 404.34958 | 412.51959 | 393.21641 | 12.17454 |
| 69 | 375.48091 | 366.88527 | 382.94758 | 400.77571 | 408.60885 | 386.939664 | 14.2020928 |
| 70 | 366.12871 | 359.25582 | 373.72325 | 397.04339 | 404.50034 | 380.130302 | 16.5132504 |
| 71 | 356.32331 | 351.01848 | 363.47817 | 393.11491 | 400.18566 | 372.824106 | 19.0609432 |
| 72 | 345.64096 | 341.8242 | 352.25608 | 388.94707 | 395.63825 | 364.861312 | 21.9450784 |
| 73 | 331.99281 | 331.12292 | 340.03098 | 384.58273 | 390.8497 | 355.715828 | 25.6003096 |
| 74 | 314.40221 | 318.52811 | 326.50044 | 380.09592 | 385.83294 | 345.071924 | 30.3140048 |
| 75 | 294.36549 | 304.08117 | 310.79007 | 375.51268 | 380.5812 | 333.066122 | 35.9846544 |
| 76 | 272.65714 | 287.6576 | 292.20462 | 370.66826 | 375.02706 | 319.642936 | 42.5637792 |
| 77 | 248.64579 | 269.07173 | 271.40405 | 365.29386 | 369.0288 | 304.688846 | 49.9779872 |
| 78 | 222.17787 | 248.22351 | 248.97479 | 359.01892 | 362.39563 | 288.158144 | 58.0393048 |
| 79 | 195.48198 | 225.93363 | 225.47435 | 351.59791 | 354.86562 | 270.670698 | 66.0488536 |
| 80 | 170.66004 | 203.05976 | 201.51035 | 342.93276 | 346.08204 | 252.84899 | 73.326728 |
| 81 | 148.26041 | 180.66502 | 178.27756 | 332.9897 | 335.59854 | 235.158246 | 79.3086992 |
| 82 | 128.56029 | 159.71694 | 156.99111 | 321.49499 | 323.08683 | 217.970032 | 83.4567024 |
| 83 | 111.15846 | 140.31003 | 137.68657 | 307.89751 | 308.41899 | 201.094312 | 85.6511504 |
| 84 | 95.77228 | 122.46237 | 120.187 | 291.46635 | 291.2945 | 184.2365 | 85.71514 |
| 85 | 82.10466 | 106.0063 | 104.19747 | 272.28242 | 271.55825 | 167.22982 | 83.752412 |
| 86 | 70.01589 | 90.92454 | 89.56958 | 250.92622 | 249.87968 | 150.263182 | 80.1118144 |
| 87 | 59.43968 | 77.44475 | 76.4306 | 227.89185 | 226.98505 | 133.638386 | 75.0400512 |
| 88 | 50.44791 | 65.84184 | 65.04144 | 203.86626 | 203.50846 | 117.741182 | 68.7569424 |
| 89 | 42.97231 | 55.99477 | 55.22988 | 179.77952 | 180.09749 | 102.814794 | 61.6989688 |
| 90 | 36.93199 | 47.80202 | 46.90698 | 156.56325 | 157.43966 | 89.12878 | 54.29814 |
| 91 | 31.97586 | 40.91486 | 40.03627 | 134.8978 | 136.15628 | 76.796214 | 46.9846608 |
| 92 | 27.88277 | 35.13979 | 34.56257 | 115.00201 | 116.49047 | 65.815522 | 39.9445744 |
| 93 | 24.49116 | 30.38065 | 30.104 | 97.17157 | 98.71031 | 56.171538 | 33.4155216 |
| 94 | 21.66156 | 26.49885 | 26.39391 | 81.68828 | 83.1613 | 47.88078 | 27.635208 |

(continued)

| ##Temp./>C | E' (1.000 Hz)/MPa | E' (1.000 Hz)/MPa | E' (1.000 Hz)/MPa | E' (1.000 Hz)/MPa | E' (1.000 Hz)/MPa | DE' (1.000 Hz)/MPa | Mean Deviation |
|---|---|---|---|---|---|---|---|
| 95 | 19.20416 | 23.1959 | 23.28254 | 68.39408 | 69.78834 | 40.773004 | 22.6545648 |
| 96 | 17.02788 | 20.33618 | 20.68889 | 57.15952 | 58.47055 | 34.736604 | 18.4627448 |
| 97 | 15.13032 | 17.93076 | 18.48052 | 47.95115 | 49.19331 | 29.737212 | 15.0680144 |
| 98 | 13.49645 | 15.92092 | 16.56317 | 40.47605 | 41.65878 | 25.623074 | 12.3554728 |
| 99 | 12.07799 | 14.18013 | 14.88104 | 34.42133 | 35.50176 | 22.21245 | 10.199276 |
| 100 | 10.83745 | 12.64673 | 13.40404 | 29.58615 | 30.48702 | 19.392278 | 8.5154456 |
| 101 | 9.72516 | 11.30351 | 12.10967 | 25.74019 | 26.40678 | 17.057062 | 7.2131384 |
| 102 | 8.74333 | 10.13988 | 10.99081 | 22.64164 | 23.05407 | 15.113946 | 6.1871272 |
| 103 | 7.93727 | 9.15623 | 10.01136 | 20.11152 | 20.26896 | 13.497068 | 5.3545376 |
| 104 | 7.27916 | 8.32627 | 9.13132 | 18.0175 | 17.92717 | 12.136284 | 4.6688408 |
| 105 | 6.70784 | 7.62371 | 8.34536 | 16.25229 | 15.92904 | 10.971648 | 4.0952136 |
| 106 | 6.20078 | 7.02484 | 7.66887 | 14.73432 | 14.20651 | 9.967064 | 3.6026808 |
| 107 | 5.7567 | 6.51675 | 7.08502 | 13.40788 | 12.71129 | 9.095528 | 3.1712456 |
| 108 | 5.37616 | 6.08172 | 6.55613 | 12.23658 | 11.40242 | 8.330602 | 2.7911184 |
| 109 | 5.06309 | 5.70334 | 6.08026 | 11.19768 | 10.25431 | 7.659736 | 2.4530072 |
| 110 | 4.80509 | 5.36198 | 5.6902 | 10.27618 | 9.25135 | 7.07696 | 2.149444 |
| 111 | 4.58855 | 5.0514 | 5.38365 | 9.45814 | 8.3762 | 6.571588 | 1.8764656 |
| 112 | 4.3922 | 4.78839 | 5.10697 | 8.737 | 7.61841 | 6.128594 | 1.6392888 |
| 113 | 4.20599 | 4.57693 | 4.83765 | 8.10904 | 6.97038 | 5.739998 | 1.4397696 |
| 114 | 4.04912 | 4.38527 | 4.6031 | 7.56336 | 6.41224 | 5.402618 | 1.2681456 |
| 115 | 3.92974 | 4.20499 | 4.41967 | 7.09276 | 5.92763 | 5.114958 | 1.1161896 |
| 116 | 3.81859 | 4.05687 | 4.26404 | 6.69234 | 5.50646 | 4.86766 | 0.985392 |
| 117 | 3.70401 | 3.93963 | 4.11945 | 6.3484 | 5.13764 | 4.649826 | 0.8745552 |

**Table 25** - Results of the storage modulus (E') for sample 1020/3 in triplicate

| ##Temp./>C | E' (1.000 Hz)/MPa | E' (1.000 Hz)/MPa | E' (1.000 Hz)/MPa | DE' (1.000 Hz)/MPa | Mean Deviation |
|---|---|---|---|---|---|
| 35 | 383.09746 | 328.23402 | 480.60944 | 397.31364 | 55.53053333 |
| 36 | 382.75595 | 327.30852 | 479.04452 | 396.3696633 | 55.11657111 |
| 37 | 382.3248 | 326.31857 | 477.39711 | 395.3468267 | 54.70018889 |
| 38 | 381.80641 | 325.28461 | 475.6715 | 394.2541733 | 54.27821778 |
| 39 | 381.20761 | 324.2235 | 473.87142 | 393.1008433 | 53.84705111 |
| 40 | 380.5306 | 323.13595 | 472.0035 | 391.8900167 | 53.40898889 |
| 41 | 379.77949 | 322.01212 | 470.06985 | 390.6204867 | 52.96624222 |
| 42 | 378.95596 | 320.84123 | 468.07526 | 389.2908167 | 52.52296222 |
| 43 | 378.05542 | 319.6308 | 466.0263 | 387.9041733 | 52.08141778 |
| 44 | 377.07701 | 318.39507 | 463.92401 | 386.4653633 | 51.63909778 |
| 45 | 376.0281 | 317.14314 | 461.77196 | 384.9810667 | 51.19392889 |
| 46 | 374.91163 | 315.87326 | 459.58096 | 383.4552833 | 50.75045111 |

(continued)

| ##Temp./>C | E' (1.000 Hz)/MPa | E' (1.000 Hz)/MPa | E' (1.000 Hz)/MPa | DE' (1.000 Hz)/MPa | Mean Deviation |
|---|---|---|---|---|---|
| 47 | 373.72677 | 314.57949 | 457.35973 | 381.8886633 | 50.31404444 |
| 48 | 372.47785 | 313.2574 | 455.11059 | 380.2819467 | 49.88576222 |
| 49 | 371.16922 | 311.91259 | 452.82637 | 378.63606 | 49.46020667 |
| 50 | 369.80141 | 310.55131 | 450.49568 | 376.9494667 | 49.03080889 |
| 51 | 368.37362 | 309.17767 | 448.10711 | 375.2194667 | 48.59176222 |
| 52 | 366.88567 | 307.79229 | 445.65751 | 373.4451567 | 48.14156889 |
| 53 | 365.33359 | 306.39379 | 443.14148 | 371.6229533 | 47.67901778 |
| 54 | 363.7105 | 304.98254 | 440.55103 | 369.7480233 | 47.20200444 |
| 55 | 362.01746 | 303.57164 | 437.88808 | 367.8257267 | 46.70823556 |
| 56 | 360.25806 | 302.17854 | 435.1543 | 365.8636333 | 46.19377778 |
| 57 | 358.4315 | 300.81518 | 432.34735 | 363.8646767 | 45.65511556 |
| 58 | 356.53434 | 299.46818 | 429.47802 | 361.8268467 | 45.10078222 |
| 59 | 354.56656 | 298.11839 | 426.5627 | 359.7492167 | 44.54232222 |
| 60 | 352.52577 | 296.74323 | 423.61341 | 357.62747 | 43.99062667 |
| 61 | 350.40518 | 295.2999 | 420.63067 | 355.44525 | 43.45694667 |
| 62 | 348.20255 | 293.73303 | 417.60581 | 353.1804633 | 42.95023111 |
| 63 | 345.92343 | 291.99584 | 414.52607 | 350.8151133 | 42.47397111 |
| 64 | 343.56951 | 290.08973 | 411.37057 | 348.34327 | 42.0182 |
| 65 | 341.13815 | 288.01329 | 408.10826 | 345.7532333 | 41.57001778 |
| 66 | 338.62525 | 285.75879 | 404.69988 | 343.0279733 | 41.11460444 |
| 67 | 336.02233 | 283.34197 | 401.12155 | 340.16195 | 40.63973333 |
| 68 | 333.31482 | 280.7735 | 397.36143 | 337.1499167 | 40.14100889 |
| 69 | 330.48687 | 278.05147 | 393.39312 | 333.9771533 | 39.61064444 |
| 70 | 327.52451 | 275.16409 | 389.18941 | 330.6260033 | 39.04227111 |
| 71 | 324.40462 | 272.08425 | 384.72135 | 327.0700733 | 38.43418444 |
| 72 | 321.09781 | 268.77916 | 379.93769 | 323.2715533 | 37.77742444 |
| 73 | 317.59307 | 265.25543 | 374.80212 | 319.2168733 | 37.05683111 |
| 74 | 313.87696 | 261.51823 | 369.30913 | 314.90144 | 36.27179333 |
| 75 | 309.92119 | 257.56025 | 363.42932 | 310.3035867 | 35.41715556 |
| 76 | 305.70005 | 253.38021 | 357.11819 | 305.3994833 | 34.67951556 |
| 77 | 301.19001 | 248.9627 | 350.32083 | 300.1578467 | 34.13009778 |
| 78 | 296.34642 | 244.26418 | 342.93936 | 294.5166533 | 33.50164889 |
| 79 | 291.10854 | 239.17825 | 334.83938 | 288.37539 | 32.79809333 |
| 80 | 285.41281 | 233.54482 | 325.87772 | 281.6117833 | 32.04464222 |
| 81 | 279.16491 | 227.16173 | 315.85408 | 274.06024 | 31.26567333 |
| 82 | 272.23673 | 219.79664 | 304.52211 | 265.5184933 | 30.48123556 |
| 83 | 264.47615 | 211.13081 | 291.71916 | 255.7753733 | 29.76304222 |
| 84 | 255.65715 | 200.89622 | 277.22735 | 244.5935733 | 29.13156889 |
| 85 | 245.47048 | 189.18067 | 260.72751 | 231.7928867 | 28.40814444 |

(continued)

| ##Temp./>C | E' (1.000 Hz)/MPa | E' (1.000 Hz)/MPa | E' (1.000 Hz)/MPa | DE' (1.000 Hz)/MPa | Mean Deviation |
|---|---|---|---|---|---|
| 86 | 233.79124 | 176.01316 | 242.37185 | 217.3920833 | 27.58594889 |
| 87 | 220.59944 | 161.48911 | 222.64481 | 201.5777867 | 26.72578444 |
| 88 | 205.78113 | 146.16368 | 201.94171 | 184.62884 | 25.64344 |
| 89 | 189.47363 | 130.63423 | 180.73695 | 166.94827 | 24.20936 |
| 90 | 172.19249 | 115.39203 | 159.67634 | 149.0869533 | 22.46328222 |
| 91 | 154.42343 | 100.73623 | 139.43099 | 131.5302167 | 20.52932444 |
| 92 | 136.60697 | 86.99188 | 120.50662 | 114.7018233 | 18.47329556 |
| 93 | 119.1932 | 74.46063 | 103.06587 | 98.90656667 | 16.29729111 |
| 94 | 102.68681 | 63.2006 | 87.34674 | 84.41138333 | 14.14052222 |
| 95 | 87.56418 | 53.30926 | 73.5969 | 71.49011333 | 12.12056889 |
| 96 | 73.94371 | 44.887 | 61.71145 | 60.18072 | 10.19581333 |
| 97 | 61.93214 | 37.77509 | 51.60719 | 50.43814 | 8.442033333 |
| 98 | 51.70656 | 31.85163 | 43.28429 | 42.28082667 | 6.952797778 |
| 99 | 43.13356 | 27.02876 | 36.50431 | 35.55554333 | 5.684522222 |
| 100 | 35.99485 | 23.09202 | 30.99317 | 30.02668 | 4.623106667 |
| 101 | 30.17537 | 19.87785 | 26.5741 | 25.54244 | 3.776393333 |
| 102 | 25.52172 | 17.27142 | 23.04287 | 21.94533667 | 3.115944444 |
| 103 | 21.78642 | 15.1378 | 20.18782 | 19.03734667 | 2.599697778 |
| 104 | 18.77683 | 13.37141 | 17.85494 | 16.66772667 | 2.197544444 |
| 105 | 16.35081 | 11.89412 | 15.92642 | 14.72378333 | 1.886442222 |
| 106 | 14.37622 | 10.63758 | 14.3052 | 13.10633333 | 1.645835556 |
| 107 | 12.74238 | 9.55274 | 12.91962 | 11.73824667 | 1.457004444 |
| 108 | 11.36596 | 8.60534 | 11.71911 | 10.56347 | 1.30542 |
| 109 | 10.18743 | 7.76898 | 10.66649 | 9.540966667 | 1.181324444 |
| 110 | 9.16258 | 7.02827 | 9.73642 | 8.642423333 | 1.076102222 |
| 111 | 8.2598 | 6.37172 | 8.91224 | 7.84792 | 0.984133333 |
| 112 | 7.45763 | 5.78769 | 8.18043 | 7.141916667 | 0.902817778 |
| 113 | 6.74124 | 5.27023 | 7.5341 | 6.51519 | 0.829973333 |
| 114 | 6.10191 | 4.81172 | 6.96849 | 5.960706667 | 0.765991111 |
| 115 | 5.53335 | 4.40398 | 6.47213 | 5.46982 | 0.71056 |
| 116 | 5.02785 | 4.0436 | 6.03742 | 5.03629 | 0.66742 |
| 117 | 4.58181 | 3.72551 | 5.66066 | 4.655993333 | 0.669777778 |

**Table 26** - Results of the storage modulus (E') for sample 1020/2 in quadruplicate

| ##Temp./>C | E' (1.000 Hz)/MPa | E' (1.000 Hz)/MPa | E' (1.000 Hz)/MPa | E' (1.000 Hz)/MPa | DE' (1.000 Hz)/MPa | Mean Deviation |
|---|---|---|---|---|---|---|
| 35 | 735.39139 | 397.596 | 513.09004 | 504.12764 | 537.5512675 | 98.92006125 |
| 36 | 732.39802 | 396.35868 | 511.39117 | 502.36095 | 535.627205 | 98.3854075 |
| 37 | 729.3855 | 395.04298 | 509.57014 | 500.7355 | 533.68353 | 97.850985 |

(continued)

| ##Temp./>C | E' (1.000 Hz)/MPa | E' (1.000 Hz)/MPa | E' (1.000 Hz)/MPa | E' (1.000 Hz)/MPa | DE' (1.000 Hz)/MPa | Mean Deviation |
|---|---|---|---|---|---|---|
| 38 | 726.38653 | 393.64023 | 507.63654 | 499.41407 | 531.7693425 | 97.30859375 |
| 39 | 723.37846 | 392.14923 | 505.59095 | 498.14451 | 529.8157875 | 96.78133625 |
| 40 | 720.29879 | 390.5769 | 503.4222 | 496.66386 | 527.7404375 | 96.27917625 |
| 41 | 717.10948 | 388.94761 | 501.15918 | 494.94927 | 525.541385 | 95.7840475 |
| 42 | 713.78279 | 387.29481 | 498.83724 | 492.98609 | 523.2252325 | 95.27877875 |
| 43 | 710.30895 | 385.60966 | 496.47804 | 490.78938 | 520.7965075 | 94.75622125 |
| 44 | 706.68567 | 383.85395 | 494.09484 | 488.37607 | 518.2526325 | 94.21651875 |
| 45 | 702.93322 | 382.02779 | 491.69925 | 485.86459 | 515.6312125 | 93.65100375 |
| 46 | 699.08072 | 380.15985 | 489.2927 | 483.35871 | 512.972995 | 93.0538625 |
| 47 | 695.12998 | 378.25346 | 486.83127 | 480.75553 | 510.24256 | 92.44371 |
| 48 | 691.05933 | 376.2939 | 484.25726 | 477.90674 | 507.3793075 | 91.84001125 |
| 49 | 686.87177 | 374.2893 | 481.59508 | 474.87608 | 504.4080575 | 91.23185625 |
| 50 | 682.58879 | 372.26001 | 478.89879 | 471.79316 | 501.3851875 | 90.60180125 |
| 51 | 678.20634 | 370.19411 | 476.16359 | 468.66549 | 498.3073825 | 89.94947875 |
| 52 | 673.69425 | 368.06091 | 473.35057 | 465.44397 | 495.137425 | 89.2784125 |
| 53 | 669.02496 | 365.8623 | 470.44584 | 462.12362 | 491.86418 | 88.58039 |
| 54 | 664.16168 | 363.61026 | 467.45174 | 458.70631 | 488.4824975 | 87.83959125 |
| 55 | 659.06235 | 361.31975 | 464.3728 | 455.14955 | 484.9761125 | 87.04311875 |
| 56 | 653.66229 | 358.99943 | 461.21644 | 451.39029 | 481.3171125 | 86.17258875 |
| 57 | 647.96135 | 356.62163 | 457.98093 | 447.46008 | 477.5059975 | 85.22767625 |
| 58 | 641.98223 | 354.13995 | 454.65319 | 443.40582 | 473.5452975 | 84.21846625 |
| 59 | 635.72 | 351.53836 | 451.21517 | 439.20057 | 469.418525 | 83.1507375 |
| 60 | 629.13295 | 348.8031 | 447.6416 | 434.78401 | 465.090415 | 82.0212675 |
| 61 | 622.21257 | 345.90945 | 443.89689 | 430.18931 | 460.552055 | 80.8302575 |
| 62 | 614.94381 | 342.82298 | 439.92294 | 425.44939 | 455.78478 | 79.579515 |
| 63 | 607.36232 | 339.58997 | 435.69616 | 420.47073 | 450.779795 | 78.2912625 |
| 64 | 599.50153 | 336.24942 | 431.2416 | 415.11491 | 445.526865 | 76.9873325 |
| 65 | 591.37648 | 332.72336 | 426.53571 | 409.33772 | 439.9933175 | 75.69158125 |
| 66 | 582.98308 | 328.90071 | 421.48901 | 403.113 | 434.12145 | 74.430815 |
| 67 | 574.46365 | 324.79528 | 416.06825 | 396.6629 | 427.99752 | 73.233065 |
| 68 | 566.0112 | 320.42783 | 410.2747 | 390.19218 | 421.7264775 | 72.14236125 |
| 69 | 557.63119 | 315.783 | 404.05942 | 383.54148 | 415.2537725 | 71.18870875 |
| 70 | 549.26406 | 310.82458 | 397.30386 | 376.50425 | 408.4741875 | 70.39493625 |
| 71 | 540.8985 | 305.59017 | 390.02627 | 369.11575 | 401.4076725 | 69.74541375 |
| 72 | 532.51956 | 300.08701 | 382.31453 | 361.44453 | 394.0914075 | 69.21407625 |
| 73 | 523.94963 | 294.24606 | 374.16148 | 353.59193 | 386.487275 | 68.7311775 |
| 74 | 514.92666 | 287.96541 | 365.47759 | 345.53635 | 378.4765025 | 68.22507875 |
| 75 | 505.27724 | 281.18299 | 356.2515 | 337.00286 | 369.9286475 | 67.67429625 |
| 76 | 494.78384 | 273.74949 | 346.42362 | 327.58193 | 360.63472 | 67.07456 |

(continued)

| ##Temp./>C | E' (1.000 Hz)/MPa | E' (1.000 Hz)/MPa | E' (1.000 Hz)/MPa | E' (1.000 Hz)/MPa | DE' (1.000 Hz)/MPa | Mean Deviation |
|---|---|---|---|---|---|---|
| 77 | 482.99871 | 265.32085 | 335.75294 | 316.53679 | 350.1523225 | 66.42319375 |
| 78 | 469.25251 | 255.53737 | 323.95797 | 302.88183 | 337.90742 | 65.672545 |
| 79 | 453.30559 | 244.26901 | 311.04184 | 285.53562 | 323.538015 | 64.8837875 |
| 80 | 434.978 | 231.41954 | 296.89069 | 264.63016 | 306.9795975 | 63.99920125 |
| 81 | 414.05794 | 216.97977 | 281.03658 | 241.78533 | 288.464905 | 62.7965175 |
| 82 | 390.13595 | 200.97662 | 263.05796 | 218.20448 | 268.0937525 | 61.02109875 |
| 83 | 363.78595 | 183.97492 | 243.75475 | 194.89727 | 246.6032225 | 58.59136375 |
| 84 | 335.6724 | 166.42871 | 223.75475 | 172.43869 | 224.5736375 | 55.54938125 |
| 85 | 306.46962 | 148.56157 | 202.91377 | 151.15571 | 202.2751675 | 52.4165275 |
| 86 | 276.74847 | 130.75879 | 181.33723 | 131.09454 | 179.9847575 | 49.0580925 |
| 87 | 247.18507 | 114.21179 | 160.3032 | 112.1884 | 158.472115 | 45.27202 |
| 88 | 218.40041 | 99.64463 | 140.63022 | 94.73743 | 138.3531725 | 41.1621425 |
| 89 | 190.99802 | 86.48775 | 122.29526 | 79.37778 | 119.7897025 | 36.8569375 |
| 90 | 165.48644 | 74.40786 | 105.3688 | 66.23501 | 102.8745275 | 32.5530925 |
| 91 | 142.29018 | 63.31776 | 89.99215 | 55.14921 | 87.687325 | 28.45384 |
| 92 | 121.71487 | 53.358 | 76.32314 | 46.0242 | 74.3550525 | 24.6639525 |
| 93 | 103.95374 | 44.84467 | 64.44755 | 38.70774 | 62.988425 | 21.21222 |
| 94 | 88.95181 | 37.78842 | 54.34355 | 32.91285 | 53.4991575 | 18.1485225 |
| 95 | 76.51501 | 31.789 | 45.80251 | 28.2368 | 45.58583 | 15.57293 |
| 96 | 66.31491 | 26.68806 | 38.69912 | 24.44186 | 39.0359875 | 13.63946125 |
| 97 | 57.96528 | 22.42998 | 32.85022 | 21.32637 | 33.6429625 | 12.16115875 |
| 98 | 51.1174 | 19.00259 | 28.09387 | 18.74705 | 29.2402275 | 10.93858625 |
| 99 | 45.43507 | 16.32828 | 24.17924 | 16.56362 | 25.6265525 | 9.90425875 |
| 100 | 40.64339 | 14.24109 | 20.98328 | 14.70041 | 22.6420425 | 9.00067375 |
| 101 | 36.5157 | 12.50059 | 18.41684 | 13.11765 | 20.137695 | 8.1890025 |
| 102 | 32.90599 | 11.00243 | 16.36868 | 11.79032 | 18.016855 | 7.4445675 |
| 103 | 29.71991 | 9.74167 | 14.66481 | 10.65294 | 16.1948325 | 6.76253875 |
| 104 | 26.9042 | 8.70014 | 13.21241 | 9.6666 | 14.6208375 | 6.14168125 |
| 105 | 24.43094 | 7.82142 | 11.97081 | 8.82713 | 13.262575 | 5.5841825 |
| 106 | 22.23284 | 7.07277 | 10.91411 | 8.13562 | 12.088835 | 5.0720025 |
| 107 | 20.24144 | 6.43027 | 10.00552 | 7.54443 | 11.055415 | 4.5930125 |
| 108 | 18.42953 | 5.88309 | 9.22369 | 7.01528 | 10.1378975 | 4.14581625 |
| 109 | 16.7916 | 5.41655 | 8.54386 | 6.55153 | 9.325885 | 3.7328575 |
| 110 | 15.32413 | 5.02145 | 7.9505 | 6.1708 | 8.61672 | 3.353705 |
| 111 | 14.02424 | 4.68422 | 7.42675 | 5.86239 | 7.9994 | 3.01242 |
| 112 | 12.87605 | 4.3944 | 6.96409 | 5.61057 | 7.4612775 | 2.70738625 |
| 113 | 11.85497 | 4.13778 | 6.55897 | 5.39285 | 6.9861425 | 2.43441375 |
| 114 | 10.94424 | 3.90637 | 6.20886 | 5.18709 | 6.56164 | 2.1913 |
| 115 | 10.12587 | 3.69968 | 5.90264 | 5.00016 | 6.1820875 | 1.97189125 |

(continued)

| ##Temp./>C | E' (1.000 Hz)/MPa | E' (1.000 Hz)/MPa | E' (1.000 Hz)/MPa | E' (1.000 Hz)/MPa | DE' (1.000 Hz)/MPa | Mean Deviation |
|---|---|---|---|---|---|---|
| 116 | 9.39173 | 3.5186 | 5.63321 | 4.85632 | 5.849965 | 1.7708825 |
| 117 | 8.73844 | 3.36008 | 5.39333 | 4.74684 | 5.5596725 | 1.58938375 |

## Example 10 - Analysis of tangent delta (tan d)

Samples described in example 8 were analyzed in DMTA (Dynamic Mechanical Thermal Analysis) in triplicate and the results of the storage modulus (E') are shown below in Tables 27-35:

**Table 27** - Results da tangent delta (tan d) for sample 1020/1 in triplicate:

| ##Temp./>C | tan d (1.000 Hz) | tan d (1.000 Hz) | tan d (1.000 Hz) | DE' (1.000 Hz)/MPa | Mean Deviation |
|---|---|---|---|---|---|
| 35 | 3.47E-02 | 3.29E-02 | 3.80E-02 | | 0.001875207 |
| 36 | 3.47E-02 | 3.29E-02 | 3.79E-02 | 0.03516686 | 0.00185278 |
| 37 | 3.46E-02 | 3.29E-02 | 3.79E-02 | 0.03513004 | 0.001833707 |
| 38 | 3.46E-02 | 3.29E-02 | 3.78E-02 | 0.035102807 | 0.001818562 |
| 39 | 3.45E-02 | 3.29E-02 | 3.78E-02 | 0.03508427 | 0.001807947 |
| 40 | 3.45E-02 | 3.29E-02 | 3.78E-02 | 0.035074657 | 0.001802529 |
| 41 | 3.45E-02 | 3.30E-02 | 3.78E-02 | 0.035074937 | 0.001801429 |
| 42 | 3.45E-02 | 3.30E-02 | 3.78E-02 | 0.0350873 | 0.001803607 |
| 43 | 3.45E-02 | 3.30E-02 | 3.78E-02 | 0.03511356 | 0.001807447 |
| 44 | 3.45E-02 | 3.31E-02 | 3.79E-02 | 0.035156763 | 0.001810911 |
| 45 | 3.46E-02 | 3.32E-02 | 3.79E-02 | 0.03521879 | 0.00181352 |
| 46 | 3.46E-02 | 3.33E-02 | 3.80E-02 | 0.035302123 | 0.001816178 |
| 47 | 3.47E-02 | 3.34E-02 | 3.81E-02 | 0.035407773 | 0.001818944 |
| 48 | 3.48E-02 | 3.35E-02 | 3.83E-02 | 0.035536933 | 0.001820858 |
| 49 | 3.49E-02 | 3.37E-02 | 3.84E-02 | 0.03569178 | 0.001820587 |
| 50 | 3.51E-02 | 3.39E-02 | 3.86E-02 | 0.035874497 | 0.001818709 |
| 51 | 3.53E-02 | 3.42E-02 | 3.88E-02 | 0.03608455 | 0.001815207 |
| 52 | 3.55E-02 | 3.45E-02 | 3.90E-02 | 0.036320833 | 0.001809591 |
| 53 | 3.57E-02 | 3.47E-02 | 3.93E-02 | 0.03658352 | 0.001800827 |
| 54 | 3.60E-02 | 3.50E-02 | 3.96E-02 | 0.03687522 | 0.00178734 |
| 55 | 3.64E-02 | 3.54E-02 | 3.99E-02 | 0.037199413 | 0.001767858 |
| 56 | 3.68E-02 | 3.57E-02 | 4.02E-02 | 0.037560657 | 0.001742022 |
| 57 | 3.72E-02 | 3.62E-02 | 4.05E-02 | 0.037962897 | 0.001709469 |
| 58 | 3.77E-02 | 3.66E-02 | 4.09E-02 | 0.038408117 | 0.001671909 |
| 59 | 3.82E-02 | 3.72E-02 | 4.13E-02 | 0.03890459 | 0.001627747 |
| 60 | 3.88E-02 | 3.78E-02 | 4.18E-02 | 0.03947115 | 0.001571633 |
| 61 | 3.95E-02 | 3.85E-02 | 4.24E-02 | 0.04012843 | 0.001505367 |
| 62 | 4.02E-02 | 3.94E-02 | 4.31E-02 | 0.040894123 | 0.001445991 |
| 63 | 4.11E-02 | 4.04E-02 | 4.39E-02 | 0.04179799 | 0.00139726 |
| 64 | 4.21E-02 | 4.16E-02 | 4.49E-02 | 0.042896567 | 0.001342909 |

(continued)

| ##Temp./>C | tan d (1.000 Hz) | tan d (1.000 Hz) | tan d (1.000 Hz) | DE' (1.000 Hz)/MPa | Mean Deviation |
|---|---|---|---|---|---|
| 65 | 4.35E-02 | 4.31E-02 | 4.62E-02 | 0.044259943 | 0.001277524 |
| 66 | 4.51E-02 | 4.50E-02 | 4.78E-02 | 0.045971297 | 0.001228536 |
| 67 | 4.70E-02 | 4.75E-02 | 4.99E-02 | 0.048125073 | 0.001206838 |
| 68 | 4.94E-02 | 5.04E-02 | 5.27E-02 | 0.050818007 | 0.001234289 |
| 69 | 5.25E-02 | 5.38E-02 | 5.62E-02 | 0.054177717 | 0.001328702 |
| 70 | 5.65E-02 | 5.81E-02 | 6.07E-02 | 0.058436197 | 0.001503402 |
| 71 | 6.16E-02 | 6.34E-02 | 6.65E-02 | 0.06383193 | 0.001759467 |
| 72 | 6.81E-02 | 7.00E-02 | 7.38E-02 | 0.070659203 | 0.002120224 |
| 73 | 7.63E-02 | 7.83E-02 | 8.29E-02 | 0.079163697 | 0.002517376 |
| 74 | 8.64E-02 | 8.83E-02 | 9.40E-02 | 0.08955242 | 0.002952953 |
| 75 | 9.86E-02 | 0.10023 | 0.10736 | 0.102073157 | 0.003524562 |
| 76 | 0.11325 | 0.11456 | 0.12371 | 0.117173333 | 0.004357778 |
| 77 | 0.13081 | 0.1315 | 0.1434 | 0.135236667 | 0.005442222 |
| 78 | 0.1517 | 0.15128 | 0.1668 | 0.156593333 | 0.006804444 |
| 79 | 0.17574 | 0.17412 | 0.19353 | 0.18113 | 0.008266667 |
| 80 | 0.20296 | 0.20051 | 0.22339 | 0.208953333 | 0.009624444 |
| 81 | 0.23394 | 0.23005 | 0.25689 | 0.240293333 | 0.011064444 |
| 82 | 0.26841 | 0.26194 | 0.29461 | 0.274986667 | 0.013082222 |
| 83 | 0.30508 | 0.29641 | 0.33517 | 0.31222 | 0.0153 |
| 84 | 0.343 | 0.33431 | 0.37722 | 0.35151 | 0.01714 |
| 85 | 0.38147 | 0.37331 | 0.42011 | 0.39163 | 0.018986667 |
| 86 | 0.42002 | 0.41046 | 0.46301 | 0.431163333 | 0.021231111 |
| 87 | 0.45799 | 0.44626 | 0.50385 | 0.469366667 | 0.022988889 |
| 88 | 0.49333 | 0.48155 | 0.54076 | 0.505213333 | 0.023697778 |
| 89 | 0.52374 | 0.51462 | 0.57289 | 0.537083333 | 0.023871111 |
| 90 | 0.54863 | 0.5426 | 0.59913 | 0.563453333 | 0.023784444 |
| 91 | 0.56764 | 0.56512 | 0.61888 | 0.58388 | 0.023333333 |
| 92 | 0.58133 | 0.5821 | 0.63144 | 0.59829 | 0.0221 |
| 93 | 0.58941 | 0.59332 | 0.63731 | 0.60668 | 0.02042 |
| 94 | 0.59189 | 0.5986 | 0.63635 | 0.608946667 | 0.018268889 |
| 95 | 0.58914 | 0.59842 | 0.62925 | 0.605603333 | 0.015764444 |
| 96 | 0.58218 | 0.59338 | 0.617 | 0.59752 | 0.012986667 |
| 97 | 0.57175 | 0.58407 | 0.60094 | 0.585586667 | 0.010235556 |
| 98 | 0.55847 | 0.57113 | 0.58196 | 0.57052 | 0.008033333 |
| 99 | 0.54308 | 0.55507 | 0.56076 | 0.55297 | 0.006593333 |
| 100 | 0.52662 | 0.53656 | 0.53784 | 0.533673333 | 0.004702222 |
| 101 | 0.50935 | 0.51603 | 0.51355 | 0.512976667 | 0.002417778 |
| 102 | 0.49093 | 0.49375 | 0.48816 | 0.490946667 | 0.001868889 |
| 103 | 0.47159 | 0.47028 | 0.46231 | 0.46806 | 0.003833333 |

(continued)

| ##Temp./>C | tan d (1.000 Hz) | tan d (1.000 Hz) | tan d (1.000 Hz) | DE' (1.000 Hz)/MPa | Mean Deviation |
|---|---|---|---|---|---|
| 104 | 0.45203 | 0.44687 | 0.43704 | 0.445313333 | 0.005515556 |
| 105 | 0.43258 | 0.42405 | 0.41268 | 0.423103333 | 0.006948889 |
| 106 | 0.41338 | 0.40149 | 0.38903 | 0.4013 | 0.00818 |
| 107 | 0.39462 | 0.379 | 0.366 | 0.379873333 | 0.009831111 |
| 108 | 0.37642 | 0.35658 | 0.34352 | 0.35884 | 0.01172 |
| 109 | 0.3583 | 0.33439 | 0.32173 | 0.33814 | 0.01344 |
| 110 | 0.34004 | 0.31288 | 0.30095 | 0.317956667 | 0.014722222 |
| 111 | 0.32256 | 0.2925 | 0.28143 | 0.29883 | 0.01582 |
| 112 | 0.30632 | 0.27351 | 0.2633 | 0.281043333 | 0.016851111 |
| 113 | 0.29083 | 0.25604 | 0.24656 | 0.264476667 | 0.017568889 |
| 114 | 0.27589 | 0.23975 | 0.23093 | 0.248856667 | 0.018022222 |
| 115 | 0.2617 | 0.22453 | 0.21626 | 0.234163333 | 0.018357778 |
| 116 | 0.24846 | 0.2106 | 0.20229 | 0.22045 | 0.018673333 |
| 117 | 0.23638 | 0.1982 | 0.18906 | 0.20788 | 0.019 |

**Table 28** - Results da tangent delta (tan d) for sample 1010/1 in quintuplicate:

| ##Temp./>C | tan d (1.000 Hz) | tan d (1.000 Hz) | tan d (1.000 Hz) | tan d (1.000 Hz) | tan d (1.000 Hz) | DE' (1.000 Hz)/MPa | Mean Deviation |
|---|---|---|---|---|---|---|---|
| 35 | 3.02E-02 | 3.35E-02 | 3.58E-02 | 3.55E-02 | 3.40E-02 | 3.38E-02 | 0.001564062 |
| 36 | 3.02E-02 | 3.35E-02 | 3.58E-02 | 3.54E-02 | 3.39E-02 | 3.38E-02 | 0.001531928 |
| 37 | 3.02E-02 | 3.35E-02 | 3.58E-02 | 3.53E-02 | 3.39E-02 | 3.37E-02 | 0.001498739 |
| 38 | 3.03E-02 | 3.35E-02 | 3.58E-02 | 3.52E-02 | 3.38E-02 | 3.37E-02 | 0.001468582 |
| 39 | 3.03E-02 | 3.35E-02 | 3.58E-02 | 3.51E-02 | 3.37E-02 | 3.37E-02 | 0.001445034 |
| 40 | 3.03E-02 | 3.36E-02 | 3.59E-02 | 3.51E-02 | 3.37E-02 | 3.37E-02 | 0.001428135 |
| 41 | 3.03E-02 | 3.36E-02 | 3.59E-02 | 3.51E-02 | 3.37E-02 | 3.37E-02 | 0.001418234 |
| 42 | 3.04E-02 | 3.37E-02 | 3.60E-02 | 3.51E-02 | 3.38E-02 | 3.38E-02 | 0.00142045 |
| 43 | 3.04E-02 | 3.37E-02 | 3.60E-02 | 3.52E-02 | 3.38E-02 | 3.38E-02 | 0.00142773 |
| 44 | 3.05E-02 | 3.38E-02 | 3.61E-02 | 3.53E-02 | 3.38E-02 | 3.39E-02 | 0.001439753 |
| 45 | 3.05E-02 | 3.39E-02 | 3.62E-02 | 3.54E-02 | 3.39E-02 | 3.40E-02 | 0.001455514 |
| 46 | 3.06E-02 | 3.40E-02 | 3.63E-02 | 3.56E-02 | 3.40E-02 | 3.41E-02 | 0.001474693 |
| 47 | 3.07E-02 | 3.42E-02 | 3.64E-02 | 3.58E-02 | 3.40E-02 | 3.42E-02 | 0.001497088 |
| 48 | 3.08E-02 | 3.43E-02 | 3.65E-02 | 3.60E-02 | 3.41E-02 | 3.44E-02 | 0.001524678 |
| 49 | 3.09E-02 | 3.45E-02 | 3.67E-02 | 3.62E-02 | 3.42E-02 | 3.45E-02 | 0.001558417 |
| 50 | 3.11E-02 | 3.47E-02 | 3.69E-02 | 3.65E-02 | 3.43E-02 | 3.47E-02 | 0.001597101 |
| 51 | 3.13E-02 | 3.49E-02 | 3.72E-02 | 3.68E-02 | 3.45E-02 | 3.49E-02 | 0.001639545 |
| 52 | 3.15E-02 | 3.51E-02 | 3.74E-02 | 3.71E-02 | 3.46E-02 | 3.51E-02 | 0.00168708 |
| 53 | 3.17E-02 | 3.54E-02 | 3.78E-02 | 3.74E-02 | 3.48E-02 | 3.54E-02 | 0.001740553 |
| 54 | 3.20E-02 | 3.57E-02 | 3.82E-02 | 3.78E-02 | 3.50E-02 | 3.57E-02 | 0.001794458 |
| 55 | 3.23E-02 | 3.60E-02 | 3.85E-02 | 3.82E-02 | 3.52E-02 | 3.61E-02 | 0.001843557 |
| 56 | 3.27E-02 | 3.64E-02 | 3.90E-02 | 3.86E-02 | 3.55E-02 | 3.64E-02 | 0.001889236 |

(continued)

| ##Temp./>C | tan d (1.000 Hz) | tan d (1.000 Hz) | tan d (1.000 Hz) | tan d (1.000 Hz) | tan d (1.000 Hz) | DE' (1.000 Hz)/MPa | Mean Deviation |
|---|---|---|---|---|---|---|---|
| 57 | 3.31E-02 | 3.69E-02 | 3.95E-02 | 3.91E-02 | 3.58E-02 | 3.69E-02 | 0.001933416 |
| 58 | 3.36E-02 | 3.74E-02 | 4.00E-02 | 3.96E-02 | 3.62E-02 | 3.74E-02 | 0.001988338 |
| 59 | 3.41E-02 | 3.80E-02 | 4.07E-02 | 4.03E-02 | 3.66E-02 | 3.79E-02 | 0.002053846 |
| 60 | 3.47E-02 | 3.86E-02 | 4.14E-02 | 4.09E-02 | 3.70E-02 | 3.85E-02 | 0.002131624 |
| 61 | 3.54E-02 | 3.93E-02 | 4.23E-02 | 4.17E-02 | 3.76E-02 | 3.92E-02 | 0.002223385 |
| 62 | 3.61E-02 | 4.01E-02 | 4.33E-02 | 4.26E-02 | 3.81E-02 | 4.00E-02 | 0.00232385 |
| 63 | 3.70E-02 | 4.10E-02 | 4.44E-02 | 4.35E-02 | 3.88E-02 | 4.09E-02 | 0.002432794 |
| 64 | 3.80E-02 | 4.20E-02 | 4.58E-02 | 4.46E-02 | 3.95E-02 | 4.20E-02 | 0.002568756 |
| 65 | 3.92E-02 | 4.33E-02 | 4.74E-02 | 4.58E-02 | 4.04E-02 | 4.32E-02 | 0.002747171 |
| 66 | 4.07E-02 | 4.49E-02 | 4.93E-02 | 4.73E-02 | 4.13E-02 | 4.47E-02 | 0.002971114 |
| 67 | 4.25E-02 | 4.69E-02 | 5.15E-02 | 4.90E-02 | 4.23E-02 | 4.64E-02 | 0.003239064 |
| 68 | 4.47E-02 | 4.95E-02 | 5.40E-02 | 5.11E-02 | 4.35E-02 | 4.86E-02 | 0.003565855 |
| 69 | 4.75E-02 | 5.28E-02 | 5.70E-02 | 5.37E-02 | 4.49E-02 | 5.12E-02 | 0.00396489 |
| 70 | 5.10E-02 | 5.70E-02 | 6.04E-02 | 5.69E-02 | 4.66E-02 | 5.44E-02 | 0.004486575 |
| 71 | 5.52E-02 | 6.24E-02 | 6.45E-02 | 6.10E-02 | 4.85E-02 | 5.83E-02 | 0.005164157 |
| 72 | 6.06E-02 | 6.93E-02 | 6.95E-02 | 6.61E-02 | 5.09E-02 | 6.33E-02 | 0.00600005 |
| 73 | 6.78E-02 | 7.80E-02 | 7.54E-02 | 7.26E-02 | 5.39E-02 | 6.95E-02 | 0.006943024 |
| 74 | 7.68E-02 | 8.88E-02 | 8.23E-02 | 8.07E-02 | 5.75E-02 | 7.73E-02 | 0.008052553 |
| 75 | 8.77E-02 | 0.10225 | 9.03E-02 | 9.07E-02 | 6.20E-02 | 8.66E-02 | 0.009832555 |
| 76 | 0.10089 | 0.11867 | 9.99E-02 | 1.03E-01 | 6.75E-02 | 9.79E-02 | 0.012152869 |
| 77 | 0.11673 | 0.1384 | 0.11152 | 0.11721 | 0.0744148 | 1.12E-01 | 0.014950048 |
| 78 | 0.13564 | 0.16183 | 0.12554 | 0.13492 | 0.08287504 | 1.28E-01 | 0.01916279 |
| 79 | 0.15809 | 0.1881 | 0.14195 | 0.15578 | 0.09316616 | 1.47E-01 | 0.023887322 |
| 80 | 0.18427 | 0.2165 | 0.16049 | 0.17974 | 0.10546 | 1.69E-01 | 0.0290536 |
| 81 | 0.21443 | 0.24799 | 0.18132 | 0.20695 | 0.12004 | 1.94E-01 | 0.0347728 |
| 82 | 0.24846 | 0.28403 | 0.20544 | 0.23751 | 0.13745 | 2.23E-01 | 0.0409064 |
| 83 | 0.28611 | 0.32299 | 0.23315 | 0.27144 | 0.15793 | 2.54E-01 | 0.0470272 |
| 84 | 0.32641 | 0.36282 | 0.2625 | 0.30831 | 0.18138 | 2.88E-01 | 0.0530752 |
| 85 | 0.36854 | 0.40312 | 0.29251 | 0.3472 | 0.20777 | 3.24E-01 | 0.0589504 |
| 86 | 0.41171 | 0.44324 | 0.32387 | 0.38726 | 0.23747 | 3.61E-01 | 0.064032 |
| 87 | 0.45497 | 0.48093 | 0.35668 | 0.42763 | 0.27043 | 3.98E-01 | 0.0676584 |
| 88 | 0.49649 | 0.51481 | 0.38898 | 0.46705 | 0.30636 | 4.35E-01 | 0.0696544 |
| 89 | 0.53454 | 0.54488 | 0.41933 | 0.50375 | 0.34481 | 4.69E-01 | 0.0699136 |
| 90 | 0.56756 | 0.56997 | 0.44782 | 0.53664 | 0.38526 | 5.01E-01 | 0.067928 |
| 91 | 0.59432 | 0.58841 | 0.47393 | 0.56487 | 0.42692 | 5.30E-01 | 0.063412 |
| 92 | 0.614 | 0.60069 | 0.49613 | 0.58755 | 0.46874 | 5.53E-01 | 0.0567896 |
| 93 | 0.62585 | 0.60776 | 0.5136 | 0.60387 | 0.50968 | 5.72E-01 | 0.0484096 |
| 94 | 0.63013 | 0.6095 | 0.5277 | 0.61383 | 0.54856 | 5.86E-01 | 0.0382512 |
| 95 | 0.62829 | 0.60642 | 0.53896 | 0.61794 | 0.58436 | 5.95E-01 | 0.0268272 |

(continued)

| ##Temp./>C | tan d (1.000 Hz) | tan d (1.000 Hz) | tan d (1.000 Hz) | tan d (1.000 Hz) | tan d (1.000 Hz) | DE' (1.000 Hz)/MPa | Mean Deviation |
|---|---|---|---|---|---|---|---|
| 96 | 0.62082 | 0.59972 | 0.54694 | 0.61644 | 0.61614 | 6.00E-01 | 0.0213456 |
| 97 | 0.60817 | 0.59023 | 0.55166 | 0.61008 | 0.64323 | 6.01E-01 | 0.0237832 |
| 98 | 0.59179 | 0.57861 | 0.55413 | 0.5994 | 0.66557 | 5.98E-01 | 0.027668 |
| 99 | 0.57279 | 0.56552 | 0.55474 | 0.58518 | 0.68258 | 5.92E-01 | 0.0361672 |
| 100 | 0.55174 | 0.55147 | 0.55356 | 0.5679 | 0.69395 | 5.84E-01 | 0.0440904 |
| 101 | 0.52999 | 0.53681 | 0.55082 | 0.54833 | 0.69937 | 5.73E-01 | 0.0505224 |
| 102 | 0.50857 | 0.52171 | 0.54677 | 0.52704 | 0.69937 | 5.61E-01 | 0.0554712 |
| 103 | 0.48695 | 0.50618 | 0.54145 | 0.50441 | 0.69416 | 5.47E-01 | 0.059012 |
| 104 | 0.4648 | 0.49035 | 0.53485 | 0.48071 | 0.68441 | 5.31E-01 | 0.0628848 |
| 105 | 0.44295 | 0.4744 | 0.52691 | 0.45663 | 0.67047 | 5.14E-01 | 0.0675344 |
| 106 | 0.4219 | 0.45856 | 0.51771 | 0.43287 | 0.65328 | 4.97E-01 | 0.0709048 |
| 107 | 0.40117 | 0.44287 | 0.50739 | 0.40964 | 0.63367 | 4.79E-01 | 0.0732656 |
| 108 | 0.38061 | 0.42677 | 0.49579 | 0.38713 | 0.61231 | 4.61E-01 | 0.0748224 |
| 109 | 0.36065 | 0.40981 | 0.48232 | 0.36544 | 0.58958 | 4.42E-01 | 0.075512 |
| 110 | 0.34149 | 0.39235 | 0.46655 | 0.34471 | 0.56589 | 4.22E-01 | 0.0752176 |
| 111 | 0.32286 | 0.37474 | 0.44833 | 0.32504 | 0.54161 | 4.03E-01 | 0.0739632 |
| 112 | 0.30473 | 0.35719 | 0.42766 | 0.30654 | 0.51725 | 3.83E-01 | 0.0718248 |
| 113 | 0.28737 | 0.33979 | 0.40533 | 0.28934 | 0.4934 | 3.63E-01 | 0.0690552 |
| 114 | 0.2707 | 0.32245 | 0.38172 | 0.27358 | 0.47011 | 3.44E-01 | 0.0657624 |
| 115 | 0.25401 | 0.30509 | 0.35636 | 0.25915 | 0.4473 | 3.24E-01 | 0.0619584 |
| 116 | 0.2368 | 0.28755 | 0.32875 | 0.2459 | 0.42511 | 3.05E-01 | 0.0576864 |
| 117 | 0.22316 | 0.26977 | 0.30198 | 0.23378 | 0.40389 | 2.87E-01 | 0.0531352 |

**Table 29** - Results da tangent delta (tan d) for sample 1000/0 in quadruplicate:

| ##Temp./>C | tan d (1.000 Hz) | tan d (1.000 Hz) | tan d (1.000 Hz) | tan d (1.000 Hz) | DE' (1.000 Hz)/MPa | Mean Deviation |
|---|---|---|---|---|---|---|
| 35 | 7.23E-02 | 7.25E-02 | 9.99E-02 | 5.55E-02 | 0.0750669100 | 0.01243125 |
| 36 | 7.45E-02 | 7.47E-02 | 0.1012 | 0.05675111 | 0.0767805925 | 0.012209704 |
| 37 | 7.68E-02 | 7.72E-02 | 0.10269 | 0.05811027 | 0.0786980500 | 0.011995975 |
| 38 | 7.94E-02 | 7.99E-02 | 0.10437 | 0.05961279 | 0.0808198700 | 0.011775065 |
| 39 | 8.21E-02 | 8.30E-02 | 0.10627 | 0.0612868 | 0.0831746400 | 0.01154768 |
| 40 | 8.52E-02 | 8.64E-02 | 0.10843 | 0.06312453 | 0.0857829425 | 0.011618368 |
| 41 | 8.86E-02 | 9.01E-02 | 0.11088 | 0.06513503 | 0.0886706350 | 0.011807155 |
| 42 | 9.23E-02 | 9.42E-02 | 0.1136 | 0.06735747 | 0.0918691800 | 0.012255855 |
| 43 | 9.65E-02 | 9.88E-02 | 0.11659 | 0.06983865 | 0.0954217650 | 0.012791558 |
| 44 | 0.101 | 0.10381 | 0.1199 | 0.07259303 | 0.0993257575 | 0.013366364 |
| 45 | 0.10595 | 0.10918 | 0.12358 | 0.0756638 | 0.1035934500 | 0.013964825 |
| 46 | 0.11146 | 0.11493 | 0.1277 | 0.0790726 | 0.1082906500 | 0.014609025 |
| 47 | 0.11766 | 0.12115 | 0.13236 | 0.0828693 | 0.1135098250 | 0.015320263 |

(continued)

| ##Temp./>C | tan d (1.000 Hz) | tan d (1.000 Hz) | tan d (1.000 Hz) | tan d (1.000 Hz) | DE' (1.000 Hz)/MPa | Mean Deviation |
|---|---|---|---|---|---|---|
| 48 | 0.12466 | 0.12805 | 0.13768 | 0.08715472 | 0.1193861800 | 0.01611573 |
| 49 | 0.13264 | 0.13594 | 0.14388 | 0.09209019 | 0.1261375475 | 0.017023679 |
| 50 | 0.14191 | 0.14504 | 0.15123 | 0.09778315 | 0.1339907875 | 0.018103819 |
| 51 | 0.15297 | 0.15558 | 0.16005 | 0.10435 | 0.1432375000 | 0.01944375 |
| 52 | 0.16633 | 0.16799 | 0.1708 | 0.11182 | 0.1542350000 | 0.0212075 |
| 53 | 0.18277 | 0.18301 | 0.18396 | 0.12034 | 0.1675200000 | 0.02359 |
| 54 | 0.20319 | 0.20152 | 0.20026 | 0.13 | 0.1837425000 | 0.02687125 |
| 55 | 0.22913 | 0.2249 | 0.22054 | 0.14102 | 0.2038975000 | 0.03143875 |
| 56 | 0.26168 | 0.25451 | 0.24587 | 0.15372 | 0.2289450000 | 0.0376125 |
| 57 | 0.30188 | 0.29148 | 0.27781 | 0.1687 | 0.2599675000 | 0.04563375 |
| 58 | 0.35053 | 0.33674 | 0.31675 | 0.18701 | 0.2977575000 | 0.05537375 |
| 59 | 0.40908 | 0.39101 | 0.36303 | 0.21014 | 0.3433150000 | 0.0665875 |
| 60 | 0.47853 | 0.45507 | 0.417 | 0.24043 | 0.3977575000 | 0.07866375 |
| 61 | 0.56004 | 0.5293 | 0.48017 | 0.28184 | 0.4628375000 | 0.09049875 |
| 62 | 0.65324 | 0.61392 | 0.55397 | 0.33751 | 0.5396600000 | 0.101075 |
| 63 | 0.75534 | 0.70609 | 0.63569 | 0.41039 | 0.6268775000 | 0.10824375 |
| 64 | 0.86374 | 0.80361 | 0.72226 | 0.50065 | 0.7225650000 | 0.11111 |
| 65 | 0.97604 | 0.906 | 0.81204 | 0.60513 | 0.8248025000 | 0.1162175 |
| 66 | 1.08926 | 1.01289 | 0.90433 | 0.72075 | 0.9318075000 | 0.1192675 |
| 67 | 1.19863 | 1.11831 | 0.9977 | 0.84428 | 1.0397300000 | 0.11874 |
| 68 | 1.3001 | 1.21524 | 1.0891 | 0.97202 | 1.1441150000 | 0.113555 |
| 69 | 1.39076 | 1.30039 | 1.17414 | 1.09702 | 1.2405775000 | 0.1049975 |
| 70 | 1.46635 | 1.37044 | 1.24643 | 1.2124 | 1.3239050000 | 0.09449 |
| 71 | 1.52274 | 1.42394 | 1.30153 | 1.31143 | 1.3899100000 | 0.08343 |
| 72 | 1.55762 | 1.45783 | 1.34137 | 1.38661 | 1.4358575000 | 0.0718675 |
| 73 | 1.5736 | 1.47096 | 1.36509 | 1.43316 | 1.4607025000 | 0.0615775 |
| 74 | 1.56953 | 1.46278 | 1.37042 | 1.44755 | 1.4625700000 | 0.053585 |
| 75 | 1.54593 | 1.4351 | 1.35694 | 1.43462 | 1.4431475000 | 0.05139125 |
| 76 | 1.5054 | 1.38821 | 1.32695 | 1.39782 | 1.4045950000 | 0.0504025 |
| 77 | 1.4514 | 1.32656 | 1.28261 | 1.34891 | 1.3523700000 | 0.049515 |
| 78 | 1.38512 | 1.25993 | 1.22394 | 1.29781 | 1.2917000000 | 0.049765 |
| 79 | 1.30902 | 1.18912 | 1.15286 | 1.24429 | 1.2238225000 | 0.0528325 |
| 80 | 1.22602 | 1.10569 | 1.07143 | 1.18534 | 1.1471200000 | 0.05856 |
| 81 | 1.13923 | 1.00683 | 0.98698 | 1.11445 | 1.0618725000 | 0.0649675 |
| 82 | 1.05214 | 0.91628 | 0.90617 | 1.02801 | 0.9756500000 | 0.064425 |
| 83 | 0.96628 | 0.83715 | 0.82727 | 0.93849 | 0.8922975000 | 0.0600875 |
| 84 | 0.88198 | 0.76086 | 0.74667 | 0.85626 | 0.8114425000 | 0.0576775 |
| 85 | 0.79995 | 0.68548 | 0.66481 | 0.78039 | 0.7326575000 | 0.0575125 |
| 86 | 0.72151 | 0.61595 | 0.58658 | 0.70994 | 0.6584950000 | 0.05723 |

(continued)

| ##Temp./>C | tan d (1.000 Hz) | tan d (1.000 Hz) | tan d (1.000 Hz) | tan d (1.000 Hz) | DE' (1.000 Hz)/MPa | Mean Deviation |
|---|---|---|---|---|---|---|
| 87 | 0.64857 | 0.55385 | 0.51477 | 0.64639 | 0.5908950000 | 0.056585 |
| 88 | 0.58352 | 0.49513 | 0.44997 | 0.58931 | 0.5294825000 | 0.0569325 |
| 89 | 0.5263 | 0.43769 | 0.39213 | 0.53444 | 0.4726400000 | 0.05773 |
| 90 | 0.47508 | 0.38519 | 0.34017 | 0.48604 | 0.4216200000 | 0.05894 |
| 91 | 0.42869 | 0.34078 | 0.29349 | 0.45554 | 0.3796250000 | 0.06249 |
| 92 | 0.38585 | 0.30283 | 0.25101 | 0.43697 | 0.3441650000 | 0.067245 |
| 93 | 0.34609 | 0.27002 | 0.21244 | 0.41432 | 0.3107175000 | 0.0694875 |
| 94 | 0.30956 | 0.24057 | 0.17892 | 0.38411 | 0.2782900000 | 0.068545 |
| 95 | 0.27549 | 0.2133 | 0.15191 | 0.349 | 0.2474250000 | 0.06482 |
| 96 | 0.24161 | 0.18828 | 0.13106 | 0.3172 | 0.2195375000 | 0.0598675 |
| 97 | 0.20747 | 0.16595 | 0.11598 | 0.29677 | 0.1965425000 | 0.0555775 |
| 98 | 0.17865 | 0.14617 | 0.10561 | 0.27927 | 0.1774250000 | 0.051535 |
| 99 | 0.15858 | 0.12862 | 9.87E-02 | 2.55E-01 | 0.1602787025 | 0.047470649 |
| 100 | 0.14413 | 0.1121 | 9.43E-02 | 2.26E-01 | 0.1440955300 | 0.04090447 |
| 101 | 0.13323 | 9.54E-02 | 9.13E-02 | 1.96E-01 | 0.1288978725 | 0.035522128 |
| 102 | 0.12481 | 7.89E-02 | 8.92E-02 | 1.80E-01 | 0.1181687675 | 0.034131233 |
| 103 | 0.11803 | 6.34E-02 | 8.73E-02 | 1.95E-01 | 0.1158104075 | 0.040459593 |
| 104 | 0.11253 | 4.87E-02 | 8.53E-02 | 2.25E-01 | 0.1179001925 | 0.053544904 |
| 105 | 0.10804 | 3.44E-02 | 8.34E-02 | 2.49E-01 | 0.1186019600 | 0.06497402 |
| 106 | 0.10252 | 2.08E-02 | 8.13E-02 | 2.61E-01 | 0.1162904175 | 0.072114791 |
| 107 | 9.32E-02 | 8.78E-03 | 7.85E-02 | 2.61E-01 | 0.1103702455 | 0.075299877 |
| 108 | 7.93E-02 | -1.71E-03 | 7.44E-02 | 2.53E-01 | 0.1013733833 | 0.076038308 |
| 109 | 6.07E-02 | -1.10E-02 | 6.86E-02 | 2.43E-01 | 0.0903602025 | 0.076389899 |
| 110 | 3.95E-02 | -1.96E-02 | 6.05E-02 | 2.34E-01 | 0.0786777475 | 0.077831126 |
| 111 | 1.81E-02 | -2.78E-02 | 5.00E-02 | 2.31E-01 | 0.0677450825 | 0.081497459 |
| 112 | -2.66E-03 | -3.54E-02 | 3.67E-02 | 2.31E-01 | 0.0574788265 | 0.086855587 |
| 113 | -2.28E-02 | -4.15E-02 | 2.16E-02 | 2.33E-01 | 0.0475964925 | 0.092741754 |
| 114 | -4.27E-02 | -4.67E-02 | 5.70E-03 | 2.36E-01 | 0.0381858990 | 0.099107051 |
| 115 | -6.29E-02 | -5.18E-02 | -1.06E-02 | 2.43E-01 | 0.0292883900 | 0.106605805 |
| 116 | -8.35E-02 | -5.73E-02 | -2.70E-02 | 2.52E-01 | 0.0211054900 | 0.115602255 |
| 117 | -0.10374 | -6.24E-02 | -4.35E-02 | 2.66E-01 | 0.0141637450 | 0.126058128 |

**Table 30** - Results da tangent delta (tan d) for sample 1010/4 in triplicate:

| ##Temp./>C | tan d (1.000 Hz) | tan d (1.000 Hz) | tan d (1.000 Hz) | DE' (1.000 Hz)/MPa | Mean Deviation |
|---|---|---|---|---|---|
| 35 | 3.84E-02 | 3.09E-02 | 4.42E-02 | 3.78E-02 | 0.004610276 |
| 36 | 3.84E-02 | 3.09E-02 | 4.42E-02 | 3.78E-02 | 0.004620931 |
| 37 | 3.84E-02 | 3.09E-02 | 4.42E-02 | 3.78E-02 | 0.004629889 |
| 38 | 3.85E-02 | 3.09E-02 | 4.42E-02 | 3.79E-02 | 0.004639389 |
| 39 | 3.86E-02 | 3.09E-02 | 4.42E-02 | 3.79E-02 | 0.004650587 |

(continued)

| ##Temp./>C | tan d (1.000 Hz) | tan d (1.000 Hz) | tan d (1.000 Hz) | DE' (1.000 Hz)/MPa | Mean Deviation |
|---|---|---|---|---|---|
| 40 | 3.87E-02 | 3.10E-02 | 4.43E-02 | 3.80E-02 | 0.004664471 |
| 41 | 3.88E-02 | 3.10E-02 | 4.43E-02 | 3.81E-02 | 0.004681878 |
| 42 | 3.90E-02 | 3.11E-02 | 4.44E-02 | 3.81E-02 | 0.00470404 |
| 43 | 3.91E-02 | 3.11E-02 | 4.44E-02 | 3.82E-02 | 0.004731351 |
| 44 | 3.93E-02 | 3.12E-02 | 4.45E-02 | 3.84E-02 | 0.004764484 |
| 45 | 3.95E-02 | 3.13E-02 | 4.46E-02 | 3.85E-02 | 0.004803811 |
| 46 | 3.97E-02 | 3.13E-02 | 4.48E-02 | 3.86E-02 | 0.004849476 |
| 47 | 4.00E-02 | 3.14E-02 | 4.49E-02 | 3.88E-02 | 0.004901871 |
| 48 | 4.02E-02 | 3.15E-02 | 4.51E-02 | 3.89E-02 | 0.004962478 |
| 49 | 4.04E-02 | 3.15E-02 | 4.53E-02 | 3.91E-02 | 0.005031769 |
| 50 | 4.06E-02 | 3.16E-02 | 4.56E-02 | 3.92E-02 | 0.005110269 |
| 51 | 4.07E-02 | 3.16E-02 | 4.59E-02 | 3.94E-02 | 0.005198518 |
| 52 | 4.09E-02 | 3.16E-02 | 4.62E-02 | 3.95E-02 | 0.005297933 |
| 53 | 4.10E-02 | 3.15E-02 | 4.65E-02 | 3.97E-02 | 0.005411273 |
| 54 | 4.10E-02 | 3.15E-02 | 4.68E-02 | 3.98E-02 | 0.005537051 |
| 55 | 4.11E-02 | 3.13E-02 | 4.71E-02 | 3.98E-02 | 0.005674967 |
| 56 | 4.11E-02 | 3.12E-02 | 4.74E-02 | 3.99E-02 | 0.005823898 |
| 57 | 4.12E-02 | 3.10E-02 | 4.77E-02 | 4.00E-02 | 0.005983893 |
| 58 | 4.14E-02 | 3.09E-02 | 4.81E-02 | 4.01E-02 | 0.006146596 |
| 59 | 4.18E-02 | 3.09E-02 | 4.85E-02 | 4.04E-02 | 0.006305284 |
| 60 | 4.24E-02 | 3.11E-02 | 4.89E-02 | 4.08E-02 | 0.00645492 |
| 61 | 4.34E-02 | 3.17E-02 | 4.95E-02 | 4.16E-02 | 0.006585442 |
| 62 | 4.51E-02 | 3.27E-02 | 5.04E-02 | 4.27E-02 | 0.006682227 |
| 63 | 4.75E-02 | 3.45E-02 | 5.16E-02 | 4.45E-02 | 0.006719636 |
| 64 | 5.10E-02 | 3.71E-02 | 5.34E-02 | 4.72E-02 | 0.006706416 |
| 65 | 5.59E-02 | 4.11E-02 | 5.61E-02 | 5.10E-02 | 0.006608996 |
| 66 | 6.24E-02 | 4.66E-02 | 5.98E-02 | 5.62E-02 | 0.006430609 |
| 67 | 7.08E-02 | 5.39E-02 | 6.48E-02 | 6.32E-02 | 0.006162649 |
| 68 | 8.19E-02 | 6.35E-02 | 7.17E-02 | 7.24E-02 | 0.006359769 |
| 69 | 9.57E-02 | 7.57E-02 | 8.06E-02 | 8.40E-02 | 0.007787062 |
| 70 | 0.11171 | 9.07E-02 | 9.19E-02 | 9.81E-02 | 0.009078649 |
| 71 | 0.13005 | 0.10865 | 0.10589 | 1.15E-01 | 0.010124444 |
| 72 | 0.15175 | 0.12954 | 0.12335 | 1.35E-01 | 0.011246667 |
| 73 | 0.17704 | 0.15337 | 0.14406 | 1.58E-01 | 0.012588889 |
| 74 | 0.20434 | 0.17966 | 0.16765 | 1.84E-01 | 0.013637778 |
| 75 | 0.2328 | 0.20807 | 0.19399 | 2.12E-01 | 0.01412 |
| 76 | 0.2627 | 0.23812 | 0.22324 | 2.41E-01 | 0.014231111 |
| 77 | 0.29366 | 0.26943 | 0.25434 | 2.72E-01 | 0.014122222 |
| 78 | 0.32374 | 0.3009 | 0.28604 | 3.04E-01 | 0.013453333 |

(continued)

| ##Temp./>C | tan d (1.000 Hz) | tan d (1.000 Hz) | tan d (1.000 Hz) | DE' (1.000 Hz)/MPa | Mean Deviation |
|---|---|---|---|---|---|
| 79 | 0.35187 | 0.33132 | 0.31775 | 3.34E-01 | 0.012148889 |
| 80 | 0.3781 | 0.35973 | 0.34897 | 3.62E-01 | 0.010555556 |
| 81 | 0.40183 | 0.38526 | 0.37855 | 3.89E-01 | 0.008855556 |
| 82 | 0.4217 | 0.40768 | 0.40488 | 4.11E-01 | 0.006853333 |
| 83 | 0.43718 | 0.42645 | 0.42683 | 4.30E-01 | 0.004684444 |
| 84 | 0.44871 | 0.44113 | 0.44349 | 4.44E-01 | 0.002844444 |
| 85 | 0.45627 | 0.45118 | 0.45525 | 4.54E-01 | 0.002035556 |
| 86 | 0.46004 | 0.45692 | 0.46239 | 4.60E-01 | 0.001908889 |
| 87 | 0.46055 | 0.45875 | 0.46541 | 4.62E-01 | 0.00256 |
| 88 | 0.45842 | 0.45744 | 0.46473 | 4.60E-01 | 0.003022222 |
| 89 | 0.4542 | 0.45357 | 0.46115 | 4.56E-01 | 0.003228889 |
| 90 | 0.44874 | 0.44778 | 0.45558 | 4.51E-01 | 0.003253333 |
| 91 | 0.4426 | 0.44082 | 0.44882 | 4.44E-01 | 0.00316 |
| 92 | 0.43606 | 0.43314 | 0.44142 | 4.37E-01 | 0.003031111 |
| 93 | 0.42939 | 0.42496 | 0.4339 | 4.29E-01 | 0.002988889 |
| 94 | 0.42292 | 0.41672 | 0.42667 | 4.22E-01 | 0.003588889 |
| 95 | 0.41706 | 0.40905 | 0.41998 | 4.15E-01 | 0.004208889 |
| 96 | 0.41192 | 0.40191 | 0.4139 | 4.09E-01 | 0.004888889 |
| 97 | 0.40687 | 0.39487 | 0.4082 | 4.03E-01 | 0.005628889 |
| 98 | 0.4013 | 0.38769 | 0.40269 | 3.97E-01 | 0.006357778 |
| 99 | 0.39574 | 0.38031 | 0.39718 | 3.91E-01 | 0.007177778 |
| 100 | 0.39049 | 0.37271 | 0.39152 | 3.85E-01 | 0.008131111 |
| 101 | 0.38488 | 0.36499 | 0.38558 | 3.78E-01 | 0.008995556 |
| 102 | 0.37854 | 0.35706 | 0.37927 | 3.72E-01 | 0.009708889 |
| 103 | 0.37185 | 0.34848 | 0.37252 | 3.64E-01 | 0.010535556 |
| 104 | 0.36485 | 0.33885 | 0.36533 | 3.56E-01 | 0.011662222 |
| 105 | 0.35707 | 0.32847 | 0.35773 | 3.48E-01 | 0.012857778 |
| 106 | 0.34846 | 0.31769 | 0.3498 | 3.39E-01 | 0.013973333 |
| 107 | 0.3396 | 0.30667 | 0.34163 | 3.29E-01 | 0.015086667 |
| 108 | 0.33035 | 0.29543 | 0.33338 | 3.20E-01 | 0.016193333 |
| 109 | 0.31991 | 0.28364 | 0.32519 | 3.10E-01 | 0.017293333 |
| 110 | 0.30905 | 0.27088 | 0.31697 | 2.99E-01 | 0.018724444 |
| 111 | 0.29918 | 0.25772 | 0.30864 | 2.89E-01 | 0.020528889 |
| 112 | 0.28957 | 0.24494 | 0.30024 | 2.78E-01 | 0.022206667 |
| 113 | 0.27933 | 0.23238 | 0.29177 | 2.68E-01 | 0.023631111 |
| 114 | 0.2687 | 0.21974 | 0.28316 | 2.57E-01 | 0.024973333 |
| 115 | 0.25842 | 0.20738 | 0.27437 | 2.47E-01 | 0.026228889 |
| 116 | 0.24867 | 0.19595 | 0.26548 | 2.37E-01 | 0.027166667 |
| 117 | 0.23954 | 0.18547 | 0.25656 | 2.27E-01 | 0.027813333 |

**Table 31** - Results da tangent delta (tan d) for sample 1010/3 in triplicate:

| ##Temp./>C | tan d (1.000 Hz) | tan d (1.000 Hz) | tan d (1.000 Hz) | DE' (1.000 Hz)/MPa | Mean Deviation |
|---|---|---|---|---|---|
| 35 | 3.09E-02 | 3.26E-02 | 3.39E-02 | 3.24E-02 | 0.001025551 |
| 36 | 3.10E-02 | 3.26E-02 | 3.38E-02 | 3.24E-02 | 0.000982851 |
| 37 | 3.10E-02 | 3.26E-02 | 3.37E-02 | 3.24E-02 | 0.0009438 |
| 38 | 3.11E-02 | 3.26E-02 | 3.37E-02 | 3.24E-02 | 0.000920164 |
| 39 | 3.10E-02 | 3.26E-02 | 3.36E-02 | 3.24E-02 | 0.000915013 |
| 40 | 3.10E-02 | 3.27E-02 | 3.35E-02 | 3.24E-02 | 0.000916584 |
| 41 | 3.10E-02 | 3.27E-02 | 3.34E-02 | 3.24E-02 | 0.000919244 |
| 42 | 3.10E-02 | 3.28E-02 | 3.34E-02 | 3.24E-02 | 0.0009296 |
| 43 | 3.10E-02 | 3.29E-02 | 3.34E-02 | 3.24E-02 | 0.000951244 |
| 44 | 3.10E-02 | 3.30E-02 | 3.35E-02 | 3.25E-02 | 0.000981498 |
| 45 | 3.11E-02 | 3.31E-02 | 3.36E-02 | 3.26E-02 | 0.00101226 |
| 46 | 3.12E-02 | 3.33E-02 | 3.38E-02 | 3.27E-02 | 0.0010343 |
| 47 | 3.13E-02 | 3.34E-02 | 3.39E-02 | 3.29E-02 | 0.001041207 |
| 48 | 3.15E-02 | 3.36E-02 | 3.41E-02 | 3.30E-02 | 0.00103946 |
| 49 | 3.16E-02 | 3.38E-02 | 3.42E-02 | 3.32E-02 | 0.001047887 |
| 50 | 3.18E-02 | 3.40E-02 | 3.45E-02 | 3.34E-02 | 0.001077442 |
| 51 | 3.20E-02 | 3.43E-02 | 3.48E-02 | 3.37E-02 | 0.001115731 |
| 52 | 3.23E-02 | 3.46E-02 | 3.51E-02 | 3.40E-02 | 0.001146511 |
| 53 | 3.25E-02 | 3.49E-02 | 3.54E-02 | 3.43E-02 | 0.001165153 |
| 54 | 3.29E-02 | 3.53E-02 | 3.57E-02 | 3.46E-02 | 0.001165898 |
| 55 | 3.32E-02 | 3.57E-02 | 3.59E-02 | 3.50E-02 | 0.001158313 |
| 56 | 3.36E-02 | 3.62E-02 | 3.63E-02 | 3.54E-02 | 0.001171367 |
| 57 | 3.40E-02 | 3.68E-02 | 3.67E-02 | 3.59E-02 | 0.001218604 |
| 58 | 3.45E-02 | 3.75E-02 | 3.73E-02 | 3.64E-02 | 0.001295849 |
| 59 | 3.50E-02 | 3.82E-02 | 3.80E-02 | 3.71E-02 | 0.001393793 |
| 60 | 3.55E-02 | 3.90E-02 | 3.88E-02 | 3.78E-02 | 0.001497664 |
| 61 | 3.61E-02 | 4.00E-02 | 3.96E-02 | 3.86E-02 | 0.00160826 |
| 62 | 3.68E-02 | 4.10E-02 | 4.05E-02 | 3.94E-02 | 0.001738138 |
| 63 | 3.76E-02 | 4.21E-02 | 4.15E-02 | 4.04E-02 | 0.001884562 |
| 64 | 3.85E-02 | 4.34E-02 | 4.27E-02 | 4.16E-02 | 0.002025553 |
| 65 | 3.97E-02 | 4.48E-02 | 4.42E-02 | 4.29E-02 | 0.002157109 |
| 66 | 4.10E-02 | 4.65E-02 | 4.58E-02 | 4.44E-02 | 0.002296858 |
| 67 | 4.26E-02 | 4.85E-02 | 4.77E-02 | 4.62E-02 | 0.002453647 |
| 68 | 4.44E-02 | 5.08E-02 | 4.98E-02 | 4.83E-02 | 0.002627236 |
| 69 | 4.66E-02 | 5.38E-02 | 5.22E-02 | 5.09E-02 | 0.002831716 |
| 70 | 4.93E-02 | 5.75E-02 | 5.51E-02 | 5.40E-02 | 0.003102662 |
| 71 | 5.27E-02 | 6.26E-02 | 5.86E-02 | 5.80E-02 | 0.003487051 |
| 72 | 5.71E-02 | 6.92E-02 | 6.28E-02 | 6.30E-02 | 0.004128591 |
| 73 | 6.26E-02 | 7.79E-02 | 6.81E-02 | 6.96E-02 | 0.005571107 |

(continued)

| ##Temp./>C | tan d (1.000 Hz) | tan d (1.000 Hz) | tan d (1.000 Hz) | DE' (1.000 Hz)/MPa | Mean Deviation |
|---|---|---|---|---|---|
| 74 | 6.98E-02 | 8.90E-02 | 7.48E-02 | 7.79E-02 | 0.007432487 |
| 75 | 7.89E-02 | 0.10321 | 8.33E-02 | 8.84E-02 | 0.009843562 |
| 76 | 9.05E-02 | 0.12096 | 9.40E-02 | 1.02E-01 | 0.012743567 |
| 77 | 0.10573 | 0.14278 | 0.10759 | 1.19E-01 | 0.016053333 |
| 78 | 0.125 | 0.16879 | 0.12466 | 1.39E-01 | 0.019537778 |
| 79 | 0.14908 | 0.19874 | 0.14559 | 1.64E-01 | 0.022846667 |
| 80 | 0.17785 | 0.23251 | 0.17079 | 1.94E-01 | 0.025862222 |
| 81 | 0.21138 | 0.27041 | 0.20011 | 2.27E-01 | 0.02874 |
| 82 | 0.24929 | 0.31197 | 0.23337 | 2.65E-01 | 0.031395556 |
| 83 | 0.2914 | 0.35509 | 0.26988 | 3.05E-01 | 0.033088889 |
| 84 | 0.33629 | 0.39771 | 0.30897 | 3.48E-01 | 0.033368889 |
| 85 | 0.38156 | 0.43759 | 0.34986 | 3.90E-01 | 0.031946667 |
| 86 | 0.42517 | 0.47277 | 0.39157 | 4.30E-01 | 0.028622222 |
| 87 | 0.46488 | 0.50141 | 0.43153 | 4.66E-01 | 0.023646667 |
| 88 | 0.49871 | 0.52175 | 0.46701 | 4.96E-01 | 0.019208889 |
| 89 | 0.52437 | 0.53333 | 0.49637 | 5.18E-01 | 0.014435556 |
| 90 | 0.54079 | 0.536 | 0.51789 | 5.32E-01 | 0.009113333 |
| 91 | 0.54765 | 0.53141 | 0.53074 | 5.37E-01 | 0.007366667 |
| 92 | 0.54632 | 0.52098 | 0.53455 | 5.34E-01 | 0.008646667 |
| 93 | 0.53832 | 0.50701 | 0.53086 | 5.25E-01 | 0.012257778 |
| 94 | 0.52583 | 0.49127 | 0.52152 | 5.13E-01 | 0.014402222 |
| 95 | 0.51133 | 0.47504 | 0.50893 | 4.98E-01 | 0.015595556 |
| 96 | 0.49629 | 0.45914 | 0.49462 | 4.83E-01 | 0.01614 |
| 97 | 0.48168 | 0.44404 | 0.4794 | 4.68E-01 | 0.016222222 |
| 98 | 0.46783 | 0.42994 | 0.46392 | 4.54E-01 | 0.015971111 |
| 99 | 0.45491 | 0.41675 | 0.44888 | 4.40E-01 | 0.01562 |
| 100 | 0.44294 | 0.40414 | 0.43471 | 4.27E-01 | 0.015415556 |
| 101 | 0.43181 | 0.39156 | 0.42148 | 4.15E-01 | 0.015593333 |
| 102 | 0.42094 | 0.37889 | 0.40919 | 4.03E-01 | 0.016077778 |
| 103 | 0.40976 | 0.36638 | 0.39759 | 3.91E-01 | 0.016575556 |
| 104 | 0.39785 | 0.35392 | 0.38639 | 3.79E-01 | 0.016977778 |
| 105 | 0.38501 | 0.34117 | 0.37492 | 3.67E-01 | 0.017242222 |
| 106 | 0.37165 | 0.32803 | 0.36266 | 3.54E-01 | 0.017388889 |
| 107 | 0.35815 | 0.31448 | 0.34921 | 3.41E-01 | 0.017422222 |
| 108 | 0.34469 | 0.3003 | 0.33429 | 3.26E-01 | 0.017417778 |
| 109 | 0.33121 | 0.28521 | 0.31866 | 3.12E-01 | 0.017655556 |
| 110 | 0.31729 | 0.26973 | 0.30314 | 2.97E-01 | 0.017993333 |
| 111 | 0.30277 | 0.25461 | 0.28809 | 2.82E-01 | 0.018142222 |
| 112 | 0.28786 | 0.24025 | 0.27372 | 2.67E-01 | 0.018017778 |

(continued)

| ##Temp./>C | tan d (1.000 Hz) | tan d (1.000 Hz) | tan d (1.000 Hz) | DE' (1.000 Hz)/MPa | Mean Deviation |
|---|---|---|---|---|---|
| 113 | 0.27303 | 0.22686 | 0.26013 | 2.53E-01 | 0.017653333 |
| 114 | 0.25905 | 0.21416 | 0.2474 | 2.40E-01 | 0.017362222 |
| 115 | 0.24657 | 0.20194 | 0.23566 | 2.28E-01 | 0.017411111 |
| 116 | 0.23623 | 0.19012 | 0.22514 | 2.17E-01 | 0.018028889 |
| 117 | 0.22812 | 0.17898 | 0.21582 | 2.08E-01 | 0.019106667 |

**Table 32** - Results da tangent delta (tan d) for sample 1020/4 in triplicate:

| ##Temp./>C | tan d (1.000 Hz) | tan d (1.000 Hz) | tan d (1.000 Hz) | DE' (1.000 Hz)/MPa | Mean Deviation |
|---|---|---|---|---|---|
| 35 | 3.54E-02 | 3.33E-02 | 2.91E-02 | 3.26E-02 | 0.002318938 |
| 36 | 3.54E-02 | 3.34E-02 | 2.92E-02 | 3.27E-02 | 0.002285356 |
| 37 | 3.54E-02 | 3.34E-02 | 2.93E-02 | 3.27E-02 | 0.002267153 |
| 38 | 3.54E-02 | 3.33E-02 | 2.93E-02 | 3.27E-02 | 0.002236387 |
| 39 | 3.54E-02 | 3.32E-02 | 2.94E-02 | 3.27E-02 | 0.002202211 |
| 40 | 3.55E-02 | 3.32E-02 | 2.94E-02 | 3.27E-02 | 0.002172947 |
| 41 | 3.55E-02 | 3.33E-02 | 2.95E-02 | 3.28E-02 | 0.002151793 |
| 42 | 3.55E-02 | 3.34E-02 | 2.96E-02 | 3.28E-02 | 0.002153278 |
| 43 | 3.55E-02 | 3.37E-02 | 2.97E-02 | 3.30E-02 | 0.00217802 |
| 44 | 3.56E-02 | 3.40E-02 | 2.98E-02 | 3.31E-02 | 0.002213496 |
| 45 | 3.57E-02 | 3.43E-02 | 2.99E-02 | 3.33E-02 | 0.00226808 |
| 46 | 3.59E-02 | 3.46E-02 | 2.99E-02 | 3.35E-02 | 0.002356604 |
| 47 | 3.60E-02 | 3.49E-02 | 2.99E-02 | 3.36E-02 | 0.002472078 |
| 48 | 3.61E-02 | 3.53E-02 | 3.00E-02 | 3.38E-02 | 0.002564373 |
| 49 | 3.63E-02 | 3.57E-02 | 3.01E-02 | 3.40E-02 | 0.002611127 |
| 50 | 3.64E-02 | 3.61E-02 | 3.04E-02 | 3.43E-02 | 0.00261826 |
| 51 | 3.65E-02 | 3.66E-02 | 3.06E-02 | 3.46E-02 | 0.002641111 |
| 52 | 3.67E-02 | 3.71E-02 | 3.08E-02 | 3.49E-02 | 0.002710304 |
| 53 | 3.69E-02 | 3.77E-02 | 3.10E-02 | 3.52E-02 | 0.002821876 |
| 54 | 3.72E-02 | 3.84E-02 | 3.12E-02 | 3.56E-02 | 0.002951729 |
| 55 | 3.76E-02 | 3.92E-02 | 3.14E-02 | 3.61E-02 | 0.003083838 |
| 56 | 3.79E-02 | 4.01E-02 | 3.18E-02 | 3.66E-02 | 0.003222807 |
| 57 | 3.83E-02 | 4.12E-02 | 3.21E-02 | 3.72E-02 | 0.003390127 |
| 58 | 3.88E-02 | 4.23E-02 | 3.25E-02 | 3.79E-02 | 0.003575024 |
| 59 | 3.94E-02 | 4.37E-02 | 3.31E-02 | 3.87E-02 | 0.003766093 |
| 60 | 4.00E-02 | 4.52E-02 | 3.36E-02 | 3.96E-02 | 0.003978269 |
| 61 | 4.06E-02 | 4.71E-02 | 3.43E-02 | 4.07E-02 | 0.004299369 |
| 62 | 4.13E-02 | 4.95E-02 | 3.50E-02 | 4.19E-02 | 0.005025024 |
| 63 | 4.22E-02 | 5.24E-02 | 3.58E-02 | 4.35E-02 | 0.0059185 |
| 64 | 4.34E-02 | 5.58E-02 | 3.68E-02 | 4.53E-02 | 0.00697914 |
| 65 | 4.47E-02 | 5.98E-02 | 3.79E-02 | 4.75E-02 | 0.008211362 |

(continued)

| ##Temp./>C | tan d (1.000 Hz) | tan d (1.000 Hz) | tan d (1.000 Hz) | DE' (1.000 Hz)/MPa | Mean Deviation |
|---|---|---|---|---|---|
| 66 | 4.63E-02 | 6.44E-02 | 3.93E-02 | 5.00E-02 | 0.009613756 |
| 67 | 4.83E-02 | 6.97E-02 | 4.09E-02 | 5.30E-02 | 0.011154998 |
| 68 | 5.07E-02 | 7.57E-02 | 4.30E-02 | 5.65E-02 | 0.012812656 |
| 69 | 5.38E-02 | 8.26E-02 | 4.57E-02 | 6.07E-02 | 0.014588873 |
| 70 | 5.77E-02 | 9.05E-02 | 4.92E-02 | 6.58E-02 | 0.016454413 |
| 71 | 6.28E-02 | 9.93E-02 | 5.35E-02 | 7.19E-02 | 0.018286484 |
| 72 | 6.94E-02 | 0.10914 | 5.90E-02 | 7.92E-02 | 0.019967933 |
| 73 | 7.77E-02 | 0.12038 | 6.63E-02 | 8.81E-02 | 0.021506833 |
| 74 | 8.79E-02 | 0.13364 | 7.58E-02 | 9.91E-02 | 0.023020196 |
| 75 | 0.10068 | 0.14959 | 8.77E-02 | 1.13E-01 | 0.024618798 |
| 76 | 0.11645 | 0.16885 | 0.10268 | 1.29E-01 | 0.026348889 |
| 77 | 0.13564 | 0.19135 | 0.12144 | 1.49E-01 | 0.027915556 |
| 78 | 0.15859 | 0.2169 | 0.14443 | 1.73E-01 | 0.029062222 |
| 79 | 0.18564 | 0.24558 | 0.17216 | 2.01E-01 | 0.029635556 |
| 80 | 0.21694 | 0.27774 | 0.20584 | 2.34E-01 | 0.029488889 |
| 81 | 0.25268 | 0.31398 | 0.24513 | 2.71E-01 | 0.028922222 |
| 82 | 0.29295 | 0.3552 | 0.28853 | 3.12E-01 | 0.028648889 |
| 83 | 0.33803 | 0.39869 | 0.3358 | 3.58E-01 | 0.027455556 |
| 84 | 0.38667 | 0.44157 | 0.38665 | 4.05E-01 | 0.024404444 |
| 85 | 0.43695 | 0.48449 | 0.44046 | 4.54E-01 | 0.020348889 |
| 86 | 0.48753 | 0.52873 | 0.49564 | 5.04E-01 | 0.016508889 |
| 87 | 0.53699 | 0.5718 | 0.54906 | 5.53E-01 | 0.012788889 |
| 88 | 0.58275 | 0.60938 | 0.59692 | 5.96E-01 | 0.009066667 |
| 89 | 0.62207 | 0.64087 | 0.63902 | 6.34E-01 | 0.007944444 |
| 90 | 0.6532 | 0.66632 | 0.67322 | 6.64E-01 | 0.007364444 |
| 91 | 0.67408 | 0.68529 | 0.6957 | 6.85E-01 | 0.007295556 |
| 92 | 0.68402 | 0.69713 | 0.70675 | 6.96E-01 | 0.007964444 |
| 93 | 0.68318 | 0.70144 | 0.70646 | 6.97E-01 | 0.009231111 |
| 94 | 0.67349 | 0.69834 | 0.69624 | 6.89E-01 | 0.010577778 |
| 95 | 0.65663 | 0.68783 | 0.67875 | 6.74E-01 | 0.011848889 |
| 96 | 0.6356 | 0.67119 | 0.65664 | 6.54E-01 | 0.012584444 |
| 97 | 0.61264 | 0.64966 | 0.63213 | 6.31E-01 | 0.012557778 |
| 98 | 0.58933 | 0.62693 | 0.60697 | 6.08E-01 | 0.012791111 |
| 99 | 0.56641 | 0.60566 | 0.58237 | 5.85E-01 | 0.013897778 |
| 100 | 0.54406 | 0.58549 | 0.5584 | 5.63E-01 | 0.015226667 |
| 101 | 0.52245 | 0.56602 | 0.5352 | 5.41E-01 | 0.016531111 |
| 102 | 0.50175 | 0.54689 | 0.51299 | 5.21E-01 | 0.017564444 |
| 103 | 0.48169 | 0.52788 | 0.49085 | 5.00E-01 | 0.018493333 |
| 104 | 0.4617 | 0.50891 | 0.46816 | 4.80E-01 | 0.019546667 |

(continued)

| ##Temp./>C | tan d (1.000 Hz) | tan d (1.000 Hz) | tan d (1.000 Hz) | DE' (1.000 Hz)/MPa | Mean Deviation |
|---|---|---|---|---|---|
| 105 | 0.44147 | 0.48999 | 0.44511 | 4.59E-01 | 0.020755556 |
| 106 | 0.4208 | 0.47117 | 0.42184 | 4.38E-01 | 0.022155556 |
| 107 | 0.39976 | 0.45253 | 0.39835 | 4.17E-01 | 0.023766667 |
| 108 | 0.37865 | 0.43418 | 0.37455 | 3.96E-01 | 0.025591111 |
| 109 | 0.35771 | 0.41625 | 0.35148 | 3.75E-01 | 0.027402222 |
| 110 | 0.33716 | 0.39892 | 0.33013 | 3.55E-01 | 0.029011111 |
| 111 | 0.31721 | 0.38247 | 0.30976 | 3.36E-01 | 0.03066 |
| 112 | 0.29814 | 0.36669 | 0.29051 | 3.18E-01 | 0.032162222 |
| 113 | 0.28001 | 0.3512 | 0.27292 | 3.01E-01 | 0.033215556 |
| 114 | 0.26257 | 0.33608 | 0.25637 | 2.85E-01 | 0.034048889 |
| 115 | 0.24589 | 0.32186 | 0.24078 | 2.70E-01 | 0.0349 |
| 116 | 0.23085 | 0.30895 | 0.2267 | 2.56E-01 | 0.035633333 |
| 117 | 0.21806 | 0.29773 | 0.21383 | 2.43E-01 | 0.036348889 |

**Table 33** - Results da tangent delta (tan d) for sample 1010/2 in quintuplicate:

| ##Temp./>C | tan d (1.000 Hz) | tan d (1.000 Hz) | tan d (1.000 Hz) | tan d (1.000 Hz) | tan d (1.000 Hz) | DE' (1.000 Hz)/MPa | Mean Deviation |
|---|---|---|---|---|---|---|---|
| 35 | 3.59E-02 | 3.37E-02 | 4.54E-02 | 0.03350212 | 0.03321867 | 3.63E-02 | 0.003621379 |
| 36 | 3.58E-02 | 3.36E-02 | 4.54E-02 | 0.03347609 | 0.03312285 | 3.63E-02 | 0.003643339 |
| 37 | 3.57E-02 | 3.36E-02 | 4.54E-02 | 0.03345334 | 0.03303134 | 3.63E-02 | 0.00366878 |
| 38 | 3.56E-02 | 3.37E-02 | 4.55E-02 | 0.03343299 | 0.03294545 | 3.62E-02 | 0.003696732 |
| 39 | 3.55E-02 | 3.37E-02 | 4.55E-02 | 0.03341461 | 0.03286629 | 3.62E-02 | 0.003726332 |
| 40 | 3.54E-02 | 3.37E-02 | 4.56E-02 | 0.0333988 | 0.03279444 | 3.62E-02 | 0.00375733 |
| 41 | 3.54E-02 | 3.37E-02 | 4.57E-02 | 0.03338872 | 0.03273096 | 3.62E-02 | 0.003789814 |
| 42 | 3.53E-02 | 3.38E-02 | 4.57E-02 | 0.03338824 | 0.03267645 | 3.62E-02 | 0.00382278 |
| 43 | 3.53E-02 | 3.38E-02 | 4.58E-02 | 0.03339957 | 0.0326296 | 3.62E-02 | 0.003855645 |
| 44 | 3.53E-02 | 3.39E-02 | 4.60E-02 | 0.03342405 | 0.03258945 | 3.62E-02 | 0.003887706 |
| 45 | 3.54E-02 | 3.39E-02 | 4.61E-02 | 0.03346451 | 0.03255546 | 3.63E-02 | 0.003919033 |
| 46 | 3.54E-02 | 3.40E-02 | 4.62E-02 | 0.03352452 | 0.03252672 | 3.63E-02 | 0.003949656 |
| 47 | 3.55E-02 | 3.41E-02 | 4.64E-02 | 0.03360918 | 0.03250252 | 3.64E-02 | 0.003979972 |
| 48 | 3.57E-02 | 3.42E-02 | 4.66E-02 | 0.03372449 | 0.03248259 | 3.65E-02 | 0.004010618 |
| 49 | 3.58E-02 | 3.44E-02 | 4.68E-02 | 0.03386977 | 0.03246712 | 3.67E-02 | 0.004042598 |
| 50 | 3.60E-02 | 3.46E-02 | 4.70E-02 | 0.0340431 | 0.03245663 | 3.68E-02 | 0.004075626 |
| 51 | 3.63E-02 | 3.48E-02 | 4.73E-02 | 0.03424307 | 0.03245202 | 3.70E-02 | 0.00411023 |
| 52 | 3.65E-02 | 3.50E-02 | 4.76E-02 | 0.03446582 | 0.0324549 | 3.72E-02 | 0.004146925 |
| 53 | 3.68E-02 | 3.53E-02 | 4.79E-02 | 0.03470963 | 0.03246783 | 3.74E-02 | 0.004186155 |
| 54 | 3.71E-02 | 3.56E-02 | 4.83E-02 | 0.03497331 | 0.03249389 | 3.77E-02 | 0.004227142 |
| 55 | 3.75E-02 | 3.60E-02 | 4.87E-02 | 0.03524997 | 0.03253172 | 3.80E-02 | 0.004271494 |
| 56 | 3.79E-02 | 3.64E-02 | 4.91E-02 | 0.03553198 | 0.03257774 | 3.83E-02 | 0.004322474 |
| 57 | 3.83E-02 | 3.68E-02 | 4.96E-02 | 0.03581402 | 0.03262884 | 3.86E-02 | 0.004381873 |

(continued)

| ##Temp./>C | tan d (1.000 Hz) | tan d (1.000 Hz) | tan d (1.000 Hz) | tan d (1.000 Hz) | tan d (1.000 Hz) | DE' (1.000 Hz)/MPa | Mean Deviation |
|---|---|---|---|---|---|---|---|
| 58 | 3.87E-02 | 3.73E-02 | 5.01E-02 | 0.03609562 | 0.03268038 | 3.90E-02 | 0.004448851 |
| 59 | 3.92E-02 | 3.78E-02 | 5.07E-02 | 0.03637711 | 0.03272635 | 3.94E-02 | 0.004525422 |
| 60 | 3.97E-02 | 3.84E-02 | 5.13E-02 | 0.03665853 | 0.0327606 | 3.98E-02 | 0.00461681 |
| 61 | 4.03E-02 | 3.90E-02 | 5.20E-02 | 0.03693886 | 0.03278059 | 4.02E-02 | 0.004760768 |
| 62 | 4.1 OE-02 | 3.98E-02 | 5.29E-02 | 0.03721679 | 0.03278558 | 4.07E-02 | 0.004954424 |
| 63 | 4.18E-02 | 4.07E-02 | 5.38E-02 | 0.03749213 | 0.03277407 | 4.13E-02 | 0.005190666 |
| 64 | 4.28E-02 | 4.18E-02 | 5.49E-02 | 0.03776963 | 0.03275495 | 4.20E-02 | 0.005483403 |
| 65 | 4.41E-02 | 4.31E-02 | 5.62E-02 | 0.03805556 | 0.03274937 | 4.28E-02 | 0.005949588 |
| 66 | 4.58E-02 | 4.48E-02 | 5.78E-02 | 0.03835992 | 0.03278074 | 4.39E-02 | 0.006655434 |
| 67 | 4.80E-02 | 4.69E-02 | 5.97E-02 | 0.03870523 | 0.03288211 | 4.52E-02 | 0.007544064 |
| 68 | 5.09E-02 | 4.96E-02 | 6.20E-02 | 0.03912051 | 0.03310342 | 4.69E-02 | 0.008665846 |
| 69 | 5.47E-02 | 5.30E-02 | 6.49E-02 | 0.03964478 | 0.03350566 | 4.92E-02 | 0.010073328 |
| 70 | 5.98E-02 | 5.73E-02 | 6.87E-02 | 0.04034407 | 0.03416005 | 5.21E-02 | 0.011844248 |
| 71 | 6.63E-02 | 6.28E-02 | 7.34E-02 | 0.04131393 | 0.03516075 | 5.58E-02 | 0.01404355 |
| 72 | 7.47E-02 | 6.97E-02 | 7.93E-02 | 0.04268333 | 0.03663635 | 6.06E-02 | 0.016747014 |
| 73 | 8.51E-02 | 7.82E-02 | 8.66E-02 | 0.04458982 | 0.03871829 | 6.67E-02 | 0.01999837 |
| 74 | 9.80E-02 | 8.86E-02 | 9.57E-02 | 0.04718397 | 0.04155439 | 7.42E-02 | 0.023866939 |
| 75 | 0.11353 | 0.10106 | 0.10682 | 0.05062131 | 0.045352 | 8.35E-02 | 0.028392006 |
| 76 | 0.13217 | 0.11604 | 0.12021 | 0.0551308 | 0.05029157 | 9.48E-02 | 0.033645831 |
| 77 | 0.15394 | 0.1336 | 0.13614 | 0.06115127 | 0.05656556 | 1.08E-01 | 0.039536761 |
| 78 | 0.17897 | 0.15395 | 0.15496 | 0.06938271 | 0.06448905 | 1.24E-01 | 0.045931578 |
| 79 | 0.20708 | 0.17707 | 0.1765 | 0.08014104 | 0.07427791 | 1.43E-01 | 0.052643452 |
| 80 | 0.23821 | 0.20308 | 0.20063 | 0.09334293 | 0.08606129 | 1.64E-01 | 0.059650187 |
| 81 | 0.27161 | 0.23155 | 0.22708 | 0.10875 | 0.1001 | 1.88E-01 | 0.0667144 |
| 82 | 0.30653 | 0.26206 | 0.25573 | 0.12635 | 0.11657 | 2.13E-01 | 0.0735904 |
| 83 | 0.34205 | 0.29398 | 0.28592 | 0.14651 | 0.13546 | 2.41E-01 | 0.0798392 |
| 84 | 0.37727 | 0.32675 | 0.31689 | 0.16987 | 0.15697 | 2.70E-01 | 0.084904 |
| 85 | 0.41096 | 0.35959 | 0.3479 | 0.1964 | 0.18124 | 2.99E-01 | 0.0883184 |
| 86 | 0.44184 | 0.39161 | 0.37814 | 0.22564 | 0.20796 | 3.29E-01 | 0.0897904 |
| 87 | 0.46912 | 0.42175 | 0.40663 | 0.25722 | 0.23682 | 3.58E-01 | 0.0890304 |
| 88 | 0.49188 | 0.44895 | 0.43229 | 0.29064 | 0.26759 | 3.86E-01 | 0.085724 |
| 89 | 0.50967 | 0.47262 | 0.45465 | 0.32523 | 0.29965 | 4.12E-01 | 0.0799392 |
| 90 | 0.5221 | 0.49215 | 0.47304 | 0.36041 | 0.33236 | 4.36E-01 | 0.0717016 |
| 91 | 0.52964 | 0.50743 | 0.48715 | 0.39554 | 0.36513 | 4.57E-01 | 0.0613144 |
| 92 | 0.53248 | 0.51815 | 0.49678 | 0.42967 | 0.39723 | 4.75E-01 | 0.0491296 |
| 93 | 0.53137 | 0.52446 | 0.50259 | 0.4617 | 0.42784 | 4.90E-01 | 0.0358576 |
| 94 | 0.52698 | 0.52661 | 0.50495 | 0.4906 | 0.45606 | 5.01E-01 | 0.022168 |
| 95 | 0.52008 | 0.52523 | 0.50456 | 0.51584 | 0.48137 | 5.09E-01 | 0.0131608 |
| 96 | 0.51115 | 0.52077 | 0.50195 | 0.53675 | 0.50316 | 5.15E-01 | 0.0112032 |

(continued)

| ##Temp./>C | tan d (1.000 Hz) | tan d (1.000 Hz) | tan d (1.000 Hz) | tan d (1.000 Hz) | tan d (1.000 Hz) | DE' (1.000 Hz)/MPa | Mean Deviation |
|---|---|---|---|---|---|---|---|
| 97 | 0.50088 | 0.51381 | 0.49766 | 0.55255 | 0.52075 | 5.17E-01 | 0.015616 |
| 98 | 0.48973 | 0.50479 | 0.49202 | 0.56342 | 0.53421 | 5.17E-01 | 0.0255848 |
| 99 | 0.47778 | 0.49406 | 0.48536 | 0.56963 | 0.54376 | 5.14E-01 | 0.0340616 |
| 100 | 0.46505 | 0.48192 | 0.47794 | 0.57112 | 0.54932 | 5.09E-01 | 0.04092 |
| 101 | 0.4516 | 0.46858 | 0.46993 | 0.5684 | 0.55116 | 5.02E-01 | 0.0462768 |
| 102 | 0.43747 | 0.45424 | 0.46135 | 0.56222 | 0.54981 | 4.93E-01 | 0.0503976 |
| 103 | 0.42268 | 0.43903 | 0.45214 | 0.55308 | 0.54561 | 4.83E-01 | 0.0534696 |
| 104 | 0.40731 | 0.42307 | 0.44203 | 0.54149 | 0.53895 | 4.71E-01 | 0.05572 |
| 105 | 0.39144 | 0.40645 | 0.43097 | 0.52811 | 0.53034 | 4.57E-01 | 0.0574104 |
| 106 | 0.37517 | 0.38925 | 0.41906 | 0.51347 | 0.52011 | 4.43E-01 | 0.0587024 |
| 107 | 0.35859 | 0.37156 | 0.40633 | 0.49797 | 0.5085 | 4.29E-01 | 0.059716 |
| 108 | 0.34187 | 0.35382 | 0.39262 | 0.48187 | 0.4958 | 4.13E-01 | 0.0605112 |
| 109 | 0.32522 | 0.33645 | 0.37802 | 0.46541 | 0.48221 | 3.97E-01 | 0.0610784 |
| 110 | 0.30881 | 0.31955 | 0.36297 | 0.44876 | 0.46786 | 3.82E-01 | 0.061376 |
| 111 | 0.29287 | 0.3032 | 0.34779 | 0.43204 | 0.453 | 3.66E-01 | 0.061392 |
| 112 | 0.27761 | 0.28742 | 0.33277 | 0.41538 | 0.43783 | 3.50E-01 | 0.0611224 |
| 113 | 0.26322 | 0.27239 | 0.31808 | 0.39887 | 0.4225 | 3.35E-01 | 0.0605384 |
| 114 | 0.24973 | 0.25847 | 0.30386 | 0.38257 | 0.40715 | 3.20E-01 | 0.0596032 |
| 115 | 0.23724 | 0.24579 | 0.29026 | 0.36657 | 0.39184 | 3.06E-01 | 0.058292 |
| 116 | 0.22588 | 0.2342 | 0.27746 | 0.35093 | 0.3767 | 2.93E-01 | 0.0566248 |
| 117 | 0.2157 | 0.22367 | 0.26562 | 0.33566 | 0.36182 | 2.80E-01 | 0.0545968 |

Table 34 - Results da tangent delta (tan d) for sample 1020/3 in triplicate:

| ##Temp./>C | tan d (1.000 Hz) | tan d (1.000 Hz) | tan d (1.000 Hz) | DE' (1.000 Hz)/MPa | Mean Deviation |
|---|---|---|---|---|---|
| 35 | 3.07E-02 | 2.91E-02 | 3.22E-02 | 3.07E-02 | 0.001048971 |
| 36 | 3.07E-02 | 2.91E-02 | 3.22E-02 | 3.06E-02 | 0.001055598 |
| 37 | 3.06E-02 | 2.90E-02 | 3.22E-02 | 3.06E-02 | 0.00105852 |
| 38 | 3.06E-02 | 2.90E-02 | 3.21E-02 | 3.06E-02 | 0.001057869 |
| 39 | 3.06E-02 | 2.90E-02 | 3.21E-02 | 3.06E-02 | 0.001057198 |
| 40 | 3.05E-02 | 2.90E-02 | 3.21E-02 | 3.05E-02 | 0.001069533 |
| 41 | 3.05E-02 | 2.90E-02 | 3.22E-02 | 3.05E-02 | 0.00108368 |
| 42 | 3.04E-02 | 2.90E-02 | 3.22E-02 | 3.05E-02 | 0.001101336 |
| 43 | 3.04E-02 | 2.90E-02 | 3.22E-02 | 3.05E-02 | 0.001123167 |
| 44 | 3.04E-02 | 2.90E-02 | 3.23E-02 | 3.05E-02 | 0.001150049 |
| 45 | 3.04E-02 | 2.89E-02 | 3.23E-02 | 3.06E-02 | 0.001182784 |
| 46 | 3.04E-02 | 2.89E-02 | 3.24E-02 | 3.06E-02 | 0.001220427 |
| 47 | 3.04E-02 | 2.90E-02 | 3.25E-02 | 3.06E-02 | 0.001261936 |
| 48 | 3.04E-02 | 2.90E-02 | 3.26E-02 | 3.07E-02 | 0.001306616 |
| 49 | 3.04E-02 | 2.90E-02 | 3.27E-02 | 3.07E-02 | 0.00135376 |

(continued)

| ##Temp./>C | tan d (1.000 Hz) | tan d (1.000 Hz) | tan d (1.000 Hz) | DE' (1.000 Hz)/MPa | Mean Deviation |
|---|---|---|---|---|---|
| 50 | 3.04E-02 | 2.90E-02 | 3.29E-02 | 3.08E-02 | 0.001402969 |
| 51 | 3.05E-02 | 2.91E-02 | 3.30E-02 | 3.09E-02 | 0.001454087 |
| 52 | 3.05E-02 | 2.91E-02 | 3.32E-02 | 3.09E-02 | 0.001506676 |
| 53 | 3.05E-02 | 2.92E-02 | 3.34E-02 | 3.10E-02 | 0.001560009 |
| 54 | 3.06E-02 | 2.93E-02 | 3.36E-02 | 3.11E-02 | 0.001613271 |
| 55 | 3.06E-02 | 2.94E-02 | 3.38E-02 | 3.13E-02 | 0.001665433 |
| 56 | 3.07E-02 | 2.95E-02 | 3.39E-02 | 3.14E-02 | 0.001715407 |
| 57 | 3.07E-02 | 2.97E-02 | 3.41E-02 | 3.15E-02 | 0.00176226 |
| 58 | 3.07E-02 | 2.98E-02 | 3.43E-02 | 3.16E-02 | 0.001806387 |
| 59 | 3.08E-02 | 3.00E-02 | 3.45E-02 | 3.18E-02 | 0.001848069 |
| 60 | 3.08E-02 | 3.02E-02 | 3.47E-02 | 3.19E-02 | 0.001887013 |
| 61 | 3.08E-02 | 3.04E-02 | 3.49E-02 | 3.20E-02 | 0.001922829 |
| 62 | 3.08E-02 | 3.07E-02 | 3.51E-02 | 3.22E-02 | 0.001954609 |
| 63 | 3.07E-02 | 3.09E-02 | 3.53E-02 | 3.23E-02 | 0.001980442 |
| 64 | 3.07E-02 | 3.12E-02 | 3.55E-02 | 3.25E-02 | 0.002000442 |
| 65 | 3.07E-02 | 3.15E-02 | 3.56E-02 | 3.26E-02 | 0.002017551 |
| 66 | 3.06E-02 | 3.18E-02 | 3.58E-02 | 3.27E-02 | 0.002032673 |
| 67 | 3.06E-02 | 3.22E-02 | 3.60E-02 | 3.29E-02 | 0.002046382 |
| 68 | 3.06E-02 | 3.26E-02 | 3.62E-02 | 3.31E-02 | 0.002063736 |
| 69 | 3.06E-02 | 3.31E-02 | 3.66E-02 | 3.34E-02 | 0.00209038 |
| 70 | 3.08E-02 | 3.38E-02 | 3.71E-02 | 3.39E-02 | 0.002130211 |
| 71 | 3.10E-02 | 3.47E-02 | 3.78E-02 | 3.45E-02 | 0.002298307 |
| 72 | 3.15E-02 | 3.58E-02 | 3.88E-02 | 3.54E-02 | 0.002575062 |
| 73 | 3.22E-02 | 3.73E-02 | 4.02E-02 | 3.66E-02 | 0.002912007 |
| 74 | 3.33E-02 | 3.93E-02 | 4.22E-02 | 3.83E-02 | 0.003321658 |
| 75 | 3.48E-02 | 4.19E-02 | 4.49E-02 | 4.05E-02 | 0.003821002 |
| 76 | 3.69E-02 | 4.52E-02 | 4.85E-02 | 4.35E-02 | 0.004425756 |
| 77 | 3.97E-02 | 4.94E-02 | 5.31E-02 | 4.74E-02 | 0.005157982 |
| 78 | 4.33E-02 | 5.48E-02 | 5.91E-02 | 5.24E-02 | 0.006048922 |
| 79 | 4.80E-02 | 6.14E-02 | 6.67E-02 | 5.87E-02 | 0.007117342 |
| 80 | 5.39E-02 | 6.95E-02 | 7.61E-02 | 6.65E-02 | 0.008396853 |
| 81 | 6.11E-02 | 7.94E-02 | 8.75E-02 | 7.60E-02 | 0.009937033 |
| 82 | 6.99E-02 | 9.14E-02 | 0.10134 | 8.75E-02 | 0.011740333 |
| 83 | 8.05E-02 | 0.10545 | 0.11766 | 1.01E-01 | 0.013814178 |
| 84 | 9.29E-02 | 0.12196 | 0.13655 | 1.17E-01 | 0.016178391 |
| 85 | 0.10737 | 0.14091 | 0.15829 | 1.36E-01 | 0.018768889 |
| 86 | 0.12418 | 0.16239 | 0.18292 | 1.56E-01 | 0.021544444 |
| 87 | 0.14318 | 0.1866 | 0.21011 | 1.80E-01 | 0.024522222 |
| 88 | 0.16439 | 0.21323 | 0.23969 | 2.06E-01 | 0.027586667 |

(continued)

| ##Temp./>C | tan d (1.000 Hz) | tan d (1.000 Hz) | tan d (1.000 Hz) | DE' (1.000 Hz)/MPa | Mean Deviation |
|---|---|---|---|---|---|
| 89 | 0.1878 | 0.2419 | 0.27141 | 2.34E-01 | 0.030602222 |
| 90 | 0.21306 | 0.27233 | 0.30461 | 2.63E-01 | 0.033515556 |
| 91 | 0.23991 | 0.30394 | 0.33871 | 2.94E-01 | 0.036184444 |
| 92 | 0.26815 | 0.33607 | 0.37312 | 3.26E-01 | 0.03842 |
| 93 | 0.29728 | 0.36808 | 0.40702 | 3.57E-01 | 0.04012 |
| 94 | 0.3267 | 0.39923 | 0.43945 | 3.88E-01 | 0.041173333 |
| 95 | 0.35583 | 0.4286 | 0.46938 | 4.18E-01 | 0.041404444 |
| 96 | 0.38413 | 0.45524 | 0.49617 | 4.45E-01 | 0.0407 |
| 97 | 0.41095 | 0.4787 | 0.51911 | 4.70E-01 | 0.039091111 |
| 98 | 0.4356 | 0.49849 | 0.53731 | 4.90E-01 | 0.036577778 |
| 99 | 0.45767 | 0.51403 | 0.55059 | 5.07E-01 | 0.033173333 |
| 100 | 0.477 | 0.52555 | 0.55919 | 5.21E-01 | 0.029053333 |
| 101 | 0.49319 | 0.53326 | 0.56301 | 5.30E-01 | 0.02442 |
| 102 | 0.50599 | 0.53717 | 0.56233 | 5.35E-01 | 0.019448889 |
| 103 | 0.51567 | 0.53784 | 0.55793 | 5.37E-01 | 0.014317778 |
| 104 | 0.52236 | 0.53581 | 0.55033 | 5.36E-01 | 0.009442222 |
| 105 | 0.52607 | 0.53145 | 0.54 | 5.33E-01 | 0.004995556 |
| 106 | 0.52711 | 0.52528 | 0.52764 | 5.27E-01 | 0.000931111 |
| 107 | 0.52586 | 0.51772 | 0.51378 | 5.19E-01 | 0.004493333 |
| 108 | 0.52252 | 0.50905 | 0.49882 | 5.10E-01 | 0.00826 |
| 109 | 0.51736 | 0.4995 | 0.4831 | 5.00E-01 | 0.011582222 |
| 110 | 0.51067 | 0.48921 | 0.46692 | 4.89E-01 | 0.014675556 |
| 111 | 0.50264 | 0.4783 | 0.45049 | 4.77E-01 | 0.017768889 |
| 112 | 0.49342 | 0.46694 | 0.43399 | 4.65E-01 | 0.020528889 |
| 113 | 0.48324 | 0.45526 | 0.41755 | 4.52E-01 | 0.022977778 |
| 114 | 0.47228 | 0.44335 | 0.40129 | 4.39E-01 | 0.025122222 |
| 115 | 0.4607 | 0.43126 | 0.38524 | 4.26E-01 | 0.026995556 |
| 116 | 0.44864 | 0.41902 | 0.36942 | 4.12E-01 | 0.028626667 |
| 117 | 0.43624 | 0.40669 | 0.35386 | 3.99E-01 | 0.030046667 |

**Table 35** - Results da tangent delta (tan d) for sample 1020/2 in quadruplicate:

| ##Temp./>C | tan d (1.000 Hz) | tan d (1.000 Hz) | tan d (1.000 Hz) | tan d (1.000 Hz) | DE' (1.000 Hz)/MPa | Mean Deviation |
|---|---|---|---|---|---|---|
| 35 | 0.04011458 | 0.04063032 | 0.03824666 | 0.03547816 | 0.03861743 | 0.00175502 |
| 36 | 0.0401323 | 0.04061272 | 0.03820045 | 0.03536364 | 0.038577278 | 0.001795233 |
| 37 | 0.04015087 | 0.04061335 | 0.03816642 | 0.03526623 | 0.038549218 | 0.001832893 |
| 38 | 0.04016968 | 0.04063183 | 0.03814367 | 0.03518635 | 0.038532883 | 0.001867873 |
| 39 | 0.04018934 | 0.04066722 | 0.03813227 | 0.03512975 | 0.038529645 | 0.001898635 |
| 40 | 0.04021158 | 0.04071786 | 0.03813384 | 0.03510091 | 0.038541048 | 0.001923673 |
| 41 | 0.04023962 | 0.04078157 | 0.03814827 | 0.03510075 | 0.038567553 | 0.001943043 |

(continued)

| ##Temp./>C | tan d (1.000 Hz) | tan d (1.000 Hz) | tan d (1.000 Hz) | tan d (1.000 Hz) | DE' (1.000 Hz)/MPa | Mean Deviation |
|---|---|---|---|---|---|---|
| 42 | 0.04027821 | 0.04085613 | 0.03817508 | 0.03513337 | 0.038610698 | 0.001956473 |
| 43 | 0.04032826 | 0.04094024 | 0.03821199 | 0.03519825 | 0.038669685 | 0.001964565 |
| 44 | 0.04038848 | 0.04103433 | 0.03825772 | 0.03529666 | 0.038744298 | 0.001967108 |
| 45 | 0.04046006 | 0.04113997 | 0.03831212 | 0.0354264 | 0.038834638 | 0.001965378 |
| 46 | 0.04054692 | 0.0412594 | 0.03837624 | 0.03558599 | 0.038942138 | 0.001961023 |
| 47 | 0.04065419 | 0.04139459 | 0.03845203 | 0.03577259 | 0.03906835 | 0.00195604 |
| 48 | 0.04078947 | 0.04154885 | 0.03854322 | 0.03598605 | 0.039216898 | 0.001952263 |
| 49 | 0.04095949 | 0.04172426 | 0.03865171 | 0.03622381 | 0.039389818 | 0.001952058 |
| 50 | 0.04117139 | 0.0419231 | 0.03877959 | 0.03648415 | 0.039589558 | 0.001957688 |
| 51 | 0.04142988 | 0.04214776 | 0.03892974 | 0.0367652 | 0.039818145 | 0.001970675 |
| 52 | 0.04174184 | 0.04240251 | 0.03910805 | 0.03706679 | 0.040079798 | 0.001992378 |
| 53 | 0.04211522 | 0.04268678 | 0.03931886 | 0.03739406 | 0.04037873 | 0.00202227 |
| 54 | 0.04256221 | 0.04299985 | 0.03956687 | 0.03775802 | 0.040721738 | 0.002059293 |
| 55 | 0.0430921 | 0.04334089 | 0.03985469 | 0.03816269 | 0.041112593 | 0.002103903 |
| 56 | 0.04371944 | 0.04371139 | 0.04018311 | 0.03860945 | 0.041555848 | 0.002159568 |
| 57 | 0.04444846 | 0.04411445 | 0.04055338 | 0.03910161 | 0.042054475 | 0.00222698 |
| 58 | 0.04528151 | 0.04455749 | 0.040968 | 0.03964841 | 0.042613853 | 0.002305648 |
| 59 | 0.04621945 | 0.04504348 | 0.04142889 | 0.04025809 | 0.043237478 | 0.002393988 |
| 60 | 0.04727161 | 0.04557632 | 0.04193707 | 0.04094363 | 0.043932158 | 0.002491808 |
| 61 | 0.04844 | 0.0461597 | 0.04249569 | 0.04170864 | 0.044701008 | 0.002598843 |
| 62 | 0.04973209 | 0.04680033 | 0.04311206 | 0.04256016 | 0.04555116 | 0.00271505 |
| 63 | 0.05114786 | 0.0474871 | 0.04378744 | 0.04351165 | 0.046483513 | 0.002833968 |
| 64 | 0.05269417 | 0.04821067 | 0.04451304 | 0.04459046 | 0.047502085 | 0.002950335 |
| 65 | 0.05438281 | 0.04898738 | 0.04529212 | 0.04583183 | 0.048623535 | 0.00306156 |
| 66 | 0.05624277 | 0.04984453 | 0.04614365 | 0.0472954 | 0.049881588 | 0.003180591 |
| 67 | 0.05828357 | 0.05078796 | 0.04708323 | 0.04903754 | 0.051298075 | 0.003492748 |
| 68 | 0.06051821 | 0.05182762 | 0.0481281 | 0.05114078 | 0.052903678 | 0.003807266 |
| 69 | 0.06300116 | 0.05299259 | 0.04931286 | 0.05371938 | 0.054756498 | 0.004122331 |
| 70 | 0.06583918 | 0.0543318 | 0.0507021 | 0.05694988 | 0.05695574 | 0.00444172 |
| 71 | 0.06910698 | 0.05589955 | 0.05235492 | 0.0610014 | 0.059590713 | 0.005463478 |
| 72 | 0.07289603 | 0.05777979 | 0.05434151 | 0.06611141 | 0.062782185 | 0.006721535 |
| 73 | 0.0773427 | 0.06010444 | 0.05676534 | 0.07256833 | 0.066695203 | 0.008260313 |
| 74 | 0.08268 | 0.0630537 | 0.05980028 | 0.08072366 | 0.07156441 | 0.01013742 |
| 75 | 0.08905676 | 0.06679214 | 0.06359634 | 0.09068824 | 0.07753337 | 0.01233913 |
| 76 | 0.09666101 | 0.07153145 | 0.06835135 | 0.10266 | 0.084800953 | 0.014859553 |
| 77 | 0.10574 | 0.0775836 | 0.07432171 | 0.11721 | 0.093713828 | 0.017761173 |
| 78 | 0.11672 | 0.08533987 | 0.08186726 | 0.13492 | 0.104711783 | 0.021108218 |
| 79 | 0.12968 | 0.09503668 | 0.09118502 | 0.15578 | 0.117920425 | 0.024809575 |
| 80 | 0.14468 | 0.10696 | 0.10257 | 0.17974 | 0.1334875 | 0.0287225 |

(continued)

| ##Temp./>C | tan d (1.000 Hz) | tan d (1.000 Hz) | tan d (1.000 Hz) | tan d (1.000 Hz) | DE' (1.000 Hz)/MPa | Mean Deviation |
|---|---|---|---|---|---|---|
| 81 | 0.16194 | 0.12148 | 0.1166 | 0.20695 | 0.1517425 | 0.0327025 |
| 82 | 0.18193 | 0.13902 | 0.13395 | 0.23751 | 0.1731025 | 0.0366175 |
| 83 | 0.20447 | 0.15952 | 0.1541 | 0.27144 | 0.1973825 | 0.0405725 |
| 84 | 0.22932 | 0.18303 | 0.17663 | 0.30831 | 0.2243225 | 0.0444925 |
| 85 | 0.2561 | 0.20997 | 0.20213 | 0.3472 | 0.25385 | 0.0478 |
| 86 | 0.28445 | 0.24082 | 0.23113 | 0.38726 | 0.285915 | 0.0506725 |
| 87 | 0.3136 | 0.27385 | 0.26236 | 0.42763 | 0.31936 | 0.054135 |
| 88 | 0.34275 | 0.3075 | 0.29476 | 0.46705 | 0.353015 | 0.0570175 |
| 89 | 0.3709 | 0.34204 | 0.32806 | 0.50375 | 0.3861875 | 0.05878125 |
| 90 | 0.39714 | 0.37782 | 0.36185 | 0.53664 | 0.4183625 | 0.05913875 |
| 91 | 0.42053 | 0.41414 | 0.39521 | 0.56487 | 0.4486875 | 0.05809125 |
| 92 | 0.44024 | 0.44963 | 0.42714 | 0.58755 | 0.47614 | 0.055705 |
| 93 | 0.45555 | 0.48165 | 0.45642 | 0.60387 | 0.4993725 | 0.05224875 |
| 94 | 0.46617 | 0.50878 | 0.48218 | 0.61383 | 0.51774 | 0.048045 |
| 95 | 0.47202 | 0.53134 | 0.50384 | 0.61794 | 0.531285 | 0.043355 |
| 96 | 0.47342 | 0.54888 | 0.52082 | 0.61644 | 0.53989 | 0.04277 |
| 97 | 0.47089 | 0.56076 | 0.5329 | 0.61008 | 0.5436575 | 0.0417625 |
| 98 | 0.46502 | 0.56645 | 0.53993 | 0.5994 | 0.5427 | 0.040225 |
| 99 | 0.45656 | 0.56653 | 0.5423 | 0.58518 | 0.5376425 | 0.04054125 |
| 100 | 0.44618 | 0.56191 | 0.54008 | 0.5679 | 0.5290175 | 0.04141875 |
| 101 | 0.43451 | 0.55328 | 0.53401 | 0.54833 | 0.5175325 | 0.04151125 |
| 102 | 0.42207 | 0.54055 | 0.52481 | 0.52704 | 0.5036175 | 0.04077375 |
| 103 | 0.40941 | 0.52474 | 0.51306 | 0.50441 | 0.487905 | 0.0392475 |
| 104 | 0.39694 | 0.50702 | 0.49895 | 0.48071 | 0.470905 | 0.0369825 |
| 105 | 0.38506 | 0.48802 | 0.48314 | 0.45663 | 0.4532125 | 0.03407625 |
| 106 | 0.37378 | 0.46812 | 0.46627 | 0.43287 | 0.43526 | 0.031935 |
| 107 | 0.36293 | 0.44762 | 0.44872 | 0.40964 | 0.4172275 | 0.0309425 |
| 108 | 0.35245 | 0.42683 | 0.43069 | 0.38713 | 0.399275 | 0.029485 |
| 109 | 0.34235 | 0.40614 | 0.4124 | 0.36544 | 0.3815825 | 0.0276875 |
| 110 | 0.33263 | 0.38595 | 0.394 | 0.34471 | 0.3643225 | 0.0256525 |
| 111 | 0.32325 | 0.3666 | 0.37547 | 0.32504 | 0.34759 | 0.023445 |
| 112 | 0.31413 | 0.34834 | 0.35681 | 0.30654 | 0.331455 | 0.02112 |
| 113 | 0.30511 | 0.3309 | 0.3385 | 0.28934 | 0.3159625 | 0.0187375 |
| 114 | 0.29612 | 0.31415 | 0.32107 | 0.27358 | 0.30123 | 0.01638 |
| 115 | 0.28717 | 0.29847 | 0.30443 | 0.25915 | 0.287305 | 0.014145 |
| 116 | 0.27827 | 0.28426 | 0.28836 | 0.2459 | 0.2741975 | 0.01414875 |
| 117 | 0.26948 | 0.27145 | 0.27281 | 0.23378 | 0.26188 | 0.01405 |

**Example 11 - Data comparison for tangent delta (tan d)**

Tables 36 and 37 below show a comparison of tangent delta mean data for each sample described in example 8:

**Table 36** - Comparison of tangent delta (tan d) mean data:

| ##Temp./>C | DE' 1020/1/Mpa | DE' 1020/2/Mpa | DE' 1020/3/Mpa | DE' 1020/4/Mpa |
|---|---|---|---|---|
| 35 | 0.03521481 | 0.03861743 | 0.030674506667 | 0.032626477 |
| 36 | 0.03516686 | 0.038577278 | 0.030637126667 | 0.032659443 |
| 37 | 0.03513004 | 0.038549218 | 0.030604680000 | 0.03267393 |
| 38 | 0.035102807 | 0.038532883 | 0.030576933333 | 0.03268098 |
| 39 | 0.03508427 | 0.038529645 | 0.030554783333 | 0.032684487 |
| 40 | 0.035074657 | 0.038541048 | 0.030539020000 | 0.03270091 |
| 41 | 0.035074937 | 0.038567553 | 0.030529590000 | 0.03275241 |
| 42 | 0.0350873 | 0.038610698 | 0.030526106667 | 0.032836337 |
| 43 | 0.03511356 | 0.038669685 | 0.030528650000 | 0.03295802 |
| 44 | 0.035156763 | 0.038744298 | 0.030538096667 | 0.033118353 |
| 45 | 0.03521879 | 0.038834638 | 0.030555133333 | 0.0332908 |
| 46 | 0.035302123 | 0.038942138 | 0.030580280000 | 0.033461927 |
| 47 | 0.035407773 | 0.03906835 | 0.030614696667 | 0.033623067 |
| 48 | 0.035536933 | 0.039216898 | 0.030659476667 | 0.03380021 |
| 49 | 0.03569178 | 0.039389818 | 0.030714550000 | 0.0340185 |
| 50 | 0.035874497 | 0.039589558 | 0.030780206667 | 0.03428044 |
| 51 | 0.03608455 | 0.039818145 | 0.030857080000 | 0.034563467 |
| 52 | 0.036320833 | 0.040079798 | 0.030944026667 | 0.034869197 |
| 53 | 0.03658352 | 0.04037873 | 0.031039816667 | 0.035207783 |
| 54 | 0.03687522 | 0.040721738 | 0.031144083333 | 0.035604503 |
| 55 | 0.037199413 | 0.041112593 | 0.031256520000 | 0.036070427 |
| 56 | 0.037560657 | 0.041555848 | 0.031376810000 | 0.03660643 |
| 57 | 0.037962897 | 0.042054475 | 0.031504720000 | 0.03720936 |
| 58 | 0.038408117 | 0.042613853 | 0.031637980000 | 0.037904467 |
| 59 | 0.03890459 | 0.043237478 | 0.031774216667 | 0.03870148 |
| 60 | 0.03947115 | 0.043932158 | 0.031911820000 | 0.039610283 |
| 61 | 0.04012843 | 0.044701008 | 0.032049136667 | 0.040666057 |
| 62 | 0.040894123 | 0.04555116 | 0.032184686667 | 0.041932933 |
| 63 | 0.04179799 | 0.046483513 | 0.032317906667 | 0.04347384 |
| 64 | 0.042896567 | 0.047502085 | 0.032450326667 | 0.04532484 |
| 65 | 0.044259943 | 0.048623535 | 0.032586513333 | 0.047488897 |
| 66 | 0.045971297 | 0.049881588 | 0.032734780000 | 0.050006497 |
| 67 | 0.048125073 | 0.051298075 | 0.032910696667 | 0.052961593 |
| 68 | 0.050818007 | 0.052903678 | 0.033137556667 | 0.056467247 |
| 69 | 0.054177717 | 0.054756498 | 0.033444670000 | 0.06068151 |
| 70 | 0.058436197 | 0.05695574 | 0.033875363333 | 0.06580673 |

(continued)

| ##Temp./>C | DE' 1020/1/Mpa | DE' 1020/2/Mpa | DE' 1020/3/Mpa | DE' 1020/4/Mpa |
|---|---|---|---|---|
| 71 | 0.06383193 | 0.059590713 | 0.034490440000 | 0.071902943 |
| 72 | 0.070659203 | 0.062782185 | 0.035366903333 | 0.0791881 |
| 73 | 0.079163697 | 0.066695203 | 0.036590910000 | 0.08811975 |
| 74 | 0.08955242 | 0.07156441 | 0.038266716667 | 0.099109707 |
| 75 | 0.102073157 | 0.07753337 | 0.040532093333 | 0.112661803 |
| 76 | 0.117173333 | 0.084800953 | 0.043529933333 | 0.129326667 |
| 77 | 0.135236667 | 0.093713828 | 0.047408763333 | 0.149476667 |
| 78 | 0.156593333 | 0.104711783 | 0.052381533333 | 0.173306667 |
| 79 | 0.18113 | 0.117920425 | 0.058681083333 | 0.201126667 |
| 80 | 0.208953333 | 0.1334875 | 0.066484720000 | 0.233506667 |
| 81 | 0.240293333 | 0.1517425 | 0.076025680000 | 0.270596667 |
| 82 | 0.274986667 | 0.1731025 | 0.087547520000 | 0.312226667 |
| 83 | 0.31222 | 0.1973825 | 0.101194366667 | 0.357506667 |
| 84 | 0.35151 | 0.2243225 | 0.117121206667 | 0.404963333 |
| 85 | 0.39163 | 0.25385 | 0.135523333333 | 0.453966667 |
| 86 | 0.431163333 | 0.285915 | 0.156496666667 | 0.503966667 |
| 87 | 0.469366667 | 0.31936 | 0.179963333333 | 0.552616667 |
| 88 | 0.505213333 | 0.353015 | 0.205770000000 | 0.59635 |
| 89 | 0.537083333 | 0.3861875 | 0.233703333333 | 0.633986667 |
| 90 | 0.563453333 | 0.4183625 | 0.263333333333 | 0.664246667 |
| 91 | 0.58388 | 0.4486875 | 0.294186666667 | 0.685023333 |
| 92 | 0.59829 | 0.47614 | 0.325780000000 | 0.695966667 |
| 93 | 0.60668 | 0.4993725 | 0.357460000000 | 0.697026667 |
| 94 | 0.608946667 | 0.51774 | 0.388460000000 | 0.689356667 |
| 95 | 0.605603333 | 0.531285 | 0.417936666667 | 0.674403333 |
| 96 | 0.59752 | 0.53989 | 0.445180000000 | 0.654476667 |
| 97 | 0.585586667 | 0.5436575 | 0.469586666667 | 0.631476667 |
| 98 | 0.57052 | 0.5427 | 0.490466666667 | 0.607743333 |
| 99 | 0.55297 | 0.5376425 | 0.507430000000 | 0.584813333 |
| 100 | 0.533673333 | 0.5290175 | 0.520580000000 | 0.56265 |
| 101 | 0.512976667 | 0.5175325 | 0.529820000000 | 0.541223333 |
| 102 | 0.490946667 | 0.5036175 | 0.535163333333 | 0.520543333 |
| 103 | 0.46806 | 0.487905 | 0.537146666667 | 0.50014 |
| 104 | 0.445313333 | 0.470905 | 0.536166666667 | 0.47959 |
| 105 | 0.423103333 | 0.4532125 | 0.532506666667 | 0.458856667 |
| 106 | 0.4013 | 0.43526 | 0.526676666667 | 0.437936667 |
| 107 | 0.379873333 | 0.4172275 | 0.519120000000 | 0.41688 |
| 108 | 0.35884 | 0.399275 | 0.510130000000 | 0.395793333 |
| 109 | 0.33814 | 0.3815825 | 0.499986666667 | 0.375146667 |

(continued)

| ##Temp./>C | DE' 1020/1/Mpa | DE' 1020/2/Mpa | DE' 1020/3/Mpa | DE' 1020/4/Mpa |
|---|---|---|---|---|
| 110 | 0.317956667 | 0.3643225 | 0.488933333333 | 0.355403333 |
| 111 | 0.29883 | 0.34759 | 0.477143333333 | 0.33648 |
| 112 | 0.281043333 | 0.331455 | 0.464783333333 | 0.318446667 |
| 113 | 0.264476667 | 0.3159625 | 0.452016666667 | 0.301376667 |
| 114 | 0.248856667 | 0.30123 | 0.438973333333 | 0.285006667 |
| 115 | 0.234163333 | 0.287305 | 0.425733333333 | 0.26951 |
| 116 | 0.22045 | 0.2741975 | 0.412360000000 | 0.2555 |
| 117 | 0.20788 | 0.26188 | 0.398930000000 | 0.243206667 |

**Table 37** - Comparison of tangent delta (tan d) mean data:

| ##Temp./>C | DE' 1010/1/Mpa | DE' 1010/2/Mpa | DE' 1010/3/Mpa | DE' 1010/4/Mpa | DE' 1000/0/Mpa |
|---|---|---|---|---|---|
| 35 | 0.033790118 | 0.036339042 | 0.032448387 | 0.037798843 | 0.08158324 |
| 36 | 0.03375084 | 0.036297782 | 0.032447917 | 0.037809337 | 0.083457087 |
| 37 | 0.033723864 | 0.03626088 | 0.03244498 | 0.037831183 | 0.085560643 |
| 38 | 0.033707842 | 0.03622901 | 0.032434787 | 0.037865603 | 0.087888897 |
| 39 | 0.033703842 | 0.03620368 | 0.03241342 | 0.03791319 | 0.090470587 |
| 40 | 0.033713454 | 0.036186596 | 0.032390777 | 0.037974727 | 0.093335747 |
| 41 | 0.033737608 | 0.036179384 | 0.032382117 | 0.038050267 | 0.096515837 |
| 42 | 0.033776738 | 0.03618395 | 0.03239749 | 0.03814004 | 0.10003975 |
| 43 | 0.033830878 | 0.036201608 | 0.032439917 | 0.038243217 | 0.10394947 |
| 44 | 0.033900384 | 0.036233796 | 0.032511137 | 0.038358457 | 0.108236667 |
| 45 | 0.033985688 | 0.036281468 | 0.03260905 | 0.038484737 | 0.112903333 |
| 46 | 0.034088414 | 0.036346 | 0.0327289 | 0.038621483 | 0.11803 |
| 47 | 0.03421031 | 0.0364294 | 0.03287191 | 0.038767837 | 0.123723333 |
| 48 | 0.034352752 | 0.036535214 | 0.03303542 | 0.038922737 | 0.13013 |
| 49 | 0.034517034 | 0.036665374 | 0.03321811 | 0.039082773 | 0.137486667 |
| 50 | 0.034702524 | 0.036821466 | 0.033433013 | 0.039242963 | 0.14606 |
| 51 | 0.034909904 | 0.037003304 | 0.033687597 | 0.039396647 | 0.1562 |
| 52 | 0.03514341 | 0.037210888 | 0.033975057 | 0.03953642 | 0.168373333 |
| 53 | 0.035409884 | 0.037444302 | 0.03428513 | 0.03965691 | 0.183246667 |
| 54 | 0.035711548 | 0.037703536 | 0.034607877 | 0.039756037 | 0.201656667 |
| 55 | 0.036051734 | 0.037986396 | 0.03495291 | 0.03983637 | 0.224856667 |
| 56 | 0.03643738 | 0.038292196 | 0.03536139 | 0.039909537 | 0.25402 |
| 57 | 0.03687517 | 0.038621018 | 0.035854057 | 0.03999579 | 0.29039 |
| 58 | 0.037367032 | 0.038974012 | 0.036429713 | 0.040133713 | 0.334673333 |
| 59 | 0.037918442 | 0.039353024 | 0.0370798 | 0.040378947 | 0.387706667 |
| 60 | 0.03854119 | 0.039764506 | 0.037788527 | 0.04081614 | 0.4502 |
| 61 | 0.039246866 | 0.04021794 | 0.03856133 | 0.041553453 | 0.52317 |
| 62 | 0.040040278 | 0.0407272 | 0.039423127 | 0.0427306 | 0.607043333 |

(continued)

| ##Temp./>C | DE' 1010/1/Mpa | DE' 1010/2/Mpa | DE' 1010/3/Mpa | DE' 1010/4/Mpa | DE' 1000/0/Mpa |
|---|---|---|---|---|---|
| 63 | 0.040938938 | 0.041310648 | 0.040405213 | 0.044530463 | 0.69904 |
| 64 | 0.04198412 | 0.042000376 | 0.0415503 | 0.047205573 | 0.796536667 |
| 65 | 0.043223704 | 0.04283945 | 0.042890203 | 0.051016303 | 0.898026667 |
| 66 | 0.044694538 | 0.043889622 | 0.044438937 | 0.056228853 | 1.00216 |
| 67 | 0.04644734 | 0.04522375 | 0.04623072 | 0.063179853 | 1.10488 |
| 68 | 0.048569914 | 0.046944272 | 0.048330243 | 0.072352027 | 1.20148 |
| 69 | 0.051171942 | 0.04916688 | 0.050857243 | 0.084000437 | 1.28843 |
| 70 | 0.054376274 | 0.05205737 | 0.053989273 | 0.098092027 | 1.361073333 |
| 71 | 0.058331306 | 0.055791778 | 0.057962417 | 0.114863333 | 1.41607 |
| 72 | 0.063292222 | 0.060593608 | 0.063044733 | 0.13488 | 1.452273333 |
| 73 | 0.06953869 | 0.066652018 | 0.06956694 | 0.158156667 | 1.469883333 |
| 74 | 0.077254426 | 0.074202854 | 0.0778719 | 0.183883333 | 1.467576667 |
| 75 | 0.086598198 | 0.083476662 | 0.088444657 | 0.21162 | 1.44599 |
| 76 | 0.097928072 | 0.094768474 | 0.10184465 | 0.241353333 | 1.406853333 |
| 77 | 0.11165496 | 0.108279366 | 0.1187 | 0.272476667 | 1.353523333 |
| 78 | 0.128161008 | 0.124350352 | 0.139483333 | 0.30356 | 1.289663333 |
| 79 | 0.147417232 | 0.14301379 | 0.16447 | 0.333646667 | 1.217 |
| 80 | 0.169292 | 0.164264844 | 0.193716667 | 0.362266667 | 1.13438 |
| 81 | 0.194146 | 0.187818 | 0.2273 | 0.388546667 | 1.044346667 |
| 82 | 0.222578 | 0.213448 | 0.264876667 | 0.41142 | 0.958196667 |
| 83 | 0.254324 | 0.240784 | 0.305456667 | 0.430153333 | 0.8769 |
| 84 | 0.288284 | 0.26955 | 0.347656667 | 0.444443333 | 0.796503333 |
| 85 | 0.323828 | 0.299218 | 0.38967 | 0.454233333 | 0.716746667 |
| 86 | 0.36071 | 0.329038 | 0.429836667 | 0.459783333 | 0.641346667 |
| 87 | 0.398128 | 0.358308 | 0.46594 | 0.46157 | 0.572396667 |
| 88 | 0.434738 | 0.38627 | 0.495823333 | 0.460196667 | 0.50954 |
| 89 | 0.469462 | 0.412364 | 0.518023333 | 0.456306667 | 0.45204 |
| 90 | 0.50145 | 0.436012 | 0.53156 | 0.4507 | 0.400146667 |
| 91 | 0.52969 | 0.456978 | 0.5366 | 0.44408 | 0.35432 |
| 92 | 0.553422 | 0.474862 | 0.53395 | 0.436873333 | 0.31323 |
| 93 | 0.572152 | 0.489592 | 0.525396667 | 0.429416667 | 0.276183333 |
| 94 | 0.585944 | 0.50104 | 0.512873333 | 0.422103333 | 0.243016667 |
| 95 | 0.595194 | 0.509416 | 0.498433333 | 0.415363333 | 0.213566667 |
| 96 | 0.600012 | 0.514756 | 0.48335 | 0.409243333 | 0.186983333 |
| 97 | 0.600674 | 0.51713 | 0.468373333 | 0.403313333 | 0.163133333 |
| 98 | 0.5979 | 0.516834 | 0.453896667 | 0.397226667 | 0.143476667 |
| 99 | 0.592162 | 0.514118 | 0.44018 | 0.391076667 | 0.128631603 |
| 100 | 0.583724 | 0.50907 | 0.427263333 | 0.384906667 | 0.116837373 |
| 101 | 0.573064 | 0.501934 | 0.41495 | 0.378483333 | 0.106660497 |

(continued)

| ##Temp./>C | DE' 1010/1/Mpa | DE' 1010/2/Mpa | DE' 1010/3/Mpa | DE' 1010/4/Mpa | DE' 1000/0/Mpa |
|---|---|---|---|---|---|
| 102 | 0.560692 | 0.493018 | 0.403006667 | 0.371623333 | 0.097628357 |
| 103 | 0.54663 | 0.482508 | 0.391243333 | 0.364283333 | 0.08957721 |
| 104 | 0.531024 | 0.47057 | 0.379386667 | 0.356343333 | 0.08220359 |
| 105 | 0.514272 | 0.457462 | 0.367033333 | 0.347756667 | 0.075285947 |
| 106 | 0.496864 | 0.443412 | 0.354113333 | 0.33865 | 0.06821389 |
| 107 | 0.478948 | 0.42859 | 0.340613333 | 0.3293 | 0.060170327 |
| 108 | 0.460522 | 0.413196 | 0.326426667 | 0.31972 | 0.050681178 |
| 109 | 0.44156 | 0.397462 | 0.311693333 | 0.30958 | 0.039433603 |
| 110 | 0.422198 | 0.38159 | 0.29672 | 0.298966667 | 0.02679033 |
| 111 | 0.402516 | 0.36578 | 0.281823333 | 0.288513333 | 0.013413443 |
| 112 | 0.382674 | 0.350202 | 0.267276667 | 0.27825 | |
| 113 | 0.363046 | 0.335012 | 0.25334 | 0.267826667 | |
| 114 | 0.343712 | 0.320356 | 0.240203333 | 0.2572 | |
| 115 | 0.324382 | 0.30634 | 0.228056667 | 0.246723333 | |
| 116 | 0.304822 | 0.293034 | 0.217163333 | 0.2367 | |
| 117 | 0.286516 | 0.280494 | 0.20764 | 0.22719 | |

**Example 12 - Data comparison for the storage modulus (E')**

Tables 38 and 39 below show a data comparison for the mean storage modulus for each sample described in example 8:

**Table 38** - Data comparison for the mean storage modulus (E'):

| ##Temp./>C | DE' 1020/1/Mpa | DE' 1020/2/Mpa | DE' 1020/3/Mpa | DE' 1020/4/Mpa |
|---|---|---|---|---|
| 35 | 638.8432867 | 537.5512675 | 397.31364 | 755.8503967 |
| 36 | 636.88053 | 535.627205 | 396.3696633 | 753.2401833 |
| 37 | 634.8336633 | 533.68353 | 395.3468267 | 750.7477867 |
| 38 | 632.7403633 | 531.7693425 | 394.2541733 | 748.02159 |
| 39 | 630.5451467 | 529.8157875 | 393.1008433 | 745.3238467 |
| 40 | 628.14985 | 527.7404375 | 391.8900167 | 742.6415667 |
| 41 | 625.6090133 | 525.541385 | 390.6204867 | 739.8037 |
| 42 | 623.0261833 | 523.2252325 | 389.2908167 | 736.8493633 |
| 43 | 620.3894833 | 520.7965075 | 387.9041733 | 733.6522233 |
| 44 | 617.6612533 | 518.2526325 | 386.4653633 | 730.2325233 |
| 45 | 614.90622 | 515.6312125 | 384.9810667 | 726.7217433 |
| 46 | 612.2285933 | 512.972995 | 383.4552833 | 723.1093233 |
| 47 | 609.57354 | 510.24256 | 381.8886633 | 719.4293767 |
| 48 | 606.76687 | 507.3793075 | 380.2819467 | 715.6920833 |
| 49 | 603.74827 | 504.4080575 | 378.63606 | 711.8476233 |
| 50 | 600.5739 | 501.3851875 | 376.9494667 | 707.88749 |
| 51 | 597.3069667 | 498.3073825 | 375.2194667 | 703.48809 |

(continued)

| ##Temp./>C | DE' 1020/1/Mpa | DE' 1020/2/Mpa | DE' 1020/3/Mpa | DE' 1020/4/Mpa |
|---|---|---|---|---|
| 52 | 593.97707 | 495.137425 | 373.4451567 | 699.1051467 |
| 53 | 590.61646 | 491.86418 | 371.6229533 | 695.1231867 |
| 54 | 587.2318667 | 488.4824975 | 369.7480233 | 690.7263667 |
| 55 | 583.7293433 | 484.9761125 | 367.8257267 | 686.08233 |
| 56 | 579.9964867 | 481.3171125 | 365.8636333 | 681.4710967 |
| 57 | 576.0801667 | 477.5059975 | 363.8646767 | 676.5975433 |
| 58 | 572.1150267 | 473.5452975 | 361.8268467 | 671.41639 |
| 59 | 568.0293533 | 469.418525 | 359.7492167 | 666.0242167 |
| 60 | 563.5987733 | 465.090415 | 357.62747 | 660.4516333 |
| 61 | 558.7772433 | 460.552055 | 355.44525 | 654.7478433 |
| 62 | 553.6830967 | 455.78478 | 353.1804633 | 648.627 |
| 63 | 548.33383 | 450.779795 | 350.8151133 | 641.7920367 |
| 64 | 542.6058033 | 445.526865 | 348.34327 | 634.4057233 |
| 65 | 536.3649633 | 439.9933175 | 345.7532333 | 626.5584933 |
| 66 | 529.4774833 | 434.12145 | 343.0279733 | 618.2026167 |
| 67 | 521.95841 | 427.99752 | 340.16195 | 609.2230867 |
| 68 | 514.03574 | 421.7264775 | 337.1499167 | 599.3657 |
| 69 | 505.6212933 | 415.2537725 | 333.9771533 | 588.54715 |
| 70 | 496.29812 | 408.4741875 | 330.6260033 | 576.6309367 |
| 71 | 486.00746 | 401.4076725 | 327.0700733 | 563.3276967 |
| 72 | 475.0284467 | 394.0914075 | 323.2715533 | 548.0872267 |
| 73 | 463.44988 | 386.487275 | 319.2168733 | 530.1991567 |
| 74 | 450.9863533 | 378.4765025 | 314.90144 | 509.5990833 |
| 75 | 436.8755733 | 369.9286475 | 310.3035867 | 486.9443333 |
| 76 | 420.2480433 | 360.63472 | 305.3994833 | 462.31145 |
| 77 | 400.13856 | 350.1523225 | 300.1578467 | 434.8514933 |
| 78 | 375.52146 | 337.90742 | 294.5166533 | 403.9932667 |
| 79 | 346.81649 | 323.538015 | 288.37539 | 369.0303333 |
| 80 | 315.17756 | 306.9795975 | 281.6117833 | 329.70108 |
| 81 | 282.5232333 | 288.464905 | 274.06024 | 289.18433 |
| 82 | 250.5265533 | 268.0937525 | 265.5184933 | 251.5468667 |
| 83 | 220.08564 | 246.6032225 | 255.7753733 | 218.1109933 |
| 84 | 191.4206133 | 224.5736375 | 244.5935733 | 188.5356667 |
| 85 | 164.6879167 | 202.2751675 | 231.7928867 | 161.64975 |
| 86 | 140.22574 | 179.9847575 | 217.3920833 | 136.86281 |
| 87 | 118.1368933 | 158.472115 | 201.5777867 | 114.6997533 |
| 88 | 98.68229 | 138.3531725 | 184.62884 | 96.10157 |
| 89 | 82.09401667 | 119.7897025 | 166.94827 | 80.67116 |
| 90 | 68.50536667 | 102.8745275 | 149.0869533 | 67.86608333 |

(continued)

| ##Temp./>C | DE' 1020/1/Mpa | DE' 1020/2/Mpa | DE' 1020/3/Mpa | DE' 1020/4/Mpa |
|---|---|---|---|---|
| 91 | 57.48179333 | 87.687325 | 131.5302167 | 57.46007 |
| 92 | 48.48446 | 74.3550525 | 114.7018233 | 48.94955 |
| 93 | 41.07860667 | 62.988425 | 98.90656667 | 41.98949333 |
| 94 | 35.05273 | 53.4991575 | 84.41138333 | 36.34219 |
| 95 | 30.20371667 | 45.58583 | 71.49011333 | 31.75118667 |
| 96 | 26.26024667 | 39.0359875 | 60.18072 | 27.89404 |
| 97 | 22.98281 | 33.6429625 | 50.43814 | 24.54664667 |
| 98 | 20.22470333 | 29.2402275 | 42.28082667 | 21.67497 |
| 99 | 17.90872333 | 25.6265525 | 35.55554333 | 19.27719667 |
| 100 | 15.98462333 | 22.6420425 | 30.02668 | 17.22088333 |
| 101 | 14.35793333 | 20.137695 | 25.54244 | 15.44798333 |
| 102 | 12.92083667 | 18.016855 | 21.94533667 | 13.94432333 |
| 103 | 11.65340667 | 16.1948325 | 19.03734667 | 12.66265333 |
| 104 | 10.58080333 | 14.6208375 | 16.66772667 | 11.56018333 |
| 105 | 9.683996667 | 13.262575 | 14.72378333 | 10.58106 |
| 106 | 8.931893333 | 12.088835 | 13.10633333 | 9.741606667 |
| 107 | 8.288036667 | 11.055415 | 11.73824667 | 9.047576667 |
| 108 | 7.70451 | 10.1378975 | 10.56347 | 8.440806667 |
| 109 | 7.179226667 | 9.325885 | 9.540966667 | 7.899803333 |
| 110 | 6.724446667 | 8.61672 | 8.642423333 | 7.420633333 |
| 111 | 6.318163333 | 7.9994 | 7.84792 | 7.00737 |
| 112 | 5.960213333 | 7.4612775 | 7.141916667 | 6.65747 |
| 113 | 5.669916667 | 6.9861425 | 6.51519 | 6.35747 |
| 114 | 5.424486667 | 6.56164 | 5.960706667 | 6.10147 |
| 115 | 5.193216667 | 6.1820875 | 5.46982 | 5.88419 |
| 116 | 4.974683333 | 5.849965 | 5.03629 | 5.693333333 |
| 117 | 4.7775 | 5.5596725 | 4.655993333 | 5.52342 |

**Table 39** - Data comparison for the mean storage modulus (E'):

| ##Temp./>C | DE' 1010/1/Mpa | DE' 1010/2/Mpa | DE' 1010/3/Mpa | DE' 1010/4/Mpa | DE' 1000/0/Mpa |
|---|---|---|---|---|---|
| 35 | 532.235642 | 495.177358 | 508.5761167 | 449.1413267 | 472.4470175 |
| 36 | 530.217678 | 493.470588 | 507.1361067 | 447.2771867 | 467.72214 |
| 37 | 528.172464 | 491.68166 | 505.5786967 | 445.3335067 | 462.5315075 |
| 38 | 526.129826 | 489.773758 | 503.90992 | 443.32264 | 456.9603125 |
| 39 | 524.11415 | 487.76909 | 502.12781 | 441.2522667 | 451.0538275 |
| 40 | 522.084256 | 485.68977 | 500.2378333 | 439.12425 | 444.695525 |
| 41 | 519.969738 | 483.543658 | 498.2421433 | 436.93724 | 437.757835 |
| 42 | 517.696784 | 481.358572 | 496.1514933 | 434.6817267 | 430.2222 |
| 43 | 515.257628 | 479.132048 | 493.96474 | 432.35836 | 422.0494275 |

(continued)

| ##Temp./>C | DE' 1010/1/Mpa | DE' 1010/2/Mpa | DE' 1010/3/Mpa | DE' 1010/4/Mpa | DE' 1000/0/Mpa |
|---|---|---|---|---|---|
| 44 | 512.727544 | 476.8073 | 491.68362 | 429.97864 | 413.213605 |
| 45 | 510.152758 | 474.381616 | 489.31805 | 427.5563267 | 403.6594925 |
| 46 | 507.527782 | 471.898164 | 486.8894 | 425.0983633 | 393.36182 |
| 47 | 504.844058 | 469.351958 | 484.4107933 | 422.5962967 | 382.2548075 |
| 48 | 502.066886 | 466.734778 | 481.8831767 | 420.0304333 | 370.3101775 |
| 49 | 499.169444 | 464.094404 | 479.3124433 | 417.39179 | 357.3919075 |
| 50 | 496.180018 | 461.448056 | 476.71247 | 414.68183 | 343.3937625 |
| 51 | 493.129102 | 458.737384 | 474.0915433 | 411.8964433 | 328.2700275 |
| 52 | 489.987076 | 455.920784 | 471.4468267 | 409.0321067 | 312.09014 |
| 53 | 486.72687 | 453.02714 | 468.7807167 | 406.0720367 | 294.79077 |
| 54 | 483.421208 | 450.070696 | 466.10449 | 402.9889333 | 276.09849 |
| 55 | 480.09392 | 447.032504 | 463.4172233 | 399.77662 | 255.5622925 |
| 56 | 476.653986 | 443.885006 | 460.7025933 | 396.4556667 | 233.0078025 |
| 57 | 473.052248 | 440.622666 | 457.9517133 | 393.0188367 | 208.4578625 |
| 58 | 469.336028 | 437.269672 | 455.1637367 | 389.4509033 | 182.49113 |
| 59 | 465.502526 | 433.84046 | 452.32546 | 385.7117367 | 156.02527 |
| 60 | 461.50261 | 430.291136 | 449.4046567 | 381.73053 | 129.8229225 |
| 61 | 457.31328 | 426.561544 | 446.3659533 | 377.4858433 | 104.70638 |
| 62 | 452.873632 | 422.603806 | 443.1708067 | 372.98587 | 81.7663825 |
| 63 | 448.139592 | 418.42161 | 439.7742367 | 368.13599 | 62.10591 |
| 64 | 443.150688 | 414.024044 | 436.13334 | 362.7731033 | 46.347405 |
| 65 | 437.885814 | 409.37508 | 432.1918967 | 356.7728467 | 34.202325 |
| 66 | 432.261468 | 404.389548 | 427.8768033 | 349.9692167 | 25.2170725 |
| 67 | 426.249212 | 399.019702 | 423.0928767 | 341.9979033 | 18.663475 |
| 68 | 419.811216 | 393.21641 | 417.7373633 | 332.2905333 | 13.9658475 |
| 69 | 412.910638 | 386.939664 | 411.64201 | 320.36234 | 10.545995 |
| 70 | 405.653886 | 380.130302 | 404.63379 | 305.9525933 | 8.041195 |
| 71 | 398.056114 | 372.824106 | 396.47425 | 288.6235267 | 6.228335 |
| 72 | 389.877044 | 364.861312 | 386.93978 | 267.8563 | 4.9243325 |
| 73 | 380.906526 | 355.715828 | 375.7960633 | 244.0275067 | 3.960855 |
| 74 | 371.18631 | 345.071924 | 362.8332867 | 218.6461567 | 3.2282575 |
| 75 | 360.228454 | 333.066122 | 347.6867033 | 192.9523167 | 2.6689275 |
| 76 | 346.975728 | 319.642936 | 330.0438167 | 167.5640467 | 2.24828 |
| 77 | 330.708816 | 304.688846 | 309.6737567 | 143.4966467 | 1.9316175 |
| 78 | 311.048566 | 288.158144 | 286.7763267 | 121.8748367 | 1.68727 |
| 79 | 288.904754 | 270.670698 | 262.0118633 | 103.00831 | 1.4883625 |
| 80 | 265.732132 | 252.84899 | 236.0838133 | 86.68776 | 1.3208975 |
| 81 | 242.118212 | 235.158246 | 209.7379167 | 72.83910667 | 1.1843175 |
| 82 | 218.374848 | 217.970032 | 183.8163467 | 61.34857 | 1.0813975 |

(continued)

| ##Temp./>C | DE' 1010/1/Mpa | DE' 1010/2/Mpa | DE' 1010/3/Mpa | DE' 1010/4/Mpa | DE' 1000/0/Mpa |
|---|---|---|---|---|---|
| 83 | 195.31293 | 201.094312 | 159.1797233 | 51.97449333 | 0.9954775 |
| 84 | 173.716866 | 184.2365 | 136.5016733 | 44.34037 | 0.920515 |
| 85 | 153.629248 | 167.22982 | 116.09235 | 38.13809 | 0.862155 |
| 86 | 134.808318 | 150.263182 | 98.04183333 | 33.09834333 | 0.81539 |
| 87 | 117.393652 | 133.638386 | 82.3595 | 28.98437 | 0.7692475 |
| 88 | 101.738396 | 117.741182 | 69.08094333 | 25.55126 | 0.726185 |
| 89 | 87.900718 | 102.814794 | 57.96880667 | 22.65607 | 0.6977175 |
| 90 | 75.771654 | 89.12878 | 48.83961 | 20.21807333 | 0.676895 |
| 91 | 65.300446 | 76.796214 | 41.40828 | 18.12142333 | 0.6465925 |
| 92 | 56.340572 | 65.815522 | 35.41108333 | 16.25966333 | 0.608735 |
| 93 | 48.687242 | 56.171538 | 30.56752333 | 14.56880333 | 0.5787 |
| 94 | 42.17348 | 47.88078 | 26.65896333 | 13.04352 | 0.5634225 |
| 95 | 36.621986 | 40.773004 | 23.46689333 | 11.71662333 | 0.559575 |
| 96 | 31.857242 | 34.736604 | 20.81549667 | 10.56982 | 0.56112 |
| 97 | 27.737746 | 29.737212 | 18.56852667 | 9.525826667 | 0.5630525 |
| 98 | 24.192948 | 25.623074 | 16.64594 | 8.54488 | 0.55522 |
| 99 | 21.149584 | 22.21245 | 14.99636 | 7.670983333 | 0.5321275 |
| 100 | 18.565314 | 19.392278 | 13.57032333 | 6.922333333 | 0.513045 |
| 101 | 16.37815 | 17.057062 | 12.32272333 | 6.265416667 | 0.5205225 |
| 102 | 14.50542 | 15.113946 | 11.22781333 | 5.683366667 | 0.540895 |
| 103 | 12.884582 | 13.497068 | 10.27019 | 5.170506667 | 0.54383 |
| 104 | 11.4896 | 12.136284 | 9.427683333 | 4.715033333 | 0.5265625 |
| 105 | 10.308766 | 10.971648 | 8.68469 | 4.306933333 | 0.504115 |
| 106 | 9.312928 | 9.967064 | 8.036543333 | 3.947393333 | 0.4912275 |
| 107 | 8.476048 | 9.095528 | 7.473816667 | 3.639326667 | 0.4966725 |
| 108 | 7.776624 | 8.330602 | 6.979103333 | 3.373793333 | 0.506345 |
| 109 | 7.174532 | 7.659736 | 6.543753333 | 3.135793333 | 0.4944425 |
| 110 | 6.637036 | 7.07696 | 6.163406667 | 2.927566667 | 0.4705425 |
| 111 | 6.162784 | 6.571588 | 5.8315 | 2.757296667 | 0.467575 |
| 112 | 5.757996 | 6.128594 | 5.54217 | 2.615816667 | 0.4844175 |
| 113 | 5.423174 | 5.739998 | 5.28892 | 2.492686667 | 0.4896425 |
| 114 | 5.150776 | 5.402618 | 5.064876667 | 2.383536667 | 0.4762325 |
| 115 | 4.925306 | 5.114958 | 4.865916667 | 2.28759 | 0.469335 |
| 116 | 4.729582 | 4.86766 | 4.688926667 | 2.202713333 | 0.478105 |
| 117 | 4.56088 | 4.649826 | 4.53109 | 2.1258 | 0.4818525 |

## Example 13 - Comparison the DMTA analysis results

Tables 40, 41, and 42 below respectively show a data comparison for the activation energy (EA), storage modulus (E') and tangent delta (tan d) for each sample described in example 8:

**Table 40** - Data comparison for the mean activation energy (EA) per sample:

| RESULTS | |
|---|---|
| Sample | EA kJ/mol |
| 1000/0 | 328.955 |
| 1010/1 | 372.883 |
| 1010/2 | 369.649 |
| 1010/3 | 364.563 |
| 1010/4 | 302.880 |
| 1020/1 | 376.132 |
| 1020/2 | 400.554 |
| 1020/3 | 389.925 |
| 1020/4 | 344.850 |

**Table 41** - Data comparison for the mean storage modulus (E') per sample:

| RESULTS | |
|---|---|
| Sample | E' MPa |
| 1000/0 | 472.447 |
| 1010/1 | 532.236 |
| 1010/2 | 495.117 |
| 1010/3 | 508.660 |
| 1010/4 | 449.141 |
| 1020/1 | 638.843 |
| 1020/2 | 537.552 |
| 1020/3 | 397.314 |
| 1020/4 | 756.000 |

**Table 42** - Data comparison for the mean tangent delta (tan d) per sample:

| RESULTS | |
|---|---|
| Sample | Tan.D |
| 1000/0 | 1.436 |
| 1010/1 | 0.600 |
| 1010/2 | 0.536 |
| 1010/3 | 0.539 |
| 1010/4 | 0.462 |
| 1020/1 | 0.606 |
| 1020/2 | 0.543 |
| 1020/3 | 0.537 |
| 1020/4 | 0.698 |

**Table 43** - Data comparison for the mean glass transition temperature (Tg) per sample:

| RESULTS | |
|---|---|
| Sample | Tg °C |
| 1000/0 | 73.725 |
| 1010/1 | 96.700 |
| 1010/2 | 96.320 |
| 1010/3 | 91.033 |
| 1010/4 | 87.000 |
| 1020/1 | 93.900 |
| 1020/2 | 97.150 |
| 1020/3 | 103.300 |
| 1020/4 | 92.667 |

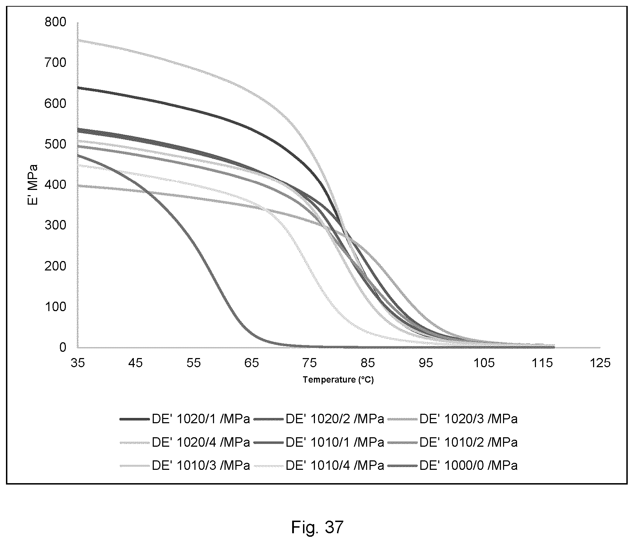

Fig. 37 illustrates comparative curves of storage modulus (E') by temperature for each sample described in the example 8.

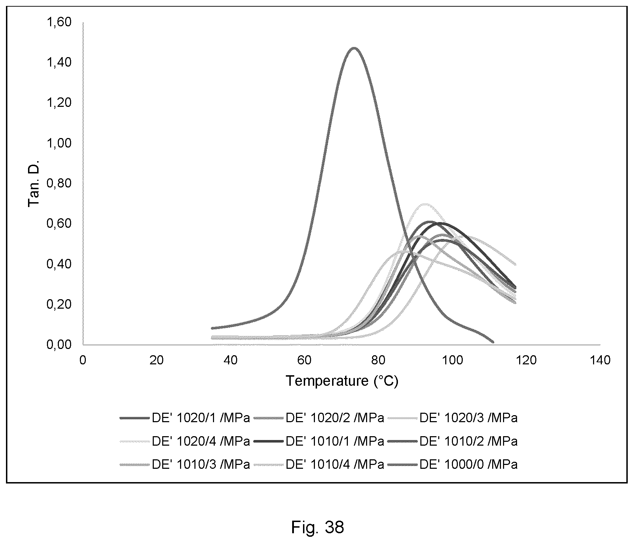

Fig. 38 illustrates comparative curves of tangent delta (tan d) by temperature for each sample described in the example 8.

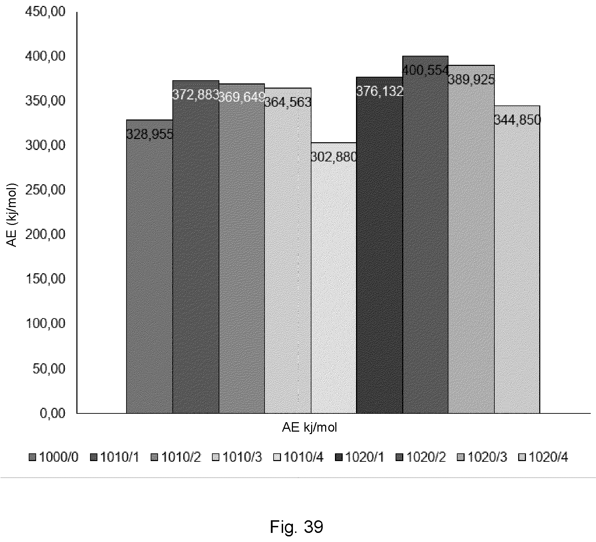

Alternatively, Figs. 39, 40, and 41 illustrate bar graph comparisons for the DMTA results of the samples described in example 8.

Fig. 39 shows a bar graph for mean activation energy (AE) each sample described in the example 8.

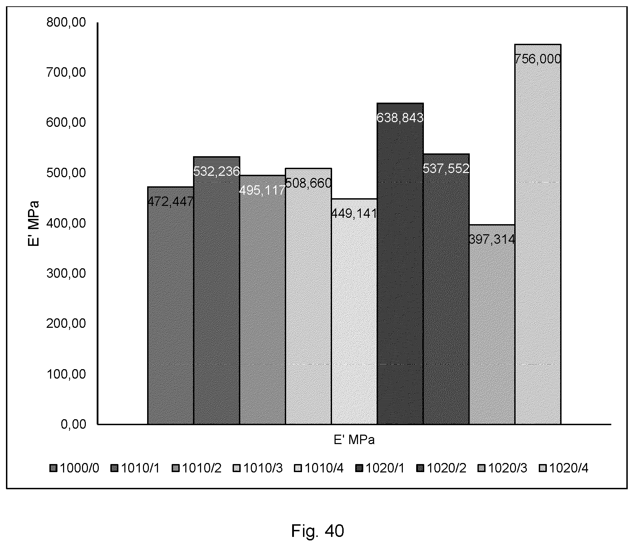

Fig. 40 shows a bar graph for mean storage modulus (E') each sample described in the example 8.

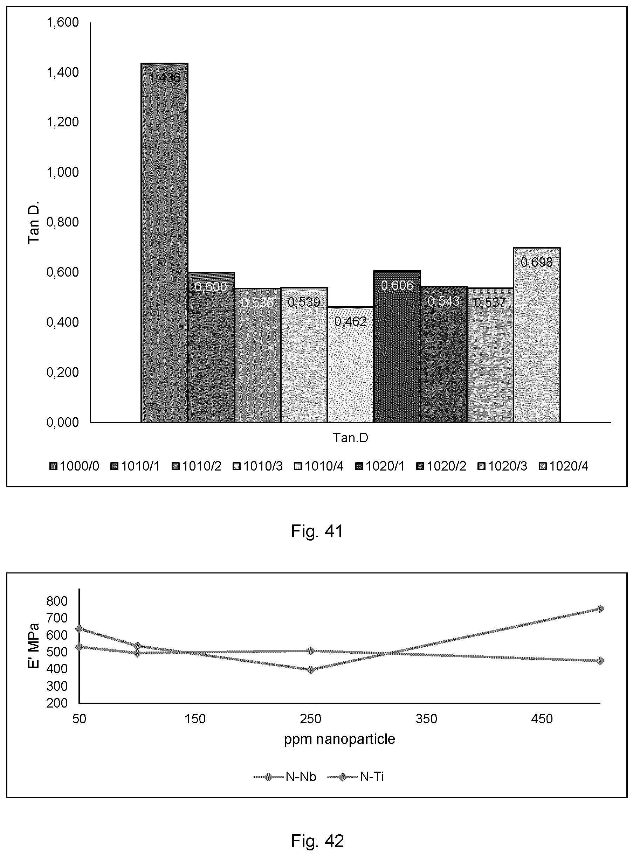

Fig. 41 shows a bar graph for mean tangent delta (tan d) each sample described in the example 8.

Additionally, Fig. 42 shows a line graph comparing the variation of storage modulus (E') by concentration and nanoparticle type.

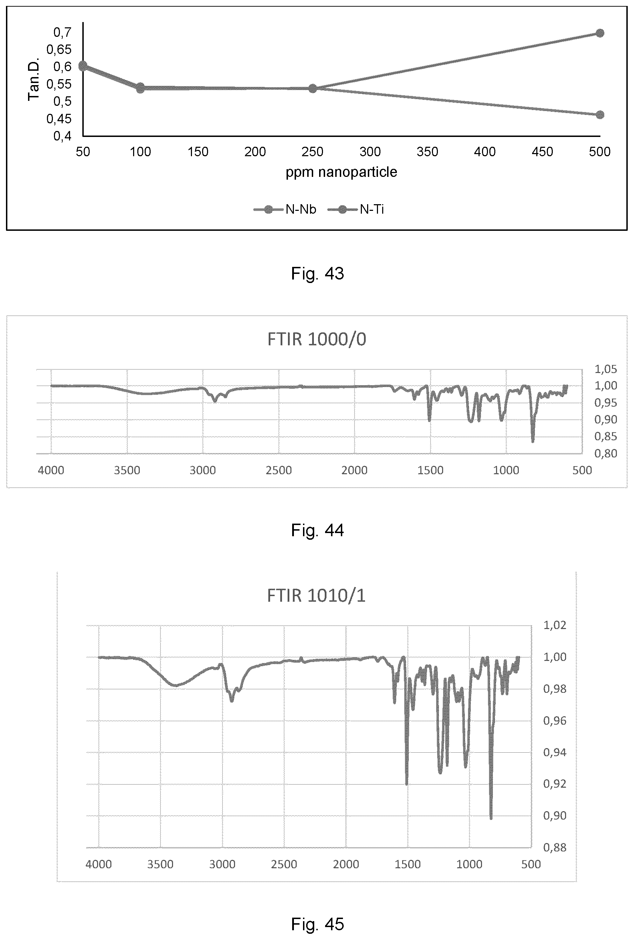

Additionally, Fig. 43 shows a line graph comparing the variation of tangent delta (tan d) by concentration and nanoparticle type.

From the DMTA analysis of the samples described in example 8, it is possible to conclude that the incorporation of nanoparticles at a low concentration (ppm range) was able to substantially modify the mechanical properties of the polymer, as can be seen from the tan delta results. Tan delta can be understood as the potential of energy dissipation of a material. The higher the tan delta, the more dissipative the material is. On the other hand, the lower the tan delta, the more elastic the material acts when a load is applied, thus having more potential to store load. Thus, modifying the tan delta (either increasing or decreasing) can modulate a material to become more suitable for different applications, e.g., for structural applications a lower tan delta may be preferred.

**Example 14 - Fourier Transform Infrared Spectroscopy (FTIR) Analysis.**

The results of Fourier Transform Infrared Spectroscopy analysis are shown in Figs. 44-55 for each sample as described in the example 8.

Fig. 44 depicts the FTIR spectra of the sample 1000/0 described in the example 8 (transmittance in % in the Y-axis and wavenumber in cm-1 in the X-axis).

Fig. 45 depicts the FTIR spectra of the sample 1010/1 described in the example 8 (transmittance in % in the Y-axis and wavenumber in cm-1 in the X-axis).

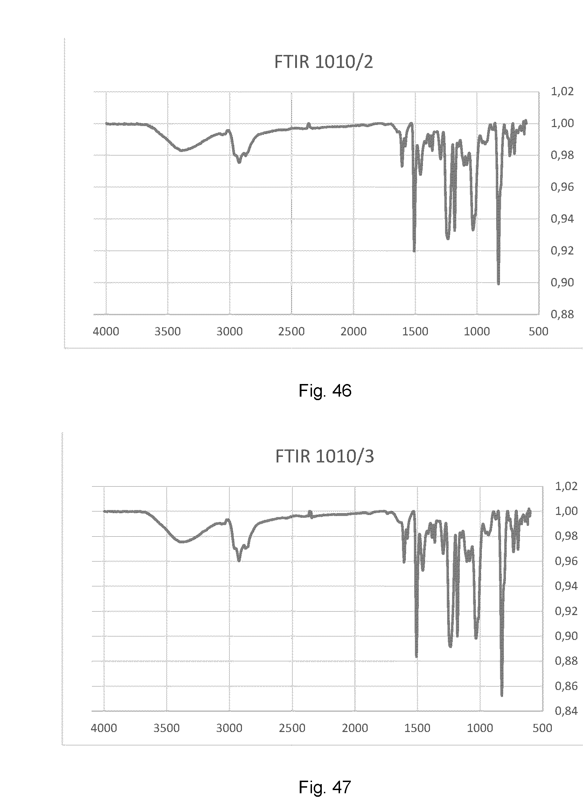

Fig. 46 depicts the FTIR spectra of the sample 1010/2 described in the example 8 (transmittance in % in the Y-axis and wavenumber in cm-1 in the X-axis).

Fig. 47 depicts the FTIR spectra of the sample 1010/3 described in the example 8 (transmittance in % in the Y-axis and wavenumber in cm-1 in the X-axis).

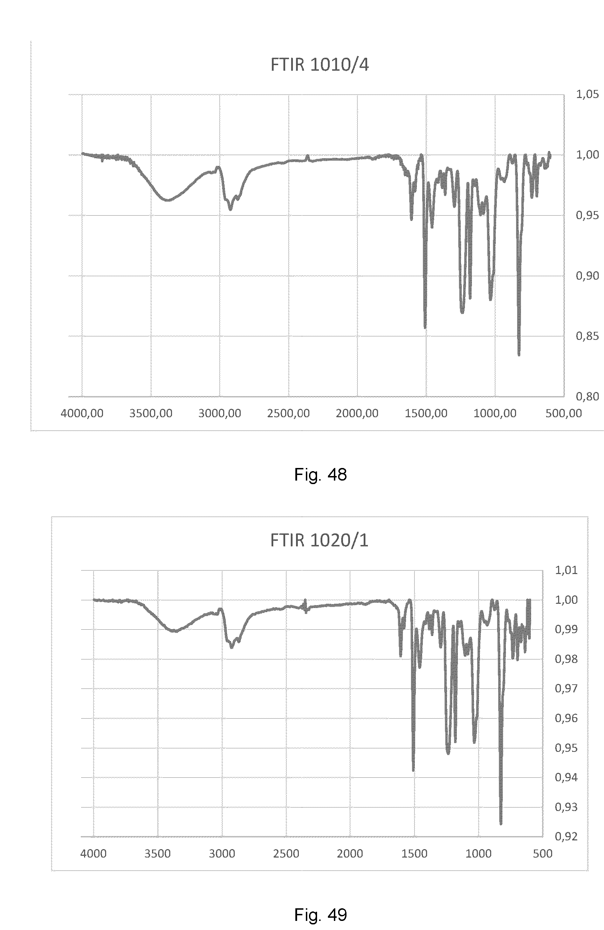

Fig. 48 depicts the FTIR spectra of the sample 1010/4 described in the example 8 (transmittance in % in the Y-axis and wavenumber in cm-1 in the X-axis).

Fig. 49 depicts the FTIR spectra of the sample 1020/1 described in the example 8 (transmittance in % in the Y-axis and wavenumber in cm-1 in the X-axis).

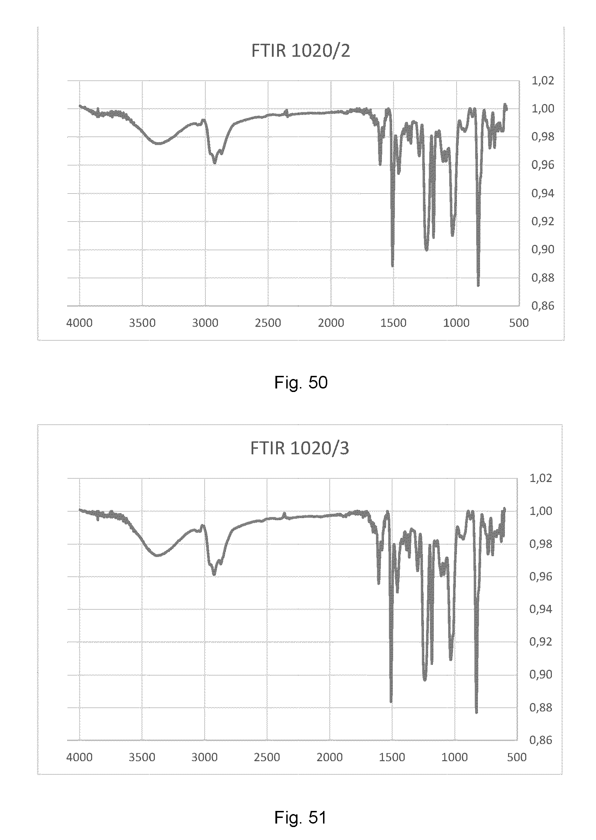

Fig. 50 depicts the FTIR spectra of the sample 1020/2 described in the example 8 (transmittance in % in the Y-axis and wavenumber in cm-1 in the X-axis).

Fig. 51 depicts the FTIR spectra of the sample 1020/3 described in the example 8 (transmittance in % in the Y-axis

EP 4 588 975 A1

and wavenumber in cm-1 in the X-axis).

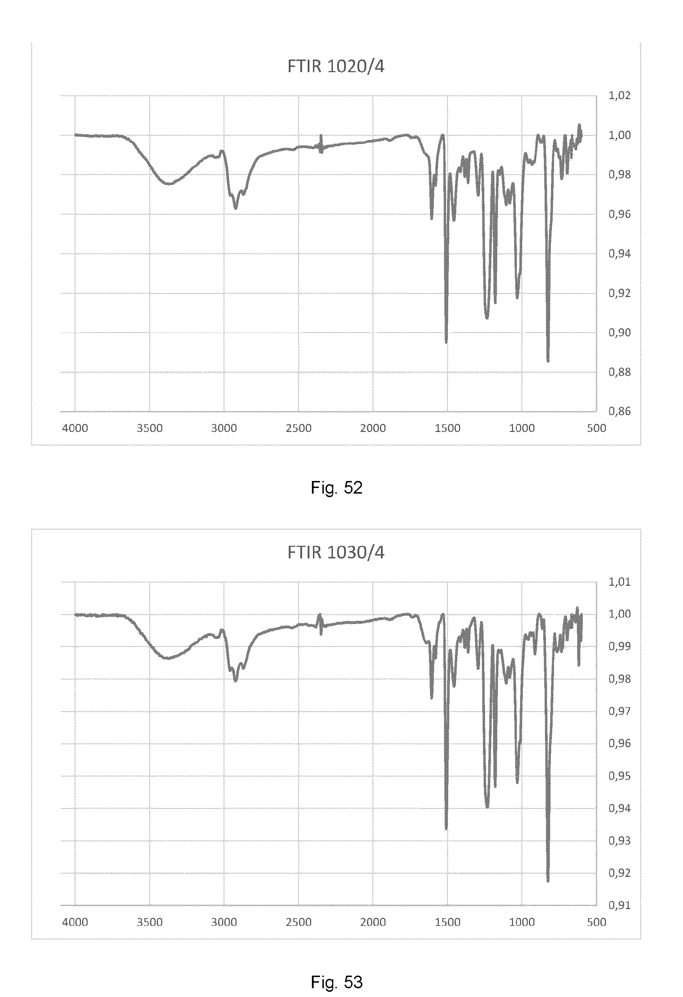

Fig. 52 depicts the FTIR spectra of the sample 1020/4 described in the example 8 (transmittance in % in the Y-axis and wavenumber in cm-1 in the X-axis).

Fig. 53 depicts the FTIR spectra of the sample 1030/4 described in the example 8 (transmittance in % in the Y-axis and wavenumber in cm-1 in the X-axis).

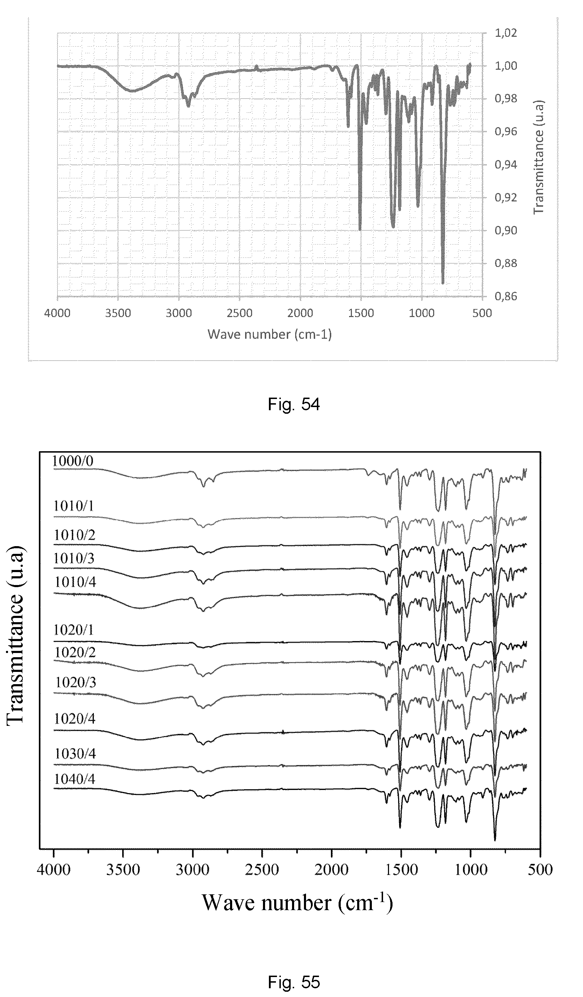

Fig. 54 depicts the FTIR spectra of the sample 1040/4 described in the example 8 (transmittance in % in the Y-axis and wavenumber in cm-1 in the X-axis).

Fig. 55 depicts a comparison of the FTIR spectra of the samples described in the example 8 (transmittance in % in the Y-axis and wavenumber in cm-1 in the X-axis).

### Example 15 - DMTA analysis of samples containing niobium nanoparticles

The samples described in example 8 as 1010/1 were analyzed in DMTA (Dynamic Mechanical Thermal Analysis) in quadruplicate and the results are shown below in the Table 44:

Table 44 - DMTA results for sample 1010/1 at 1 Hz frequency:

| Frequency (1Hz) | | | | | |
|---|---|---|---|---|---|
| Sample | E' (MPa) | E" (MPa) | Tan$\delta$ (u.a.) | Tg (Tan$\delta$) (°C) | Tg (E") (°C) |
| 1010_1_1 | 599.6 | 90.8 | 0.7591 | 90.5 | 81.7 |
| 1010_1_2 | 592.2 | 60.6 | 0.6899 | 90.9 | 80.2 |
| 1010_1_3 | 575.9 | 57.0 | 0.6870 | 92.1 | 81.3 |
| 1010_1_4 | 684.8 | 72.14 | 0.6941 | 91.2 | 79.4 |
| **Mean** | 613.14 | 70.14 | 0.71 | 91.17 | 80.65 |
| **Standard Deviation** | 48.78 | 15.19 | 0.03 | 0.65 | 1.05 |
| **CV** | 8% | 22% | 5% | 1% | 1% |

Table 45 - Activation energy results for sample 1010/1:

| | Activation energy (kJ/mol) |
|---|---|
| 1010_1_1 | 373.62 |
| 1010_1_2 | 371.30 |
| 1010_1_3 | 378.70 |
| 1010_1_4 | 371.31 |
| **Mean** | 373.73 |
| **Standard Deviation** | 3.49 |
| **CV** | 1% |

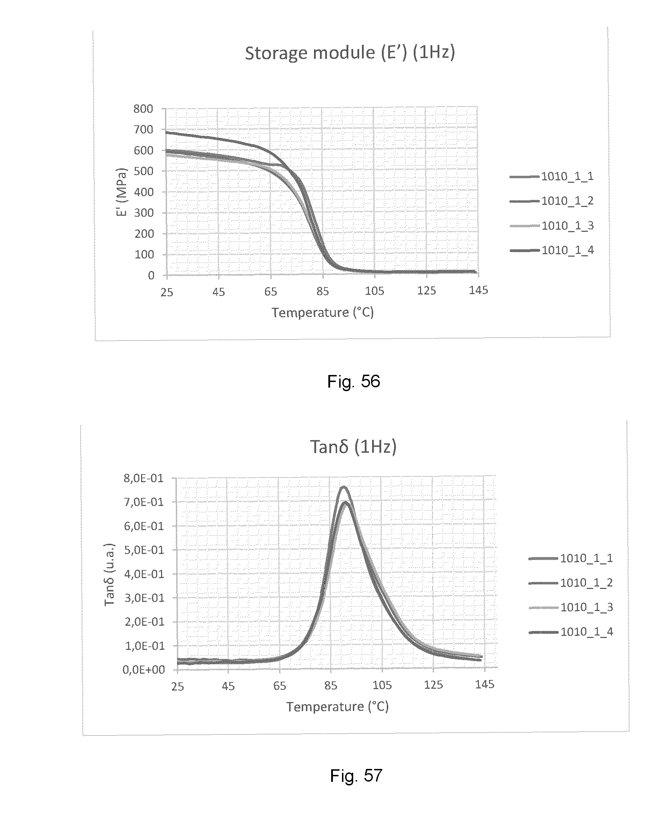

The results of sample 1010/1 are further illustrated in Figs. 56, 57 and 58.

Fig. 56 depicts storage modulus (E') curve of the sample 1010/1 as a function of temperature.

Fig. 57 depicts tangent delta (tan d) curve of the sample 1010/1 as a function of temperature.

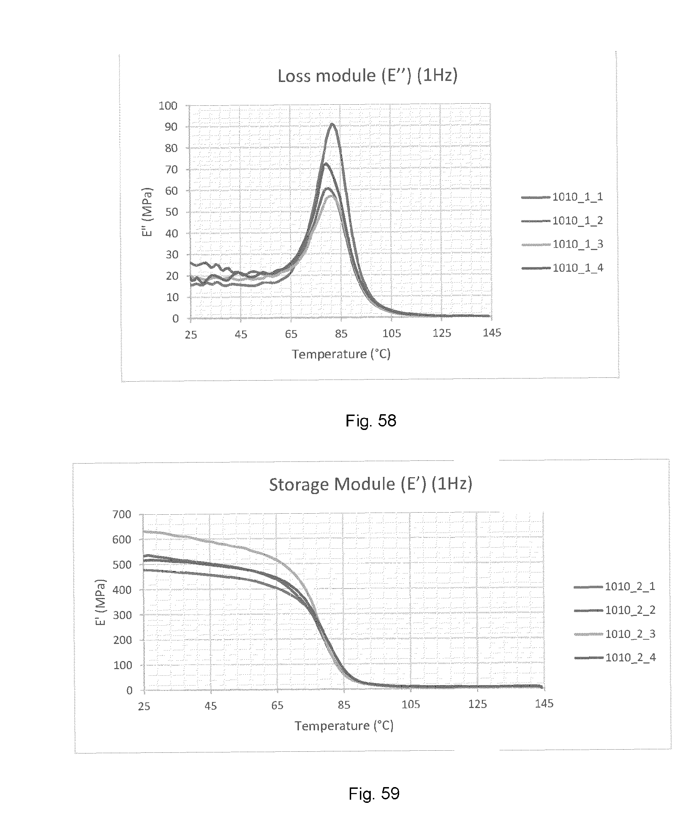

Fig. 58 depicts loss modulus (E") curve of the sample 1010/1 as a function of temperature.

The samples described in example 8 as 1010/2 were also analyzed in DMTA (Dynamic Mechanical Thermal Analysis) in quadruplicate and the results are shown below in Tables 43 and 44:

Table 46 - DMTA results for sample 1010/2 at 1 Hz frequency:

| Frequency (1Hz) | | | | | |
|---|---|---|---|---|---|
| Sample | E' (MPa) | E" (MPa) | Tan$\delta$ (u.a.) | Tg (Tan$\delta$) (°C) | Tg (E") (°C) |
| 1010_2_1 | 477.8 | 58.3 | 0.7104 | 89.5 | 80.7 |
| 1010_2_2 | 535.6 | 53.9 | 0.6620 | 89.0 | 78.4 |

(continued)

| Frequency (1Hz) | | | | | |
|---|---|---|---|---|---|
| Sample | E' (MPa) | E" (MPa) | Tan$\delta$ (u.a.) | Tg (Tan$\delta$) (°C) | Tg (E") (°C) |
| 1010_2_3 | 631.4 | 72.2 | 0.6919 | 88.1 | 78.0 |
| 1010_2_4 | 517.5 | 56.73 | 0.7074 | 89.5 | 80.3 |
| **Mean** | 540.59 | 60.29 | 0.69 | 89.03 | 79.34 |
| **Standard Deviation** | 65.18 | 8.14 | 0.02 | 0.66 | 1.38 |
| **CV** | 12% | 14% | 3% | 1% | 2% |

**Table 47** - DMA results for sample 1010/2 at 5 Hz frequency:

| Frequency (5Hz) | | | | | |
|---|---|---|---|---|---|
| Sample | E' (MPa) | E" (MPa) | Tan$\delta$ (u.a.) | Tg (Tan$\delta$) (°C) | Tg (E") (°C) |
| 1010_2_1 | 488.3 | 55.1 | 0.7406 | 89.5 | 80.7 |
| 1010_2_2 | 546.1 | 47.3 | 0.6936 | 89.0 | 78.4 |
| 1010_2_3 | 644.9 | 64.6 | 0.7203 | 88.1 | 78.0 |
| 1010_2_4 | 527.7 | 53.1 | 0.7369 | 89.5 | 80.3 |
| **Mean** | 551.73 | 55.00 | 0.72 | 89.03 | 79.34 |
| **Standard Deviation** | 66.62 | 7.18 | 0.02 | 0.66 | 1.38 |
| **CV** | 12% | 13% | 3% | 1% | 2% |

**Table 48** - Activation energy results for sample 1010/2:

| | Activation energy (kJ/mol) |
|---|---|
| 1010_2_1 | 378.34 |
| 1010_2_2 | 367.09 |
| 1010_2_3 | 360.61 |
| 1010_2_4 | 394.00 |
| **Mean** | 375.01 |
| **Standard Deviation** | 14.62 |
| **CV** | 4% |

The results of sample 1010/2 are further illustrated in Figs. 59, 60 and 61.

Fig. 59 depicts storage modulus (E') curve of the sample 1010/2 as a function of temperature.

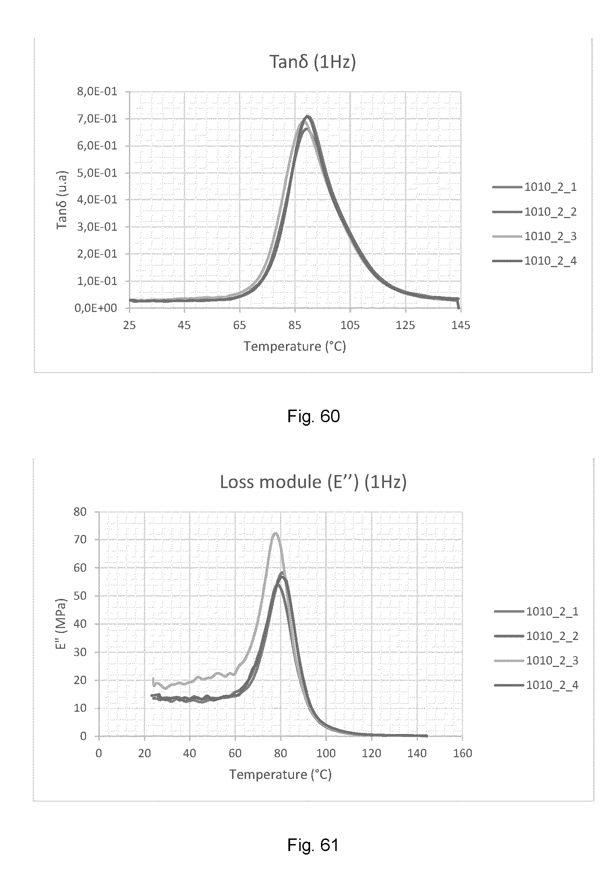

Fig. 60 depicts tangent delta (tan d) curve of the sample 1010/2 as a function of temperature.

Fig. 61 depicts loss modulus (E") curve of the sample 1010/2 as a function of temperature.

The samples described in example 8 as 1010/3 were analyzed in DMTA (Dynamic Mechanical Thermal Analysis) in quadruplicate and the results are shown below in Table 49:

**Table 49** - DMA results for sample 1010/3 at 1 Hz frequency:

| Frequency (1Hz) | | | | | |
|---|---|---|---|---|---|
| Sample | E' (MPa) | E" (MPa) | Tan$\delta$ (u.a.) | Tg (°C, Tan$\delta$) | Tg (°C, E") |
| 1010_3_1 | 569.00 | 63.11 | 0.67 | 85.54 | 75.76 |
| 1010_3_2 | 627.63 | 68.16 | 0.66 | 87.47 | 77.68 |
| 1010_3_3 | 576.71 | 58.56 | 0.65 | 87.55 | 75.81 |
| 1010_3_4 | 640.04 | 62.65 | 0.67 | 87.82 | 78.04 |

(continued)

| Frequency (1Hz) | | | | | |
|---|---|---|---|---|---|
| Sample | E' (MPa) | E" (MPa) | Tanδ (u.a.) | Tg (°C, Tanδ) | Tg (°C, E") |
| Mean | 603.34 | 63.12 | 0.66 | 87.10 | 76.82 |
| Standard Deviation | 35.71 | 3.93 | 0.01 | 1.05 | 1.21 |
| CV (%) | 6% | 6% | 1% | 1% | 2% |

Table 50 - Activation energy results for sample 1010/3:

| | Activation energy (kJ/mol) |
|---|---|
| 1010_3_1 | 370.378 |
| 1010_3_2 | 374.638 |
| 1010_3_3 | 394.617 |
| 1010_3_4 | 386.174 |
| Mean | 381.45 |
| Standard Deviation | 11.03 |
| CV (%) | 3% |

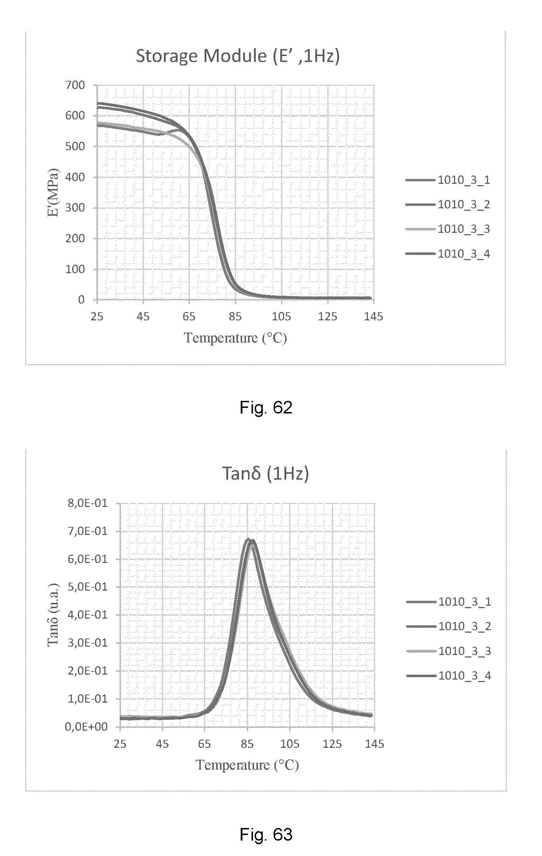

The results of sample 1010/3 are further illustrated in Figs. 62, 63 and 64.

Fig. 62 depicts storage modulus (E') curve of the sample 1010/3 as a function of temperature.

Fig. 63 depicts tangent delta (tan d) curve of the sample 1010/3 as a function of temperature.

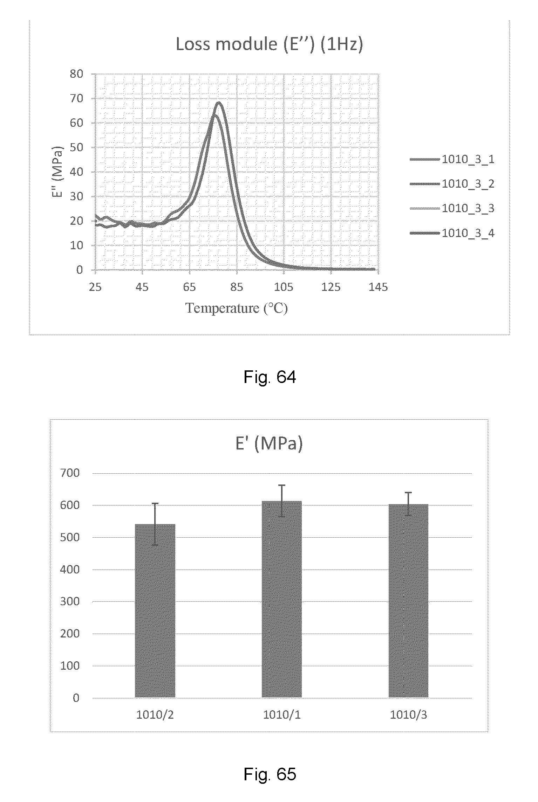

Fig. 64 depicts loss modulus (E") curve of the sample 1010/3 as a function of temperature.

**Example 16 - Comparison of DMTA analyses of samples containing niobium nanoparticles**

Based on the results shown in example 15, the means of the storage modulus (E'), loss modulus (E") and glass transition temperature ($T_g$) for each sample were found. The tables with the comparative data are illustrated below:

Table 51 - storage modulus (E') values for each sample:

| Condition | E' (MPa) | Standard Deviation |
|---|---|---|
| 1010/2 | 540.5891 | 65.17756 |
| 1010/1 | 613.1392 | 48.78371 |
| 1010/3 | 603.3448 | 35.70892 |

Table 52 - loss modulus (E") values for each sample:

| Condition | E" (MPa) | Standard Deviation |
|---|---|---|
| 1010/1 | 70.13892 | 15.18701 |
| 1010/2 | 60.28967 | 8.139677 |
| 1010/3 | 63.11976 | 3.932793 |

Table 53 - glass transition temperature ($T_g$) values for each sample:

| Condition | Tg (°C) | Standard Deviation |
|---|---|---|
| 1010/1 | 91.17177 | 0.647087 |
| 1010/2 | 89.02651 | 0.659468 |
| 1010/3 | 87.09611 | 1.04633 |

Fig. 65 shows a bar graph of the mean storage modulus (E') for each sample described in the example 15.

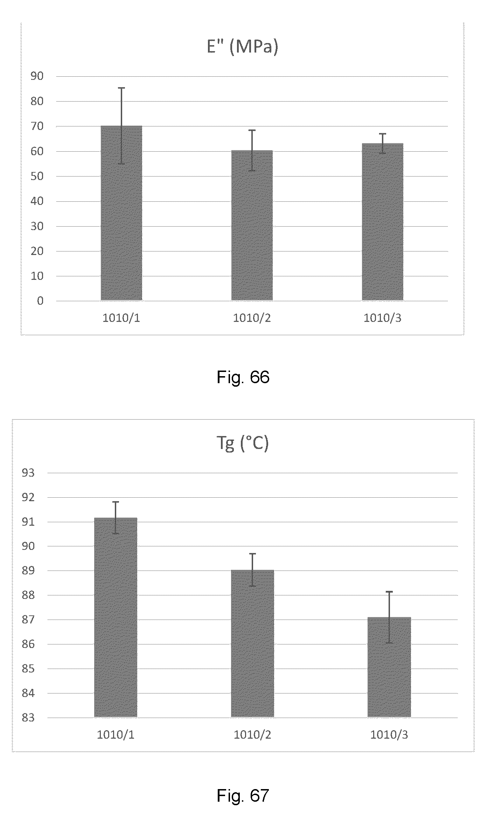

Fig. 66 shows a bar graph of the mean loss modulus (E") for each sample described in the example 15.

Fig. 67 shows a bar graph of the mean glass transition temperature ($T_g$) for each sample described in the example 15.

From the DMTA analysis of example 16, it is possible to conclude that the incorporation of nanoparticles at a low concentration (ppm range) was able to substantially modify the mechanical properties of the polymer, as can be seen from the tan delta results. Tan delta can be understood as the potential of energy dissipation of a material. The higher the tan delta, the more dissipative the material is. On the other hand, the lower the tan delta, the more elastic the material acts when a load is applied, thus having more potential to store load. Thus, modifying the tan delta (both increasing and decreasing) can modulate a material to become more suitable for different applications, e.g., for structural applications, a lower tan delta may be preferred.

**Example 17 - Preparation process of nanoparticles of Niobium pentoxide**

In the present example, several embodiments of nanoparticle preparations of Niobium pentoxide were obtained, with purity greater than 99%. Commercial Niobium pentoxide, with the particle size distribution described in Table 54, was pre-comminuted in a high-energy mill containing Yttria-stabilized zirconia spheres with a diameter of 400 $\mu$m, in a liquid medium and the pH adjusted to 6.6. The mill rotation speed was 3500 rpm and the particle milling was carried out at a temperature below 40. Table 4 shows the particle size distribution (PSD) of incoming (commercial product) and outgoing niobium pentoxide from a pre-comminution step.

**Table 54 -** Input PSD (commercial product) and output after pre-comminution.

| PSD for Niobium pentoxide | | |
|---|---|---|
| % cumulative | diameter [$\mu$m] | |
| | Input | Output |
| 1.13 | 2.130 | 0.991 |
| 2.97 | 4.030 | 1.450 |
| 4.87 | 6.720 | 1.880 |
| 6.22 | 8.680 | 2.130 |
| 10.00 | 13.400 | 2.770 |
| 12.72 | 16.400 | 3.120 |
| 15.03 | 18.700 | 3.550 |
| 17.96 | 21.200 | 4.030 |
| 21.73 | 24.100 | 4.580 |
| 26.56 | 27.400 | 5.210 |
| 32.68 | 31.100 | 6.120 |
| 40.22 | 35.300 | 7.440 |
| 50.00 | 40.600 | 8.880 |
| 59.08 | 45.600 | 10.160 |
| 69.48 | 51.800 | 12.700 |
| 79.47 | 58.900 | 16.500 |
| 88.11 | 66.900 | 21.200 |
| 94.59 | 76.000 | 27.400 |
| 98.55 | 86.400 | 35.300 |
| 99.99 | 98.100 | 40.100 |

The mean specific surface area S ($m^2$/g) of the particles after the pre-comminution step was 0,32 $m^2$/g.

In one embodiment, the pre-comminuted particles were then fed to a high-energy mill, applying conditions like those described in example 5, but with Zr spheres of 200 $\mu$m and milling for different times, until each nanoparticle preparation was obtained. Three different nanoparticle preparations were obtained, each with a defined particle size distribution as described in Table 55.

**Table 55** - Particle size distribution of three different preparations (C, D and E) of nanoparticles of Niobium pentoxide.

| PSD for Niobium pentoxide | | | |
|---|---|---|---|
| % cumulative | diameter [$\mu$m] | | |
| | C | D | E |
| 1.13 | 0.074 | 0.021 | 0.009 |
| 2.97 | 0.082 | 0.024 | 0.010 |
| 4.87 | 0.098 | 0.027 | 0.012 |
| 6.22 | 0.104 | 0.029 | 0.012 |
| 10.00 | 0.119 | 0.033 | 0.014 |
| 12.72 | 0.131 | 0.036 | 0.016 |
| 15.03 | 0.138 | 0.038 | 0.017 |
| 17.96 | 0.145 | 0.040 | 0.017 |
| 21.73 | 0.159 | 0.044 | 0.019 |
| 26.56 | 0.175 | 0.048 | 0.021 |
| 32.68 | 0.192 | 0.053 | 0.023 |
| 40.22 | 0.212 | 0.058 | 0.025 |
| 50.00 | 0.243 | 0.067 | 0.029 |
| 59.08 | 0.282 | 0.078 | 0.034 |
| 69.48 | 0.322 | 0.089 | 0.038 |
| 79.47 | 0.376 | 0.104 | 0.045 |
| 88.11 | 0.413 | 0.114 | 0.049 |
| 94.59 | 0.455 | 0.125 | 0.054 |
| 98.55 | 0.550 | 0.152 | 0.066 |
| 99.99 | 0.747 | 0.206 | 0.089 |

**Example 18 - Preparation process of nanoparticle preparation of Titanium dioxide**

In this embodiment, a batch of 1.125 kg of TiO2 particles with particle size distribution of D90 1.320 $\mu$m, D50 0.6098 $\mu$m and D10 0.153 $\mu$m was fed to a high energy mill with 5 liters of water and containing 3.65kh/l 0.2-0.4mm zeta spheres. The milling parameters were Tmax 60°C, solids content 18.36%. Operating the high-energy mill for several cycles, from 1 to 8 cycles of 1 hour each, at a pressure of 1.1 to 1.2 bar, pump speed of 90 min-1, flow rate of 51 kg slurry/h, agitator speed of 3700 min-1, inlet material temperature varying between 21.3°C and 37.1°C and outlet material temperature varying between 22.4°C and 49.2°C in the respective cycles, the raw energy was 2.4 kW and the milling energy was from 1.8 to 14.4 kWh in the respective cycles. The particle size distribution profile obtained is described in Table 56 below:

**Table 56** - particle size distribution profile obtained after multiple comminution cycles under the conditions indicated above.

| cycles | 0 | 1 | 2 | 3 | 4 | 5 |
|---|---|---|---|---|---|---|
| D10 ($\mu$m) | 0.253 | 0.189 | 0.160 | 0.157 | 0.162 | 0.148 |
| D50 ($\mu$m) | 0.608 | 0.485 | 0.315 | 0.292 | 0.298 | 0.239 |
| D90 ($\mu$m) | 1.320 | 0.970 | 0.747 | 0.693 | 0.562 | 0.402 |

For cooling, the parameters were inlet temperatures of 7.3°C and 11.4°C, respectively in the milling chamber, mechanical seal, circulation tank and chiller, each of these stages with a flow rate of 1000 liters per hour of cooling water, making up 4000 liters per hour.

**Example 19 - Testing the degree of crystallinity of nanoparticles of Niobium pentoxide**

The inventors studied the characteristics of the nanoparticle preparation of Niobium pentoxide resulting from different milling times according to the process described in example 17.

The samples were analyzed by transmission microscopy techniques in order to obtain a particle diameter histogram and by X-ray diffraction technique to obtain a structural characterization. The analysis of samples by X-ray diffraction proved that there are significant changes in the structural characteristics such as degree of crystallinity (%) and crystallite size for the samples subjected to different milling times.

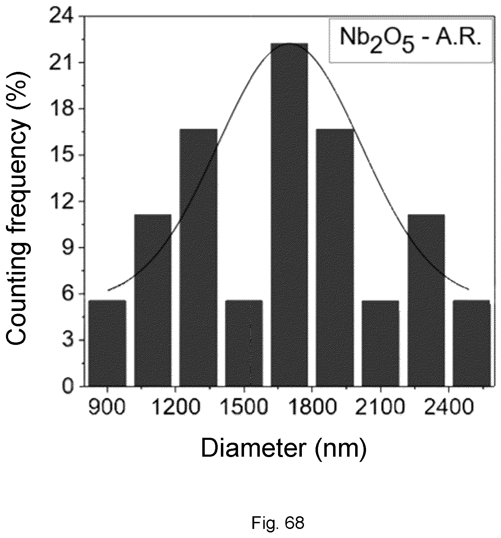

Fig. 68 illustrates the size histogram obtained from transmission microscopy analysis of the sample of as-received Niobium pentoxide particles (termed A.R.).

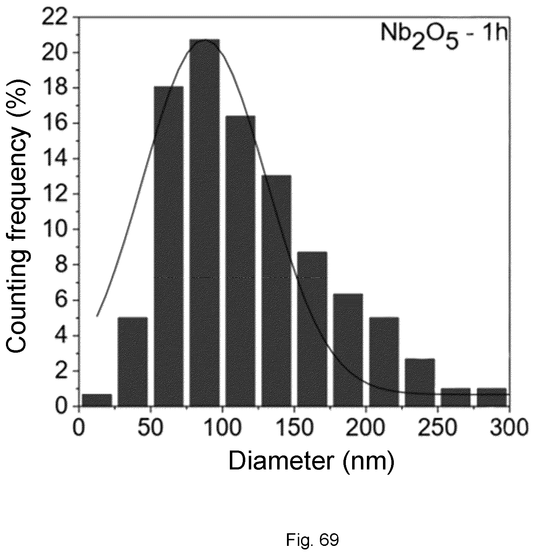

Fig. 69 illustrates the size histogram obtained from the transmission microscopy analysis of the sample of particles of Niobium pentoxide subjected to milling for 1h.

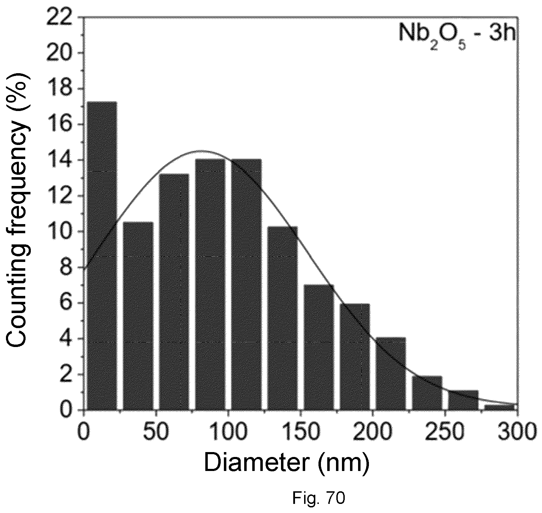

Fig. 70 illustrates the size histogram obtained from the transmission microscopy analysis of the sample of particles of Niobium pentoxide subjected to milling for 3h.

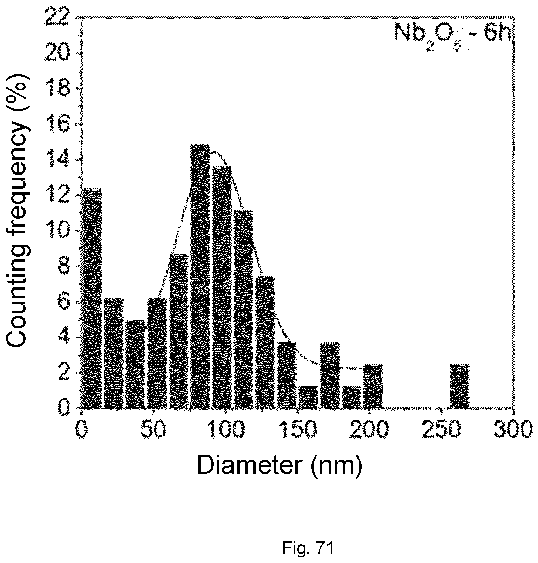

Fig. 71 illustrates the size histogram obtained from the transmission microscopy analysis of the sample of particles of Niobium pentoxide subjected to milling for 6h.

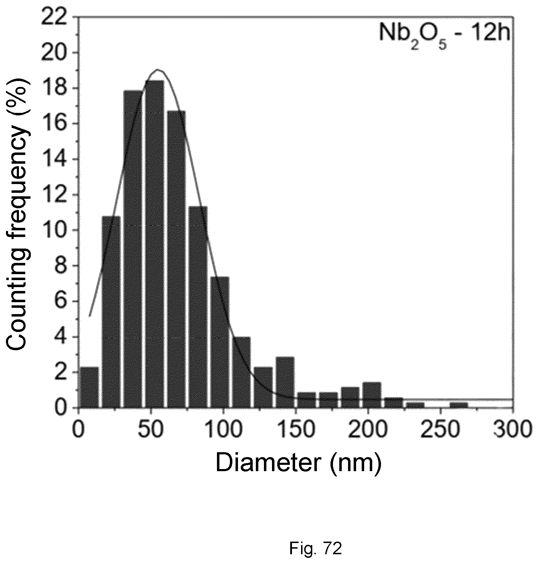

Fig. 72 illustrates the size histogram obtained from the transmission microscopy analysis of the sample of particles of Niobium pentoxide subjected to milling for 12h.

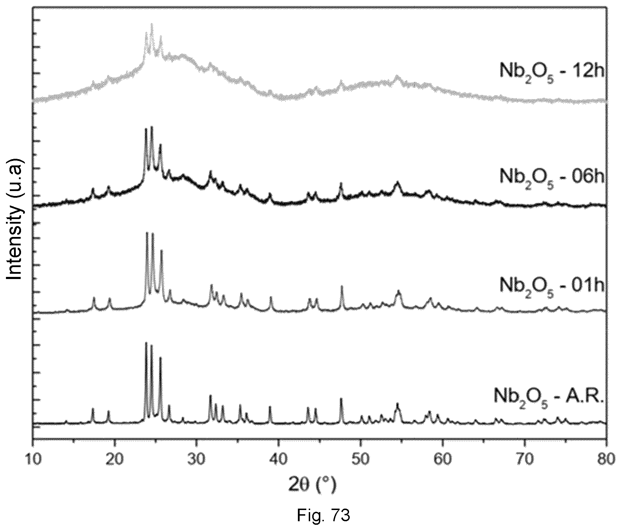

Fig. 73 illustrates a comparison of X-ray diffractograms that demonstrate significant changes in the crystal phase for samples of particles of Niobium pentoxide subjected to different milling times (i.e., 1h, 3h, 6h and 12h).

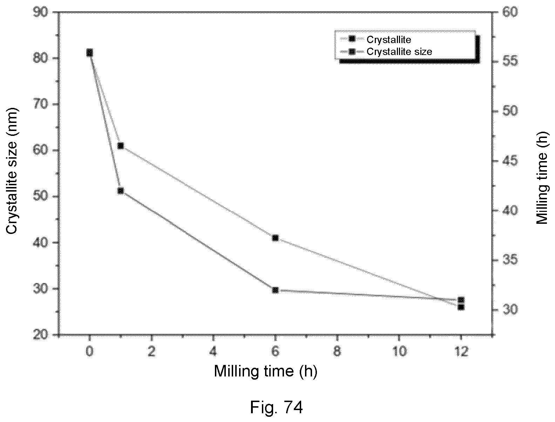

Fig. 74 shows a graph of crystallinity (%) and crystallite size (nm) and milling time (h).

The A.R. sample consisted of 81% monoclinic crystal phase. On the other hand, Fig. 74 shows that the crystallinity (%) and crystallite size (nm) decrease as the milling time increases. The data show an exponential decay of the crystallinity (%) and crystallite size (nm), with the crystallite size (nm) appearing to reach an apparent plateau after 6h of milling. The reduction in crystallinity shows a behavior similar to that of the crystallite size, however, it still shows a significant variation after the 6-hour milling period. Regarding crystallinity, 26% of monoclinic phase can be observed for the sample subjected to 12 hours of milling.

The samples with more amorphous characteristics (e.g., the 12h sample) showed an even more significant improvement in the enhancement of the polymer properties. Significant improvements were observed as the degree of amorphization increased, i.e., at least 19% degree of amorphization < at least 39% degree of amorphization < at least 55% degree of amorphization < at least 70% degree of amorphization. An even more significant modulation of the polymer properties was observed for a degree of amorphization of 74%.

**Example 20 - Preparation of epoxy resin samples with nanoparticles**

To prepare test specimens to be characterized, niobium pentoxide nanoparticles with 12h of milling were weighed to reach concentrations of 50 ppm, 100 ppm, 250 ppm and 500 ppm.

The nanoparticle preparations were added to methyl ethyl ketone (MEK) and the suspension was sonicated for 15 minutes.

While the MEK + nanoparticles colloidal suspension was kept under sonication, the epoxy resin was under constant rotational stirring under a temperature above Tg in a reactor.

Then, the MEK + nanoparticles suspension is deposited in the reactor containing the resin under stirring. The addition is made slowly and after 100% dilution the mixture remains under stirring for 30 minutes, maintaining heating.

Then the methyl ethyl ketone was removed under vacuum. Then the catalyst was included, which is a cycloaliphatic amino catalyst in the proportion of 70-30. In this way, the test specimens were obtained for the following characterizations.

**Example 21 - Dispersion capacity of nanoparticles of niobium pentoxide in polymeric matrix**

To verify the dispersion capacity of the nanoparticles, polymer samples containing nanoparticles obtained by milling for 12 hours using the ultramicrotomy technique were prepared. Before being sent to the ultramicrotome, samples of polymer matrices containing particles underwent cutting, trimming and semi-thin cutting before obtaining ultra-thin sections.

The ultra-thin sections have a thickness between 70-100nm, allowing the passage of the electron beam for the application of the transmission electron microscopy technique.

The ultra-thin sections are placed on a copper grid to be sent to the transmission electron microscopy apparatus. A JEOL JEM-1011 microscope with a maximum acceleration voltage of 100 kV was used for these analyses. However, to maximize the contrast of the images, the voltage used was 80 kV and in certain situations, 60 kV.

The images obtained are bright field, which means that the predominant contrast mechanism is mass-thickness. In other words, the higher the atomic number of the sample or the thicker a given region of the sample, the darker it appears in the image.

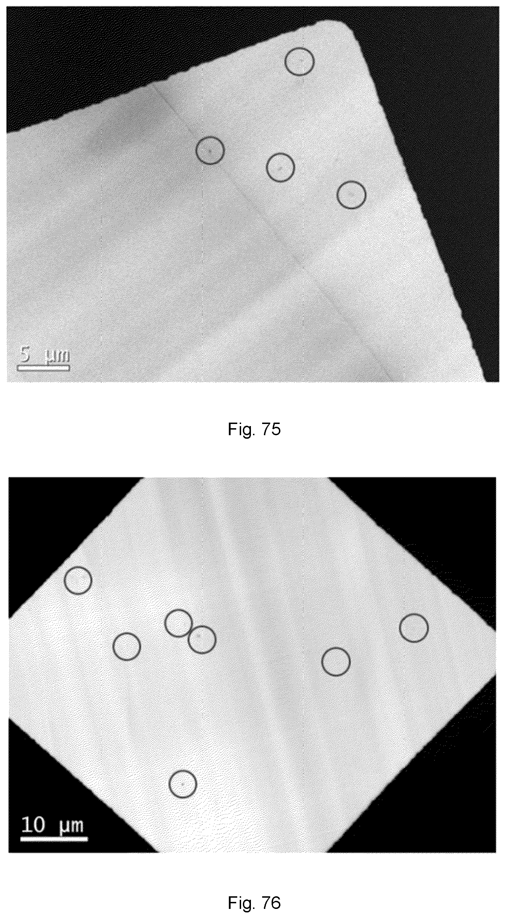

Fig. 75 shows particles of Niobium pentoxide highlighted in an ultra-thin section of the sample with 50 ppm.

Fig. 76 shows particles of Niobium pentoxide highlighted in an ultra-thin section of the sample with 100 ppm.

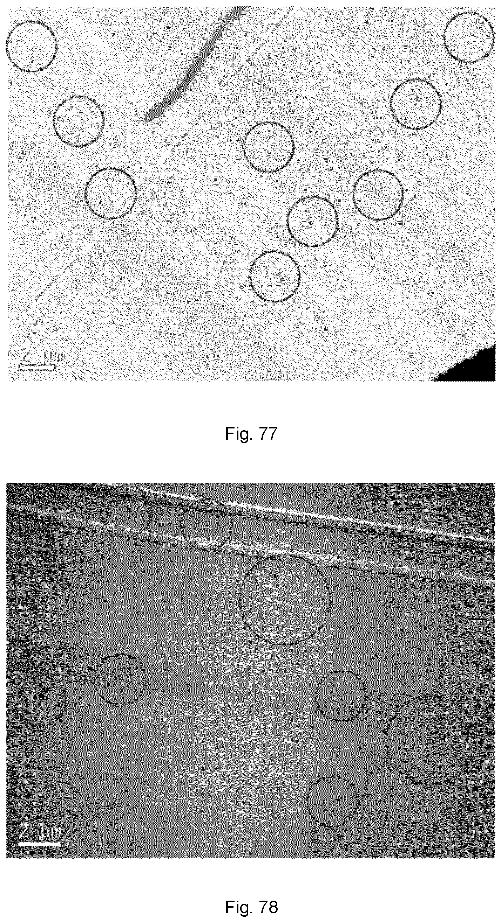

Fig. 77 shows particles of Niobium pentoxide highlighted in an ultra-thin section of the sample with 250 ppm.

Fig. 78 shows particles of Niobium pentoxide highlighted in an ultra-thin section of the sample with 500 ppm.

Figs. 75 to 78 show that there are well dispersed particles proportional to the concentration used.

Without wishing to be bound by theory, it is understood that the degree of crystallinity influences the dispersion capacity of a nanoparticle preparation in the volume of the polymer matrix. The preparation that was subjected to 12h milling showed an excellent dispersion capacity, as observed in the transmission microscopy results in the ultra-thin sections made with the ultramicrotomy technique. It is expected that particles with a higher degree of crystallinity will have a greater tendency to aggregate, consequently dispersing less uniformly in the volume of the polymer matrix and reducing the mean free path between the particles.

**Example 22 - Use of Nanoparticles of Niobium Pentoxide for Production of Friction Composite**

In order to prove that the tested nanoparticles modify properties in the most diverse types of polymers, additional tests were carried out on other polymers.

As an additional proof of concept, the incorporation of nanoparticles of Niobium pentoxide obtained from 12h milling in phenolic resin was tested to produce friction composites of automotive brake pad.

Firstly, different nanoparticle contents were tested, i.e., 0.1%, 0.7%, 1.0% and 2.0% m/m and, additionally, 3 dispersion and incorporation processes of the aforementioned nanoparticle preparation were tested, i.e., resin dilution in alcohol + nanoparticles, suspension in alcohol + nanoparticles and dry mixture + nanoparticles.

In 6.0 kg of total mixture, 5.5% was phenolic resin + nanoparticles (i.e., 94.5% were other raw materials commonly used in friction composites).

In an EIRICH mixer, two steps were performed. A first step with mixing of all components for 10 min and a second step that continued for 10 min, but with gradual addition in sub-steps (i.e., 2 min, 2 min, 2 min and 4 min).

After the mixing stage was completed, the material was pressed to form the friction material.

Table 57 illustrates each of the samples tested:

| V1 | Dry mix, without NP (baseline) |
|----|--------------------------------|
| V2 | diluted resin, without NP |
| V3 | diluted resin + 0.1% NP |
| V4 | diluted resin + 0.7% NP |
| V5 | diluted resin + 1.0% NP |
| V6 | diluted resin + 2.0% NP |
| V7 | alcohol + 2.0% NP |
| V8 | resin + 2.0% NP (dry) |

Spark and fire test was performed under the following conditions: Braking from 80 to 24 km/h, in 6s (deceleration 2.7 m/s$^2$); time between braking 90s. Repeat each braking 20 times.

During the test, it was observed that the samples containing nanoparticles of Niobium pentoxide in diluted resin showed a delay in the start of spark generation. In addition, there was a reduction in sparks during braking and a reduction in flames after braking.

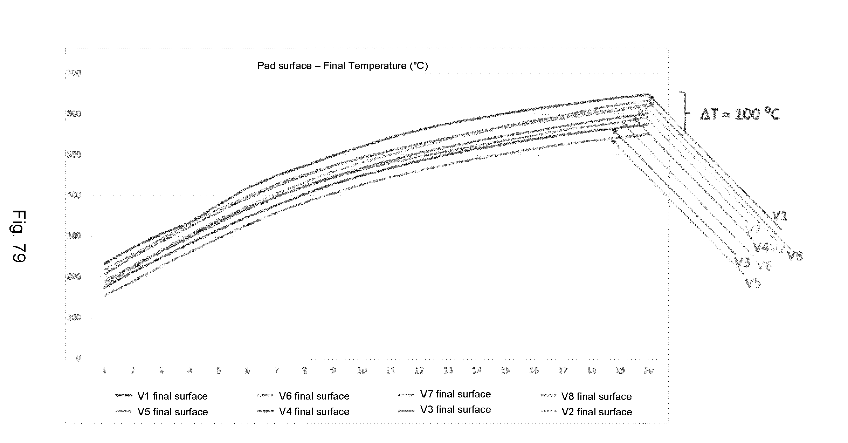

Fig. 79 shows a graph of the surface temperature of the brake pad at the end of each braking cycle for each of the tested samples. It can be seen that sample V5 showed the lowest final surface temperature, approximately 100°C less than sample V1 (reference).

An accelerated corrosion test of the friction material was also performed. The test conditions were as follows: 22h in an oven at 400°C → 2h in a 5% NaCl saline solution (thermal shock) → 6h in a refrigerator at -5°C. Repeat each cycle 10 times.

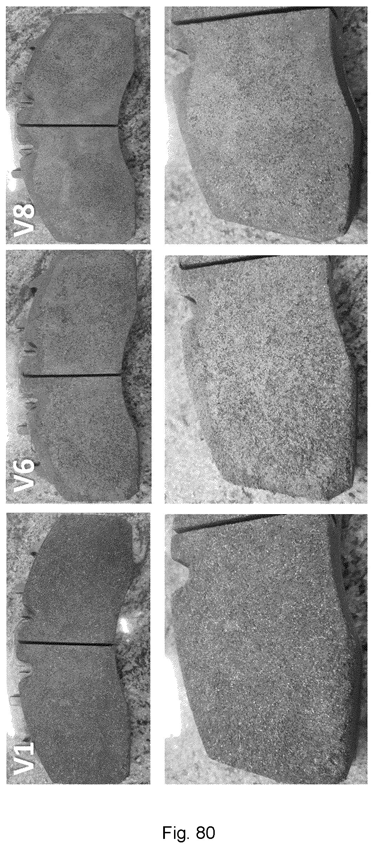

Fig. 80 shows photos of samples V1, V6 and V8 after 3 cycles of the accelerated corrosion test. It is possible to observe that samples V6 and V8, which have the addition of nanoparticles, showed greater corrosion resistance than the reference V1.

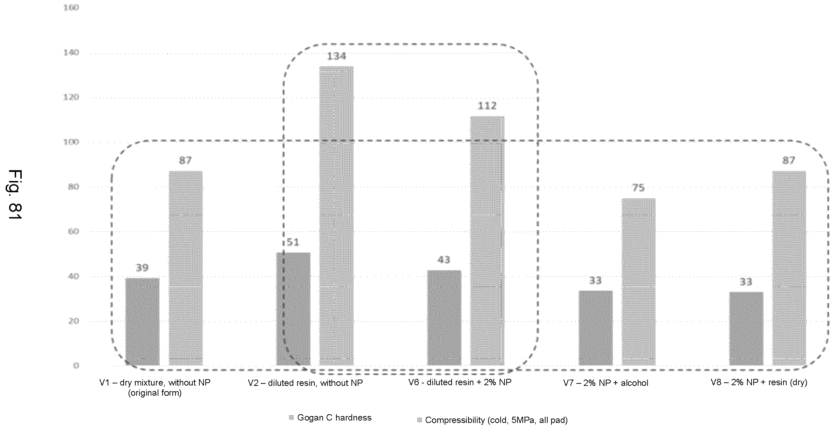

Finally, Fig. 81 shows a graph of the Gogan C hardness and cold compressibility test (5 MPa, whole pad) for the friction materials containing nanoparticles of Niobium pentoxide in phenolic resin.

Fig. 81 allows us to conclude that the diluted resin (V2 and V6) increases the hardness and compressibility of the material (reduces the stiffness of the bulk), as well as increases the porosity of the material.

Without wishing to be bound by theory, it is understood that the various improvements in properties in composites due to the simple decrease in particle size (the so-called "scaling effect"), is generally attributed to surface energy effects, since the specific surface area for a given mass of particles of the same material increases directly as the size decreases. On the other hand, what has been ignored up to the present moment is that the resulting number of smaller particles increases much more rapidly, so that what would seem to be a practically negligible mass of added particles to a person skilled in the art, in fact, is an immense number of particles and a system with such an huge number of particles can have enormous processing difficulties, often attributed directly to good dispersibility, disturbing the delicate balance between the best performance and economic viability. The importance of considering small amounts of smaller and well dispersed particles within a polymer matrix can be highlighted in terms of the number of particles required to achieve the greatest gain of the desired property for a given particle size, a given mean free path between the closest particles.

Still without the desire to be tied to theory, it is understood that the same positive relationship between the mean free path and the number of particles, as well as between the mean free path and the size of the particles, are observed for both the tensile strength limit and the storage modulus, suggesting that the texturing of the matrix around the particles increases with their size. However, the dependence of stiffness on particle number was shown to be contrary to strength, suggesting that if the mean free path decreases (due to a greater number of particles in the polymer matrix), the expected forced orientation of the polymer chains apparently generates easier sliding, resulting in a more flexible composite but with increased strength.

Those skilled in the art will appreciate the knowledge provided herein and will be able to reproduce the invention in the embodiments provided and in other variants and alternatives, covered by the scope of the following claims.

## Claims

1. Nanoparticle preparation **characterized in that** it comprises a nanoparticle filler, wherein said filler shows a degree of crystallinity below 81%.

2. Nanoparticle preparation according to claim 1, **characterized in that** the nanoparticle filler comprises a degree of amorphization of at least 19%.

3. Nanoparticle preparation according to claim 1, **characterized in that** the nanoparticle filler preferably comprises a degree of crystallinity below 61%, preferably a degree of crystallinity below 45% and even more preferably a degree of crystallinity below 30%.

4. Nanoparticle preparation according to claim 1, **characterized in that** the nanoparticle filler preferably comprises a degree of amorphization of at least 39%, preferably a degree of amorphization of at least 55% and even more preferably a degree of amorphization of at least 70%.

5. Nanoparticle preparation according to claim 1, **characterized in that** said nanoparticles are composed of metals, transition metals, rare earths, oxides thereof or combinations thereof.

6. Nanoparticle preparation according to claim 5, **characterized in that** said nanoparticles are composed of graphene oxide, niobium pentoxide, titanium dioxide, or combinations thereof.

7. Nanoparticle preparation according to claim 6, **characterized in that** said nanoparticles are composed of niobium pentoxide, titanium dioxide, or combinations thereof.

8. Nanoparticle preparation according to claim 7, **characterized in that** said nanoparticles are composed of niobium pentoxide.

9. Nanoparticle preparation according to claim 7, **characterized in that** said nanoparticles are composed of titanium dioxide.

10. Nanoparticle preparation according to claim 8, **characterized in that** said nanoparticles of niobium pentoxide comprise a particle size distribution profile: d10: between 14 and 110 nm; d50: between 29 and 243 nm; and d90: between 89 and 747 nm.

11. Nanoparticle preparation according to claim 9, **characterized in that** said nanoparticles of titanium dioxide comprise a particle size distribution profile: d10 from 148 to 189nm; d50 from 239 to 485m; d90 from 402 to 970nm.

12. Premix **characterized in that** it comprises a nanoparticle preparation as defined in claim 1 and at least one monomer.

13. Premix according to claim 12, **characterized in that** said nanoparticle preparation comprises a degree of crystallinity below 81%.

14. Premix according to claim 12, **characterized in that** said nanoparticle preparation comprises a degree of amorphization of at least 19%.

15. Premix according to claim 12, **characterized in that** the monomer is a synthetic polymer selected from the group consisting of epoxy resin, phenolic resin, polymethyl methacrylate (acrylic), polystyrene, polyvinyl chloride (PVC), polyethylene, polypropylene or combinations thereof or natural polymers selected from the group consisting of rubber, silk, wool, cellulose, peptides, proteins, nucleic acid chains, or combinations thereof.

16. Premix according to claim 15, **characterized in that** the monomer is an epoxy resin polymer or phenolic resin.

17. Method for modulating the chemical and/or mechanical properties of a polymer **characterized in that** it comprises at least one step of incorporating the nanoparticle preparation as defined in claim 1 into the composition of said polymer.

18. Method according to claim 17, **characterized in that** the step of incorporating the nanoparticle preparation results in a nanoparticle concentration in the range of tens to hundreds of ppm in relation to the polymer.

19. Method according to claim 17, **characterized in that** the chemical property is the crystal structure of said polymer.

20. Method according to claim 17, **characterized in that** the mechanical property is the storage modulus (E'), loss modulus (E") or loss factor (tan $\delta$) or glass transition temperature ($T_g$) of the polymer.

21. Process for obtaining a modified polymer **characterized in that** it comprises at least one step of incorporating the nanoparticle preparation as defined in claim 1 during at least one step of polymerization of said polymer.

22. Process according to claim 21, **characterized in that** the step of incorporating the nanoparticle preparation results in a nanoparticle concentration in the range of tens to hundreds of ppm in relation to the polymer.

23. Modified polymer **characterized in that** it comprises the nanoparticle preparation as defined in claim 1.

24. Modified polymer according to claim 23, **characterized in that** it is obtained by the process as defined in claim 21.

25. Polymer according to claim 23, **characterized in that** it comprises a concentration of the nanoparticle preparation in the range of tens to hundreds of ppm in relation to the polymer.

26. Polymer according to claim 25, **characterized in that** it comprises a concentration of the nanoparticle preparation in the range of 50 to 500 ppm.

27. Polymer according to claim 23, **characterized in that** it comprises matrix composed of epoxy resin, phenolic resin, polymethyl methacrylate (acrylic), polystyrene, polyvinyl chloride (PVC), polyethylene, polypropylene, or combinations thereof or natural polymers selected from the group consisting of rubber, silk, wool, cellulose, peptides, proteins, nucleic acid chains, or combinations thereof.

28. Polymer according to claim 27, **characterized in that** said matrix is composed of epoxy resin or phenolic resin.

A

Fig. 1

A

Fig. 2

A

Fig. 3

B

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

A                                                    B

Fig. 21

Fig. 22

Fig. 23

Fig. 24

Fig. 25

Fig. 26

Fig. 27

Fig. 28

Fig. 29

Fig. 30

Fig. 31

Mean E' 1020/1

Mean D. Tan 1020/1

A

B

Fig. 32

Mean E' 1020/1

Mean D. Tan 1020/1

A

B

Fig. 33

Mean E' 1020/1

Mean D. Tan 1020/1

A

B

Fig. 34

Comparison E'

Fig. 35

Fig. 36

Fig. 37

Fig. 38

Fig. 39

Fig. 40

Fig. 41

Fig. 42

Fig. 43

Fig. 44

Fig. 45

Fig. 46

Fig. 47

Fig. 48

Fig. 49

Fig. 50

Fig. 51

FTIR 1020/4

Fig. 52

FTIR 1030/4

Fig. 53

Fig. 54

Fig. 55

Fig. 56

Fig. 57

Fig. 58

Fig. 59

Fig. 60

Fig. 61

Fig. 62

Fig. 63

Fig. 64

Fig. 65

Fig. 66

Fig. 67

Fig. 68

Fig. 69

Fig. 70

Fig. 71

Fig. 72

Fig. 73

Fig. 74

Fig. 75

Fig. 76

Fig. 77

Fig. 78

Fig. 79

Fig. 80

Fig. 81

150

## INTERNATIONAL SEARCH REPORT

| International application No. |
|---|
| **PCT/BR2023/050307** |

| A. | CLASSIFICATION OF SUBJECT MATTER |
|---|---|

C08L 63/00 (2006.01)i; C09C 1/36 (2006.01)i; C09C 3/06 (2006.01)i; C08J 5/18 (2006.01)i; C08K 3/22 (2006.01)i; C01G 23/04 (2006.01)i; C08L 101/12 (2006.01)i; B32B 7/04 (2019.01)i
CPC: C08L63/00, C09C1/36, C09C3/06, C08J5/18, C08K /22, C01G23/04; C08L101/12, B32B 7/04

According to International Patent Classification (IPC) or to both national classification and IPC

| B. | FIELDS SEARCHED |
|---|---|

Minimum documentation searched (classification system followed by classification symbols)

C08L 63/00; C09C 1/36; C09C 3/06; C08J 5/18; C08K 3/22; C01G 23/04; C08L 101/12; B32B 7/04
CPC: C08L63/00, C09C1/36, C09C3/06, C08J5/18, C08K /22, C01G23/04; C08L101/12, B32B 7/04

Documentation searched other than minimum documentation to the extent that such documents are included in the fields searched

BANCO DE DADOS DO INPI-BR

Electronic data base consulted during the international search (name of data base and, where practicable, search terms used)

DERWENT INNOVATION/CLARIVATE

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 8309632 B2 (SU WEI-FANG [TW]) 13 November 2012 (2012-11-13)<br>Abstract. Columns 2-10. Claims 1-5. | 1-28 |
| X | BR 112015009935 A2 (NANOTECH INNOVATIONS CORP [US]) 15 May 2018 (2018-05-15)<br>Abstract. Pages 1-10 and 35-38. Claims 1-11 and 36. | 1-28 |
| X | CN 106609050 A (SUZHOU NANO FOREVER MAT TECH CO LTD) 03 May 2017 (2017-05-03)<br>Abstract. Claims 1-11. | 1-28 |
| X | CN 110885473 A (SHENZHEN INST OF ADV TECH CAS) 17 March 2020 (2020-03-17)<br>Abstract. Claims 1-10. | 1-28 |
| X | JP 2007302799 A (SONY CORP) 22 November 2007 (2007-11-22)<br>Abstract. Claims 1-18. | 1-28 |

[✓] Further documents are listed in the continuation of Box C.     [✓] See patent family annex.

| | |
|---|---|
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **03 November 2023** | **17 November 2023** |

| Name and mailing address of the ISA/BR | Authorized officer |
|---|---|
| **National Institute of Industrial Property (Brazil)**<br>**Rua Mayrink Veiga, 9, 6° andar, CEP 20.090-910 Rio de Janeiro – RJ**<br>**Brazil** | **José Rufino de Oliveira Junior** |
| Telephone No. **(55 21) 3037-3742, 3037-3984** | Telephone No. **+55 21 3037 4528 - 3037 3319** |

Form PCT/ISA/210 (second sheet) (July 2022)

# EP 4 588 975 A1

## INTERNATIONAL SEARCH REPORT

| International application No. |
|---|
| **PCT/BR2023/050307** |

**C. DOCUMENTS CONSIDERED TO BE RELEVANT**

| Category* | Citation of document, with indication, where appropriate, of the relevant passages | Relevant to claim No. |
|---|---|---|
| X | Polizos, G.; Tuncer, E.; Sauers, I.; James, D. R.; Ellis, A. R.; More, K. L.; Balachandran, U. (Balu) (2010). AIP Conference Proceedings [AIP TRANSACTIONS OF THE INTERNATIONAL CRYOGENIC MATERIALS CONFERENCE—ICMC: Advances in Cryogenic Engineering Materials - Tucson (Arizona) (28 June–2 July 2009)] - ELECTRICAL AND MECHANICAL PROPERTIES OF TITANIUM DIOXIDE NANOPARTICLE FILLED EPOXY RESIN COMPOSITES. , (), 41–46. doi:10.1063/1.3402331. Abstract. Pages 41-44. Figures 1 and 2. | 1-28 |
| X | Karunarathna, Prabath; Chithradewa, Kavish; Kumara, Sameera; Weerasekara, Chinthaka; Sanarasinghe, Rasara; Rathnayake, Thushara (2019). [IEEE 2019 International Symposium on Advanced Electrical and Communication Technologies (ISAECT) - Rome, Italy (2019.11.27-2019.11.29)] 2019 International Symposium on Advanced Electrical and Communication Technologies (ISAECT) - Study on Dielectric Properties of Epoxy Resin Nanocomposites. , (), 1–5. doi:10.1109/ISAECT47714.2019.9069694. Abstract. Pages 1-5. Figures 1-6. | 1-28 |
| X | Ilhamdi. Nugroho, A. Hidayat, D. Nur, R A. Physical and Mechanicals Characteristic of the Nano Particulate TiO2-Epoxy Composite. International Colloquium on Computational & Experimental Mechanics (ICCEM 2020) IOP Conf. Series: Materials Science and Engineering 1062 (2021) 012028 IOP Publishing doi:10.1088/1757-899X/1062/1/012028. UR https://dx.doi.org/10.1088/1757-899X/1062/1/012028 TI - T2 - IOP Conference Series: Materials Science and Engineering. 2021. 2021/02/01. IOP Publishing SP - 012028. IS - 1. VL - 1062. SN - 1757-899X. SN - 1757-8981. Abstract. Pages 1-6. Figures 1-6. | 1-28 |
| Y | JP 2011178841 A (UNIV TOHOKU) 15 September 2011 (2011-09-15)<br>    Abstract. Claims 1-13. | 1-28 |
| Y | JP 2012236416 A (DU PONT) 06 December 2012 (2012-12-06)<br>    Abstract. Claims 1-42. | 1-28 |
| Y | Yuan, Heng; Qi, Fugang; Zhao, Nie; Wan, Pengying; Zhang, Biao; Xiong, Hailong; Liao, Bin; Ouyang, Xiaoping (2020). Graphene Oxide Decorated with Titanium Nanoparticles to Reinforce the Anti-Corrosion Performance of Epoxy Coating. Coatings, 10(2), 129–. doi:10.3390/coatings10020129. Abstract. Pages 1-6. Figures 1-7. | 1-28 |
| Y | Journal Article Chen, Juan. Zhang, Wenbo. Ge, Heyi. Tan, Juanjuan. Liu, Jianye. Preparation and properties of phenolic resin/graphene oxide encapsulated SiO2 nanoparticles composites. D 2018. J Polymer Engineering & Science. P 2143-2148. V 58. N 12. @ 0032-3888. R ttps://doi.org/10.1002/pen.24825. U https://4spepublications.onlinelibrary.wiley.com/doi/abs/10.1002/pen.24825. Abstract. Pages 2-5. Figures 1-6. | 1-28 |
| A | TW 201040110 A (IND TECH RES INST  [TW]) 16 November 2010 (2010-11-16)<br>    The whole document | 1-28 |
| A | WO 2013062486 A1 (TERA BARRIER FILMS PTE LTD  [SG]) 02 May 2013 (2013-05-02)<br>    The whole document | 1-28 |
| A | Deng, Xi; Huang, Jin; Liu, Changhua; Gan, Lin; Hong, Jing; Liu, Weifeng; Luo, Liehong; Wang, Ye (2018). Coupling hybrid of graphene oxide and layered zirconium phosphonate to enhance phenolic resin-based friction materials. Journal of Applied Polymer Science, (), 46543–. doi:10.1002/app.46543. The whole document | 1-28 |
| A | Kausar, Ayesha (2018). Corrosion prevention prospects of polymeric nanocomposites: A review. Journal of Plastic Film & Sheeting, (), 875608791880602–. doi:10.1177/8756087918806027. The whole document | 1-28 |

Form PCT/ISA/210 (second sheet) (July 2022)

152

**INTERNATIONAL SEARCH REPORT**
Information on patent family members

International application No.

**PCT/BR2023/050307**

| Patent document cited in search report | | | Publication date (day/month/year) | Patent family member(s) | | | Publication date (day/month/year) |
|---|---|---|---|---|---|---|---|
| US | 8309632 | B2 | 13 November 2012 | US | 2011009521 | A1 | 13 January 2011 |
| | | | | TW | 201102408 | A | 16 January 2011 |
| | | | | TW | I432511 | B | 01 April 2014 |
| BR | 112015009935 | A2 | 15 May 2018 | NONE | | | |
| CN | 106609050 | A | 03 May 2017 | CN | 106609050 | B | 04 September 2018 |
| CN | 110885473 | A | 17 March 2020 | CN | 110885473 | B | 17 June 2022 |
| JP | 2007302799 | A | 22 November 2007 | JP | 4961828 | B2 | 27 June 2012 |
| JP | 2011178841 | A | 15 September 2011 | NONE | | | |
| JP | 2012236416 | A | 06 December 2012 | CN | 102774166 | A | 14 November 2012 |
| | | | | EP | 2522508 | A2 | 14 November 2012 |
| | | | | EP | 2522508 | A3 | 04 December 2013 |
| | | | | US | 2012285342 | A1 | 15 November 2012 |
| TW | 201040110 | A | 16 November 2010 | TW | I386370 | B | 21 February 2013 |
| WO | 2013062486 | A1 | 02 May 2013 | AU | 2012329403 | A1 | 10 April 2014 |
| | | | | AU | 2012329403 | B2 | 20 August 2015 |
| | | | | CA | 2852879 | A1 | 02 May 2013 |
| | | | | CN | 104039544 | A | 10 September 2014 |
| | | | | DK | 2771182 | T3 | 19 August 2019 |
| | | | | EP | 2771182 | A1 | 03 September 2014 |
| | | | | EP | 2771182 | A4 | 10 June 2015 |
| | | | | EP | 2771182 | B1 | 15 May 2019 |
| | | | | EP | 3593992 | A1 | 15 January 2020 |
| | | | | JP | 2015502869 | A | 29 January 2015 |
| | | | | JP | 6193245 | B2 | 06 September 2017 |
| | | | | KR | 20140093213 | A | 25 July 2014 |
| | | | | KR | 102082460 | B1 | 27 February 2020 |
| | | | | MX | 2014004592 | A | 26 November 2014 |
| | | | | MY | 166867 | A | 24 July 2018 |
| | | | | RU | 2014111285 | A | 27 December 2015 |
| | | | | RU | 2618824 | C2 | 11 May 2017 |
| | | | | SG | 11201401022S | A | 28 April 2014 |
| | | | | US | 2014252342 | A1 | 11 September 2014 |
| | | | | US | 2019027414 | A1 | 24 January 2019 |
| | | | | ZA | 201402225 | B | 29 April 2015 |

Form PCT/ISA/210 (patent family annex) (July 2022)

**REFERENCES CITED IN THE DESCRIPTION**

**Patent documents cited in the description**

- WO 2022036427 A
- US 20070116976 A1
- CN 110229412
- US 2009226711 A1
- JP 2003073558 B
- BR 102022010931